# EUROPEAN PATENT APPLICATION

(11) **EP 4 550 370 A1**
(43) Date of publication of application: **07.05.2025**
(21) Application number: 23831639.2
(22) Date of filing: 30.06.2023
(51) Int. Cl.: H01F 38/14, H01F 27/36, H02J 7/00, H02J 50/10, H02J 50/12, H02J 50/70

(54) **COIL UNIT, ELECTRIC POWER TRANSMISSION APPARATUS, ELECTRIC POWER RECEPTION APPARATUS, ELECTRIC POWER TRANSFER SYSTEM, AND MOBILE BODY**

(30) Priority: 01.07.2022 JP 2022107152
(71) Applicant: Dai Nippon Printing Co., Ltd., Tokyo 162-8001 (JP)
(72) Inventor: OKABE, Masato, Tokyo 162-8001 (JP)
(74) Representative: Müller-Boré & Partner Patentanwälte PartG mbB
(86) International application number: PCT/JP2023/024473
(87) International publication number: WO 2024/005200

(57) **Abstract**

A coil unit (5) includes a coil (10), a magnetic resin layer (20), a first shield member (30), and a second shield member (40). The coil (10) includes a coil element (10i) formed into a spiral shape around an arbitrary central axis line C. The coil (10) has a first principal surface (10a) and a second principal surface (10b) that is a surface opposite to the first principal surface (10a). The magnetic resin layer (20) is in direct contact with the second principal surface (10b) of the coil (10). A combination of the coil (10) and the magnetic resin layer (20), the first shield member (30), and the second shield member (40) are stacked in this order in a direction from the first principal surface (10a) toward the second principal surface (10b). The first shield member (30) is divided into a plurality of shield small pieces (30P).

## Description

### Technical Field

The present disclosure relates to a coil unit, a power transmission apparatus, a power receiving apparatus, an electric power transfer system, and a movable body.

### Background Art

A wireless electric power transfer system configured to transfer electric power in a noncontact manner is becoming pervasive. JP2021-27112A discloses a coil unit for use in a power transmission apparatus of a wireless electric power transfer system and a coil unit for use in a power receiving apparatus of the wireless electric power transfer system. Each of the coil units includes a coil formed into a spiral shape. Supplying electric power to the coil of the power transmission apparatus causes a magnetic field to be generated in the coil. Due to the influence of this magnetic field, an electric current flows through the coil of the power receiving apparatus.

Transferring a large amount of electric power in a noncontact manner causes a high-frequency large current to flow through a resonance circuit including a coil. This causes the coil to generate a large amount of heat. The amount of heat that the coil generates increases due, for example, to the skin effect.

Using a Litz wire as a coil suppresses the skin effect. This makes it possible to restrain the coil from generating heat. However, it requires high costs and much labor to manufacture the Litz wire, as the Litz wire is formed by twisting together a large number of enamel wires. A high-power system may require a large coil and may therefore require even higher costs and even more labor to manufacture.

Meanwhile, as disclosed in JP2021-27112A, there has been known a technology involving the use of a planar coil having a spiral shape and a plate shape and having a rectangular wire cross-section. Such a planar coil makes it possible to reduce the thickness of a coil.

Incidentally, a wireless electric power transfer system for use in an electric vehicle includes a power transmission apparatus installed in a road surface of a parking lot or other places and a power receiving apparatus installed on the electric vehicle. Such a power transmission apparatus and/or a power receiving apparatus includes a coil unit to generate a magnetic field or to generate an electric current due to the influence of a magnetic field. Since, in the field of vehicles, a stringent limitation is set on installation space for the coil unit, it is desirable to reduce the dimensions of the coil unit. Accordingly, using the aforementioned planar coil in the coil unit is under consideration. However, the dimensions of the coil unit cannot be sufficiently reduced by simply reducing the thickness of the coil.

A first invention was made in view of such a point and has as an object to reduce the dimensions of a coil unit.

Further, it is desirable for the wireless electric power transfer system to efficiently transfer electric power with improvement in performance of the coil unit.

A second invention was made in view of such a point and has as an object to achieve efficient electric power transfer.

### Summary of Invention

### <First Invention>

The first invention has as an object to reduce the dimensions of a coil unit.

A coil unit according to the first invention includes a coil, a magnetic resin layer, a first shield member, and a second shield member. The coil includes a coil element formed into a spiral shape around an arbitrary central axis line. The coil has a first principal surface and a second principal surface that is a surface opposite to the first principal surface. The magnetic resin layer is in direct contact with the second principal surface of the coil. A combination of the coil, the magnetic resin layer, the first shield member, and the second shield member are stacked in this order in a direction from the first principal surface toward the second principal surface. The first shield member is divided into a plurality of shield small pieces.

In the coil unit according to the first invention, the coil element may include an electric conductor having a spiral shape. The magnetic resin layer may be in direct contact with the electric conductor.

In the coil unit according to the first invention, the first shield member may contain ferrite.

In the coil unit according to the first invention, a distance between the first shield member and the second shield member may be 2 mm or shorter.

In the coil unit according to the first invention, a thermally conductive member may be placed between the first shield member and the second shield member.

In the coil unit according to the first invention, the coil element may include a first linear portion group composed of a plurality of first linear portions arrayed in a radial direction and extending in a first direction and a second linear portion group composed of a plurality of second linear portions arrayed in the radial direction and extending in a second direction that is not parallel with the first direction, each of the second linear portions being connected to one of the first linear portions that is adjacent to thereto. The first shield member may have formed therein a gap that linearly extends through a space between adjacent ones of the shield small pieces and that crosses at least part of the first linear portion group when seen in an axial direction.

In the coil unit according to the first invention, the gap and the at least part of the first linear portion group may form an angle of 80 degrees to 100 degrees when seen in the axial direction.

In the coil unit according to the first invention, the gap and at least part of the first linear portion group may be orthogonal to each other when seen in the axial direction.

In the coil unit according to the first invention, the gap may extend from a position that is further inward in the radial direction than is the first linear portion group to a position that is further outward in the radial direction than is the first linear portion group.

In the coil unit according to the first invention, the gap may extend through a space between the second linear portion group and the central axis line when seen in the axial direction.

In the coil unit according to the first invention, the gap or an extension thereof may overlap the central axis line when seen in the axial direction.

In the coil unit according to the first invention, the first shield member may have formed therein a different gap that linearly extends through a space between adjacent ones of the shield small pieces and that extends through the first linear portion group along the first linear portions when seen in the axial direction. The different gap may extend over an area that is closer to the central axis line than is one of the first linear portions whose ordinal number as counted from an innermost one of the first linear portions assumes a minimum integer value that is greater than or equal to a value obtained by dividing a total number of the first linear portions by 3.

In the coil unit according to the first invention, the second shield member may have formed therein a different gap that linearly extends through a space between adjacent ones of the shield small pieces and that extends through the second linear portion group along the second linear portions when seen in the axial direction. The different gap may extend over an area that is closer to the central axis line than is one of the second linear portions whose ordinal number as counted from an innermost one of the second linear portions assumes a minimum integer value that is greater than or equal to a value obtained by dividing a total number of the second linear portions by 3.

In the coil unit according to the first invention, the first shield member may have formed therein a different gap that linearly extends through a space between adjacent ones of the shield small pieces and that extends through the first linear portion group along the first linear portions when seen in the axial direction. The different gap may extend over an area that is further away from the central axis line than is one of the first linear portions whose ordinal number as counted from an outermost one of the first linear portions assumes a minimum integer value that is greater than or equal to a value obtained by dividing a total number of the first linear portions by 3.

In the coil unit according to the first invention, the second shield member may have formed therein a different gap that linearly extends through a space between adjacent ones of the shield small pieces and that extends through the second linear portion group along the second linear portions when seen in the axial direction The different gap may extend over an area that is further away from the central axis line than is one of the second linear portions whose ordinal number as counted from an outermost one of the second linear portions assumes a minimum integer value that is greater than or equal to a value obtained by dividing a total number of the second linear portions by 3.

In the coil unit according to the first invention, the coil element may further include a first linear portion group, a second linear portion group, and an intermediate curved portion group. The first linear portion group may be composed of a plurality of first linear portions arrayed in a radial direction and extending in a first direction. The second linear portion group may be composed of a plurality of second linear portions arrayed in the radial direction and extending in a second direction that is not parallel with the first direction. The intermediate curved portion group may be placed between the first linear portion group and the second linear portion group and composed of a plurality of intermediate curved portions. Adjacent ends of the first and second linear portions may be connected to each other via the intermediate curved portions.

In the coil unit according to the first invention, the first shield member may have formed therein a gap that linearly extends through a space between adjacent ones of the shield small pieces. The gap may cross at least part of the intermediate curved portion group when seen in an axial direction.

In the coil unit according to the first invention, the gap and a tangent line to the at least part of the intermediate curved portion group may form an angle of 80 degrees to 100 degrees when seen in the axial direction.

In the coil unit according to the first invention, the gap and the tangent line may be orthogonal to each other when seen in the axial direction.

In the coil unit according to the first invention, the coil element may further include a first linear portion group, a second linear portion group, and a first intermediate linear portion group. The first linear portion group may be composed of a plurality of first linear portions arrayed in a radial direction and extending in a first direction. The second linear portion group may be composed of a plurality of second linear portions arrayed in the radial direction and extending in a second direction that is not parallel with the first direction. The first intermediate linear portion group may be placed between the first linear portion group and the second linear portion group and composed of a plurality of first intermediate linear portions. Adjacent ends of the first and second linear portions may be connected to each other via the first intermediate linear portions.

In the coil unit according to the first invention, each of the first linear portions and a corresponding one of the first intermediate linear portions may form an angle of 125 degrees to 145 degrees when seen in an axial direction. Further, each of the second linear portions and a corresponding one of the first intermediate linear portions may form an angle of 125 degrees to 145 degrees when seen in the axial direction.

In the coil unit according to the first invention, each of the first linear portions and a corresponding one of the first intermediate linear portions may form an angle of 135 degrees when seen in an axial direction. Further, each of the second linear portions and a corresponding one of the first intermediate linear portions may form an angle of 135 degrees when seen in the axial direction.

In the coil unit according to the first invention, the coil element may have an octagonal shape as a whole.

In the coil unit according to the first invention, wherein the coil element may have a regular octagonal shape as a whole.

In the coil unit according to the first invention, the first shield member may have formed therein a gap that linearly extends through a space between adjacent ones of the shield small pieces. The gap may cross at least part of the first intermediate linear portion group when seen in an axial direction.

In the coil unit according to the first invention, the gap and the at least part of the first intermediate linear portion group may form an angle of 80 degrees to 100 degrees when seen in the axial direction.

In the coil unit according to the first invention, the gap and the at least part of the first intermediate linear portion group may be orthogonal to each other when seen in the axial direction.

In the coil unit according to the first invention, the coil element may further include a first linear portion group, a second linear portion group, a first intermediate linear portion group and a second intermediate linear portion group. The first linear portion group may be composed of a plurality of first linear portions arrayed in a radial direction and extending in a first direction. The second linear portion group may be composed of a plurality of second linear portions arrayed in the radial direction and extending in a second direction that is not parallel with the first direction. The first intermediate linear portion group may be placed between the first linear portion group and the second linear portion group and composed of a plurality of first intermediate linear portions. The second intermediate linear portion group may be placed between the first intermediate linear portion group and the second linear portion group and composed of a plurality of second intermediate linear portions. Adjacent ends of the first and second linear portions may be connected to each other via the first intermediate linear portions. Adjacent ends of the first intermediate linear portions and the second linear portions may be connected to each other via the second intermediate linear portions.

In the coil unit according to the first invention, each of the first linear portions and a corresponding one of the first intermediate linear portions may form an angle of 140 degrees to 160 degrees when seen in an axial direction. Further, each of the first intermediate linear portions and a corresponding one of the second intermediate linear portions may form an angle of 140 degrees to 160 degrees when seen in the axial direction. Further, each of the second intermediate linear portions and a corresponding one of the second linear portions may form an angle of 140 degrees to 160 degrees when seen in the axial direction.

In the coil unit according to the first invention, each of the first linear portions and a corresponding one of the first intermediate linear portions may form an angle of 150 degrees when seen in an axial direction. Further, each of the first intermediate linear portions and a corresponding one of the second intermediate linear portions may form an angle of 150 degrees when seen in the axial direction. Further, each of the second intermediate linear portions and a corresponding one of the second linear portions may form an angle of 150 degrees when seen in the axial direction.

In the coil unit according to the first invention, the coil element may have a dodecagonal shape as a whole.

In the coil unit according to the first invention, the coil element may have a regular dodecagonal shape as a whole.

In the coil unit according to the first invention, the first shield member may have formed therein a gap that linearly extends through a space between adjacent ones of the shield small pieces. The gap may cross at least part of the first intermediate linear portion group or at least part of the second intermediate linear portion group when seen in an axial direction.

In the coil unit according to the first invention, the gap and the at least part of the first intermediate linear portion group or the at least part of the second intermediate linear portion group may form an angle of 80 degrees to 100 degrees when seen in the axial direction.

In the coil unit according to the first invention, the gap and the at least part of the first intermediate linear portion group or the at least part of the second intermediate linear portion group may be orthogonal to each other when seen in the axial direction.

In the coil unit according to the first invention, the first shield member may have formed therein a gap that linearly extends through a space between adjacent ones of the shield small pieces. The gap may cross at least part of the coil element when seen in an axial direction. When seen in the axial direction, the gap may intersect at least one of turn portions forming the coil element. At a point of intersection of the gap and the turn portion, the gap and the turn portion or a tangent line to the turn portion may form an angle of 80 degrees to 100 degrees when seen in the axial direction.

In the coil unit according to the first invention, at the point of intersection of the gap and the turn portion, the gap may be orthogonal to the turn portion or the tangent line to the turn portion when seen in the axial direction.

The coil unit according to the first invention may further include a first connection terminal connected to the coil. The coil may have an inward end that is close to the central axis line and an outward end that is far away from the central axis line. The first connection terminal may be connected to the inward end and extend from inside toward outside the coil. The first shield member may have formed therein a gap that linearly extends through a space between adjacent ones of the shield small pieces. The coil may extend from inside toward outside the coil. When seen in an axial direction, the first connection terminal may extend through the gap or through a notch formed in one of the shield small pieces.

In the coil unit according to the first invention, the first connection terminal may extend from inside toward outside the coil at such a height position as to overlap the shield small piece in a side view of the coil unit.

In the coil unit according to the first invention, the coil element may have a plurality of turn portions arranged in a radial direction. At a point of intersection of the first connection terminal and each of the turn portions, the first connection terminal and the turn portion or a tangent line to the turn portion may form an angle of 80 degrees to 100 degrees when seen in the axial direction.

In the coil unit according to the first invention, at a point of intersection of the first connection terminal and each of the turn portions, the first connection terminal may be orthogonal to the turn portion or a tangent line to the turn portion when seen in the axial direction.

In the coil unit according to the first invention, the coil element may further include a linear portion group. The linear portion group may be composed of a plurality of linear portions arrayed in a radial direction and extending in an identical direction. The first connection terminal may intersect the linear portion group when seen in the axial direction.

In the coil unit according to the first invention, the first connection terminal and the linear portion group may form an angle of 80 degrees to 100 degrees when seen in the axial direction.

In the coil unit according to the first invention, the first connection terminal may be orthogonal to the linear portion group when seen in the axial direction.

In the coil unit according to the first invention, the coil element may further include a curved portion group. The curved portion group may be composed of a plurality of curved portions arrayed in a radial direction and extending parallel to each other. The first connection terminal may intersect the curved portion group when seen in the axial direction.

In the coil unit according to the first invention, the first connection terminal and a tangent line to the curved portion group may form an angle of 80 degrees to 100 degrees when seen in the axial direction.

In the coil unit according to the first invention, the first connection terminal may be orthogonal to a tangent line to the curved portion group when seen in the axial direction.

In the coil unit according to the first invention, a point at which the first connection terminal and an outer peripheral edge of the first shield member overlap each other when seen in the axial direction may be a first point. Further, a point at which a second connection terminal connected to the outward end and the outer peripheral edge of the first shield member overlap each other when seen in the axial direction may be a second point. An angle formed by a first imaginary line connecting the first point with the central axis line and a second imaginary line connecting the second point with the central axis line may be 90 degrees or smaller.

In the coil unit according to the first invention, the angle formed by the first imaginary line and the second imaginary line may be 45 degrees or smaller.

In the coil unit according to the first invention, a point at which the first connection terminal and an outer peripheral edge of the first shield member overlap each other when seen in the axial direction may be a first point. Further, a point at which a second connection terminal connected to the outward end and the outer peripheral edge of the first shield member overlap each other when seen in the axial direction may be a second point. A distance between the first point and the second point may be 100 mm or shorter.

In the coil unit according to the first invention, the distance between the first point and the second point may be 50 mm or shorter.

The coil unit according to the first invention may further include a second connection terminal connected to the coil. The second shield member may form a quadrangular shape when seen in the axial direction. The first connection terminal and the second connection terminal may extend out from an identical side of the second shield member.

In the coil unit according to the first invention, the coil element may circle around the central axis line in a first circumferential direction from the outward end toward the inward end. The outward end may be displaced in the first circumferential direction from the inward end.

In the coil unit according to the first invention, the coil element may include a first turn portion, a second turn portion, and a third turn portion. The first turn portion may include the inward end. The second turn portion may be adjacent to the first turn portion in a radial direction and be placed further outward in the radial direction than is the first turn portion. The third turn portion may be adjacent to the second turn portion in the radial direction and be placed further outward in the radial direction than is the second turn portion. A distance between the inward end and the second turn portion may be longer than a distance between the second turn portion and the third turn portion.

A power transmission apparatus according to the first invention includes the coil unit according to the first invention.

A power receiving apparatus according to the first invention includes the coil unit according to the first invention.

An electric power transfer system according to the first invention includes a power transmission apparatus and a power receiving apparatus. At least either the power transmission apparatus or the power receiving apparatus includes the coil unit according to the first invention.

A movable body according to the first invention includes the coil unit according to the first invention.

The first invention makes it possible to reduce the dimensions of a coil unit.

### <Second Invention>

The second invention has as an object to achieve efficient electric power transfer.

A coil unit according to the second invention includes a coil including a coil element formed into a spiral shape around an arbitrary central axis line. The coil element has an octagonal shape as a whole when seen in an axial direction.

In the coil unit according to the second invention, the coil element may include seven linear portion groups extending along seven of eight sides of an octagon. Adjacent ones of the linear portion groups may form an angle of 125 degrees to 145 degrees.

In the coil unit according to the second invention, adjacent ones of the linear portion groups may form an angle of 135 degrees.

In the coil unit according to the second invention, the coil element may have a regular octagonal shape as a whole.

Alternatively, a coil unit according to the second invention includes a coil including a coil element formed into a spiral shape around an arbitrary central axis line. The coil element has a dodecagonal shape as a whole when seen in an axial direction.

In the coil unit according to the second invention, the coil element may include eleven linear portion groups extending along eleven of twelve sides of a dodecagon. Adjacent ones of the linear portion groups may form an angle of 140 degrees to 160 degrees.

In the coil unit according to the second invention, adjacent ones of the linear portion groups may form an angle of 150 degrees.

In the coil unit according to the second invention, the coil element may have a regular dodecagonal shape as a whole.

The coil unit according to the second invention may further include a first shield member. The first shield member may be divided into a plurality of shield small pieces. The first shied member may have formed therein a gap that linearly extends through a space between adjacent ones of the shield small pieces. The coil element may include a linear portion group composed of a plurality of linear portions arrayed in a radial direction and extending in an identical direction. The gap may cross at least part of the linear portion group when seen in the axial direction.

In the coil unit according to the second invention, the gap and the at least part of the linear portion group may form an angle of 80 degrees to 100 degrees when seen in the axial direction.

In the coil unit according to the second invention, the gap may be orthogonal to the at least part of the linear portion group when seen in the axial direction.

A power transmission apparatus according to the second invention includes the coil unit according to the second invention.

A power receiving apparatus according to the second invention includes the coil unit according to the second invention.

An electric power transfer system according to the second invention includes a power transmission apparatus and a power receiving apparatus. At least either the power transmission apparatus or the power receiving apparatus includes the coil unit according to the second invention.

A movable body according to the second invention includes the coil unit according to the second invention.

The second invention makes it possible to achieve efficient electric power transfer.

### Brief Description of Drawings

[Fig. 1] Fig. 1 is a diagram schematically showing a wireless electric power transfer system to which a coil unit according to an embodiment is applicable.
[Fig. 2] Fig. 2 is a perspective view of a coil unit for use in the wireless electric power transfer system shown in Fig. 1.
[Fig. 3] Fig. 3 is an exploded perspective view of the coil unit shown in Fig. 2.
[Fig. 4] Fig. 4 is a cross-sectional view of the coil unit as taken along line IV-IV in Fig. 2.
[Fig. 5A] Fig. 5A is a plan view of the coil unit shown in Fig. 2.
[Fig. 5B] Fig. 5B is a diagram showing a first point, a second point, a first imaginary line, and a second imaginary line on the coil unit shown in Fig. 5A.
[Fig. 6A] Fig. 6A is a diagram corresponding to Fig. 5A and showing a modification of the coil unit.
[Fig. 6B] Fig. 6B is a diagram showing a first point, a second point, a first imaginary line, and a second imaginary line on the coil unit shown in Fig. 6A.
[Fig. 7] Fig. 7 is a cross-sectional view of the coil unit as taken along line VII-VII in Fig. 6A.
[Fig. 8] Fig. 8 is a diagram corresponding to Fig. 5A and showing another modification of the coil unit.
[Fig. 9] Fig. 9 is a diagram corresponding to Fig. 5A and showing still another modification of the coil unit.
[Fig. 10] Fig. 10 is a diagram corresponding to Fig. 5A and showing still another modification of the coil unit.
[Fig. 11] Fig. 11 is a diagram corresponding to Fig. 5A and showing still another modification of the coil unit.
[Fig. 12] Fig. 12 is a diagram corresponding to Fig. 5A and showing still another modification of the coil unit.
[Fig. 13] Fig. 13 is a diagram corresponding to Fig. 5A and showing still another modification of the coil unit.
[Fig. 14] Fig. 14 is a diagram corresponding to Fig. 5A and showing still another modification of the coil unit.
[Fig. 15] Fig. 15 is a diagram corresponding to Fig. 5A and showing still another modification of the coil unit.
[Fig. 16] Fig. 16 is a diagram corresponding to Fig. 5A and showing still another modification of the coil unit.
[Fig. 17] Fig. 17 is a diagram corresponding to Fig. 5A and showing still another modification of the coil unit.
[Fig. 18] Fig. 18 is a cross-sectional view of the coil unit as taken along line XVIII-XVIII in Fig. 17.
[Fig. 19] Fig. 19 is an exploded perspective view of the coil unit shown in Fig. 17.
[Fig. 20] Fig. 20 is a diagram corresponding to Fig. 17 and showing still another modification of the coil unit.
[Fig. 21] Fig. 21 is a diagram corresponding to Fig. 17 and showing still another modification of the coil unit.
[Fig. 22] Fig. 22 is a diagram corresponding to Fig. 5A and showing still another modification of the coil unit.
[Fig. 23] Fig. 23 is a diagram corresponding to Fig. 17 and showing still another modification of the coil unit.
[Fig. 24] Fig. 24 is a diagram corresponding to Fig. 5A and showing still another modification of the coil unit.
[Fig. 25] Fig. 25 is a diagram corresponding to Fig. 17 and showing still another modification of the coil unit.

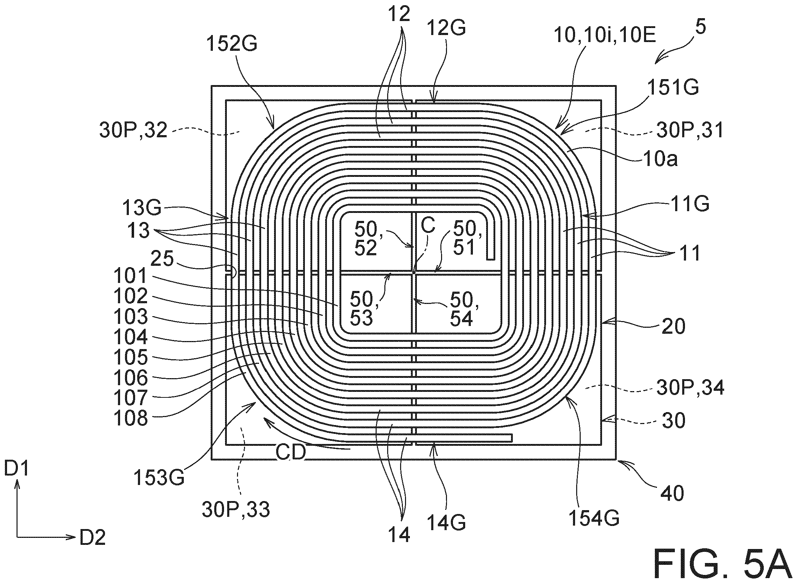

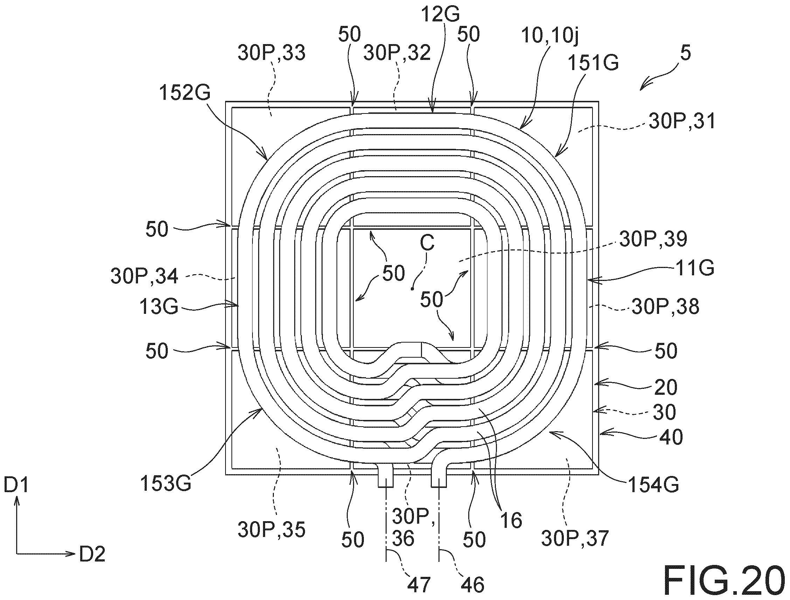

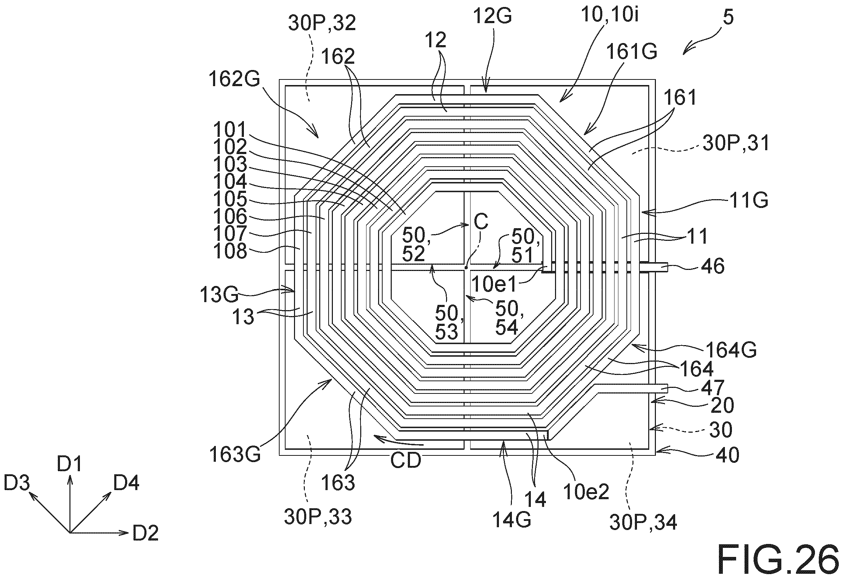

[Fig. 20] Fig. 26 is a diagram corresponding to Fig. 5A and showing still another modification of the coil unit.

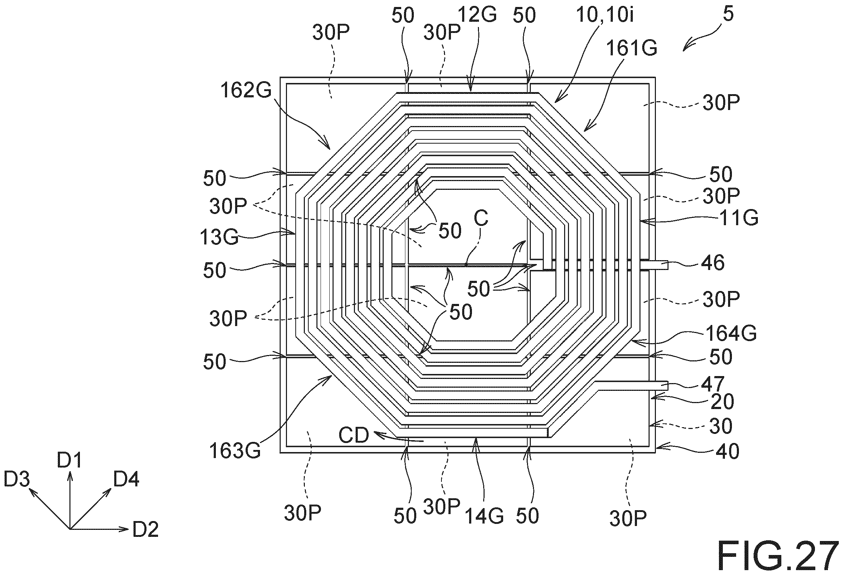

[Fig. 27] Fig. 27 is a diagram corresponding to Fig. 5A and showing still another modification of the coil unit.

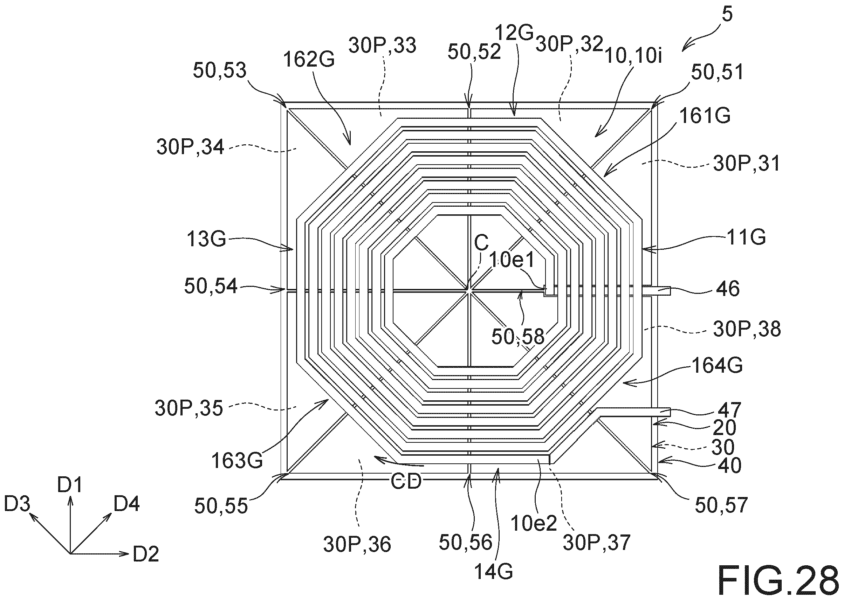

[Fig. 28] Fig. 28 is a diagram corresponding to Fig. 5A and showing still another modification of the coil unit.

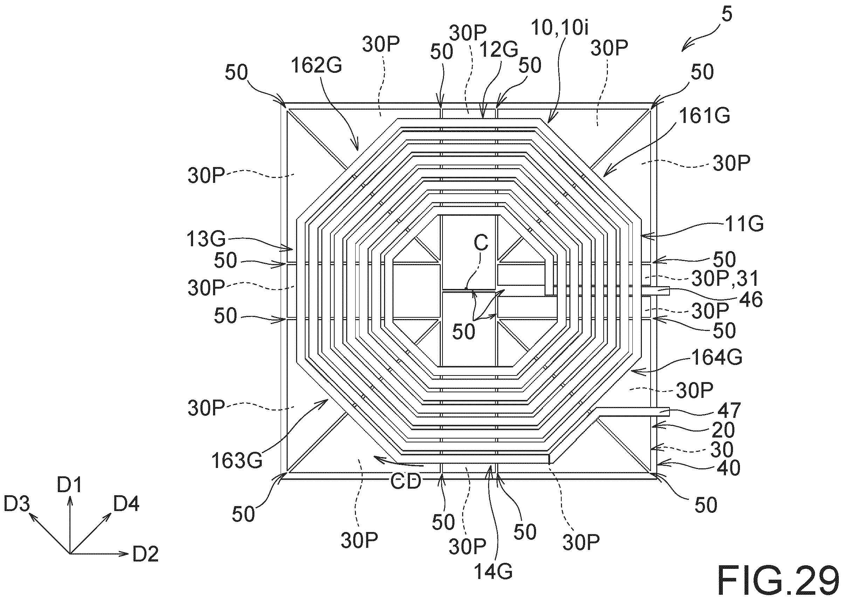

[Fig. 29] Fig. 29 is a diagram corresponding to Fig. 5A and showing still another modification of the coil unit.

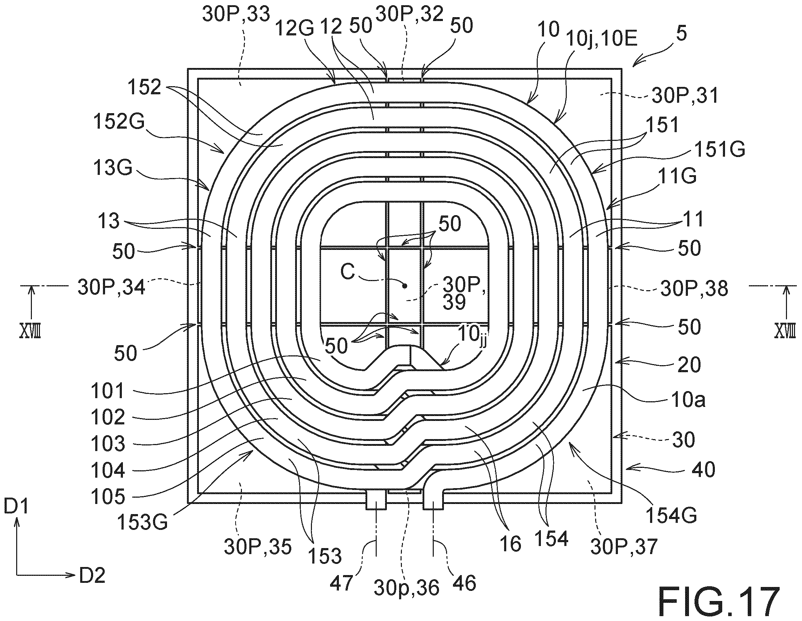

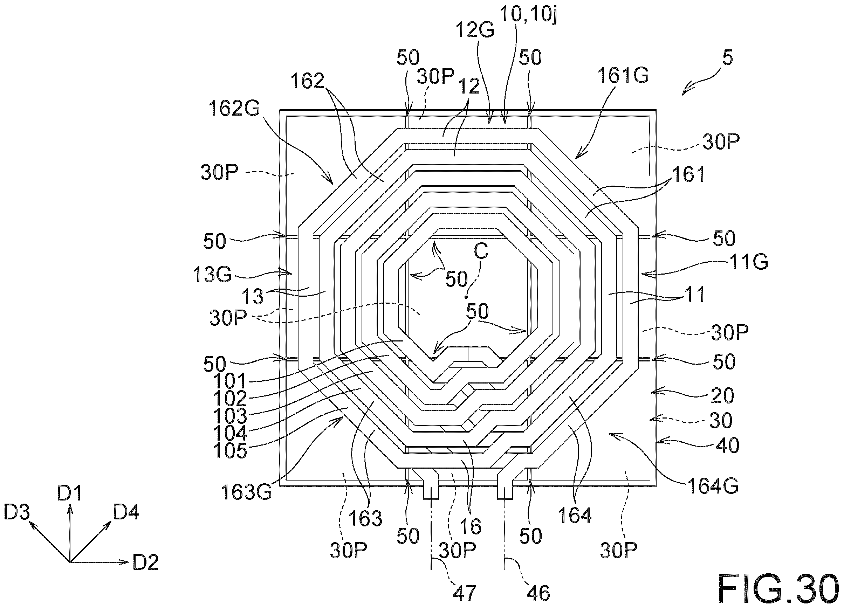

[Fig. 30] Fig. 30 is a diagram corresponding to Fig. 17 and showing still another modification of the coil unit.

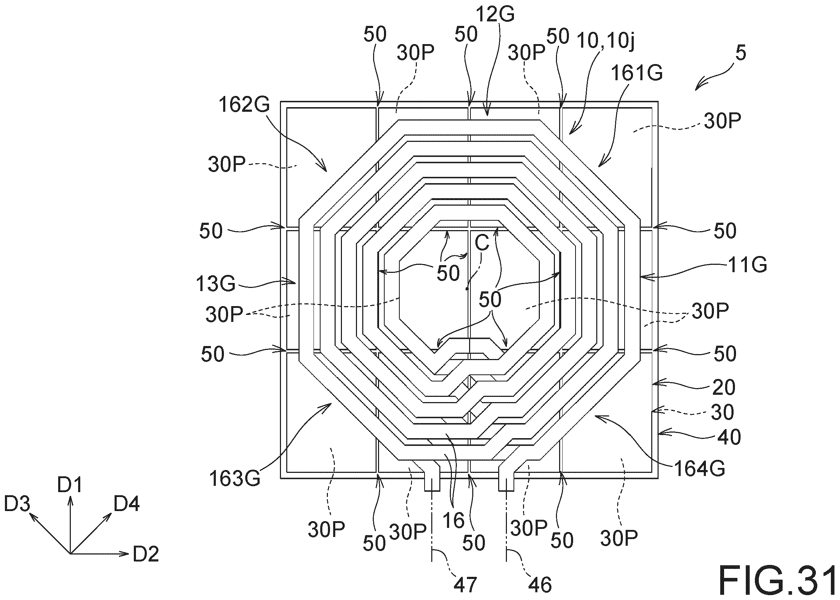

[Fig. 31] Fig. 31 is a diagram corresponding to Fig. 17 and showing still another modification of the coil unit.

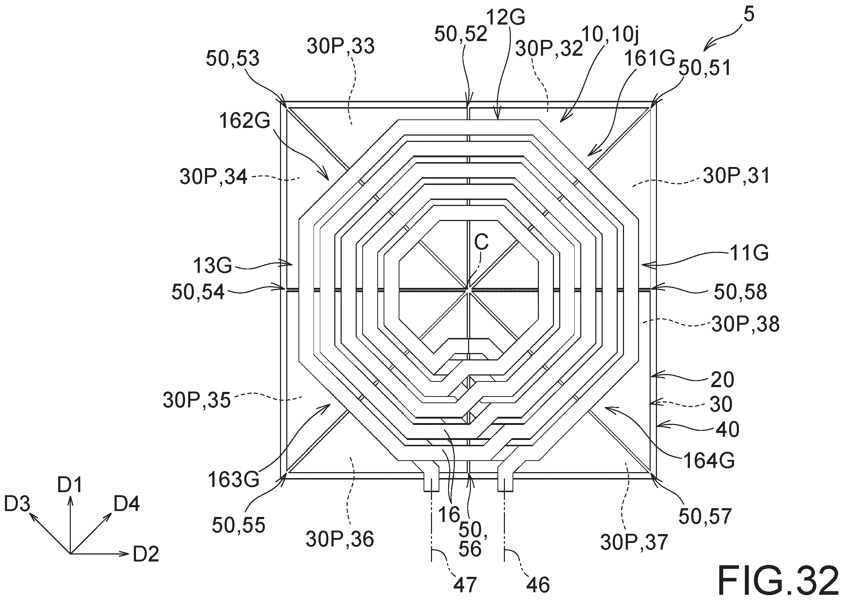

[Fig. 32] Fig. 32 is a diagram corresponding to Fig. 17 and showing still another modification of the coil unit.

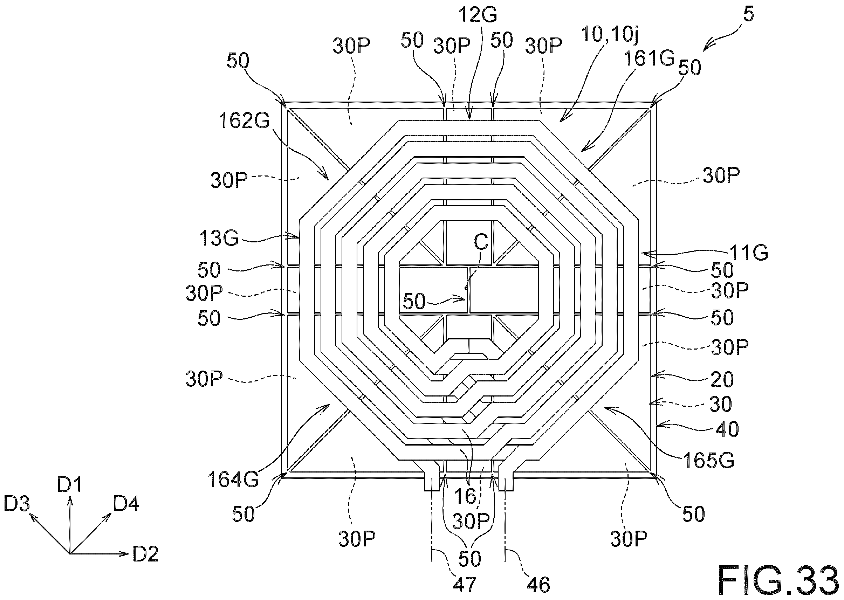

[Fig. 33] Fig. 33 is a diagram corresponding to Fig. 17 and showing still another modification of the coil unit.

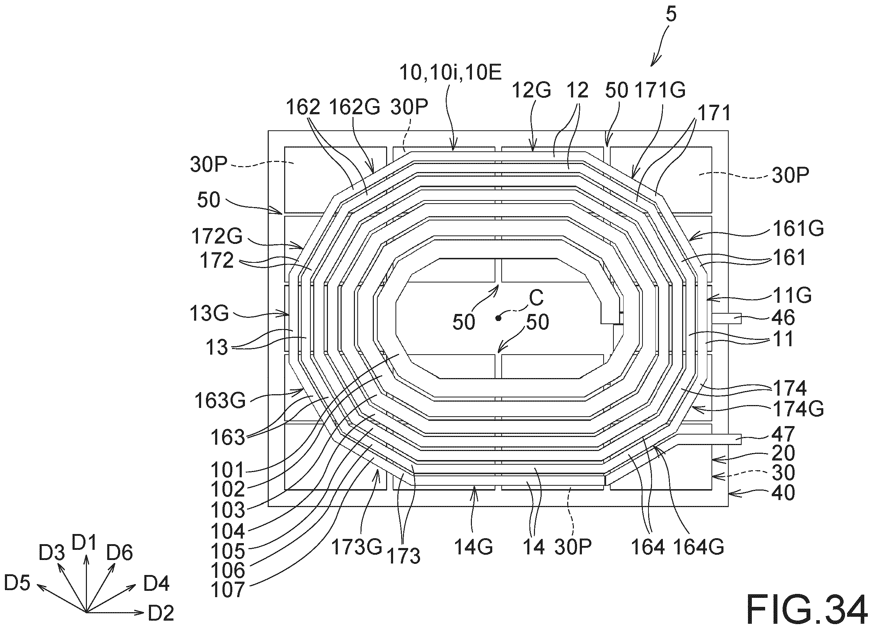

[Fig. 34] Fig. 34 is a diagram corresponding to Fig. 5A and showing still another modification of the coil unit.

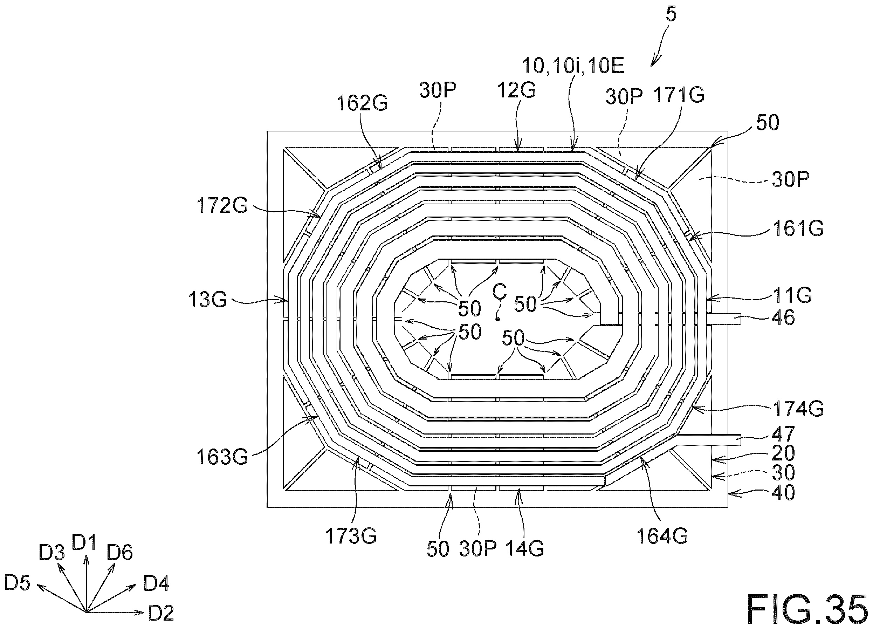

[Fig. 35] Fig. 35 is a diagram corresponding to Fig. 5A and showing still another modification of the coil unit.

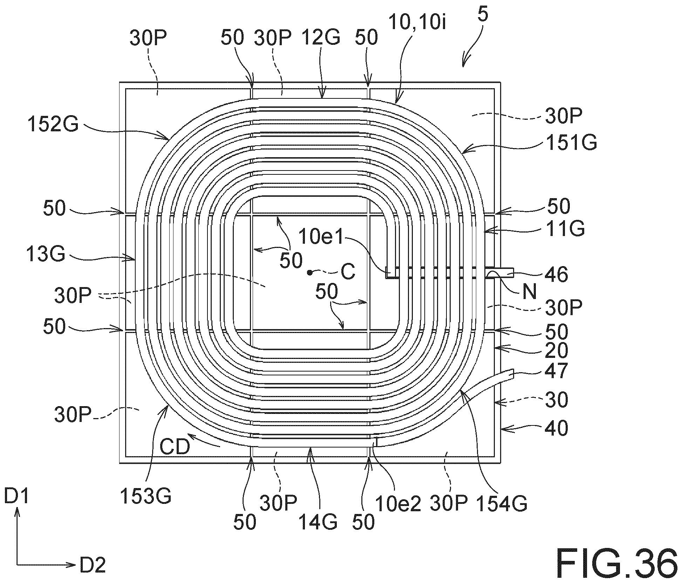

[Fig. 36] Fig. 36 is a diagram corresponding to Fig. 5A and showing still another modification of the coil unit.

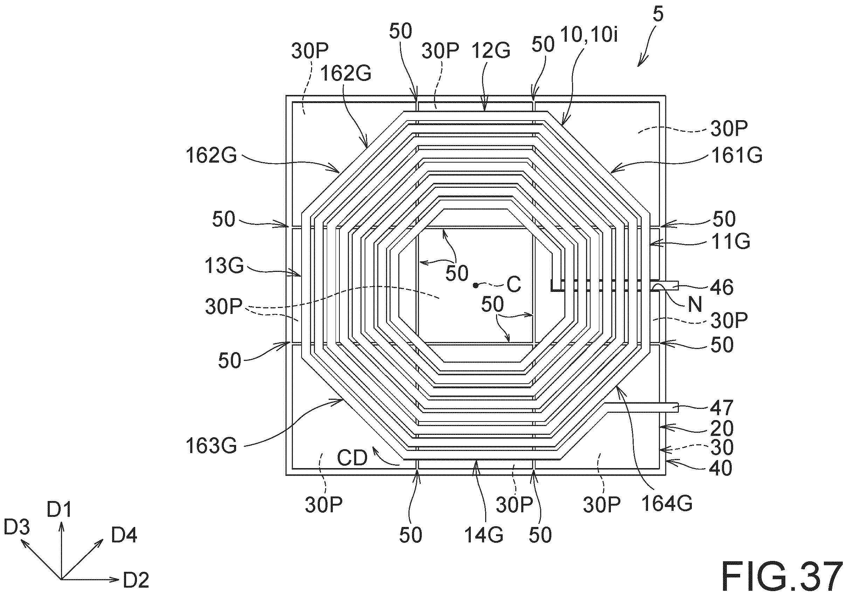

[Fig. 37] Fig. 37 is a diagram corresponding to Fig. 5A and showing still another modification of the coil unit.

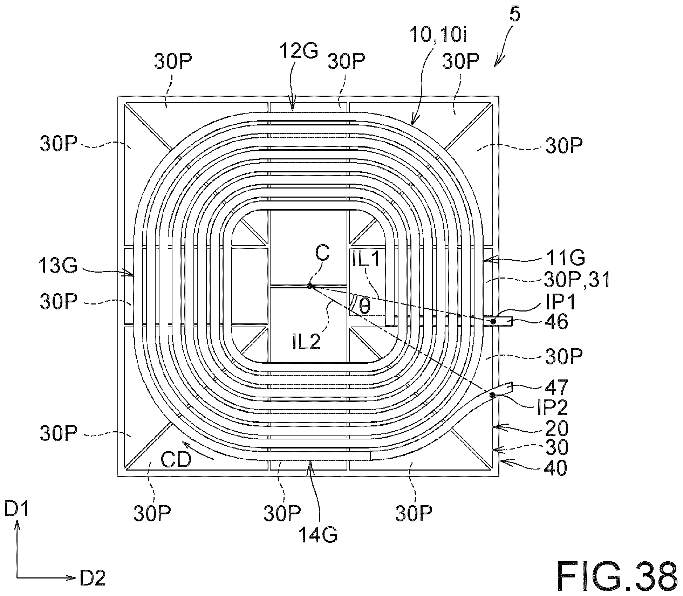

[Fig. 38] Fig. 38 is a diagram corresponding to Fig. 5A and showing still another modification of the coil unit.

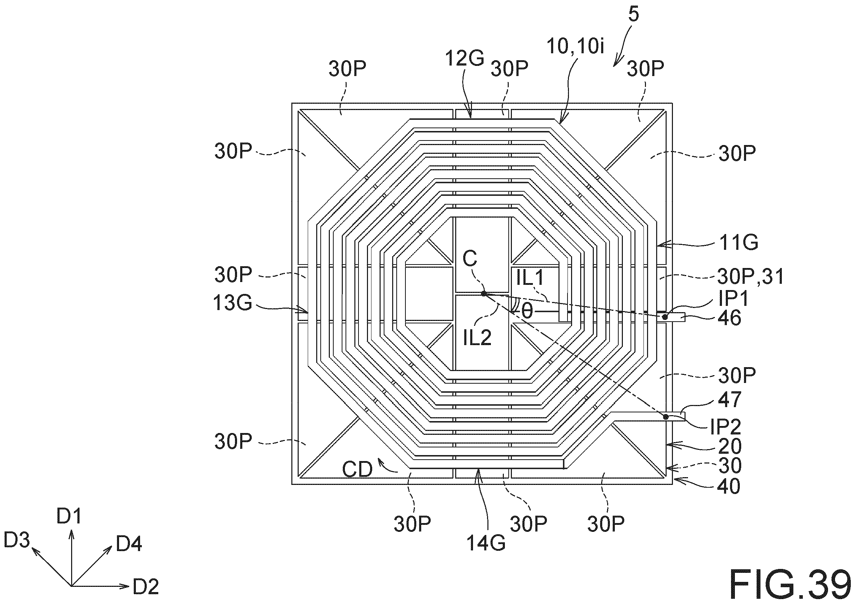

[Fig. 39] Fig. 39 is a diagram corresponding to Fig. 5A and showing still another modification of the coil unit.

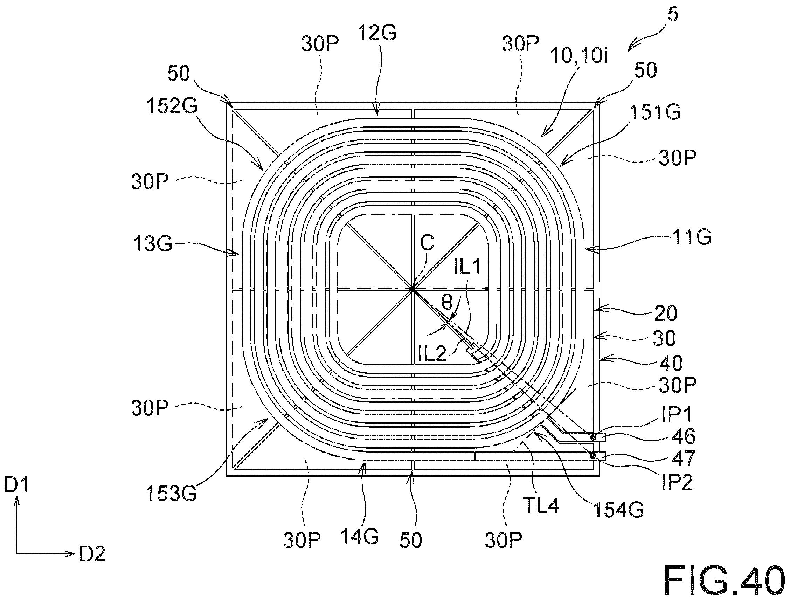

[Fig. 40] Fig. 40 is a diagram corresponding to Fig. 5A and showing still another modification of the coil unit.

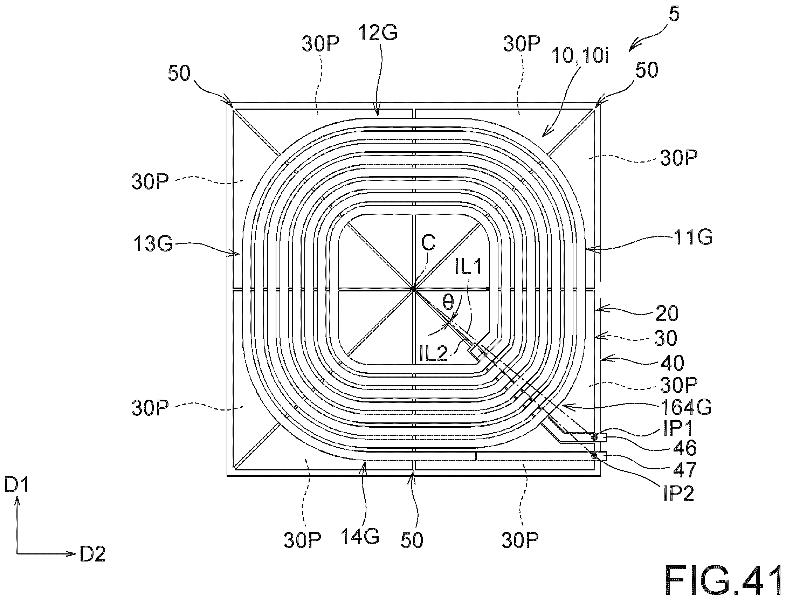

[Fig. 41] Fig. 41 is a diagram corresponding to Fig. 5A and showing still another modification of the coil unit.

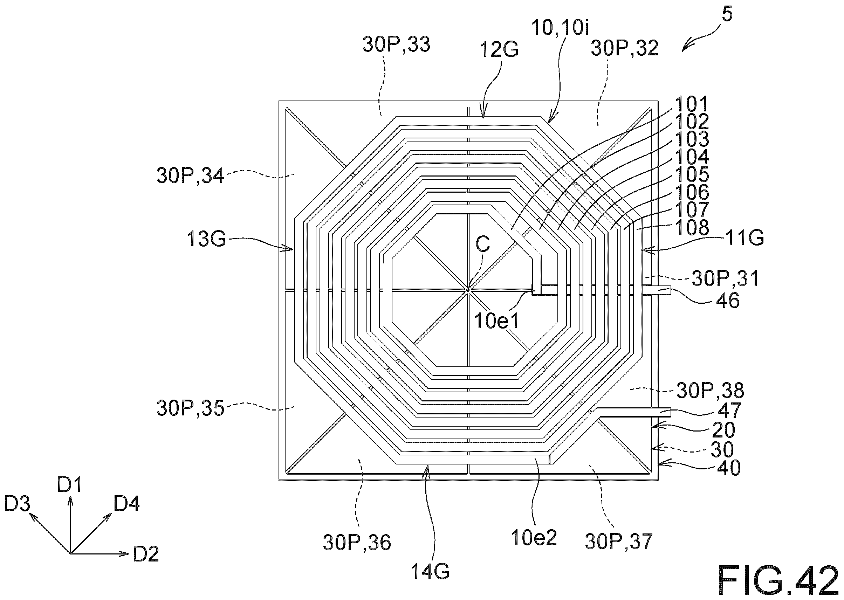

[Fig. 42] Fig. 42 is a diagram corresponding to Fig. 5A and showing still another modification of the coil unit.

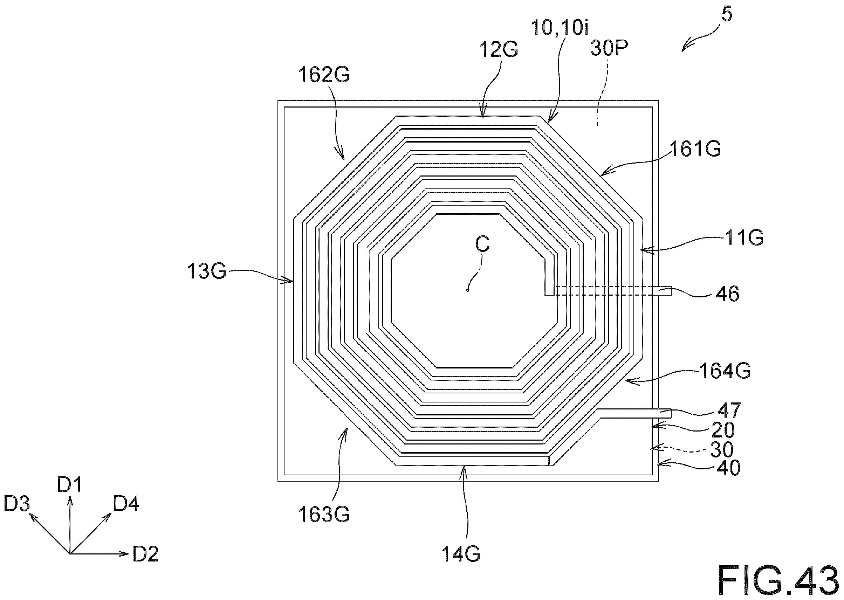

[Fig. 43] Fig. 43 is a diagram corresponding to Fig. 5A and showing still another modification of the coil unit.

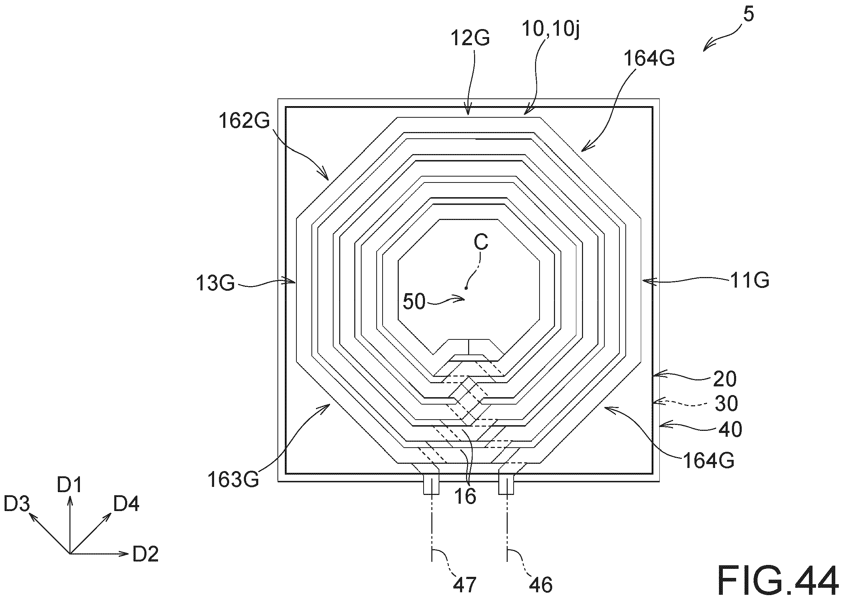

[Fig. 44] Fig. 44 is a diagram corresponding to Fig. 17 and showing still another modification of the coil unit.

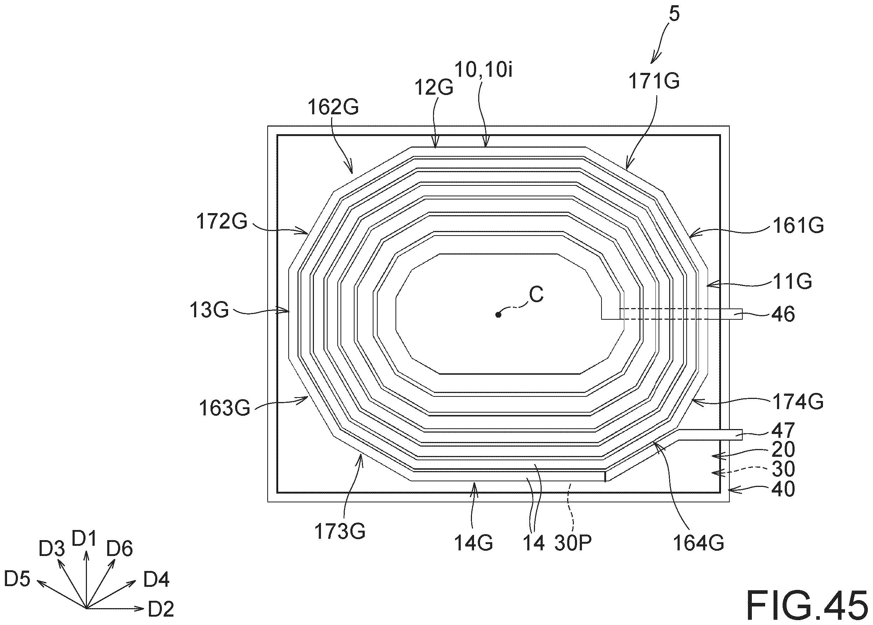

[Fig. 45] Fig. 45 is a diagram corresponding to Fig. 5A and showing still another modification of the coil unit.

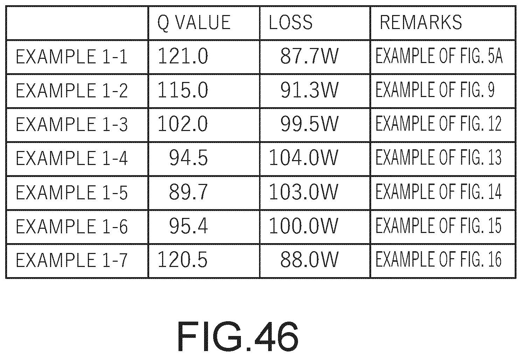

[Fig. 46] Fig. 46 is a table showing Q values and losses of coil units of Examples 1-1 to 1-7.

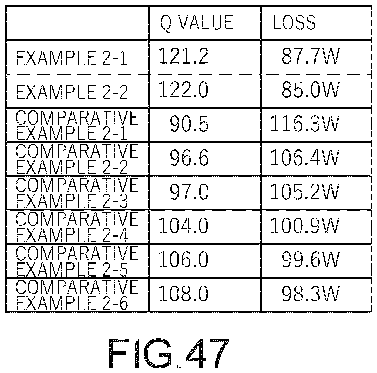

[Fig. 47] Fig. 47 is a table showing Q values and losses of coil units of Example 2 and Comparative Examples 2-1 to 2-4.

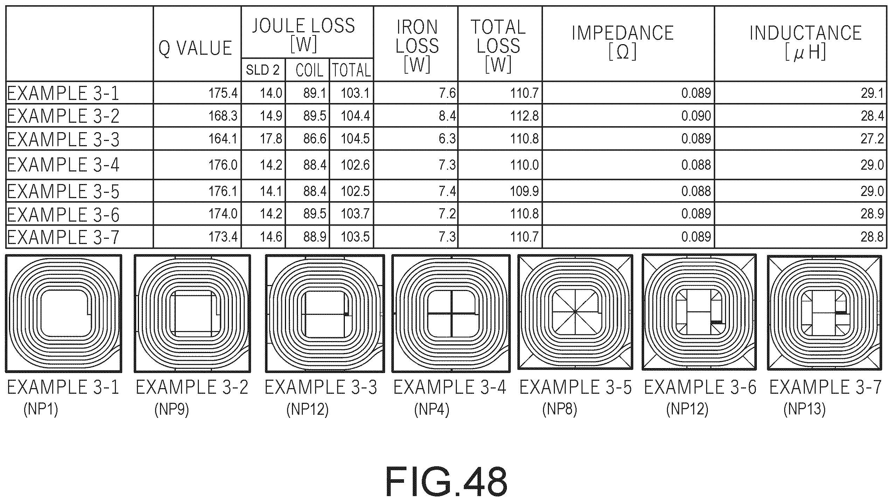

[Fig. 48] Fig. 48 is a table showing results of evaluation of coil units of Example 3.

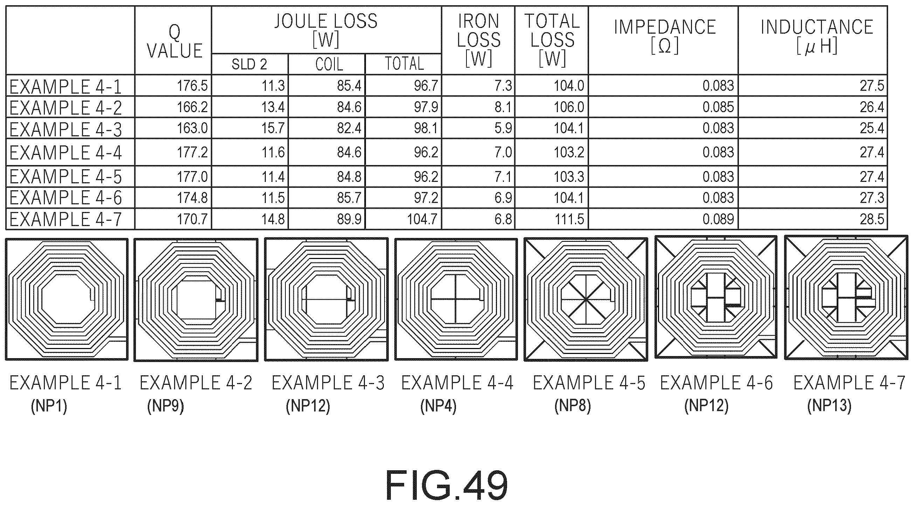

[Fig. 49] Fig. 49 is a table showing results of evaluation of coil units of Example 4.

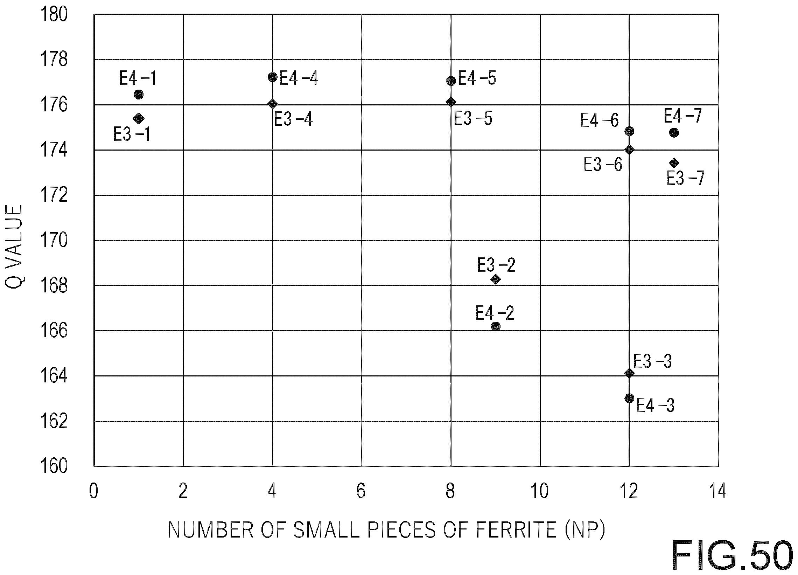

[Fig. 50] Fig. 50 is a table showing results of comparison among the coil units of Examples 3 and 4.

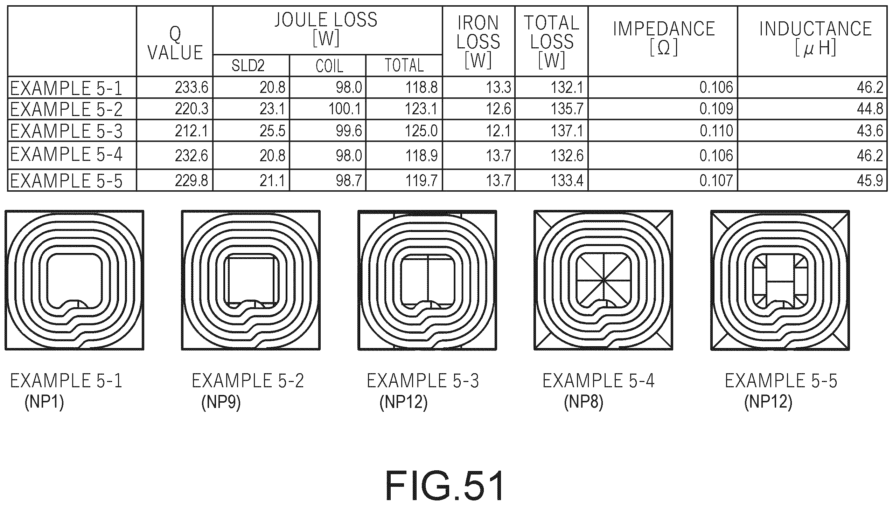

[Fig. 51] Fig. 51 is a table showing results of evaluation of coil units of Example 5.

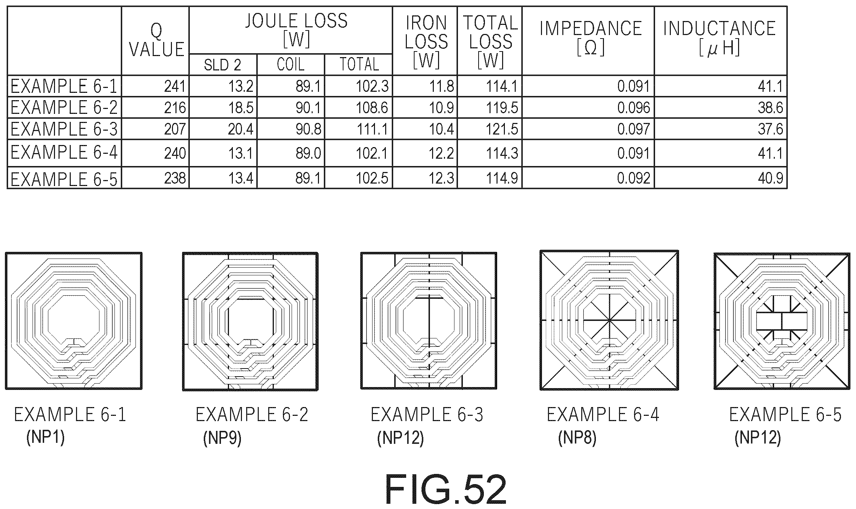

[Fig. 52] Fig. 52 is a table showing results of evaluation of coil units of Example 6.

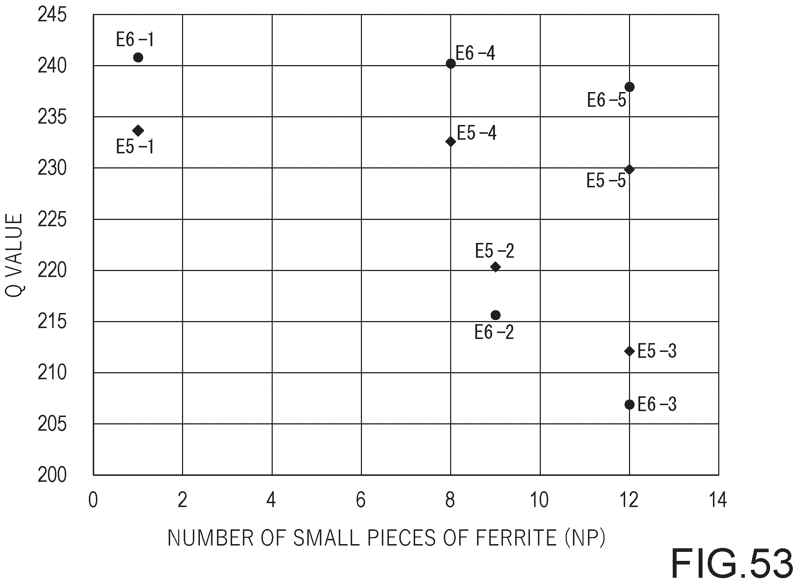

[Fig. 53] Fig. 53 is a table showing results of comparison among the coil units of Examples 5 and 6.

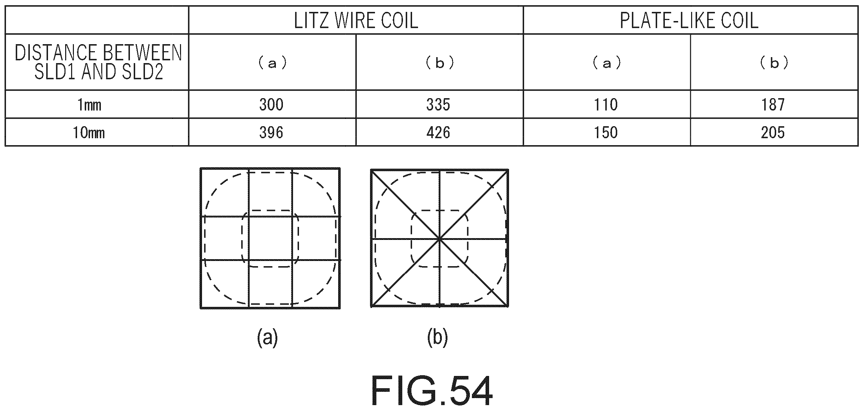

[Fig. 54] Fig. 54 is a table showing Q values of coil units of Example 7.

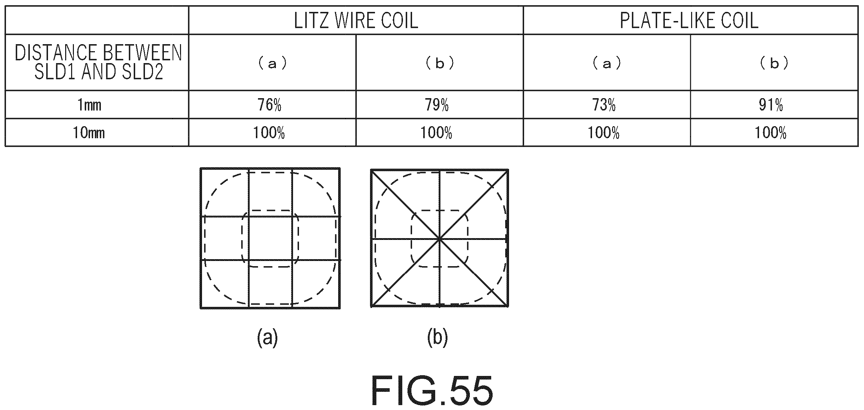

[Fig. 55] Fig. 55 is a table showing results of comparison between the Q values of the coil units of Example 7.

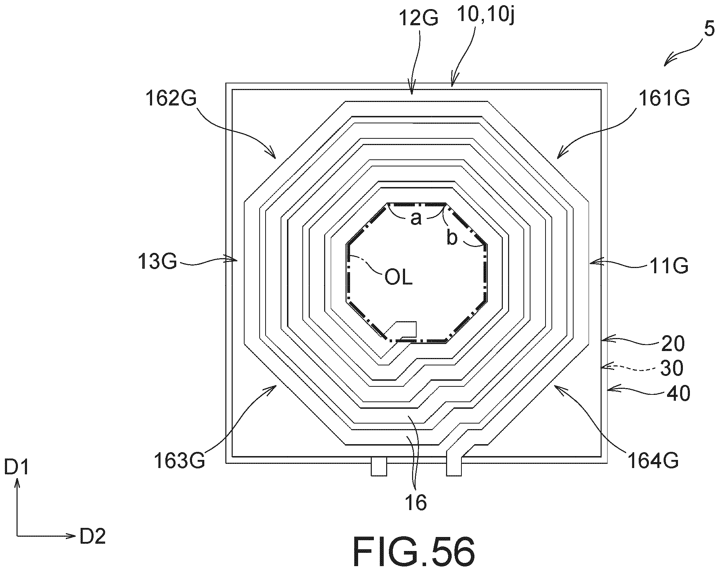

[Fig. 56] Fig. 56 is a diagram corresponding to Fig. 17 and explaining Example 8.

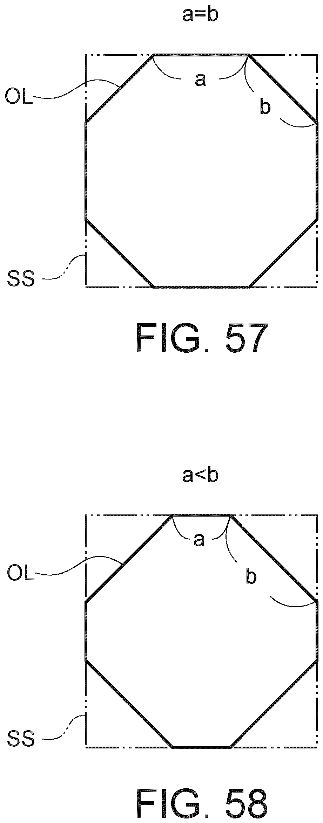

[Fig. 57] Fig. 57 is a diagram for explaining the shape of a coil of a coil unit of Example 8-1.
[Fig. 58] Fig. 58 is a diagram for explaining the shape of a coil of a coil unit of Example 8-2.

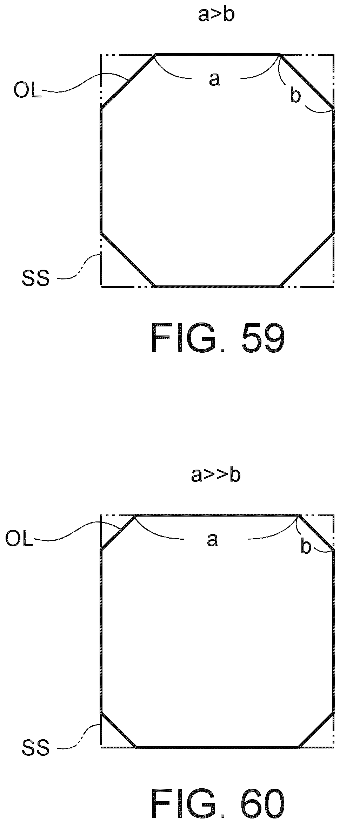

[Fig. 59] Fig. 59 is a diagram for explaining the shape of a coil of a coil unit of Example 8-3.
[Fig. 60] Fig. 60 is a diagram for explaining the shape of a coil of a coil unit of Example 8-4.

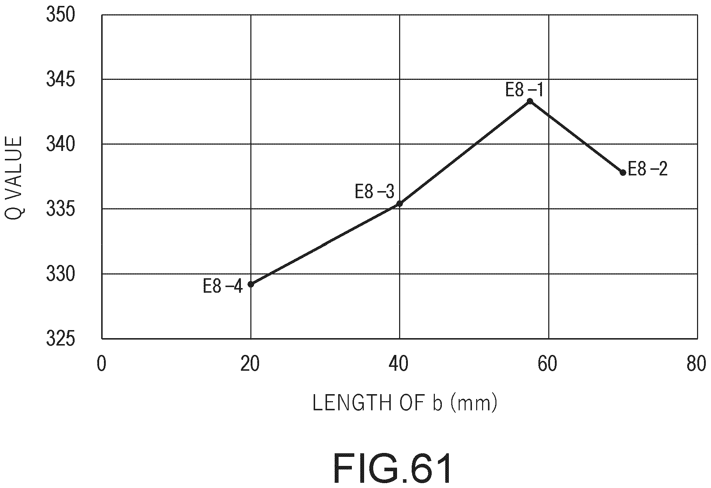

[Fig. 61] Fig. 61 is a graph showing Q values of the coil units of Examples 8-1 to 8-4.

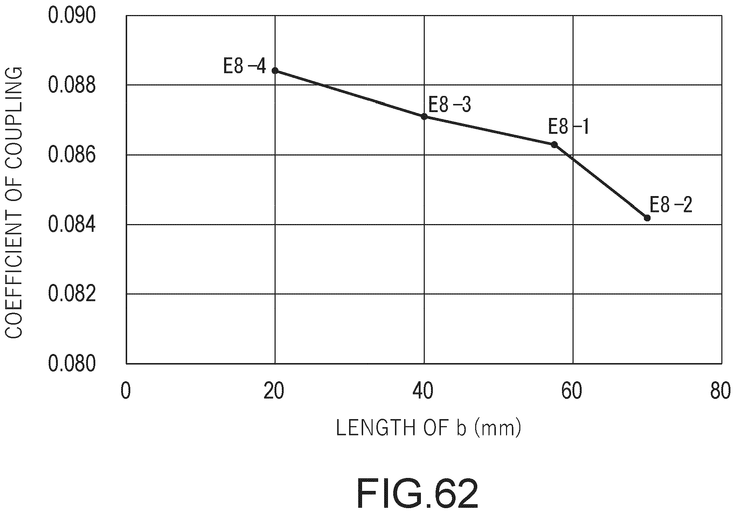

[Fig. 62] Fig. 62 is a graph showing coefficients of coupling of the coil units of Examples 8-1 to 8-4.

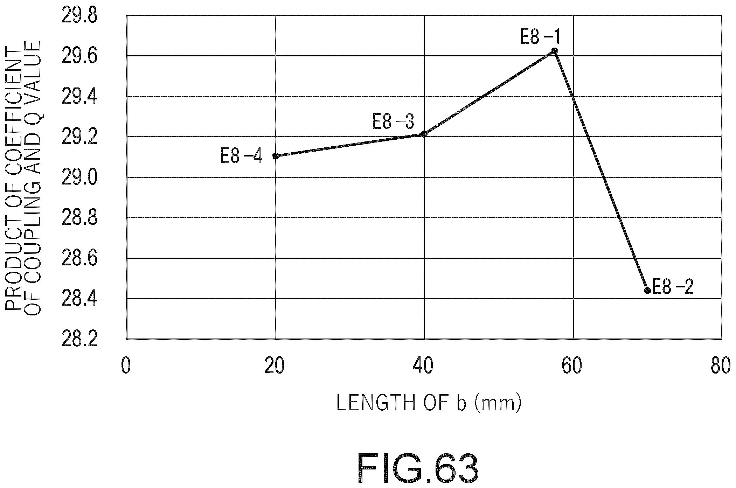

[Fig. 63] Fig. 63 is a graph showing the products of the coefficients of coupling and the Q values of the coil units of Examples 8-1 to 8-4.

### Description of Embodiments

In the following, each embodiment is described with reference to the drawings. In the accompanying drawings, scales and horizontal and vertical dimensional ratios, or other sizes are alterations and exaggerations of actual ones for convenience of illustration and ease of comprehension.

Further, terms such as "sheet", "film", and "plate" herein shall not be distinguished from one another solely on the basis of the difference in designation. Accordingly, for example, the concept "sheet" also encompasses a member that may be called a "film" or a "plate".

Further, the term "sheet surface (plate surface, film surface)" herein refers to a surface that agrees in planar direction (surface direction) with a target sheet-like (plate-like, film-like) member in a case where the target sheet-like (plate-like, film-like) member is seen from an overall and big-picture perspective. Furthermore, the term "direction normal to a sheet-like (plate-like, film-like) member" refers to a direction normal to the sheet surface (plate surface, film surface) of the target sheet-like (plate-like, film-like) member.

### <Wireless Electric Power Transfer System>

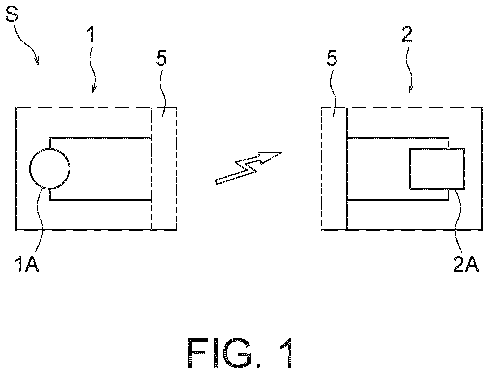

Fig. 1 schematically shows a wireless electric power transfer system S to which a coil unit according to the after-mentioned embodiment is applicable. First, the wireless electric power transfer system S (hereinafter abbreviated to "electric power transfer system S") is described with reference to Fig. 1.

The electric power transfer system S includes a power transmission apparatus 1 and a power receiving apparatus 2. The power transmission apparatus 1 includes a coil unit 5 and a high-frequency current supply unit 1A. The coil unit 5 in the power transmission apparatus 1 functions as a power transmission coil unit. The high-frequency current supply unit 1A supplies a high-frequency current to the coil unit 5 as the power transmission coil unit.

The power receiving apparatus 2 includes a coil unit 5 and a converter 2A. The coil unit 5 in the power receiving apparatus 2 functions as a power receiving coil unit. The converter 2A shapes a high-frequency current that is generated in the coil unit 5. The converter 2A has, for example, a rectifier circuit configured to convert the high-frequency current to a direct current.

In transferring electric power from the power transmission apparatus 1 to the power receiving apparatus 2 wirelessly (i.e. in a noncontact manner), the power transmission apparatus 1 supplies a high-frequency current of a predetermined frequency from the high-frequency current supply unit 1A to the coil unit 5 as the power transmission coil unit. This causes a magnetic field to be generated by electromagnetic induction in the coil unit 5. Moreover, due to the influence of this magnetic field, a high-frequency current is generated in the coil unit 5 as the power receiving coil unit in the power receiving apparatus 2. The converter 2A converts this high-frequency current to a direct current and supplies the direct current thus obtained, for example, to a battery (not illustrated).

The electric power transfer system S shown in Fig. 1 employs a magnetic resonance scheme as an electric power transfer scheme. Note, however, that the electric power transfer system S may be configured as an electromagnetic induction type of electric power transfer system. A description is given here by taking as an example a case where the electric power transfer system S is configured as a system to transfer electric power to an electric vehicle wirelessly. In this case, the power transmission apparatus 1 is installed in a road, a parking lot, or other places. The power receiving apparatus 2 is installed on the electric vehicle.

Note, however, that the electric power transfer system S is not limited to use for electric power transfer to an electric vehicle. For example, the electric power transfer system S may be used for electric power transfer to a flight vehicle such as a drone or to a robot. Further, the electric power transfer system S may be used for electric power transfer to a submersible or an explorer robot under the sea. In this way, the electric power transfer system S can be used for electric power transfer to various movable bodies such as an electric vehicle, a flight vehicle, a robot, and a submersible. It should be noted that a coil unit according to an embodiment is not limited to use in a wireless electric power transfer system. For example, a coil unit according to an embodiment may be used, for example, in a transformer, a DC-DC converter, and an antenna.

The electric power transfer system S includes, as the coil units 5, any of the coil units 5 according to the after-mentioned first and second embodiments and modifications thereof. It should be noted that identical coil units 5 may be used in the power transmission apparatus 1 and the power receiving apparatus 2. Alternatively, coil units 5 different from each other may be used in the power transmission apparatus 1 and the power receiving apparatus 2. Alternatively, a coil unit 5 of any of the first and second embodiments and the modifications thereof may be used in one of the power transmission apparatus 1 and the power receiving apparatus 2, and any other type of coil unit may be used in the other of the power transmission apparatus 1 and the power receiving apparatus 2. The following describes the coil units 5 according to the first and second embodiments and the modifications thereof.

### <<First Embodiment>>

The following describes a first embodiment of the present invention with reference to the drawings.

### <Coil Unit>

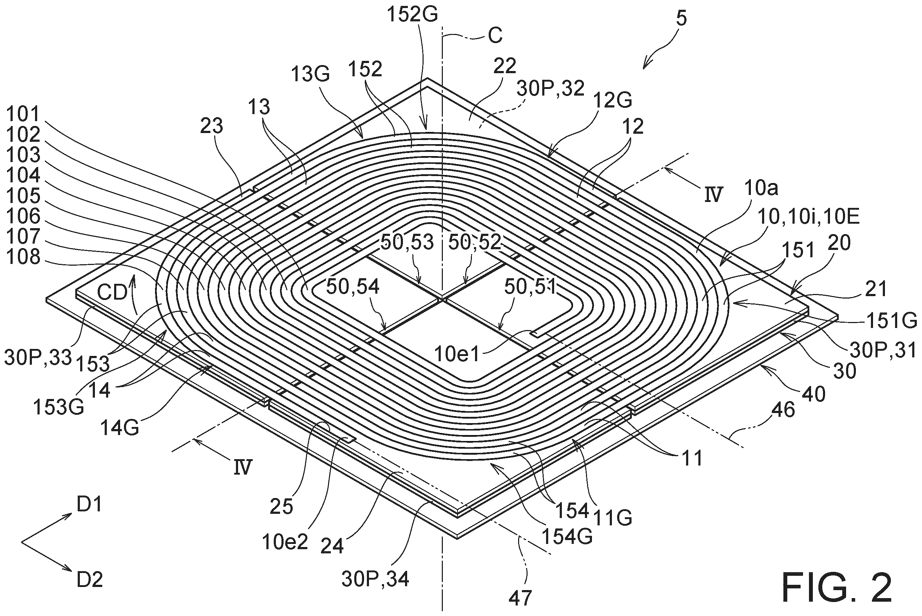

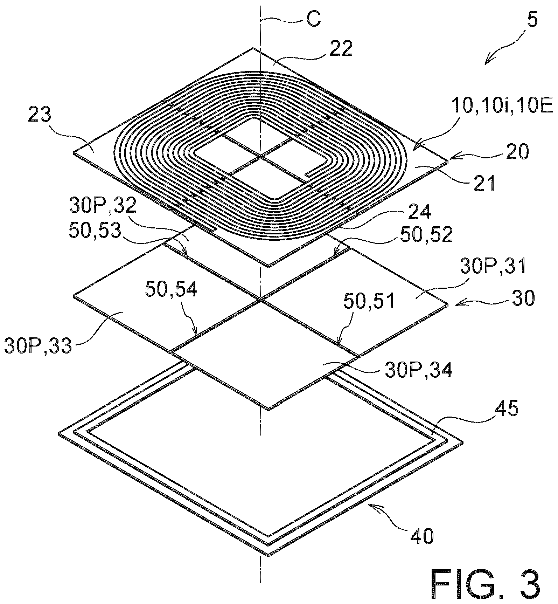

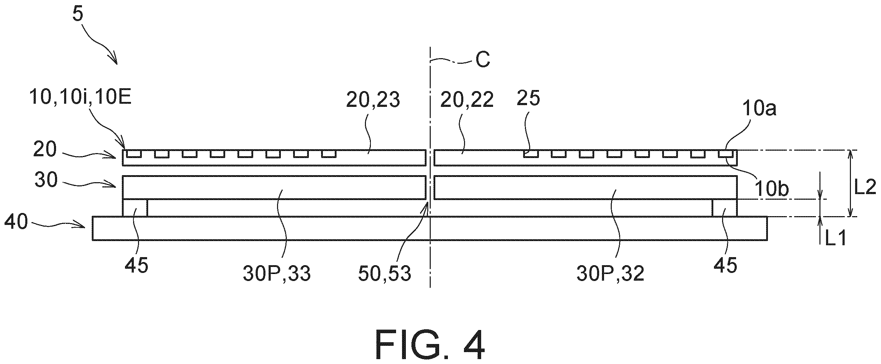

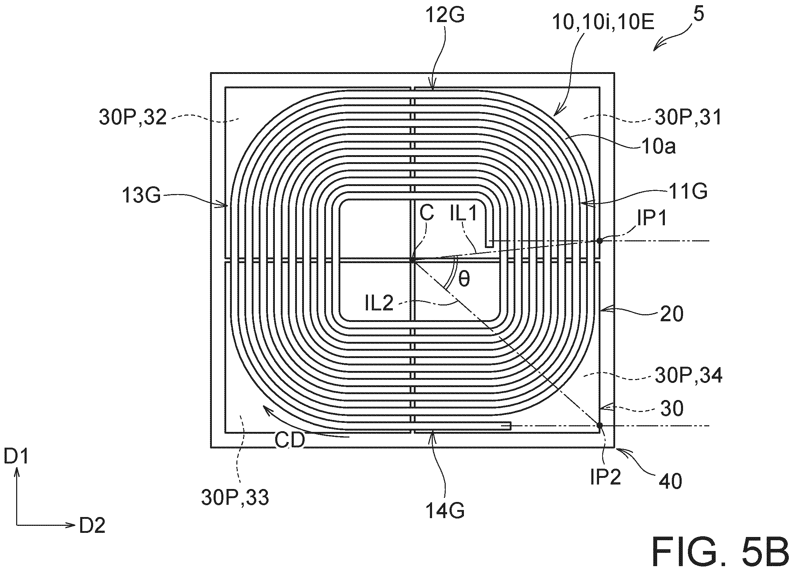

Fig. 2 is a perspective view of a coil unit 5 according to the first embodiment. Fig. 3 is an exploded perspective view of the coil unit 5. Fig. 4 is a cross-sectional view of the coil unit 5 as taken along line IV-IV in Fig. 2. Figs. 5A and 5B are plan views of the coil unit 5. Figs. 3 and 5A omit to illustrate the after-mentioned first and second connection terminals 46 and 47.

As shown in Figs. 2 to 4, the coil unit 5 includes a coil 10, a magnetic resin layer 20, a first shield member 30, and a second shield member 40. In the illustrated example, the coil unit 5 further includes a first connection terminal 46 and a second connection terminal 47. As shown in Fig. 2, the first connection terminal 46 and the second connection terminal 47 are connected to first and second ends 10e1 and 10e2, respectively, of the coil 10.

As shown in Fig. 4, the coil 10 has a first principal surface 10a and a second principal surface 10b. The second principal surface 10b is a surface opposite to the first principal surface 10a. A combination of the coil 10 and the magnetic resin layer 20, the first shield member 30, and the second shield member 40 are arranged in this order in a direction from the first principal surface 10a toward the second principal surface 10b. In the following, the terms "first side" and "second side", which are used for the coil unit 5 and constituent elements thereof, mean a side that the first principal surface 10a faces and a side that the second principal surface 10b faces, respectively.

### (Coil)

As shown in Fig. 5A, the coil 10 includes a coil element 10i formed into a spiral shape around an arbitrary central axis line C. The term "spiral shape" means the shape of a plane curve that extends further away from its center as it turns (or extends closer to its center as it turns). The term "plane curve" here also encompasses a plane pattern continuously bending in a broken line. In the present embodiment illustrated, the spiral shape is located on an imaginary plane surface orthogonal to the central axis line. The coil element 10i is formed from an electrical conducting material. Although, in the present embodiment, the coil element 10i is formed from copper, this is not intended to impose any limitation. The coil element 10i may be formed from another electrical conducting material such as a copper alloy, aluminum, or an aluminum alloy.

In the example shown in Figs. 2 to 5B, the coil 10 is composed of a single coil element 10i. The coil element 10i has a plate shape. That is, the coil element 10i is a planar coil. In particular, the coil element 10i is a non-Litz-wire planer coil element. As shown in Fig. 4, the wire cross-sectional shape of the coil element 10i in a direction orthogonal to a circumferential direction around the spiral shape is a rectangular shape.

The sign "C" shown in Figs. 2 to 5B represents the central axis line of the coil element 10i (or the coil 10) that passes through the center of the spiral shape of the coil element 10i. In the following, the term "axial direction" means a direction extending on the central axis line C or a direction parallel with the central axis line C. Further, the term "radial direction" means a radial direction of a circle centered at the central axis line C. Further, the term "circumferential direction" means a direction along a circle centered at the central axis line C (i.e. a circumferential direction of the circle).

The coil element 10i includes an electric conductor 10E having a spiral shape. The electric conductor 10E includes a plurality of turn portions 101 to 108 arranged in the radial direction. In the illustrated example, the electric conductor 10E includes first to eighth turn portions 101 to 108. The first to eighth turn portions 101 to 108 are arranged in this order from inside toward outside in the radial direction. In other words, the first turn portion 101 is located furthest inward in the radial direction, and the eighth turn portion 108 is located furthest outward in the radial direction. Furthermore, in other words, the first turn portion 101 forms an innermost peripheral portion of the coil element 10i. Further, the eighth turn portion 108 forms an outermost peripheral portion of the coil element 10i. It should be noted that the term "position that is further inward in the radial direction than is a certain member" means a position that is closer to the central axis line C than is the member. Further, the term "position that is further outward in the radial direction than is a certain member" means a position that is further away outward from the member in the radial direction. For example, the phrase "position that is further inward in the radial direction than is the coil element 10i" means a position that is closer to the central axis line C than is the innermost peripheral turn portion 101. The phrase "position that is further outward in the radial direction than is the coil element 10i" means a position that is further away outward from the outermost peripheral turn portion 108 in the radial direction.

Each of the turn portions 101 to 108 extends on the aforementioned imaginary plane surface. The first to eighth turn portions 101 to 108 are arranged in this order, whereby the coil element 10i forms a spiral shape. Although, in the illustrated example, the coil element 10i (electric conductor 10E) is wound such that each of the turn portions 101 to 108 forms a substantially quadrangular shape, this is not intended to impose any limitation. Each of the turn portions 101 to 108 may be wound so as to substantially form a polygonal shape other than a quadrangular shape.

A first end of each of the turn portions 101 to 108 is located further inward in the radial direction than is a second end of that turn portion 101, 102, 103, 104, 105, 106, 107, or 108. In other words, the second end of each of the turn portions 101 to 108 is located further outward in the radial direction than is the first end of that turn portion 101, 102, 103, 104, 105, 106, 107, or 108.

Each of the turn portions 101 to 108 includes a plurality of linear portions 11 to 14 placed around the central axis line C. Ones of the linear portions 11 to 14 that are adjacent to each other in a circumferential direction of a circle centered at the central axis line C are connected to each other. In the illustrated example, ones of the linear portions that are adjacent to each other in the circumferential direction are connected to each other via first intermediate curved portions 151 to 154 curved along the circumferential direction. In the illustrated example, the first to eighth turn portions 101 to 108 include first and third linear portions 11 and 13 extending in a first direction D1 and second and fourth linear portions 12 and 14 extending in a second direction D2. The first direction D1 and the second direction D2 are not parallel with each other. In the illustrated example, the first direction D1 and the second direction D2 are orthogonal to each other. In each of the turn portions 101 to 108, the first linear portion 11 and the third linear portion 13 are placed such that the central axis line C passes through a space between the first linear portion 11 and the third linear portion 13. Further, in each of the turn portions 101 to 108, the second linear portion 12 and the fourth linear portion 14 are placed such that the central axis line C passes through a space between the second linear portion 12 and the fourth linear portion 14. In each of the turn portions 101 to 108, adjacent ends of the first and second linear portions 11 and 12 are connected to each other via a 1Ath intermediate curved portion 151. Similarly, in each of the turn portions 101 to 108, adjacent ends of the second and third linear portions 12 and 13 are connected to each other via a 1Bth intermediate curved portion 152. Further, in each of the turn portions 101 to 108, adjacent ends of the third and fourth linear portions 13 and 14 are connected to each other via a 1Cth intermediate curved portion 153.

Furthermore, adjacent ends of the fourth and first linear portions 14 and 11 of turn portions 101 and 102, ..., or 107 and 108 that are adjacent to each other in the radial direction are connected to each other via a 1Dth intermediate curved portion 154. For example, adjacent ends of the fourth linear portion 14 of the first turn portions 101 and the first linear portion 11 of the second turn portion 102 are connected to each other via a 1Dth intermediate curved portion 154. Further, adjacent ends of the fourth linear portion 14 of the second turn portion 102 and the first linear portion 11 of the third turn portion 103 are connected to each other via a 1Dth intermediate curved portion 154. As shown in Fig. 2, the first connection terminal 46 is connected to the first linear portion 11 of the first turn portion 101, which is located furthest inward. The second connection terminal 47 is connected to the fourth linear portion 14 of the eighth turn portion 108, which is located furthest outward.

The first linear portions 11 of the plurality of turn portions 101 to 108 are arrayed in the radial direction to form a first linear portion group 11G. Further, the second linear portions 12 of the plurality of turn portions 101 to 108 are arrayed in the radial direction to form a second linear portion group 12G. Further, the third linear portions 13 of the plurality of turn portions 101 to 108 are arrayed in the radial direction to form a third linear portion group 13G. Further, the fourth linear portions 14 of the plurality of turn portions 101 to 108 are arrayed in the radial direction to form a fourth linear portion group 14G. Ones of the linear portions 11 that are adjacent to each other in the radial direction, ones of the linear portions 12 that are adjacent to each other in the radial direction, ones of the linear portions 13 that are adjacent to each other in the radial direction, and ones of the linear portions 14 that are adjacent to each other in the radial direction are separated from each other in the radial direction. The first to fourth linear portion groups 11G to 14G are parallel straight line groups composed of pluralities of the first to fourth linear portions 11 to 14, respectively.

The 1Ath intermediate curved portions 151 of the plurality of turn portions 101 to 108 are arrayed in the radial direction to form a 1Ath intermediate curved portion group 151G. The 1Bth intermediate curved portions 152 of the plurality of turn portions 101 to 108 are arrayed in the radial direction to form a 1Bth intermediate curved portion group 152G. The 1Cth intermediate curved portions 153 of the plurality of turn portions 101 to 108 are arrayed in the radial direction to form a 1Cth intermediate curved portion group 153G. The 1Dth intermediate curved portions 154 of the plurality of turn portions 101 to 108 are arrayed in the radial direction to form a 1Dth intermediate curved portion group 154G. Ones of the first intermediate curved portions 151 that are adjacent to each other in the radial direction, ones of the first intermediate curved portions 152 that are adjacent to each other in the radial direction, ones of the first intermediate curved portions 153 that are adjacent to each other in the radial direction, and ones of the first intermediate curved portions 154 that are adjacent to each other in the radial direction are separated from each other in the radial direction. The 1Ath to 1Dth intermediate curved portion groups 151G to 154G are parallel curve groups composed of pluralities of the 1Ath to 1Dth intermediate curved portions 151 to 154, respectively.

In the example shown in Figs. 2 to 5B, the turn portions 101 to 108 are placed at equal pitches. Accordingly, the distance between the first turn portion 101 and the second turn portion 102 and the distance between the second portion 102 and the third turn portion 103 are equal to each other. Further, in each of the linear portion groups 11G to 14G, the linear portions 11, 12, 13, or 14 are placed at equal pitches. Accordingly, the distance between the first linear portion 11 of the first turn portion 101 and the first linear portion 11 of the second turn portion 102 and the distance between the first linear portion 11 of the second turn portion 102 and the first linear portion 11 of the third turn portion 103 are equal to each other. Further, in each of the first intermediate curved portion groups 151G to 154G, the first intermediate curved portions 151, 152, 153, or 154 are placed at equal pitches. Accordingly, the distance between the first intermediate curved portion 151 of the first turn portion 101 and the first intermediate curved portion 151 of the second turn portion 102 and the distance between the first intermediate curved portion 151 of the second turn portion 102 and the first intermediate curved portion 151 of the third turn portion 103 are equal to each other.

The aforementioned coil element 10i is formed, for example, by punching a metal plate such as a copper plate into a spiral shape. Meanwhile, the coil element 10i can also be formed by etching metal foil such as copper foil into a spiral shape. In this case, the coil element 10i can be formed into a complex spiral-shaped pattern. Note, however, that etching requires much labor to make the coil element 10i thick enough to transfer a large amount of electric power. Therefore, punching is preferred from the point of view of manufacturing efficiency.

Further, the thickness of the electric conductor 10E in the coil element 10i may be, for example, 0.2 mm or greater and 1.0 mm or less. Further, the radius of the coil element 10i (i.e. the distance from the central axis line C to the farthest portion of the coil element 10i in the radial direction) may be 200 mm or greater. In a case where the coil 10 is used in the power transmission coil unit or the power receiving coil unit of the electric power transfer system S configured to transfer electric power to an electric vehicle under the magnetic resonance scheme, the radius of the coil element 10i (i.e. the distance from the central axis line C to the farthest portion of the coil element 10i in the radial direction) is usually 200 mm or greater and 350 mm or less. In the present embodiment, the coil element 10i has the shape of a rectangle as a whole. In this case, a maximum dimension of the coil element 10i in a longitudinal direction may be 300 mm or greater and 700 mm or less, and a maximum dimension of the coil element 10i in a transverse direction may be 200 mm or greater and 650 mm or less. For example, in a case where the coil 10 is used in the power transmission coil unit, the dimension of the coil element 10i in the longitudinal direction may be 550 mm or greater and 700 mm or less, and the dimension of the coil element 10i in the transverse direction may be 400 mm or greater and 550 mm or less. Further, in a case where the coil 10 is used in the power receiving coil unit, the dimension of the coil element 10i in the longitudinal direction may be 350 mm or greater and 500 mm or less, and the dimension of the coil element 10i in the transverse direction may be 200 mm or greater and 350 mm or less.

Further, in a case where electric power is transferred to an electric vehicle under the magnetic resonance scheme, it is desirable to make it possible to transfer 1 kW or more, desirably 5 kW or more, of power in a high-frequency current frequency range of 10 kHz to 200 kHz, particularly 79 kHz to 90 kHz. In this case, it is preferable that the thickness of the coil element 10i formed of copper be 0.4 mm or greater. It should be noted that making the coil element 10i too thick leads to an increase in weight of the coil 10, for example, making it unsuitable for on-board use. Therefore, the thickness of the coil element 10i may be, for example, 2.0 mm or less, may be 1.5 mm or less, or may be 1.0 mm or less.

The electric conductor 10E in the coil element 10i is not limited to particular line widths. However, in considering making it possible to transfer 1 kW or more, desirably 5 kW or more, of power in a high-frequency current frequency range of, for example, 79 kHz to 90 kHz, the line width of each of the turn portions 101 to 108 may be 2 mm or greater and 20 mm or less, may be 2 mm or greater and 16 mm or less, may be 2 mm or greater and 12 mm or less, or may be 2 mm or greater and 8 mm or less. The term "line width" means the distance between the inner periphery and the outer periphery of the electric conductor 10E in a cross-section orthogonal to the direction in which the electric conductor 10E circles.

It should be noted that the central axis line C of the aforementioned spiral shape is herein defined in the following manner. First, a drawing of linear imaginary turn portions that are similar in shape to the innermost peripheral turn portion 101 is sequentially done from an inward end of the innermost peripheral turn portion 101 in the radial direction so as to form a spiral shape inward in the radial direction. Then, the drawing is continued until an imaginary turn portion falling within a diameter of 1 cm can be drawn. Then, a line passing in a direction orthogonal to a circumferential direction and a radial direction of the spiral shape inward in a radial direction of the imaginary turn portion falling within a diameter of 1 cm is defined as the central axis line C.

The coil 10 has the end 10e1, to which the first connection terminal 46 is connected, and the end 10e2, to which the second connection terminal 47 is connected. In the illustrated example, the coil 10 is composed of a single coil element 10i. For this reason, the first end 10e1 is an inward end of the coil 10 located inward in the radial direction. Further, the second end 10e2 of an outward end of the coil 10 located outward in the radial direction. The inward end 10e1 is an end of the first turn portion 101 of the coil element 10i. The outward end 10e2 is an end of the eighth turn portion 108 of the coil element 10i.

### (Magnetic Resin Layer)

The magnetic resin layer 20 is provided to suppress transmission of magnetism and/or a leakage magnetic field. The magnetic resin layer 20 overlaps the coil 10 in an axial direction of the coil 10. In this state, the magnetic resin layer 20 is in direct contact with the second principal surface 10b of the coil 10. In other words, the magnetic resin layer 20 is in direct contact with the electric conductor 10E. In the illustrated example, the magnetic resin layer 20 is in close contact with the second principal surface 10b of the coil 10. In other words, the magnetic resin layer 20 is in close contact with the electric conductor 10E. The magnetic resin layer 20 covers the second principal surface 10b. More specifically, the magnetic resin layer 20 is formed such that an outer peripheral edge thereof is located outside the coil 10 when seen in the axial direction.

The magnetic resin layer 20 has magnetism. A magnetic field that is generated in the coil unit 5 is generated so as to spread in all directions with respect to the central axis line C of the coil 10. In so doing, by having magnetism, the magnetic resin layer 20 can orient spreading lines of magnetic flux toward the central axis line C. Further, when the magnetic field that is generated in the coil unit 5 reaches a peripheral component located at the periphery of the coil unit 5, the peripheral component may be adversely affected. Therefore, the magnetic resin layer 20 is provided to restrain a line of magnetic force from reaching a peripheral component. As a result of this, the magnetic resin layer 20 can suppress a leakage magnetic field that does not contribute to the generation of an electric current.

The magnetic resin layer 20 contains a magnetic material. Preferably, the magnetic resin layer 20 contains a soft magnetic material. More specifically, the magnetic resin layer 20 contains ferrite, preferably soft ferrite. Further, the magnetic resin layer 20 may contain a nanocrystalline magnetic material.

Further, the magnetic resin layer 20 contains resin. A possible example of the resin for forming the magnetic resin layer 20 is thermosetting resin such as epoxy resin or polyimide. In this case, the resin of the magnetic resin layer 20 is easily deformed along the shape of the coil 10 in the process of thermal curing in integrating the coil 10 and the magnetic resin layer 20 with each other by thermal pressing as will be mentioned later. Another possible example of the resin for forming the magnetic resin layer 20 is thermoplastic resin such as nylon. In this case, too, the resin of the magnetic resin layer 20 is easily deformed along the shape of the coil 10.

As shown in Figs. 2 and 4, the magnetic resin layer 20 has a depressed portion 25 having a spiral shape corresponding to the spiral shape of the coil 10. The depressed portion 25 is a portion of the magnetic resin layer 20 that is depressed in the axial direction of the coil 10 or, in other words, in a thickness direction of the magnetic resin layer 20. The depressed portion 25 has a spiral shape when seen in the axial direction of the coil 10. Moreover, at least part of the coil 10 is accommodated in the depressed portion 25 with its spiral shape matched with the spiral shape of the depressed portion 25. In particular, the depressed portion 25 accommodates the whole of the electric conductor 10E. For this reason, as shown in Fig. 4, the magnetic resin layer 20 is in direct contact with three surfaces of the coil 10 other than the first principal surface 10a.

In the present embodiment, the electric conductor 10E does not project from the magnetic resin layer 20. In other words, the first principal surface 10a of the coil 10 and a surface of the magnetic resin layer 20 that faces the first side are flush with each other. Note, however, that only part of the coil 10 may be accommodated in the depressed portion 25 so that part of the coil 10 projects from the magnetic resin layer 20. Alternatively, the coil 10 may be provided on a flat surface of the magnetic resin layer 20 without the depressed portion 25 being formed in the magnetic resin layer 20. Alternatively, the electric conductor 10E may be embedded in the magnetic resin layer 20 without being exposed outward.

As mentioned above, in the illustrated example, the magnetic resin layer 20 is in close contact with the second principal surface 10b of the coil 10. Specifically, the magnetic resin layer 20 is fusion-bonded to the coil 10 in the depressed portion 25. That is, the coil 10 and the magnetic resin layer 20 are joined by an anchor effect in the depressed portion 25. The coil 10 and the magnetic resin layer 20 are integrated, for example, by thermal pressing. In so doing, part of the magnetic resin layer 20 penetrates into a depression in the surface of the coil 10 and then cures. As a result of this, the coil 10 and the magnetic resin layer 20 are fusion-bonded to each other, and the magnetic resin layer 20 makes close contact with the coil 10.

In the illustrated example, the magnetic resin layer 20 is divided into a plurality of elements as is the case with the after-mentioned first shield member 30. The magnetic resin layer 20 includes a plurality of magnetic resin elements 21 to 24. In the illustrated example, the magnetic resin layer 20 includes first to fourth magnetic resin elements 21 to 24. The magnetic resin layer 20 has formed therein gaps that linearly extend through spaces between adjacent magnetic resin elements 21 and 22, between adjacent magnetic resin elements 22 and 23, between adjacent magnetic resin elements 23 and 24, and between adjacent magnetic resin elements 24 and 21. In the illustrated example, when seen in the axial direction, the gaps that extend through the spaces between the magnetic resin elements 21 to 24 are aligned with gaps 51 to 54 that extend through spaces between the after-mentioned shield small pieces 31 to 34. It should be noted that the magnetic resin layer 20 does not need to be divided into the plurality of magnetic resin elements 21 to 24. In other words, the magnetic resin layer 20 does not need to have gaps formed therein.

### (First Shield Member)

The first shield member 30 is provided to suppress transmission of magnetism and/or a leakage magnetic field. The first shield member 30 is formed in a plate shape and spreads along a surface perpendicular to the axial direction of the coil 10. When seen in the axial direction, the first shield member 30 has such a size that an outer peripheral edge thereof is located outside the combination of the magnetic resin layer 20 and the coil 10. The first shield member 30 is provided between the second shield member 40 and the combination of the coil 10 and the magnetic resin layer 20.

The first shield member 30 contains a magnetic material. As mentioned above, a magnetic field that is generated in the coil unit 5 is generated so as to spread in all directions with respect to the central axis line C of the coil 10. In so doing, by having magnetism, the first shield member 30 can orient spreading lines of magnetic flux toward the central axis line C. Further, the first shield member 30 is provided to restrain a line of magnetic force from reaching a peripheral component. As a result of this, the first shield member 30 can suppress a leakage magnetic field that does not contribute to the generation of an electric current.

Preferably, the first shield member 30 contains a soft magnetic material. More specifically, the first shield member 30 contains ferrite, preferably soft ferrite. Further, the first shield member 30 may contain a nanocrystalline magnetic material.

Although, in the example shown in Fig. 4, the first shield member 30 is placed at a spacing from the magnetic resin layer 20, this is not intended to impose any limitation. The first shield member 30 may be in contact with the magnetic resin layer 20. In a case where the first shield member 30 is placed at a spacing from the magnetic resin layer 20, a spacer (not illustrated) may be placed between the first shield member 30 and the magnetic resin layer 20. This makes it possible to keep the first shield member 30 and the magnetic resin layer 20 at a predetermined distance from each other. The distance between the first shield member 30 and the magnetic resin layer 20 is not limited to a particular distance but is, for example, 3 mm or shorter. The longer the distance between the first shield member 30 and the magnetic resin layer 20 becomes, the harder it becomes to radiate heat from the coil unit 5 and the higher the coil unit 5 may become in temperature. For this reason, it is preferable that the distance between the first shield member 30 and the magnetic resin layer 20 be 1 mm or shorter. The distance between the first shield member 30 and the magnetic resin layer 20 may be 0 mm. In other words, the first shield member 30 and the magnetic resin layer 20 may be in direct contact or close contact with each other. Reducing the distance between the first shield member 30 and the magnetic resin layer 20 is also favorable to reducing the dimensions of the coil unit 5 (particularly a dimension of the coil unit 5 along the axial direction).

The first shield member 30 is sized such that an outer peripheral edge thereof is located outside the coil 10 when seen in the axial direction. In the aforementioned case of the coil 10 for use in the power transmission coil unit or the power receiving coil unit of the electric power transfer system S configured to transfer electric power to an electric vehicle, dimensions of the coil 10 as seen in the axial direction (i.e. a dimension of the coil 10 in the longitudinal direction × a dimension of the coil 10 in the transverse direction) are usually 200 mm or greater × 200 mm or greater. Accordingly, in this case, outer dimensions of the first shield member 30 too are 200 mm or greater × 200 mm or greater. However, it may be difficult to make a first shield member 30 of such dimensions out of one plate. For example, in a case where the first shield member 30 is a ferrite plate, it is usually difficult to form one ferrite plate having a dimension exceeding 150 mm in the longitudinal direction and a dimension exceeding 150 mm in the transverse direction. Further, even if it is possible to form one ferrite plate having a dimension exceeding 150 mm in the longitudinal direction and a dimension exceeding 150 mm in the transverse direction, such a ferrite plate breaks easily. Breakage of the first shield member 30 in the coil unit 5 may cause a decrease in performance of the coil unit 5.

In view of all these points, the coil unit 5 of the present embodiment is devised as described below. First, the first shield member 30 is divided into shield small pieces 30P. In other words, the first shield member 30 includes shield small pieces 30P arranged in the same plane. Dimensions of each shield small pieces 30P as seen in the axial direction may be 150 mm or less × 150 mm or less. This makes it easier to form a large-dimension first shield member 30 and reduce the risk of breakage of individual shield small pieces 30P.

In the example shown in Figs. 2 to 5B, the first shield member 30 includes first to fourth shield small pieces 31 to 34. Each of the first to fourth shield small pieces 31 to 34 has the shape of a quadrangle. In the illustrated example, each of the first to fourth shield small pieces 31 to 34 contains ferrite. More specifically, each of the first to fourth shield small pieces 31 to 34 is formed by a ferrite plate.

Gaps 50 are formed between adjacent shield small pieces 31 and 32, between adjacent shield small pieces 32 and 33, between adjacent shield small pieces 33 and 34, and between adjacent shield small pieces 34 and 31. In view of manufacturing tolerances of the shield small pieces 31 to 34, it is preferable that each of the gaps 50 have a width of 1 mm or greater, although each of the gaps 50 may have any width. The width of each of the gaps 50 may be 2 mm or greater, may be 3 mm or greater, or may be 4 mm or greater. From the point of view of suppressing transmission of lines of magnetic force through the gaps 50, it is preferable that the width of each of the gaps be 6 mm or less.

In the illustrated example, the first shield member 30 has a plurality of the gaps 50 formed therein. Each gap 50 linearly extends. In the illustrated example, the first shield member 30 has first to fourth gaps 51 to 54 formed therein.

The first gap 51 extends through a space between the first shield small piece 31 and the fourth shield small piece 34 along the second direction D2. The first gap 51 crosses at least part of the first linear portion group 11G when seen in the axial direction. In the example shown in Fig. 5A, the first gap 51 crosses the first linear portions 11 of the second to eighth turn portions 102 to 108 when seen in the axial direction. In other words, when seen in the axial direction, the first gap 51 extends from a position that is further inward in the radial direction than is the second turn portion 102 to a position that is further outward in the radial direction than is the eighth turn portion 108. Placing the shield small pieces 31 and 34 such that the first gap 51 crosses the first linear portions 11 restrains a line of magnetic force formed around each first linear portion 11 from reaching the second shield member 40 through the first gap 51. This makes it possible to restrain an eddy current from being generated in the second shield member 40 by lines of magnetic force formed around the first linear portions 11. This means that it is possible to suppress an increase in loss (heat generation) of the coil unit 5 due to the presence of the first gap 51 and means that it is possible to suppress a decrease in performance of the coil unit 5 due to the presence of the first gap 51.

The first gap 51 and each of the first linear portions 11 of the second to eighth turn portions 102 to 108 may form an angle of, for example, 80 degrees to 100 degrees when seen in the axial direction. This makes it possible to effectively suppress an increase in loss (heat generation) of the coil unit 5 due to the presence of the first gap 51 and effectively suppress a decrease in performance of the coil unit 5 due to the presence of the first gap 51. Furthermore, as can be seen from Fig. 5A, the first gap 51 may be orthogonal to the first linear portions 11 of the second to eighth turn portions 102 to 108 when seen in the axial direction. This makes it possible to further effectively suppress an increase in loss (heat generation) of the coil unit 5 due to the presence of the first gap 51 and further effectively suppress a decrease in performance of the coil unit 5 due to the presence of the first gap 51.

The second gap 52 extends through a space between the first shield small piece 31 and the second shield small piece 32 along the first direction D1. The second gap 52 crosses at least part of the second linear portion group 12G when seen in the axial direction. In the example shown in Fig. 5A, the second gap 52 crosses the second linear portions 12 of the first to eighth turn portions 101 to 108 when seen in the axial direction. In other words, when seen in the axial direction, the second gap 52 extends from a position that is further inward in the radial direction than is the first turn portion 101 to a position that is further outward in the radial direction than is the eighth turn portion 108. Placing the shield small pieces 31 and 32 such that the second gap 52 crosses the second linear portions 12 restrains a line of magnetic force formed around each second linear portion 12 from reaching the second shield member 40 through the second gap 52. This makes it possible to restrain an eddy current from being generated in the second shield member 40 by lines of magnetic force formed around the second linear portions 12. This means that it is possible to suppress an increase in loss (heat generation) of the coil unit 5 due to the presence of the second gap 52 and means that it is possible to suppress a decrease in performance of the coil unit 5 due to the presence of the second gap 52.

The second gap 52 and each of the second linear portions 12 of the first to eighth turn portions 101 to 108 may form an angle of, for example, 80 degrees to 100 degrees when seen in the axial direction. This makes it possible to effectively suppress an increase in loss (heat generation) of the coil unit 5 due to the presence of the second gap 52 and effectively suppress a decrease in performance of the coil unit 5 due to the presence of the second gap 52. Furthermore, as can be seen from Fig. 5A, the second gap 52 may be orthogonal to the second linear portions 12 of the first to eighth turn portions 101 to 108 when seen in the axial direction. This makes it possible to further effectively suppress an increase in loss (heat generation) of the coil unit 5 due to the presence of the second gap 52 and further effectively suppress a decrease in performance of the coil unit 5 due to the presence of the second gap 52.

The third gap 53 extends through a space between the second shield small piece 32 and the third shield small piece 33 along the second direction D2. The third gap 53 crosses at least part of the third linear portion group 13G when seen in the axial direction. In the example shown in Fig. 5A, the third gap 53 crosses the third linear portions 13 of the first to eighth turn portions 101 to 108 when seen in the axial direction. In other words, when seen in the axial direction, the third gap 53 extends from a position that is further inward in the radial direction than is the first turn portion 101 to a position that is further outward in the radial direction than is the eighth turn portion 108. Placing the shield small pieces 32 and 33 such that the third gap 53 crosses the third linear portions 13 restrains a line of magnetic force formed around each third linear portion 13 from reaching the second shield member 40 through the third gap 53. This makes it possible to restrain an eddy current from being generated in the second shield member 40 by lines of magnetic force formed around the third linear portions 13. This means that it is possible to suppress an increase in loss (heat generation) of the coil unit 5 due to the presence of the third gap 53 and means that it is possible to suppress a decrease in performance of the coil unit 5 due to the presence of the third gap 53.

The third gap 53 and each of the third linear portions 13 of the first to eighth turn portions 101 to 108 may form an angle of, for example, 80 degrees to 100 degrees when seen in the axial direction. This makes it possible to effectively suppress an increase in loss (heat generation) of the coil unit 5 due to the presence of the third gap 53 and effectively suppress a decrease in performance of the coil unit 5 due to the presence of the third gap 53. Furthermore, as can be seen from Fig. 5A, the third gap 53 may be orthogonal to the third linear portions 13 of the first to eighth turn portions 101 to 108 when seen in the axial direction. This makes it possible to further effectively suppress an increase in loss (heat generation) of the coil unit 5 due to the presence of the third gap 53 and further effectively suppress a decrease in performance of the coil unit 5 due to the presence of the third gap 53.

The fourth gap 54 extends through a space between the third shield small piece 33 and the fourth shield small piece 34 along the first direction D1. The fourth gap 54 crosses at least part of the fourth linear portion group 14G when seen in the axial direction. In the example shown in Fig. 5A, the fourth gap 54 crosses the fourth linear portions 14 of the first to eighth turn portions 101 to 108 when seen in the axial direction. In other words, when seen in the axial direction, the fourth gap 54 extends from a position that is further inward in the radial direction than is the first turn portion 101 to a position that is further outward in the radial direction than is the eighth turn portion 108. Placing the shield small pieces 33 and 34 such that the fourth gap 54 crosses the fourth linear portions 14 restrains a line of magnetic force formed around each fourth linear portion 14 from reaching the second shield member 40 through the fourth gap 54. This makes it possible to restrain an eddy current from being generated in the second shield member 40 by lines of magnetic force formed around the fourth linear portions 14. This means that it is possible to suppress an increase in loss (heat generation) of the coil unit 5 due to the presence of the fourth gap 54 and means that it is possible to suppress a decrease in performance of the coil unit 5 due to the presence of the fourth gap 54.

The fourth gap 54 and each of the fourth linear portions 14 of the first to eighth turn portions 101 to 108 may form an angle of, for example, 80 degrees to 100 degrees when seen in the axial direction. This makes it possible to effectively suppress an increase in loss (heat generation) of the coil unit 5 due to the presence of the fourth gap 54 and effectively suppress a decrease in performance of the coil unit 5 due to the presence of the fourth gap 54. Furthermore, as can be seen from Fig. 5A, the fourth gap 54 may be orthogonal to the fourth linear portions 14 of the first to eighth turn portions 101 to 108 when seen in the axial direction. This makes it possible to further effectively suppress an increase in loss (heat generation) of the coil unit 5 due to the presence of the fourth gap 54 and further effectively suppress a decrease in performance of the coil unit 5 due to the presence of the fourth gap 54.

Each of the gaps 51 to 54 extends into a region surrounded by the turn portion 101, which form the innermost peripheral portion of the coil element 10i. In the illustrated example, the first gap 51 and the third gap 53 are at the same position in the first direction D1. For this reason, the first gap 51 and the third gap 53 continuously extend in the second direction D2. Further, the second gap 52 and the fourth gap 54 are at the same position in the second direction D2. For this reason, the second gap 52 and the fourth gap 54 continuously extend in the first direction D1. However, this is not intended to impose any limitation. The first gap 51 and the third gap 53 may be at different positions in the first direction D1. Further, the second gap 52 and the fourth gap 54 may be at different positions in the second direction D2.

The first gap 51 and the third gap 53 are formed such that extensions thereof pass through the central axis line C when seen in the axial direction. In other words, the first gap 51 and the third gap 53 are formed in positions that are furthest away from the second and fourth linear portions 12 and 14 of the turn portion 101, which forms the innermost peripheral portion of the coil element 10i. This effectively restrains lines of magnetic force formed around the second and fourth linear portions 12 and 14 from reaching the second shield member 40 through the first gap 51 and the third gap 53. This makes it possible to effectively suppress an increase in loss (heat generation) of the coil unit 5 due to the presence of the first gap 51 and the third gap 53 and effectively suppress a decrease in performance of the coil unit 5 due to the presence of the first gap 51 and the third gap 53.

Further, the second gap 52 and the fourth gap 54 are formed such that extensions thereof pass through the central axis line C when seen in the axial direction. In other words, the second gap 52 and the fourth gap 54 are formed in positions that are furthest away from the first and third linear portions 11 and 13 of the turn portion 101, which forms the innermost peripheral portion of the coil element 10i. This effectively restrains lines of magnetic force formed around the first and third linear portions 11 and 13 from reaching the second shield member 40 through the second gap 52 and the fourth gap 54. This makes it possible to effectively suppress an increase in loss (heat generation) of the coil unit 5 due to the presence of the second gap 52 and the fourth gap 54 and effectively suppress a decrease in performance of the coil unit 5 due to the presence of the second gap 52 and the fourth gap 54.

### (Second Shield Member)

The second shield member 40 is placed at the second side of the coil 10. The second shield member 40 blocks, at the second side, electromagnetic waves emitted by the coil 10. Blocking by the second shield member 40 of electromagnetic waves emitted by the coil unit 5 makes it possible to restrain the electromagnetic waves from affecting other electronic components or human bodies. A possible example of a material that forms the second shield member 40 is metal such as aluminum. In a case where the coil unit 5 is attached to an automobile, the second shield member 40 may be a metal plate that constitutes a body of the automobile.

As shown in Fig. 4, the second shield member 40 is placed at a spacing from the first shield member 30. A spacer 45 may be placed between the second shield member 40 and the first shield member 30. This makes it possible to keep the second shield member 40 and the first shield member 30 at a predetermined distance from each other. It is preferable that the spacer 45 be a thermally conductive member, although the spacer 45 is not limited to a particular member as long as it is an insulating member. As a result of this, the spacer 45 can promote radiation of heat from the coil unit 5. The first shield member 30 and the second shield member 40 can be jointed to each other via a thermally conductive member serving as the spacer 45.

The thermally conductive member serving as the spacer 45 can be formed, for example, by an insulating heat-radiating material made by dispersing a highly thermally conductive material in insulating resin. Further, in a case where the spacer 45 is required to have high thermal conductivity, the spacer 45 may be fabricated using the aforementioned insulating heat-radiating material and a metallic member. For example, a highly thermal conductive spacer 45 can be fabricated by sandwiching, between films made from the aforementioned insulating heat-radiating material, a metallic block made from metal such as aluminum. Placing the spacer 45 thus fabricated between the first shield member 30 and the second shield member 40 such that the films are located between the first shield member 30 and the metallic block and between the second shield member 40 and the metallic block makes it possible to effectively promote radiation of heat from the coil unit 5 while securing insulation between the first shield member 30 and the second shield member 40.

Note here that placing the second shield member 40 in proximity to the first shield member 30, e.g. placing the second shield member 40 and the first shield member 30 at a distance of 10 mm or shorter from each other, makes it likely for lines of magnetic force generated at the coil 10 to reach the second shield member 40, thereby presumably making it likely for an eddy current to be generated in the second shield member 40. Increased likelihood of generation of an eddy current in the second shield member 40 leads to an increase in loss of the second shield member 40, leading to an increase in loss of the coil unit 5. In particular, in the coil unit 5 of the present embodiment, the gaps 51 to 54 are formed in the first shield member 30. For this reason, the aforementioned lines of magnetic force presumably reach the second shield member 40 through the gaps 51 to 54 of the first shield member 30. For this reason, bringing the second shield member 40 close to the first shield member 30 in the coil unit 5 of the present embodiment presumably leads to an increase in loss of the coil unit 5 in comparison with a coil unit whose first shield member 30 has no gaps 50 formed therein.

However, according to the inventor's findings, an increase in loss of the coil unit 5 caused by bringing the second shield member 40 close to the first shield member 30 can be suppressed by the coil unit 5 including the magnetic resin layer 20 in direct contact (or close contact) with the second principal surface 10b of the coil 10. Further, according to the inventor's findings, an increase in loss of the coil unit 5 caused by bringing the second shield member 40 close to the first shield member 30 can be suppressed by building the aforementioned positional relationships between the coil 10 and the gaps 51 to 54 between the shield small pieces 31 to 34. This contributes to reducing the dimensions of the coil unit 5 (particularly the dimension of the coil unit 5 along the axial direction).

In a case where the coil unit 5 is mounted on an automobile, the automobile is limited in space of installation of the coil unit 5. For this reason, it is advantageous to reduce the dimension of the coil unit 5. Accordingly, in the present embodiment, in a case where the coil unit 5 is a power receiving coil unit that is installed in an automobile, the distance L1 between the second shield member 40 and the first shield member 30 may be 10 mm or shorter, may be 5 mm or shorter, may be 3 mm or shorter, may be 2 mm or shorter, or may be 1 mm or shorter. Meanwhile, in a case where the coil unit 5 is a power transmission coil unit that is installed in a road or a parking lot, the distance L1 between the second shield member 40 and the first shield member 30 may be 10 mm or longer, may be 15 mm or longer, or may be 20 mm or longer. The longer the distance L1 between the second shield member 40 and the first shield member 30 becomes, the harder it becomes to radiate heat from the coil unit 5 and the higher the coil unit 5 may become in temperature. For this reason, even in a case where the coil unit 5 is installed in a road or a parking lot, it is preferable that the distance L1 between the second shield member 40 and the first shield member 30 be 10 mm or shorter, more preferably 5 mm or shorter, more preferably 3 mm or shorter, more preferably 2 mm or shorter, or more preferably 1 mm or shorter. Further, in a case where the distance L1 between the second shield member 40 and the first shield member 30 is 1 mm or longer, it is preferable that the aforementioned highly thermal conductive spacer be used as the spacer 45.

Placing the second shield member 40 and the first shield member 30 in proximity to each other makes it possible to make the distance L2 between the first principal surface 10a of the coil 10 of the present embodiment and a surface of the second shield member 40 that faces the first side 10 mm or shorter, 5 mm or shorter, or 3 mm or shorter.

### (Connection Terminal)

The first connection terminal 46 and the second connection terminal 47 can be used, for example, in connecting to the high-frequency current supply unit 1A to the converter 2A. A connection between the first connection terminal 46 and the first turn portion 101 and a connection between the second connection terminal 47 and the eighth turn portion 108 are made by ultrasonic joining. Note, however, that the connecting technology is not intended to impose any limitation, and for example, the connections may be made by an electrically conductive adhesive.

In a case where the coil unit 5 is used as a power transmission coil unit, the first connection terminal 46 and the second connection terminal 47 are connected to the high-frequency current supply unit 1A shown in Fig. 1 or an alternating-current source. Once a high-frequency current is supplied to the coil unit 5, the electric current can be passed from the first connection terminal 46 to the coil 10 and then passed from the second connection terminal 47 to the high-frequency current supply unit 1A or the alternating-current source. Further, the electric current can be passed from the second connection terminal 47 to the coil 10 and then passed from the first connection terminal 46 to the high-frequency current supply unit 1A or the alternating-current source. This makes it possible to generate a magnetic field including lines of magnetic force along the central axis line of the coil 10.

On the other hand, in a case where the coil unit 5 is used as a power receiving coil unit, a high-frequency current can be generated in the coil 10 by receiving a magnetic field including lines of magnetic force along the central axis line of the coil 10. Then, this high-frequency current can be supplied to an external device through the first connection terminal 46 or the second connection terminal 47.

In the illustrated example, the first connection terminal 46 is connected to the inward end 10e1 of the coil 10. In other words, the first connection terminal 46 is connected to the first linear portion 11 of the first turn portion 101, which forms the innermost peripheral portion of the coil element 10i. The second connection terminal 47 is connected to the outward end 10e2 of the coil 10. In other words, the second connection terminal 47 is connected to the fourth linear portion 14 of the eighth turn portion 108, which forms the outermost peripheral portion of the coil element 10i.

As shown in Fig. 2, the first connection terminal 46 extends from inside toward outside in the radial direction of the coil 10. When seen in the axial direction, the first connection terminal 46 crosses one of the linear portion groups 11G to 14G of the coil element 10i and extends outward in the radial direction of the coil 10. An insulating material may be placed between the first connection terminal 46 and the coil 10 and between the first connection terminal 46 and the first shield member 30 to secure insulation between the first connection terminal 46 and the coil 10 and between the first connection terminal 46 and the first shield member 30. More specifically, the first connection terminal 46 may be covered with the insulating material. Similarly, the insulating material may be placed between the second connection terminal 47 and the coil 10 and between the second connection terminal 47 and the first shield member 30 to secure insulation between the second connection terminal 47 and the coil 10 and between the second connection terminal 47. More specifically, the second connection terminal 47 may be covered with the insulating material. A possible example of the insulating material that covers the first connection terminal 46 and/or the second connection terminal 47 is fluororesin. This makes it possible to effectively promote radiation of heat from the first connection terminal 46 and/or the second connection terminal 47 while securing insulation between the first connection terminal 46 and/or the second connection terminal 47 and the coil 10 and between the first connection terminal 46 and/or the second connection terminal 47 and the first shield member 30.

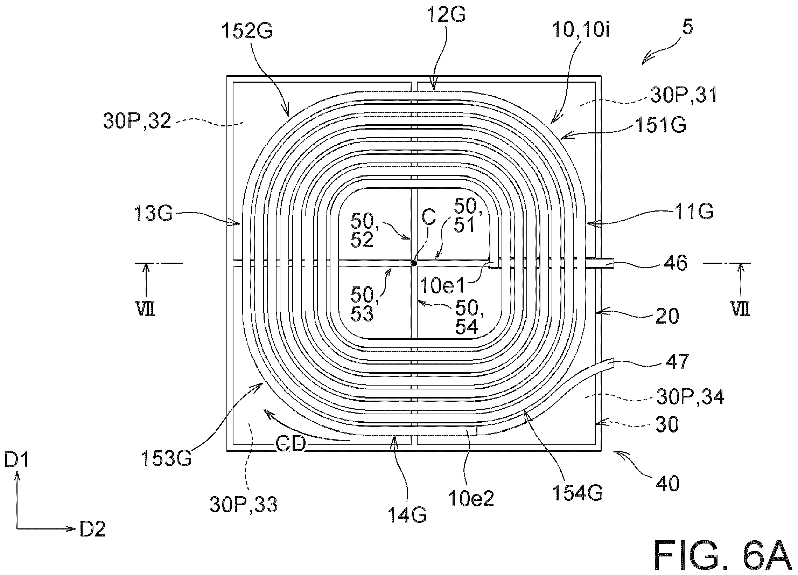

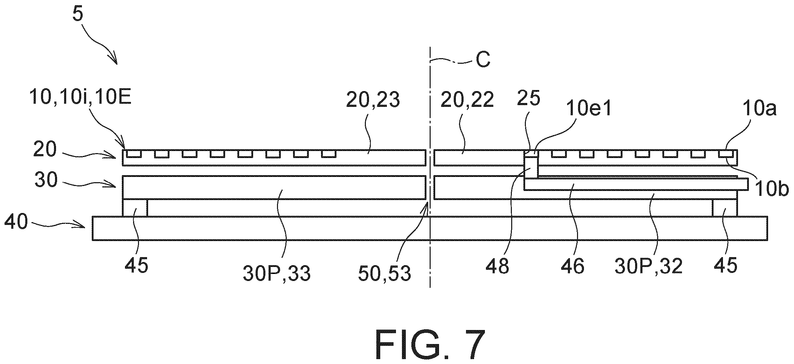

In a case where as shown in Fig. 6A, the first connection terminal 46 is connected to the inward end 10e1 of the coil 10, the first connection terminal 46 may extend over a gap 50 that extends from inside toward outside the coil 10 when seen in the axial direction. In this case, as shown in Fig. 7, the first connection terminal 46 may extend from inside toward outside the coil 10 at such a height position as to overlap a shield small piece 30P in a side view of the coil unit 5. In this case, a loss (heat generation) of the first shield member 30 can be suppressed. As can be seen from Fig. 7, the connection terminals 46 and 47 may be connected to the coil 10 via electrically conductive connectors 48.

In a case where the first connection terminal 46 extends through the gap 50 that extends from inside toward outside the coil 10, a linear portion 11 that the first connection terminal 46 crosses when seen in the axial direction and the first connection terminal 46 may form an angle of, for example, 80 degrees to 100 degrees. Furthermore, as shown in Fig. 6A, the first connection terminal 46 may be orthogonal to the aforementioned linear portion 11. This restrains a line of magnetic force formed around the aforementioned linear portion 11 from reaching the second shield member 40 through the gap 50 through which the first connection terminal 46 passes.

In a case where the second shield member 40 has a quadrangular shape, it is preferable that the first connection terminal 46 and the second connection terminal 47 extend out from an identical side of the second shield member 40 (see Fig. 2). This makes it easier to route wires that are connected to the first connection terminal 46 and the second connection terminal 47.

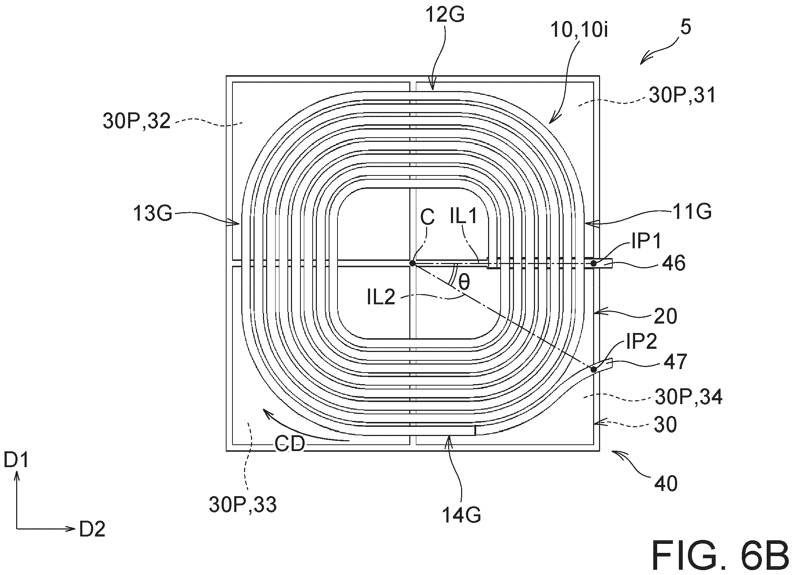

Further, instead of the shape of the second shield member 40, the following positional relationship between the first connection terminal 46 and the second connection terminal 47 makes it easier to route the wires that are connected to the first connection terminal 46 and the second connection terminal 47. That is, as shown in Fig. 6B, let it be assumed that a point at which the first connection terminal 46 and an outer peripheral edge of the first shield member 30 overlap each other when seen in the axial direction is a first point IP1. Further, let it be assumed that a point at which the second connection terminal 47 and the outer peripheral edge of the first shield member 30 overlap each other when seen in the axial direction is a second point IP2. Moreover, an angle θ formed by a first imaginary line IL1 connecting the first point IP1 with the central axis line C and a second imaginary line IL2 connecting the second point IP2 with the C central axis line is 90 degrees or smaller, preferably 60 degrees or smaller, more preferably 45 degrees or smaller, or even more preferably 30 degrees or smaller.

Further, without being bound by the shape of the second shield member 40, it is preferable that the distance between the first point IP1 and the second point IP2 be 100 mm or shorter, more preferably 50 mm or shorter. Bringing the first point IP1 and the second point IP2 close to each other in this way makes it easier to route the wires that are connected to the first connection terminal 46 and the second connection terminal 47.

Further, in the example shown in Figs. 2 to 5B, the ends 10e1 and 10e2 of the coil element 10i are in the following positional relationship. That is, assuming that a direction in which the coil element 10i circles around the central axis line C from the outward end 10e2 toward the inward end 10e1 is a first circumferential direction CD, the outward end 10e2 is displaced in the first circumferential direction CD from the inward end 10e1. This makes it possible to bring the first point IP1 and the second point IP2 close to each other without causing an outward end region of the coil element 10i (in the example shown in Fig. 5B, the fourth linear portion 14 of the eighth turn portion) and the first connection terminal 46 to intersect each other when seen in the axial direction. A loss (heat generation) of the coil unit 5 can be reduced by the outward end region of the coil element 10i and the first connection terminal 46 not intersecting each other.

Although, in the aforementioned embodiment and some of the after-mentioned modifications, a first linear portion 11 and a fourth linear portion 14 form ends of the coil element 10i, this is not intended to impose any limitation. Any linear portions out of the first to fourth linear portions 11 to 14 may form ends of the coil element 10i.

### <<Modifications>>

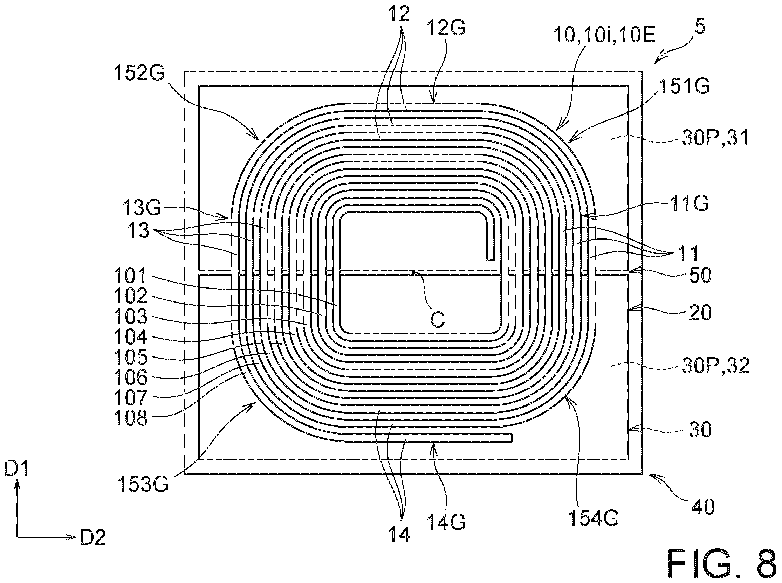

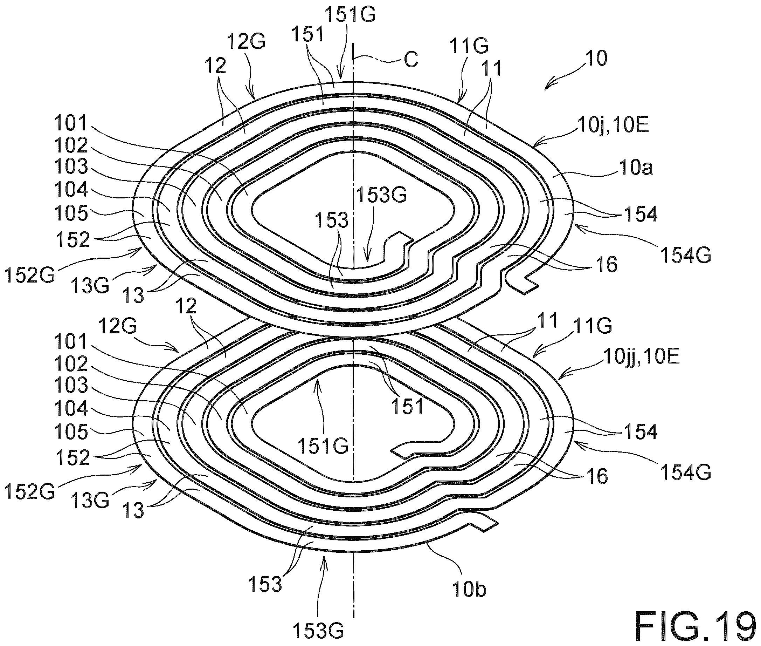

It should be noted that various changes can be made to the aforementioned first embodiment. The following describes modifications of the first embodiment with reference to Figs. 8 to 42.

First, modifications of positional relationships between coils 10 and gaps 50 are described with reference to Figs. 8 to 16. Figs. 8 to 16 omit to illustrate the first connection terminal 46 and the second connection terminal 47.

For example, in the coil unit 5 shown in Fig. 8, the first shield member 30 includes two shield small pieces 31 and 32. Each of the shield small pieces 31 and 32 has the shape of a quadrangle. A gap 50 formed between the adjacent shield small pieces 31 and 32 crosses part of the first linear portion group 11G and the third linear portion group 13G when seen in the axial direction. The gap 50 is formed in such a position as to overlap the central axis line C when seen in the axial direction. Even such a coil unit 5 makes it possible to suppress an increase in loss (heat generation) of the coil unit 5 due to the presence of the gap 50 and suppress a decrease in performance of the coil unit 5 due to the presence of the gap 50. In the example shown in Fig. 8, the gap 50 is orthogonal to the first linear portion group 11G and the third linear portion group 13G when seen in the axial direction.

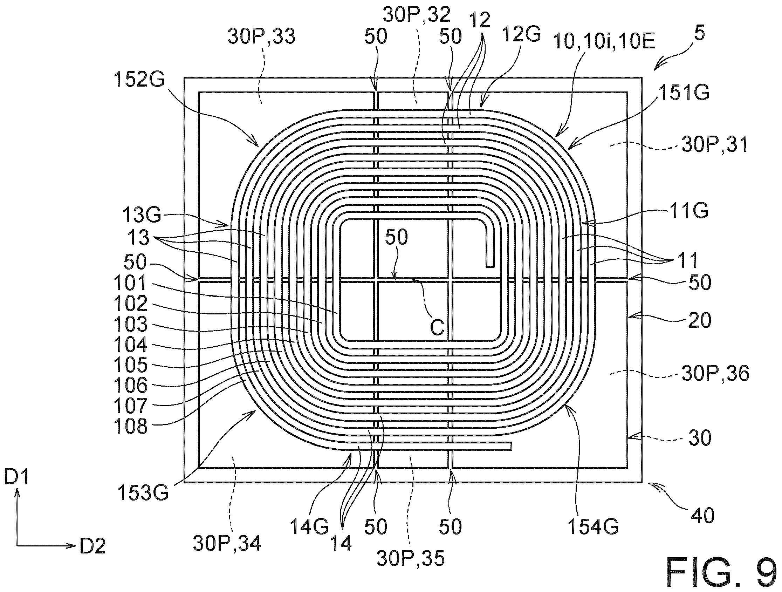

Further, in the example shown in Fig. 9, the first shield member 30 includes six shield small pieces 31 to 36. Each of the shield small pieces 31 to 36 has the shape of a quadrangle. Two of seven gaps 50 formed between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 31, and between adjacent shield small pieces 32 and 35 extend through a space between the first linear portion group 11G and the central axis line C when seen in the axial direction. Further, two of the seven gaps 50 extend through a space between the third linear portion group 13G and the central axis line C when seen in the axial direction. A gap 50 extending over an area that is further inward than is the first turn portion 101, which forms the innermost peripheral portion of the coil element 10i, makes it possible to suppress an increase in loss (heat generation) of the coil unit 5 due to the presence of the gap 50 and suppress a decrease in performance of the coil unit 5 due to the presence of the gap 50. In the example shown in Fig. 9, six of the seven gaps 50 are orthogonal to any of the first to fourth linear portion groups 11G to 14G when seen in the axial direction.

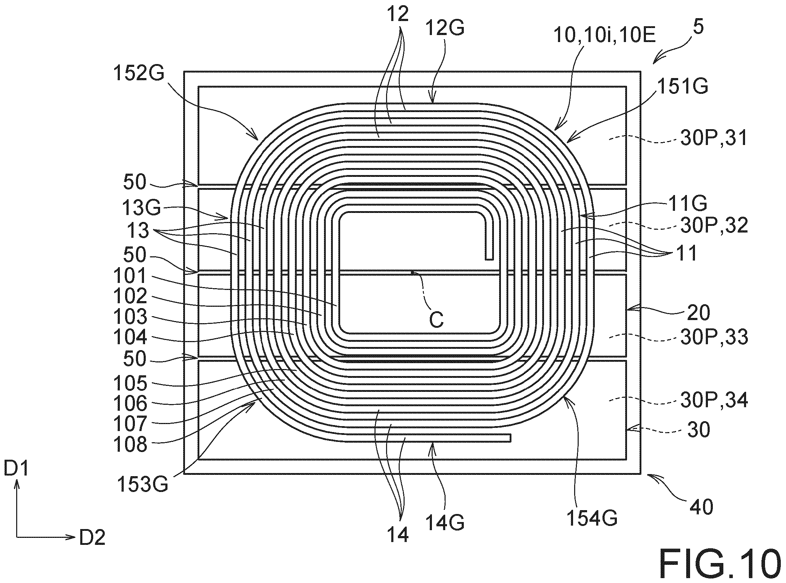

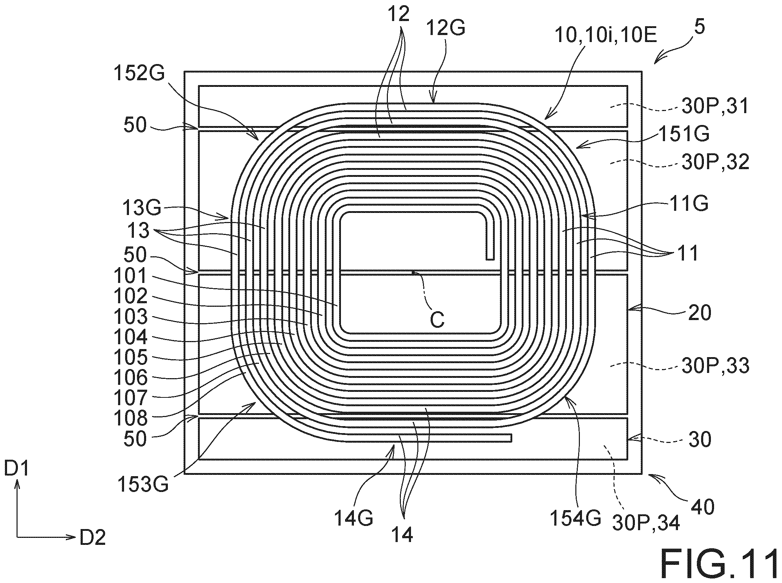

Further, in each of the examples shown in Figs. 10 and 11, the first shield member 30 includes four shield small pieces 31 to 34. Each of the shield small pieces 31 to 34 has the shape of a quadrangle. One of three gaps 50 formed between adjacent shield small pieces 31 and 32, between adjacent shield small pieces 32 and 33, and between adjacent shield small pieces 33 and 34 crosses the first linear portion group 11G when seen in the axial direction. This gap 50 is orthogonal to the first linear portion group 11G when seen in the axial direction. Further, one of the two other gaps 50 extends through the second linear portion group 12G along the second linear portions 12 when seen in the axial direction. The other of the two other gaps 50 extends through the fourth linear portion group 14 along the fourth linear portions 14. In this way, one or more of the gaps 50 formed in the first shield member 30 may extend through any of the linear portion groups 11G to 14G of the coil 10 along the linear portions 11, 12, 13, or 14 of that linear portion group 11G, 12G, 13G, or 14G when seen in the axial direction. In this case, too, it is possible, at least, to suppress an increase in loss (heat generation) of the coil unit 5 due to the presence of a gap 50 that crosses the first linear portion group 11G and suppress a decrease in performance of the coil unit 5 due to the presence of the gap 50.

According to the inventor's findings, in a case where a gap 50 extends though any of the linear portion groups 11G to 14G along the linear portions 11, 12, 13, or 14 of that linear portion group 11G, 12G, 13G, or 14G when seen in the axial direction, an increase in loss (heat generation) of the coil unit 5 due to the presence of the gap 50 becomes greater toward the center in the axial direction of that linear portion group 11G, 12G, 13G, or 14G. Accordingly, as shown in Fig. 10, it is preferable that the gap 50 that extends through the second linear portion group 12G extend over an area that is closer to the central axis line C (i.e. further inward in the radial direction) than is one of the second linear portions 12 of the second linear portion group 12G whose ordinal number as counted from the innermost one of the second linear portions 12 (i.e. the second linear portion 12 of the first turn portion 101) assumes a minimum integer value that is greater than or equal to a value obtained by dividing the total number of second linear portions 12 by 3. Alternatively, as shown in Fig. 11, it is preferable that the gap 50 that extends through the second linear portion group 12G extend over an area that is further away from the central axis line C (i.e. further outward in the radial direction) than is one of the second linear portions 12 of the second linear portion group 12G whose ordinal number as counted from the outermost one of the second linear portions 12 (i.e. the second linear portion 12 of the eighth turn portion 108) assumes a minimum integer value that is greater than or equal to a value obtained by dividing the total number of second linear portions 12 by 3. Specifically, in each of the examples shown in Figs. 10 and 11, the total number of second linear portions 12 of the second linear portion group 12G is 8. A minimum integer value that is greater than or equal to a value obtained by dividing 8 by 3 is 3. Accordingly, as shown in Fig. 10, it is preferable that the gap 50 that extends through the second linear portion group 12G be located further inward in the radial direction than is the second linear portion 12 of the third turn portion 103. Alternatively, as shown in Fig. 11, it is preferable that the gap 50 that extends through the second linear portion group 12G be located further outward in the radial direction than is the second linear portion 12 of the sixth turn portion 106.

Similarly, as shown in Fig. 10, it is preferable that the gap 50 that extends through the fourth linear portion group 14G extend over an area that is closer to the central axis line C (i.e. further inward in the radial direction) than is one of the fourth linear portions 14 of the fourth linear portion group 14G whose ordinal number as counted from the innermost one of the fourth linear portions 14 (i.e. the fourth linear portion 14 of the first turn portion 101) assumes a minimum integer value that is greater than or equal to a value obtained by dividing the total number of fourth linear portions 14 by 3. Alternatively, as shown in Fig. 11, it is preferable that the gap 50 that extends through the fourth linear portion group 14G extend over an area that is further away from the central axis line C (i.e. further outward in the radial direction) than is one of the fourth linear portions 14 of the fourth linear portion group 14G whose ordinal number as counted from the outermost one of the fourth linear portions 14 (i.e. the fourth linear portion 14 of the eighth turn portion 108) assumes a minimum integer value that is greater than or equal to a value obtained by dividing the total number of fourth linear portions 14 by 3. Specifically, in each of the examples shown in Figs. 10 and 11, the total number of fourth linear portions 14 of the fourth linear portion group 14G is 8. A minimum integer value that is greater than or equal to a value obtained by dividing 8 by 3 is 3. Accordingly, as shown in Fig. 10, it is preferable that the gap 50 that extends through the fourth linear portion group 14G be located further inward in the radial direction than is the fourth linear portion 14 of the third turn portion 103. Alternatively, as shown in Fig. 11, it is preferable that the gap 50 that extends through the fourth linear portion group 14G be located further outward in the radial direction than is the fourth linear portion 14 of the sixth turn portion 106.

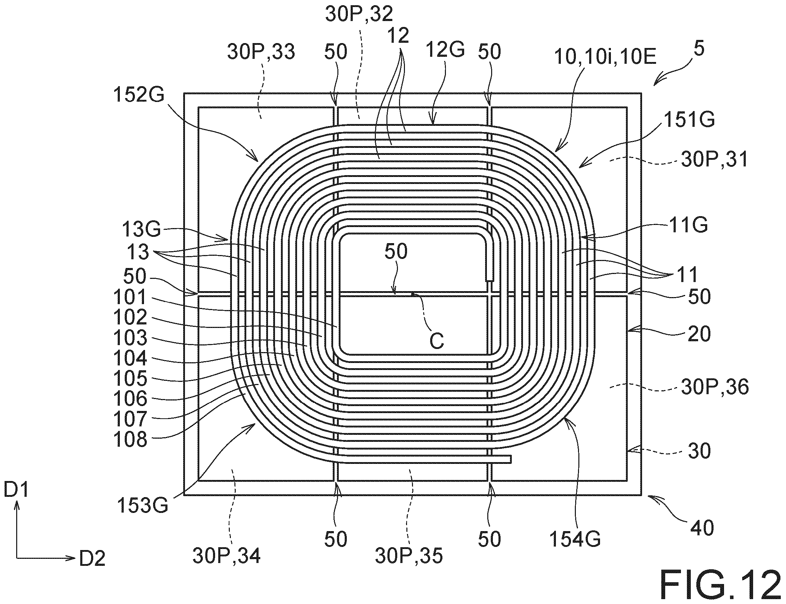

This also applies to a case where the first shield member 30 has formed therein a gap 50 that extends through the first linear portion group 11G along the first linear portions 11 when seen in the axial direction and a case where the first shield member 30 has formed therein a gap 50 that extends through the third linear portion group 13G along the third linear portions 13 when seen in the axial direction. In each of the examples shown in Figs. 12 to 16, the first shield member 30 includes six shield small pieces 31 to 36. Each of the shield small pieces 31 to 36 has the shape of a quadrangle. Three of seven gaps 50 formed between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 31, and between adjacent shield small pieces 32 and 35 cross part of the first linear portion group 11G and/or part of the third linear portion group 13G when seen in the axial direction. These three gaps 50 are orthogonal to part of the first linear portion group 11G and/or part of the third linear portion group 13G when seen in the axial direction. Further, one of the other gaps 50 extends through the first linear portion group 11G along the first linear portions 11 when seen in the axial direction. Further, two of the other gaps extend through the third linear portion group 13G along the third linear portions 13.

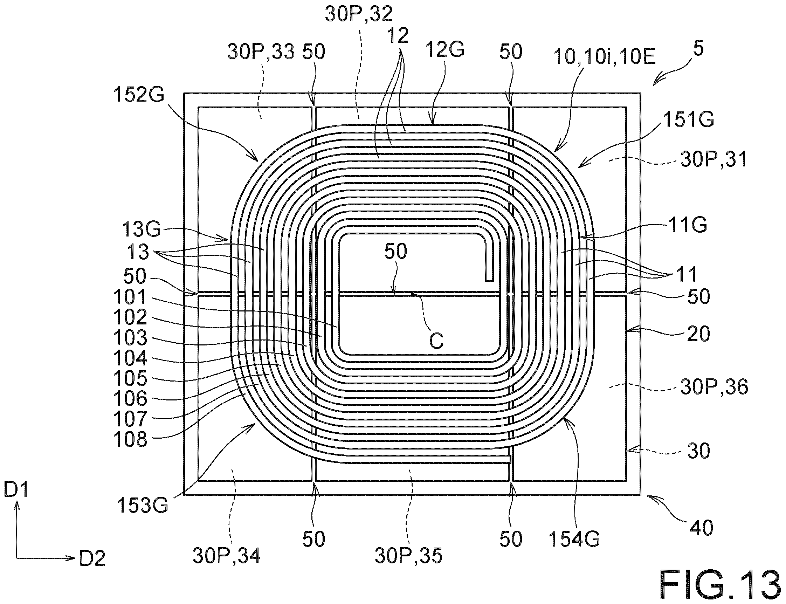

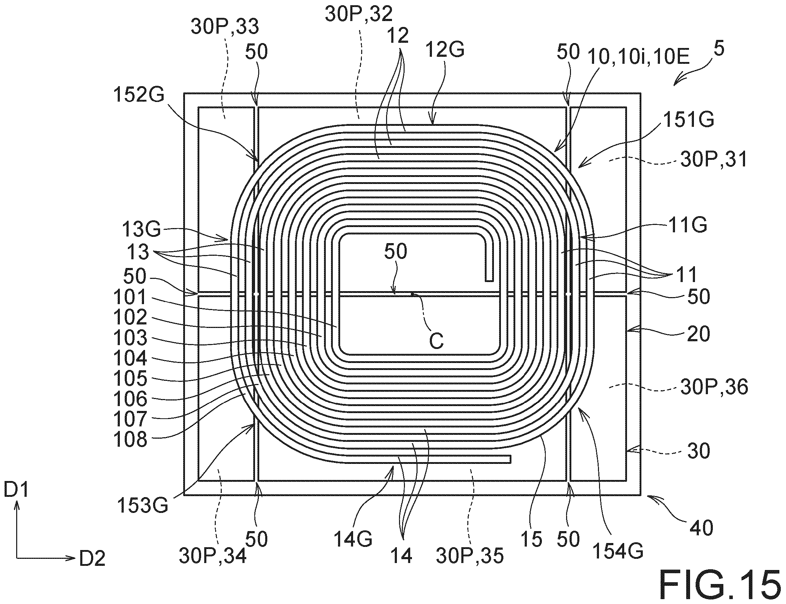

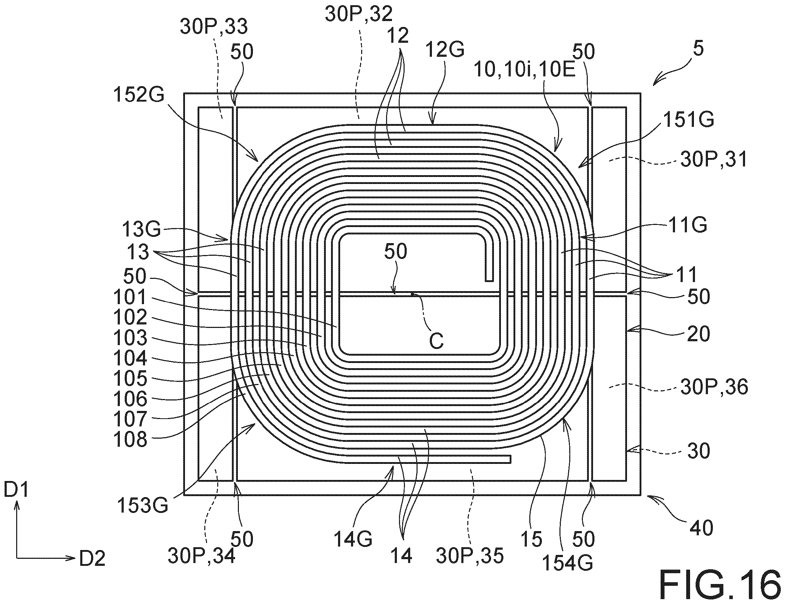

As shown in each of Figs. 12 and 13, it is preferable that the gap 50 that extends through the first linear portion group 11G extend over an area that is closer to the central axis line C (i.e. further inward in the radial direction) than is one of the first linear portions 11 of the first linear portion group 11G whose ordinal number as counted from the innermost one of the first linear portions 11 (i.e. the first linear portion 11 of the first turn portion 101) assumes a minimum integer value that is greater than or equal to a value obtained by dividing the total number of first linear portions 11 by 3. Alternatively, as shown in each of Figs. 15 and 16, it is preferable that the gap 50 that extends through the first linear portion group 11G extend over an area that is further away from the central axis line C (i.e. further outward in the radial direction) than is one of the first linear portions 11 of the first linear portion group 11G whose ordinal number as counted from the outermost one of the first linear portions 11 (i.e. the first linear portion 11 of the eighth turn portion 108) assumes a minimum integer value that is greater than or equal to a value obtained by dividing the total number of first linear portions 11 by 3. Specifically, in each of the examples shown in Figs. 12 to 16, the total number of first linear portions 11 of the first linear portion group 11G is 8. A minimum integer value that is greater than or equal to a value obtained by dividing 8 by 3 is 3. Accordingly, as shown in each of Figs. 12 and 13, it is preferable that the gap 50 that extends through the first linear portion group 11G be located further inward in the radial direction than is the first linear portion 11 of the third turn portion 103. Alternatively, as shown in each of Figs. 15 and 16, it is preferable that the gap 50 that extends through the first linear portion group 11G be located further outward in the radial direction than is the first linear portion 11 of the sixth turn portion 106.

Similarly, as shown in each of Figs. 12 and 13, it is preferable that the gap 50 that extends through the third linear portion group 13G extend over an area that is closer to the central axis line C (i.e. further inward in the radial direction) than is one of the third linear portions 13 of the third linear portion group 13G whose ordinal number as counted from the innermost one of the third linear portions 13 (i.e. the third linear portion 13 of the first turn portion 101) assumes a minimum integer value that is greater than or equal to a value obtained by dividing the total number of third linear portions 13 by 3. Alternatively, as shown in each of Figs. 15 and 16, it is preferable that a gap 50 that extends through the third linear portion group 13G extend over an area that is further away from the central axis line C (i.e. further outward in the radial direction) than is one of the third linear portions 13 of the third linear portion group 13G whose ordinal number as counted from the outermost one of the third linear portions 13 (i.e. the third linear portion 13 of the eighth turn portion 108) assumes a minimum integer value that is greater than or equal to a value obtained by dividing the total number of third linear portions 13 by 3. Specifically, in each of the examples shown in Figs. 12 to 16, the total number of third linear portions 13 of the third linear portion group 13G is 8. A minimum integer value that is greater than or equal to a value obtained by dividing 8 by 3 is 3. Accordingly, as shown in each of Figs. 12 and 13, it is preferable that the gap 50 that extends through the third linear portion group 13G be located further inward in the radial direction than is the third linear portion 13 of the third turn portion 103. Alternatively, as shown in each of Figs. 15 and 16, it is preferable that the gap 50 that extends through the third linear portion group 13G be located further outward in the radial direction than is the third linear portion 13 of the sixth turn portion 106.

Further, as shown in Figs. 17 to 19, the coil 10 may include a plurality of spiral-shaped coil elements 10j and 10jj. In the example shown in Figs. 17 to 19, the coil 10 includes two coil elements arranged in the axial direction, namely a first coil element 10j and a second coil element 10jj. A pitch P between the first coil element 10j and the second coil element 10jj along the axial direction is, for example, 5 mm or greater and 40 mm or less.

In the illustrated example, each of the coil elements 10j and 10jj includes an electric conductor 10E having a spiral shape. The electric conductor 10E includes a plurality of turn portions 101 to 105 arranged in the radial direction. In the illustrated example, the electric conductor 10E includes first to fifth turn portions 101 to 105. The first to fifth turn portions 101 to 105 are arranged in this order from inside toward outside in the radial direction. In other words, the first turn portion 101 is located furthest inward in the radial direction, and the fifth turn portion 105 is located furthest outward in the radial direction. Furthermore, in other words, the first turn portion 101 forms an innermost peripheral portion of the corresponding one of the coil elements 10j and 10jj. Further, the fifth turn portion 105 forms an outermost peripheral portion of the corresponding one of the coil elements 10j and 10jj.

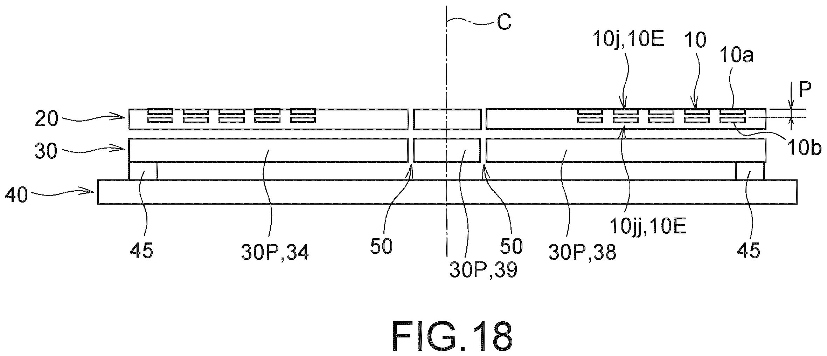

Each of the turn portions 101 to 105 of each of the coil elements 10j and 10jj extends on an imaginary plane surface perpendicular to the axial direction. The first to fifth turn portions 101 to 105 are arranged in this order, whereby the coil elements 10i and 10jj form spiral shapes around the central axis line C. Although, in the illustrated example, each of the coil elements 10i and 10jj (electric conductor 10E) is wound such that each of the turn portions 101 to 105 forms a substantially quadrangular shape, this is not intended to impose any limitation. Each of the turn portions 101 to 105 may be wound so as to substantially form a polygonal shape other than a quadrangular shape. As can be seen from Figs. 17 and 18, the first to fifth turn portions 101 to 105 of the first coil element 10j are aligned with the first to fifth turn portions 101 to 105 of the second coil element 10jj in the axial direction, respectively.

Each of the turn portions 101 to 105 of each of the coil elements 10j and 10jj includes a plurality of linear portions 11 to 13 placed around the central axis line C. Ones of the linear portions 11 to 13 that are adjacent to each other in a circumferential direction of a circle centered at the central axis line C are connected to each other. In the illustrated example, the first to fifth turn portions 101 to 105 include first and third linear portions 11 and 13 extending in a first direction D1 and second linear portions 12 extending in a second direction D2. Further, the first to fourth turn portions 101 to 104 of each of the coil elements 10j and 10jj include turn connected portions 16. The first to fourth turn portions 101 to 104 are connected to the second to fifth turn portions 102 to 105 at the turn connected portions 16, respectively.

The first direction D1 and the second direction D2 are not parallel with each other. In the illustrated example, the first direction D1 and the second direction D2 are orthogonal to each other. In each of the turn portions 101 to 105, the first linear portion 11 and the third linear portion 13 are placed such that the central axis line C passes through a space between the first linear portion 11 and the third linear portion 13. Further, in each of the turn portions 101 to 105, the second linear portion 12 and the turn connected portion 16 are placed such that the central axis line C passes through a space between the second linear portion 12 and the turn connected portion 16.

Further, in each of the turn portions 101 to 105 of the first coil element 10j, adjacent ends of the first and second linear portions 11 and 12 are connected to each other via a 1Ath intermediate curved portion 151 curved along the circumferential direction. Similarly, in each of the turn portions 101 to 105 of the first coil element 10j, adjacent ends of the second and third linear portions 12 and 13 are connected to each other via a 1Bth intermediate curved portion 152 curved along the circumferential direction. Further, in each of the first to fourth turn portions 101 to 104 of the first coil element 10j, adjacent ends of the first linear portion 11 and the turn connected portion 16 are connected to each other via a 1Dth intermediate curved portion 154 curved along the circumferential direction. Furthermore, the turn connected portions 16 of the first to fourth turn portions 101 to 104 of the first coil element 10j are connected to the third linear portions 13 of the second to fifth turn portions 102 to 105 of the first coil element 10j via 1Cth intermediate curved portions 153 curved along the circumferential direction, respectively.

Further, in each of the turn portions 101 to 105 of the second coil element 10jj, adjacent ends of the first and second linear portions 11 and 12 are connected to each other via a 1Ath intermediate curved portion 151. Similarly, in each of the turn portions 101 to 105 of the second coil element 10jj, adjacent ends of the second and third linear portions 12 and 13 are connected to each other via a 1Bth intermediate curved portion 152 curved along the circumferential direction. Further, in each of the first to fourth turn portions 101 to 104 of the second coil element 10jj, adjacent ends of the first linear portion 11 and the turn connected portion 16 are connected to each other via a 1Cth intermediate curved portion 153 curved along the circumferential direction. Furthermore, the turn connected portions 16 of the first to fourth turn portions 101 to 104 of the second coil element 10jj are connected to the third linear portions 13 of the second to fifth turn portions 102 to 105 of the second coil element 10jj via 1Dth intermediate curved portions 154 curved along the circumferential direction, respectively.

As can be seen from Fig. 17, the first to third linear portions 11 to 13 and the turn connected portion 16 of the first turn portion 101 of the first coil element 10j are aligned with the first to third linear portions 11 to 13 and the turn connected portion 16 of the first turn portion 101 of the second coil element 10jj in the axial direction, respectively. Further, the first to third linear portions 11 to 13 and the turn connected portion 16 of the second turn portion 102 of the first coil element 10j are aligned with the first to third linear portions 11 to 13 and the turn connected portion 16 of the second turn portion 102 of the second coil element 10jj in the axial direction, respectively. Further, the first to third linear portions 11 to 13 and the turn connected portion 16 of the third turn portion 103 of the first coil element 10j are aligned with the first to third linear portions 11 to 13 and the turn connected portion 16 of the third turn portion 103 of the second coil element 10jj in the axial direction, respectively. Further, the first to third linear portions 11 to 13 and the turn connected portion 16 of the fourth turn portion 104 of the first coil element 10j are aligned with the first to third linear portions 11 to 13 and the turn connected portion 16 of the fourth turn portion 104 of the second coil element 10jj in the axial direction, respectively. Further, the first to third linear portions 11 to 13 of the fifth turn portion 105 of the first coil element 10j are aligned with the first to third linear portions 11 to 13 of the fifth turn portion 105 of the second coil element 10jj in the axial direction, respectively.

As can be seen from Fig. 17, the third linear portion 13 of the first turn portion 101 located furthest toward the inside of the first coil element 10j and the first linear portion 11 of the first turb portion 101 located furthest toward the inside of the second coil element 10jj are electrically connected to each other. Further, the first connection terminal 46 is connected to the first linear portion 11 of the fifth turn portion 105 located furthest toward the outside of the first coil element 10j. Further, the second connection terminal 47 is connected to the third linear portion 13 of the fifth turn portion 105 located furthest toward the outside of the second coil element 10jj.

As shown in Fig. 18, the first coil element 10j forms the first principal surface 10a of the coil 10. Further, the second coil element 10jj forms the second principal surface 10b of the coil 10. The magnetic resin layer 20 is in direct contact with the second principal surface 10b of the coil 10. In other words, the magnetic resin layer 20 is in direct contact with the electric conductor 10E of the second coil element 10jj. In the illustrated example, the magnetic resin layer 20 is in close contact with the second principal surface 10b of the coil 10. In other words, the magnetic resin layer 20 is in close contact with the electric conductor 10E of the second coil element 10jj. In the example shown in Fig. 18, the coil 10 is embedded in the magnetic resin layer 20. In the example shown in Fig. 18, the magnetic resin layer 20 is also in direct contact or close contact with a surface of the first coil element 10j that faces the second side. However, without being bound by this, the magnetic resin layer 20 does not need to be in direct contact or close contact with the surface of the first coil element 10j that faces the second side.

In the example shown in Figs. 17 to 19, the first shield member 30 includes nine shield small pieces 31 to 39. Each of the shield small pieces 31 to 39 has the shape of a quadrangle. Two of twelve gaps 50 formed between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 37, between adjacent shield small pieces 37 and 38, between adjacent shield small pieces 38 and 31, between adjacent shield small pieces 32 and 39, between adjacent shield small pieces 34 and 39, between adjacent shield small pieces 36 and 39, and between adjacent shield small pieces 38 and 39 cross the first linear portion groups 11G of the first and second coil elements 10j and 10jj when seen in the axial direction. These two gaps 50 are orthogonal to the first linear portion groups 11G of the first and second coil elements 10j and 10jj when seen in the axial direction. Further, two of the aforementioned twelve gaps 50 cross the second linear portion groups 12G of the first and second coil elements 10j and 10jj when seen in the axial direction. These two gaps 50 are orthogonal to the second linear portion groups 12G of the first and second coil elements 10j and 10jj when seen in the axial direction. Further, two of the aforementioned twelve gaps 50 cross the third linear portion groups 13G of the first and second coil elements 10j and 10jj when seen in the axial direction. These two gaps 50 are orthogonal to the third linear portion groups 13G of the first and second coil elements 10j and 10jj when seen in the axial direction. Further, four of the aforementioned twelve gaps 50 are located further inward in the radial direction than are the first turn portions 101 located furthest toward the insides of the coil elements 10j and 10jj.

Although, in each of the aforementioned examples, the first shield member 30 includes a gap 50 that crosses any of the linear portion groups 11G to 14G of the coil element 10i or the coil elements 10j and 10jj, this is not intended to impose any limitation. The first shield member 30 does not need to include gaps 50 that cross the linear portion groups 11G to 14G. In the example shown in Fig. 20, the first shield member 30 does not include gaps 50 that cross the first to fourth linear portion groups 11G to 14G of the coil elements 10j and 10jj.

In the example shown in Fig. 20, the first shield member 30 includes nine shield small pieces 31 to 39. Each of the shield small pieces 31 to 39 has the shape of a quadrangle. Two of twelve gaps 50 formed between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 37, between adjacent shield small pieces 37 and 38, between adjacent shield small pieces 38 and 31, between adjacent shield small pieces 32 and 39, between adjacent shield small pieces 34 and 39, between adjacent shield small pieces 36 and 39, and between adjacent shield small pieces 38 and 39 cross the 1Ath intermediate curved portion groups 151G of the first and second coil elements 10j and 10jj when seen in the axial direction. Further, two of the aforementioned twelve gaps 50 cross the 1Bth intermediate curved portion groups 152G of the first and second coil elements 10j and 10jj when seen in the axial direction. Further, two of the aforementioned twelve gaps 50 cross the 1Cth intermediate curved portion groups 153G of the first and second coil elements 10j and 10jj when seen in the axial direction. Further, two of the aforementioned twelve gaps 50 cross the 1Dth intermediate curved portion groups 154G of the first and second coil elements 10j and 10jj when seen in the axial direction.

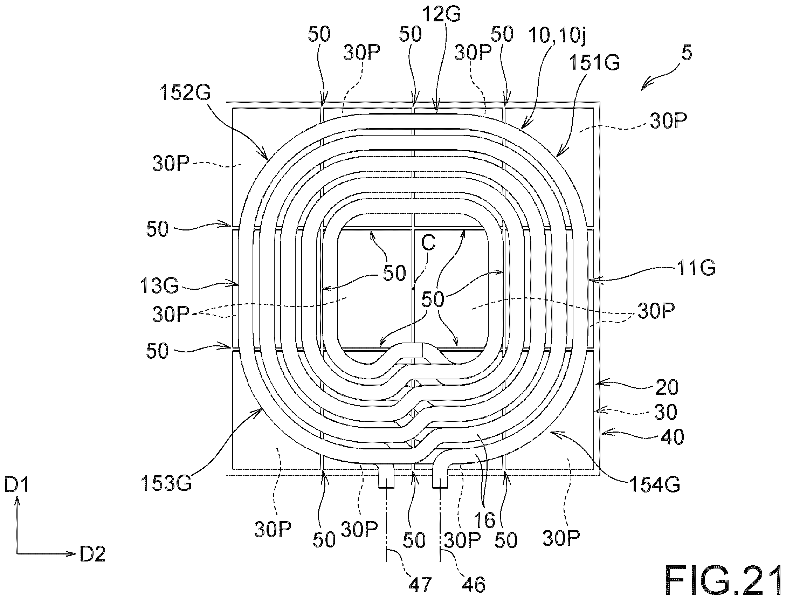

As a matter of course, as shown in each of Figs. 21 to 25, the first shield member 30 may include both gaps 50 that cross the first to fourth linear portion groups 11G to 14G of the coil element 10i or 10j and gaps 50 that cross the 1Ath to 1Dth intermediate curved portion groups 151G to 154G.

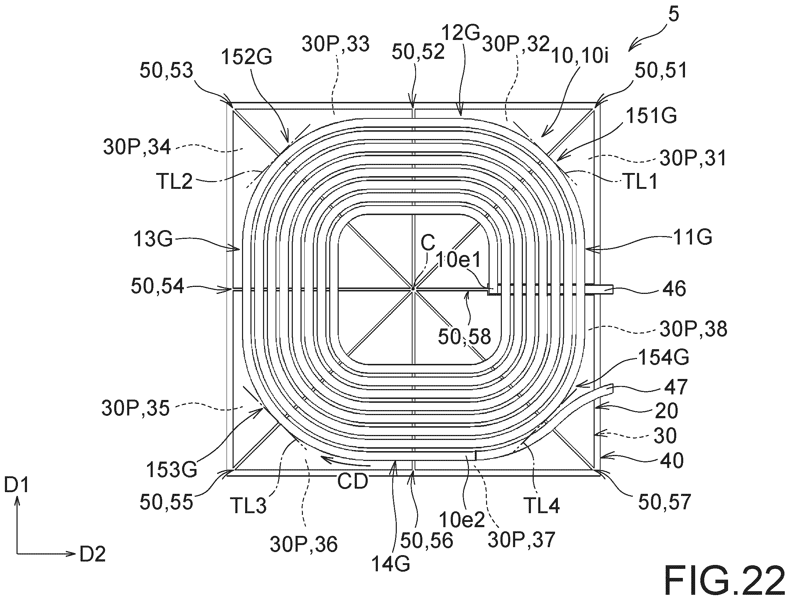

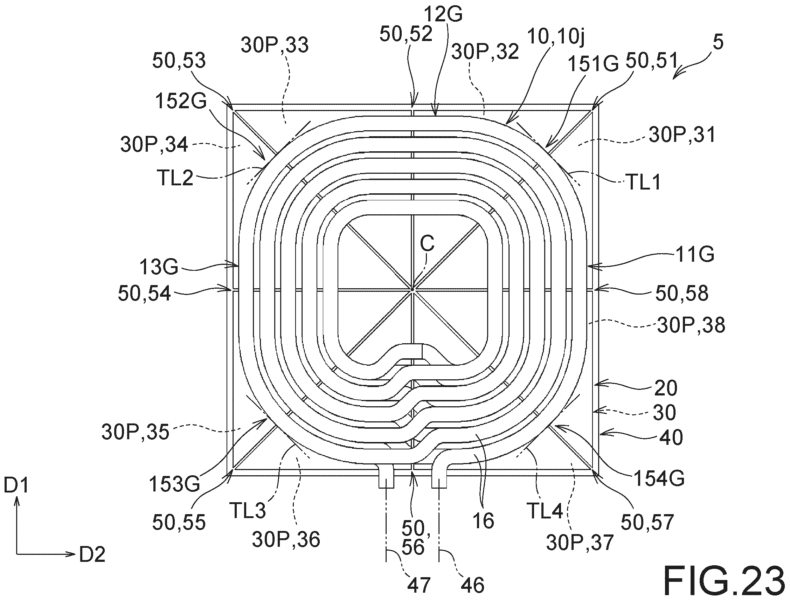

In each of the examples shown in Figs. 22 and 23, the first shield member 30 includes eight shield small pieces 31 to 38. Each of the shield small pieces 31 to 38 has the shape of a triangle. More specifically, each of the shield small pieces 31 to 38 has the shape of a right-angled triangle. First to eighth gaps 51 to 58 formed between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 37, between adjacent shield small pieces 37 and 38, and between adjacent shield small pieces 38 and 31 extend radially from the central axis line C. The gaps 51, 53, 55, and 57 cross at least parts of the 1Ath to 1Dth intermediate curved portion groups 151G to 154G, respectively, when seen in the axial direction. In the illustrated example, the gaps 51, 53, 55, and 57 cross the 1Ath to 1Dth intermediate curved portion groups 151G to 154G, respectively, when seen in the axial direction. In other words, when seen in the axial direction, the gaps 51, 53, 55, and 57 extend from positions that are further inward in the radial direction than are the 1Ath to 1Dth intermediate curved portion groups 151G to 154G to positions that are further outward in the radial direction than are the 1Ath to 1Dth intermediate curved portion groups 151G to 154G, respectively.

Placing the shield small pieces 31 and 32 such that the first gap 51 crosses the 1Ath intermediate curved portions 151 restrains a line of magnetic force formed around each 1Ath intermediate curved portion 151 from reaching the second shield member 40 through the second gap 52. This makes it possible to restrain an eddy current from being generated in the second shield member 40 by lines of magnetic force formed around the 1Ath intermediate curved portions 151. This means that it is possible to suppress an increase in loss (heat generation) of the coil unit 5 due to the presence of the first gap 51 and means that it is possible to suppress a decrease in performance of the coil unit 5 due to the presence of the first gap 51.

The first gap 51 and a tangent line TL1 to the 1Ath intermediate curved portion group 151G may form an angle of, for example, 80 degrees to 100 degrees when seen in the axial direction. This makes it possible to effectively suppress an increase in loss (heat generation) of the coil unit 5 due to the presence of the first gap 51 and effectively suppress a decrease in performance of the coil unit 5 due to the presence of the first gap 51. Furthermore, as can be seen from each of Figs. 22 and 23, the first gap 51 may be orthogonal to the tangent line TL1 to the 1Ath intermediate curved portion group 151G when seen in the axial direction. This makes it possible to further effectively suppress an increase in loss (heat generation) of the coil unit 5 due to the presence of the first gap 51 and further effectively suppress a decrease in performance of the coil unit 5 due to the presence of the first gap 51.

Furthermore, placing the shield small pieces 33 and 34 such that the third gap 53 crosses the 1Bth intermediate curved portions 152 restrains a line of magnetic force formed around each 1Bth intermediate curved portion 152 from reaching the second shield member 40 through the third gap 53. This makes it possible to restrain an eddy current from being generated in the second shield member 40 by lines of magnetic force formed around the 1Bth intermediate curved portions 152. This means that it is possible to suppress an increase in loss (heat generation) of the coil unit 5 due to the presence of the third gap 53 and means that it is possible to suppress a decrease in performance of the coil unit 5 due to the presence of the third gap 53.

The third gap 53 and a tangent line TL2 to the 1Bth intermediate curved portion group 152G may form an angle of, for example, 80 degrees to 100 degrees when seen in the axial direction. This makes it possible to effectively suppress an increase in loss (heat generation) of the coil unit 5 due to the presence of the third gap 53 and effectively suppress a decrease in performance of the coil unit 5 due to the presence of the third gap 53. Furthermore, as can be seen from each of Figs. 22 and 23, the third gap 53 may be orthogonal to the tangent line TL2 to the 1Bth intermediate curved portion group 152G when seen in the axial direction. This makes it possible to further effectively suppress an increase in loss (heat generation) of the coil unit 5 due to the presence of the third gap 53 and further effectively suppress a decrease in performance of the coil unit 5 due to the presence of the third gap 53.

Furthermore, placing the shield small pieces 35 and 36 such that the fifth gap 55 crosses the 1Cth intermediate curved portions 153 restrains a line of magnetic force formed around each 1Cth intermediate curved portion 153 from reaching the second shield member 40 through the fifth gap 55. This makes it possible to restrain an eddy current from being generated in the second shield member 40 by lines of magnetic force formed around the 1Cth intermediate curved portions 153. This means that it is possible to suppress an increase in loss (heat generation) of the coil unit 5 due to the presence of the fifth gap 55 and means that it is possible to suppress a decrease in performance of the coil unit 5 due to the presence of the fifth gap 55.

The fifth gap 55 and a tangent line TL3 to the 1Cth intermediate curved portion group 153G may form an angle of, for example, 80 degrees to 100 degrees when seen in the axial direction. This makes it possible to effectively suppress an increase in loss (heat generation) of the coil unit 5 due to the presence of the fifth gap 55 and effectively suppress a decrease in performance of the coil unit 5 due to the presence of the fifth gap 55. Furthermore, as can be seen from each of Figs. 22 and 23, the fifth gap 55 may be orthogonal to the tangent line TL3 to the 1Cth intermediate curved portion group 153G when seen in the axial direction. This makes it possible to further effectively suppress an increase in loss (heat generation) of the coil unit 5 due to the presence of the fifth gap 55 and further effectively suppress a decrease in performance of the coil unit 5 due to the presence of the fifth gap 55.

Furthermore, placing the shield small pieces 37 and 38 such that the seventh gap 57 crosses the 1Dth intermediate curved portions 154 restrains a line of magnetic force formed around each 1Dth intermediate curved portion 154 from reaching the second shield member 40 through the seventh gap 57. This makes it possible to restrain an eddy current from being generated in the second shield member 40 by lines of magnetic force formed around the 1Dth intermediate curved portions 154. This means that it is possible to suppress an increase in loss (heat generation) of the coil unit 5 due to the presence of the seventh gap 57 and means that it is possible to suppress a decrease in performance of the coil unit 5 due to the presence of the seventh gap 57.

The seventh gap 57 and a tangent line TL4 to the 1Dth intermediate curved portion group 154G may form an angle of, for example, 80 degrees to 100 degrees when seen in the axial direction. This makes it possible to effectively suppress an increase in loss (heat generation) of the coil unit 5 due to the presence of the seventh gap 57 and effectively suppress a decrease in performance of the coil unit 5 due to the presence of the seventh gap 57. Furthermore, as can be seen from each of Figs. 22 and 23, the seventh gap 57 may be orthogonal to the tangent line TL4 to the 1Dth intermediate curved portion group 154G when seen in the axial direction. This makes it possible to further effectively suppress an increase in loss (heat generation) of the coil unit 5 due to the presence of the seventh gap 57 and further effectively suppress a decrease in performance of the coil unit 5 due to the presence of the seventh gap 57.

The term "tangent line to a curved portion group" herein means a tangent line to a curved portion that constitutes the curved portion group. Accordingly, the tangent lines TL1 to TL4 to the 1Ath to 1Dth intermediate curved portion groups 151G to 154G are tangent lines to the 1Ath to 1Dth intermediate curved portions 151 to 154, respectively.

In each of the examples shown in Figs. 22 and 23, the gaps 52, 54, and 58 cross at least parts of the first to third linear portion groups 11G to 13G, respectively, when seen in the axial direction. In the illustrated example, the gaps 52, 54, and 58 cross the first to third linear portion groups 11G to 13G, respectively. In other words, when seen in the axial direction, the gaps 52, 54, and 58 extend from positions that are further inward in the radial direction than are the first to third linear portion groups 11G to 13G to positions that are further outward in the radial direction than are the first to third linear portion groups 11G to 13G, respectively.

The eighth gap 58 and each of the first linear portions 11 form an angle of, for example, 80 degrees to 100 degrees when seen in the axial direction. More specifically, the eighth gap 58 is orthogonal to the first linear portions 11. Further, the second gap 52 and each of the second linear portions 12 form an angle of, for example, 80 degrees to 100 degrees when seen in the axial direction. More specifically, the second gap 52 is orthogonal to the second linear portions 12. Further, the fourth gap 54 and each of the third linear portions 13 form an angle of, for example, 80 degrees to 100 degrees when seen in the axial direction. More specifically, the fourth gap 54 is orthogonal to the third linear portions 13.

Furthermore, in the example shown in Fig. 22, the sixth gap 56 crosses at least part of the fourth linear portion group 14G when seen in the axial direction. In the illustrated example, the sixth gap 56 crosses the fourth linear portion group 14G. In other words, when seen in the axial direction, the sixth gap 56 extends from a position that is further inward in the radial direction than is the fourth linear portion group 14G to a position that is further outward in the radial direction than is the fourth linear portion group 14G. The sixth gap 56 and each of the fourth linear portions 14 form an angle of, for example, 80 degrees to 100 degrees when seen in the axial direction. More specifically, the sixth gap 56 is orthogonal to the fourth linear portions 14.

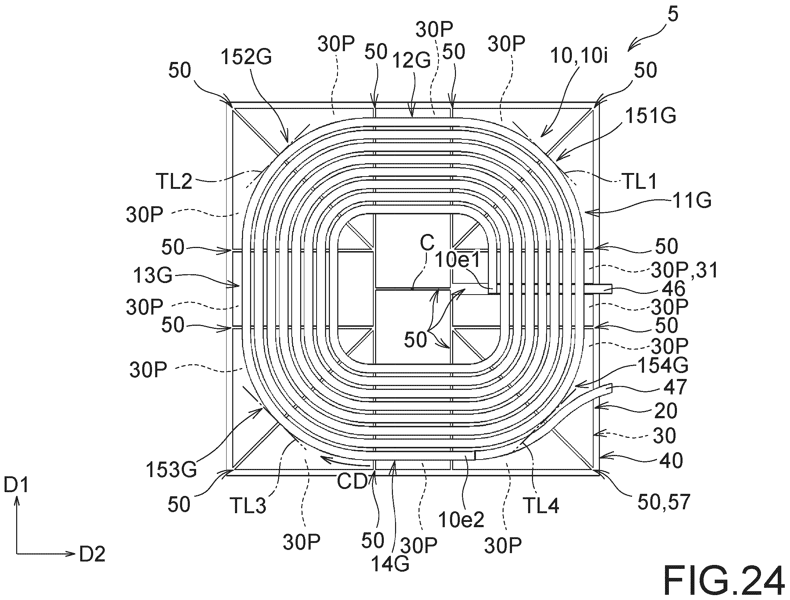

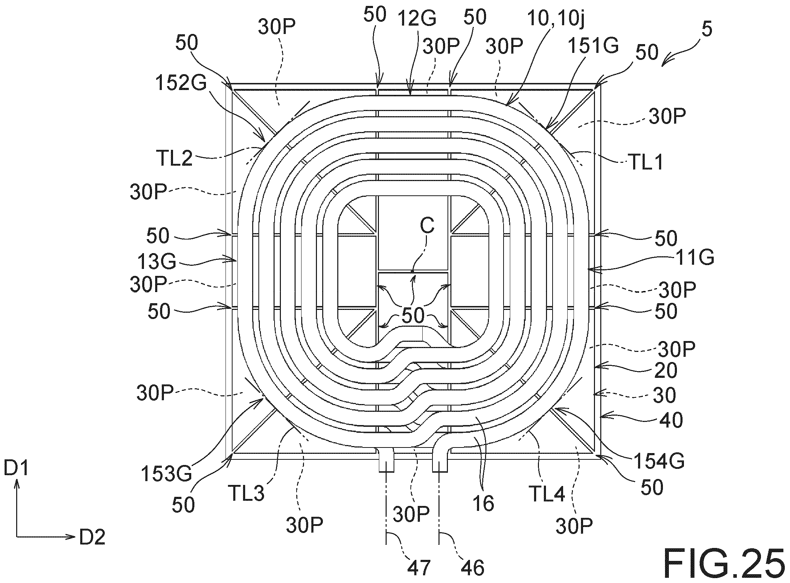

In each of the examples shown in Figs. 24 and 25, too, the gaps 50 that cross the first intermediate curved portion groups 151G to 154G and the tangent lines TL1 to TL4 to the first intermediate curved portion groups 151G to 154G form angles of 80 degrees to 100 degrees when seen in the axial direction. In each of the examples shown in Figs. 24 and 25, the gaps 50 that cross the first intermediate curved portion groups 151G to 154G are orthogonal to the tangent lines TL1 to TL4 to the first intermediate curved portion groups 151G to 154G, respectively, when seen in the axial direction. In this way, various layouts (or various forms of division) can be adopted as such a layout of the plurality of shield small pieces 30P (or a form of division of the first shield member 30) that the gaps 50 that cross the first intermediate curved portion groups 151G to 154G and the tangent lines TL1 to TL4 to the first intermediate curved portion groups 151G to 154G form angles of 80 degrees to 100 degrees.

The following describes modifications shown in Figs. 26 to 29. Although, in each of the aforementioned examples, linear portion groups 11G and 12G, linear portion groups 12G and 13G, linear portion groups 13G and 14G, and linear portion groups 14G and 11G that are adjacent to each other in the circumferential direction are connected to each other via the first intermediate curved portion groups 151G to 154G, this is not intended to impose any limitation. In each of the examples shown in Figs. 26 to 29, linear portion groups 11G and 12G, linear portion groups 12G and 13G, linear portion groups 13G and 14G, and linear portion groups 14G and 11G that are adjacent to each other in the circumferential direction are connected to each other via first intermediate linear portion groups 161G to 164G.

In each of the examples shown in Figs. 26 to 29, the coil element 10i has an octagonal shape as a whole. The coil element 10i (electric conductor 10E) is wound such that each of the turn portions 101 to 108 forms a substantially octagonal shape.

In each of the examples shown in Figs. 26 to 29, the first to eighth turn portions 101 to 108 include first intermediate linear portions 161 to 164 in addition to the first to fourth linear portions 11 to 14. The 1Ath intermediate linear portions 161 and the 1Cth intermediate linear portions 163 extend in a third direction D3. The third direction D3 is not parallel with one or the other of the first and second directions D1 and D2. The 1Bth intermediate linear portions 162 and the 1Dth intermediate linear portions 164 extend in a fourth direction D4. The fourth direction D4 is not parallel with any of the first to third directions D1 to D3.

In each of the turn portions 101 to 108, adjacent ends of the first and second linear portions 11 and 12 are connected to each other via a 1Ath intermediate linear portion 161. Similarly, in each of the turn portions 101 to 108, adjacent ends of the second and third linear portions 12 and 13 are connected to each other via a 1Bth intermediate linear portion 162. Further, in each of the turn portions 101 to 108, adjacent ends of the third and fourth linear portions 13 and 14 are connected to each other via a 1Cth intermediate linear portion 163.

Furthermore, adjacent ends of the fourth and first linear portions 14 and 11 of turn portions 101 and 102, ..., or 107 and 108 that are adjacent to each other in the radial direction are connected to each other via a 1Dth intermediate linear portion 164. For example, adjacent ends of the fourth linear portion 14 of the first turn portions 101 and the first linear portion 11 of the second turn portion 102 are connected to each other via a 1Dth intermediate linear portion 164. Further, adjacent ends of the fourth linear portion 14 of the second turn portion 102 and the first linear portion 11 of the third turn portion 103 are connected to each other via a 1Dth intermediate linear portion 164.

The 1Ath intermediate linear portions 161 of the plurality of turn portions 101 to 108 are arrayed in the radial direction to form the 1Ath intermediate linear portion group 161G. Further, the 1Bth intermediate linear portions 162 of the plurality of turn portions 101 to 108 are arrayed in the radial direction to form the 1Bth intermediate linear portion group 162G. Further, the 1Cth intermediate linear portions 163 of the plurality of turn portions 101 to 108 are arrayed in the radial direction to form the 1Cth intermediate linear portion group 163G. Further, the 1Dth intermediate linear portions 164 of the plurality of turn portions 101 to 108 are arrayed in the radial direction to form the 1Dth intermediate linear portion group 164G. Ones of the first intermediate linear portions 161 that are adjacent to each other in the radial direction, ones of the first intermediate linear portions 162 that are adjacent to each other in the radial direction, ones of the first intermediate linear portions 163 that are adjacent to each other in the radial direction, and ones of the first intermediate linear portions 164 that are adjacent to each other in the radial direction are separated from each other in the radial direction. The 1Ath to 1Dth intermediate linear portion groups 161G to 164G are parallel straight line groups composed of pluralities of the 1Ath to 1Dth intermediate linear portions 161 to 164, respectively.

As mentioned above, the coil element 10i has an octagonal shape as a whole. The coil element 10i (electric conductor 10E) is wound such that each of the turn portions 101 to 108 forms a substantially octagonal shape. In other words, the coil element 10i includes eight linear portion groups 11 to 14 and 161 to 164 extending along the eight sides of an octagon. In the illustrated example, each of the first linear portions 11 and the corresponding one of the 1Ath intermediate linear portions 161 form an angle of 125 degrees to 145 degrees when seen in the axial direction. Further, each of the 1Ath intermediate linear portions 161 and the corresponding one of the second linear portions 12 form an angle of 125 degrees to 145 degrees when seen in the axial direction. Further, each of the second linear portions 12 and the corresponding one of the 1Bth intermediate linear portions 162 form an angle of 125 degrees to 145 degrees when seen in the axial direction. Further, each of the 1Bth intermediate linear portions 162 and the corresponding one of the third linear portions 13 form an angle of 125 degrees to 145 degrees when seen in the axial direction. Further, each of the third linear portions 13 and the corresponding one of the 1Cth intermediate linear portions 163 form an angle of 125 degrees to 145 degrees when seen in the axial direction. Further, each of the 1Cth intermediate linear portions 163 and the corresponding one of the fourth linear portions 14 form an angle of 125 degrees to 145 degrees when seen in the axial direction. Further, each of the fourth linear portions 14 and the corresponding one of the 1Dth intermediate linear portions 164 form an angle of 125 degrees to 145 degrees when seen in the axial direction. Further, each of the 1Dth intermediate linear portions 164 and the corresponding one of the first linear portions 11 form an angle of 125 degrees to 145 degrees when seen in the axial direction.

In particular, in each of the examples shown in Figs. 26 to 29, each of the first linear portions 11 and the corresponding one of the 1Ath intermediate linear portions 161 form an angle of 135 degrees when seen in the axial direction. Further, each of the 1Ath intermediate linear portions 161 and the corresponding one of the second linear portions 12 form an angle of 135 degrees when seen in the axial direction. Further, each of the second linear portions 12 and the corresponding one of the 1Bth intermediate linear portions 162 form an angle of 135 degrees when seen in the axial direction. Further, each of the 1Bth intermediate linear portions 162 and the corresponding one of the third linear portions 13 form an angle of 135 degrees when seen in the axial direction. Further, each of the third linear portions 13 and the corresponding one of the 1Cth intermediate linear portions 163 form an angle of 135 degrees when seen in the axial direction. Further, each of the 1Cth intermediate linear portions 163 and the corresponding one of the fourth linear portions 14 form an angle of 135 degrees when seen in the axial direction. Further, each of the fourth linear portions 14 and the corresponding one of the 1Dth intermediate linear portions 164 form an angle of 135 degrees when seen in the axial direction. Further, each of the 1Dth intermediate linear portions 164 and the corresponding one of the first linear portions 11 form an angle of 135 degrees when seen in the axial direction.

Furthermore, in each of the examples shown in Figs. 26 to 29, the coil element 10i has a regular octagonal shape as a whole. The coil element 10i (electric conductor 10E) is wound such that each of the turn portions 101 to 108 forms a substantially regular octagonal shape. In other words, the coil element 10i includes eight linear portion groups 11 to 14 and 161 to 164 extending along the eight sides of a regular octagon. This can bring about improvement in performance of the coil 10.

It should be noted that ones of the linear portions 11 to 14 and the first intermediate linear portions 161 to 164 that are adjacent to each other in the circumferential direction may be connected to each other by a curved portion.

In the example shown in Fig. 26, as in the case of the example shown in Figs. 2 to 5B, the first shield member 30 includes first to fourth shield small pieces 31 to 34. Each of the first to fourth shield small pieces 31 to 34 has the shape of a quadrangle. The first shield member 30 has first to fourth gaps 51 to 54 formed therein. The first to fourth gaps 51 to 54 cross at least parts of the first to fourth linear portion groups 11G to 14G, respectively, when seen in the axial direction. In the example shown in Fig. 26, the first to fourth gaps 51 to 54 cross the first to fourth linear portion groups 11G to 14G, respectively, when seen in the axial direction.

In the example shown in Fig. 26, the first gap 51 and each of the first linear portions 11 of the first linear portion group 11G may form an angle of, for example, 80 degrees to 100 degrees when seen in the axial direction. Similarly, the second gap 52 and each of the second linear portions 12 of the second linear portion group 12G may form an angle of, for example, 80 degrees to 100 degrees when seen in the axial direction. Further, the third gap 53 and each of the third linear portions 13 of the third linear portion group 13G may form an angle of, for example, 80 degrees to 100 degrees when seen in the axial direction. Further, the fourth gap 54 and each of the fourth linear portions 14 of the fourth linear portion group 14G may form an angle of, for example, 80 degrees to 100 degrees when seen in the axial direction.

In the example shown in Fig. 26, the first gap 51 may be orthogonal to the first linear portions 11 of the first linear portion group 11G when seen in the axial direction. Further, the second gap 52 may be orthogonal to the second linear portions 12 of the second linear portion group 12G when seen in the axial direction. Further, the third gap 53 may be orthogonal to the third linear portions 13 of the third linear portion group 13G when seen in the axial direction. Further, the fourth gap 54 may be orthogonal to the fourth linear portions 14 of the fourth linear portion group 14G when seen in the axial direction.

In the example shown in Fig. 27, the first shield member 30 includes twelve shield small pieces 30P. The first shield member 30 has seventeen gaps 50 formed therein. In the example shown in Fig. 27, fourteen of the aforementioned seventeen gaps 50 cross at least parts of the first to fourth linear portion groups 11G to 14G and/or the 1Ath to 1Dth intermediate linear portion groups 161G to 164G when seen in the axial direction. Two of the aforementioned fourteen gaps 50 cross the first linear portion group 11G or the third linear portion group 13G. In the example shown in Fig. 27, the gap 50 that crosses the first linear portion group 11G and the first linear portion group 11G form an angle of 80 degrees to 100 degrees, more specifically 90 degrees, when seen in the axial direction. Further, in the example shown in Fig. 27, the gap 50 that crosses the third linear portion group 13G and the third linear portion group 13G form an angle of 80 degrees to 100 degrees, more specifically 90 degrees, when seen in the axial direction.

In the example shown in Fig. 27, one of the aforementioned seventeen gaps 50 extends through the second linear portion group 12G along the second linear portion group 12G. The gap 50 that extends through the second linear portion group 12G extends over an area that is closer to the central axis line C (i.e. further inward in the radial direction) than is one of the second linear portions 12 of the second linear portion group 12G whose ordinal number as counted from the innermost one of the second linear portions 12 (i.e. the second linear portion 12 of the first turn portion 101) assumes a minimum integer value that is greater than or equal to a value obtained by dividing the total number of second linear portions 12 by 3.

In the example shown in Fig. 27, one of the aforementioned seventeen gaps 50 extends through the fourth linear portion group 14G along the second linear portion group 14G. The gap 50 that extends through the fourth linear portion group 14G extends over an area that is closer to the central axis line C (i.e. further inward in the radial direction) than is one of the fourth linear portions 14 of the fourth linear portion group 14G whose ordinal number as counted from the innermost one of the fourth linear portions 14 (i.e. the fourth linear portion 14 of the first turn portion 101) assumes a minimum integer value that is greater than or equal to a value obtained by dividing the total number of fourth linear portions 14 by 3.

In the example shown in Fig. 27, one of the aforementioned seventeen gaps 50 does not cross the coil 10.

In the example shown in Fig. 28, the first shield member 30 includes eighth shield small pieces 31 to 38. Each of shield small pieces 31 to 38 has the shape of a triangle. More specifically, each of the shield small pieces 31 to 38 has the shape of a right-angled triangle. First to eighth gaps 51 to 58 formed between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 37, between adjacent shield small pieces 37 and 38, and between adjacent shield small pieces 38 and 31 extend radially from the central axis line C. The gaps 51, 53, 55, and 57 cross at least parts of the 1Ath to 1Dth intermediate linear portion groups 161G to 164G, respectively, when seen in the axial direction. In the illustrated example, the gaps 51, 53, 55, and 57 cross the 1Ath to 1Dth intermediate linear portion groups 161G to 164G, respectively, when seen in the axial direction. In other words, when seen in the axial direction, the gaps 51, 53, 55, and 57 extend from positions that are further inward in the radial direction than are the 1Ath to 1Dth intermediate linear portion groups 161G to 164G to positions that are further outward in the radial direction than are the 1Ath to 1Dth intermediate linear portion groups 161G to 164G, respectively.

Placing the shield small pieces 31 and 32 such that the first gap 51 crosses the 1Ath intermediate linear portions 161 restrains a line of magnetic force formed around each 1Ath intermediate linear portion 161 from reaching the second shield member 40 through the first gap 51. This makes it possible to restrain an eddy current from being generated in the second shield member 40 by lines of magnetic force formed around the 1Ath intermediate linear portions 161. This means that it is possible to suppress an increase in loss (heat generation) of the coil unit 5 due to the presence of the second gap 52 and means that it is possible to suppress a decrease in performance of the coil unit 5 due to the presence of the first gap 51.

The first gap 51 and each of the 1Ath intermediate linear portions 161 may form an angle of, for example, 80 degrees to 100 degrees when seen in the axial direction. This makes it possible to effectively suppress an increase in loss (heat generation) of the coil unit 5 due to the presence of the first gap 51 and effectively suppress a decrease in performance of the coil unit 5 due to the presence of the first gap 51. Furthermore, as can be seen from Fig. 28, the first gap 51 may be orthogonal to the 1Ath intermediate linear portions 161 when seen in the axial direction. This makes it possible to further effectively suppress an increase in loss (heat generation) of the coil unit 5 due to the presence of the first gap 51 and further effectively suppress a decrease in performance of the coil unit 5 due to the presence of the first gap 51.

Furthermore, placing the shield small pieces 33 and 34 such that the third gap 53 crosses the 1Bth intermediate linear portions 162 restrains a line of magnetic force formed around each 1Bth intermediate linear portion 162 from reaching the second shield member 40 through the third gap 53. This makes it possible to restrain an eddy current from being generated in the second shield member 40 by lines of magnetic force formed around the 1Bth intermediate linear portions 162. This means that it is possible to suppress an increase in loss (heat generation) of the coil unit 5 due to the presence of the third gap 53 and means that it is possible to suppress a decrease in performance of the coil unit 5 due to the presence of the third gap 53.

The third gap 53 and each of the 1Bth intermediate linear portions 162 may form an angle of, for example, 80 degrees to 100 degrees when seen in the axial direction. This makes it possible to effectively suppress an increase in loss (heat generation) of the coil unit 5 due to the presence of the third gap 53 and effectively suppress a decrease in performance of the coil unit 5 due to the presence of the third gap 53. Furthermore, as can be seen from Fig. 28, the third gap 53 may be orthogonal to the 1Bth intermediate linear portions 162 when seen in the axial direction. This makes it possible to further effectively suppress an increase in loss (heat generation) of the coil unit 5 due to the presence of the third gap 53 and further effectively suppress a decrease in performance of the coil unit 5 due to the presence of the third gap 53.

Furthermore, placing the shield small pieces 35 and 36 such that the fifth gap 55 crosses the 1Cth intermediate linear portions 163 restrains a line of magnetic force formed around each 1Cth intermediate linear portion 163 from reaching the second shield member 40 through the fifth gap 55. This makes it possible to restrain an eddy current from being generated in the second shield member 40 by lines of magnetic force formed around the 1Cth intermediate linear portions 163. This means that it is possible to suppress an increase in loss (heat generation) of the coil unit 5 due to the presence of the fifth gap 55 and means that it is possible to suppress a decrease in performance of the coil unit 5 due to the presence of the fifth gap 55.

The fifth gap 55 and each of the 1Cth intermediate linear portions 163 may form an angle of, for example, 80 degrees to 100 degrees when seen in the axial direction. This makes it possible to effectively suppress an increase in loss (heat generation) of the coil unit 5 due to the presence of the fifth gap 55 and effectively suppress a decrease in performance of the coil unit 5 due to the presence of the fifth gap 55. Furthermore, as can be seen from Fig. 28, the fifth gap 55 may be orthogonal to the 1Cth intermediate linear portions 163 when seen in the axial direction. This makes it possible to further effectively suppress an increase in loss (heat generation) of the coil unit 5 due to the presence of the fifth gap 55 and further effectively suppress a decrease in performance of the coil unit 5 due to the presence of the fifth gap 55.

Furthermore, placing the shield small pieces 37 and 38 such that the seventh gap 57 crosses the 1Dth intermediate linear portions 164 restrains a line of magnetic force formed around each 1Dth intermediate linear portion 164 from reaching the second shield member 40 through the seventh gap 57. This makes it possible to restrain an eddy current from being generated in the second shield member 40 by lines of magnetic force formed around the 1Dth intermediate linear portions 164. This means that it is possible to suppress an increase in loss (heat generation) of the coil unit 5 due to the presence of the seventh gap 57 and means that it is possible to suppress a decrease in performance of the coil unit 5 due to the presence of the seventh gap 57.

The seventh gap 57 and each of the 1Dth intermediate linear portions 164 may form an angle of, for example, 80 degrees to 100 degrees when seen in the axial direction. This makes it possible to effectively suppress an increase in loss (heat generation) of the coil unit 5 due to the presence of the seventh gap 57 and effectively suppress a decrease in performance of the coil unit 5 due to the presence of the seventh gap 57. Furthermore, as can be seen from Fig. 28, the seventh gap 57 may be orthogonal to the 1Dth intermediate linear portions 164 when seen in the axial direction. This makes it possible to further effectively suppress an increase in loss (heat generation) of the coil unit 5 due to the presence of the seventh gap 57 and further effectively suppress a decrease in performance of the coil unit 5 due to the presence of the seventh gap 57.

In the example shown in Fig. 28, the gaps 58, 52, 54, and 56 cross at least parts of the first to fourth linear portion groups 11G to 14G, respectively, when seen in the axial direction. In the illustrated example, the gaps 58, 52, 54, and 56 cross the first to fourth linear portion groups 11G to 14G, respectively. In other words, when seen in the axial direction, the gaps 58, 52, 54, and 56 extend from positions that are further inward in the radial direction than are the first to fourth linear portion groups 11G to 14G to positions that are further outward in the radial direction than are the first to fourth linear portion groups 11G to 14G, respectively.

The eighth gap 58 and each of the first linear portions 11 form an angle of, for example, 80 degrees to 100 degrees when seen in the axial direction. More specifically, the eighth gap 58 is orthogonal to the first linear portions 11. Further, the second gap 52 and each of the second linear portions 12 form an angle of, for example, 80 degrees to 100 degrees when seen in the axial direction. More specifically, the second gap 52 is orthogonal to the second linear portions 12. Further, the fourth gap 54 and each of the third linear portions 13 form an angle of, for example, 80 degrees to 100 degrees when seen in the axial direction. More specifically, the fourth gap 54 is orthogonal to the third linear portions 13. Further, the sixth gap 56 and each of the fourth linear portions 14 form an angle of, for example, 80 degrees to 100 degrees when seen in the axial direction. More specifically, the sixth gap 56 is orthogonal to the fourth linear portions 14.

In the example shown in Fig. 29, too, the gaps 50 that cross the first intermediate linear portion groups 161G to 164G and the first intermediate linear portions 161 to 164 form angles of 80 degrees to 100 degrees when seen in the axial direction. In the example shown in Fig. 28, the gaps 50 that cross the first intermediate linear portion groups 161G to 164G are orthogonal to the first intermediate linear portions 161 to 164, respectively, when seen in the axial direction. In this way, various layouts (or various forms of division) can be adopted as such a layout of the plurality of shield small pieces 30P (or a form of division of the first shield member 30) that the gaps 50 that cross the first intermediate linear portion groups 161G to 164G and the first intermediate linear portions 161 to 164 form angles of 80 degrees to 100 degrees.

The following describes modifications shown in Figs. 30 to 33. In each of the examples shown in Figs. 30 to 33, as with the coil 10 shown in Figs. 17 to 19, the coil 10 includes a plurality of spiral-shaped coil elements 10i and 10jj.

As with each of the coil elements 10i shown in Figs. 26 to 29, each of the coil elements 10j and 10jj shown in each Figs. 30 to 33 has an octagonal shape as a whole. Each of the coil elements 10j and 10jj (electric conductor 10E) is wound such that each of the turn portions 101 to 108 forms a substantially octagonal shape.

In each of the examples shown in Figs. 30 to 33, the first to fifth turn portions 101 to 105 of each of the coil elements 10j and 10jj include first intermediate linear portions 161 to 164 in addition to the first to third linear portions 11 to 13 and the plurality of turn connected portions 16. The 1Ath intermediate linear portions 161 and the 1Cth intermediate linear portions 163 extend in a third direction D3. The third direction D3 is not parallel with one or the other of the first and second directions D1 and D2. The 1Bth intermediate linear portions 162 and the 1Dth intermediate linear portions 164 extend in a fourth direction D4. The fourth direction D4 is not parallel with any of the first to third directions D1 to D3.

In each of the turn portions 101 to 105 of each of the coil elements 10j and 10jj, adjacent ends of the first and second linear portions 11 and 12 are connected to each other via a 1Ath intermediate linear portion 161. Similarly, in each of the turn portions 101 to 105 of each of the coil elements 10j and 10jj, adjacent ends of the second and third linear portions 12 and 13 are connected to each other via a 1Bth intermediate linear portion 162. Further, in each of the turn portions 101 to 105 of each of the coil elements 10j and 10jj, adjacent ends of the third linear portion 13 and the plurality of turn connected portions 16 are connected to each other via a 1Cth intermediate linear portion 163. Further, in each of the turn portions 101 to 105 of each of the coil elements 10j and 10jj, adjacent ends of the third linear portion 13 and the plurality of turn connected portions 16 are connected to each other via a 1Dth intermediate linear portion 164.

In each of the examples shown in Figs. 30 to 33, too, the 1Ath intermediate linear portions 161 of the plurality of turn portions 101 to 105 are arrayed in the radial direction to form the 1Ath intermediate linear portion group 161G. Further, the 1Bth intermediate linear portions 162 of the plurality of turn portions 101 to 105 are arrayed in the radial direction to form the 1Bth intermediate linear portion group 162G. Further, the 1Cth intermediate linear portions 163 of the plurality of turn portions 101 to 105 are arrayed in the radial direction to form the 1Cth intermediate linear portion group 163G. Further, the 1Dth intermediate linear portions 164 of the plurality of turn portions 101 to 105 are arrayed in the radial direction to form the 1Dth intermediate linear portion group 164G. Ones of the first intermediate linear portions 161 that are adjacent to each other in the radial direction, ones of the first intermediate linear portions 162 that are adjacent to each other in the radial direction, ones of the first intermediate linear portions 163 that are adjacent to each other in the radial direction, and ones of the first intermediate linear portions 164 that are adjacent to each other in the radial direction are separated from each other in the radial direction. The 1Ath to 1Dth intermediate linear portion groups 161G to 164G are parallel straight line groups composed of pluralities of the 1Ath to 1Dth intermediate linear portions 161 to 164, respectively.

As mentioned above, each of the coil elements 10j and 10jj has an octagonal shape as a whole. Each of the coil elements 10j and 10jj (electric conductor 10E) is wound such that each of the turn portions 101 to 105 forms a substantially octagonal shape. In other words, each of the coil elements 10j and 10jj includes seven linear portion groups 11 to 13 and 161 to 164 extending along seven of the eight sides of an octagon. In the illustrated example, each of the first linear portions 11 and the corresponding one of the 1Ath intermediate linear portions 161 form an angle of 125 degrees to 145 degrees when seen in the axial direction. Further, each of the 1Ath intermediate linear portions 161 and the corresponding one of the second linear portions 12 form an angle of 125 degrees to 145 degrees when seen in the axial direction. Further, each of the second linear portions 12 and the corresponding one of the 1Bth intermediate linear portions 162 form an angle of 125 degrees to 145 degrees when seen in the axial direction. Further, each of the 1Bth intermediate linear portions 162 and the corresponding one of the third linear portions 13 form an angle of 125 degrees to 145 degrees when seen in the axial direction. Further, each of the third linear portions 13 and the corresponding one of the 1Cth intermediate linear portions 163 form an angle of 125 degrees to 145 degrees when seen in the axial direction. Further, each of the 1Dth intermediate linear portions 164 and the corresponding one of the first linear portions 11 form an angle of 125 degrees to 145 degrees when seen in the axial direction.

In particular, in each of the examples shown in Figs. 30 to 33, each of the first linear portions 11 and the corresponding one of the 1Ath intermediate linear portions 161 form an angle of 135 degrees when seen in the axial direction. Further, each of the 1Ath intermediate linear portions 161 and the corresponding one of the second linear portions 12 form an angle of 135 degrees when seen in the axial direction. Further, each of the second linear portions 12 and the corresponding one of the 1Bth intermediate linear portions 162 form an angle of 135 degrees when seen in the axial direction. Further, each of the 1Bth intermediate linear portions 162 and the corresponding one of the third linear portions 13 form an angle of 135 degrees when seen in the axial direction. Further, each of the third linear portions 13 and the corresponding one of the 1Cth intermediate linear portions 163 form an angle of 135 degrees when seen in the axial direction. Further, each of the 1Dth intermediate linear portions 164 and the corresponding one of the first linear portions 11 form an angle of 135 degrees when seen in the axial direction.

Furthermore, in each of the examples shown in Figs. 30 to 33, each of the coil elements 10j and 10jj has a regular octagonal shape as a whole. Each of the coil elements 10j and 10jj (electric conductor 10E) is wound such that each of the turn portions 101 to 105 forms a substantially regular octagonal shape. In other words, each of the coil elements 10j and 10jj includes seven linear portion groups 11 to 13 and 161 to 164 extending along seven of the eight sides of a regular octagon. This can bring about improvement in performance of the coil 10.

In each of the examples shown in Figs. 30 to 33, too, ones of the linear portions 11 to 13 and the first intermediate linear portions 161 to 164 that are adjacent to each other in the circumferential direction may be connected to each other by a curved portion. Further, ones of the 1Cth intermediate linear portions 163 and the turn connected portions 16 that are adjacent to each other in the circumferential direction may be connected to each other by a curved portion. Further, ones of the 1Dth intermediate linear portions 164 and the turn connected portions 16 that are adjacent to each other in the circumferential direction may be connected to each other by a curved portion.

In the example shown in Fig. 30, the first shield member 30 includes nine shield small pieces 30P. The first shield member 30 has twelve gaps 50 formed therein. In the example shown in Fig. 30, the aforementioned twelve gaps 50 cross at least parts of the first to third linear portion groups 11G to 13G and/or the 1Ath to 1Dth intermediate linear portion groups 161G to 164G of each of the coil elements 10j and 10jj when seen in the axial direction.

In the example shown in Fig. 31, the first shield member 30 includes twelve shield small pieces 30P. The first shield member 30 has seventeen gaps 50 formed therein. In the example shown in Fig. 31, thirteen of the aforementioned twelve gaps 50 cross at least parts of the first to third linear portion groups 11G to 13G and/or the 1Ath to 1Dth intermediate linear portion groups 161G to 164G of each of the coil elements 10j and 10jj when seen in the axial direction. One of the aforementioned thirteen gaps 50 cross the second linear portion group 12G of each of the coil elements 10j and 10jj. In the example shown in Fig. 31, the gap 50 that crosses the second linear portion group 12G and the second linear portion group 12G form an angle of 80 degrees to 100 degrees, more specifically 90 degrees, when seen in the axial direction.

In the example shown in Fig. 31, one of the aforementioned seventeen gaps 50 extends through the first linear portion group 11G of each of the coil units 10j and 10jj along the first linear portion group 11G. The gap 50 that extends through the first linear portion group 11G extends over an area that is closer to the central axis line C (i.e. further inward in the radial direction) than is one of the first linear portions 11 of the first linear portion group 11G whose ordinal number as counted from the innermost one of the first linear portions 11 (i.e. the first linear portion 11 of the first turn portion 101) assumes a minimum integer value that is greater than or equal to a value obtained by dividing the total number of first linear portions 11 by 3.

In the example shown in Fig. 31, one of the aforementioned seventeen gaps 50 extends through the third linear portion group 13G of each of the coil units 10j and 10jj along the third linear portion group 13G. The gap 50 that extends through the third linear portion group 13G extends over an area that is closer to the central axis line C (i.e. further inward in the radial direction) than is one of the third linear portions 13 of the third linear portion group 13G whose ordinal number as counted from the innermost one of the third linear portions 13 (i.e. the third linear portion 13 of the first turn portion 101) assumes a minimum integer value that is greater than or equal to a value obtained by dividing the total number of third linear portions 13 by 3.

In the example shown in Fig. 32, as in the case of the example shown in Fig. 28, the first shield member 30 includes eighth shield small pieces 31 to 38. Each of shield small pieces 31 to 38 has the shape of a triangle. More specifically, each of the shield small pieces 31 to 38 has the shape of a right-angled triangle. First to eighth gaps 51 to 58 formed between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 37, between adjacent shield small pieces 37 and 38, and between adjacent shield small pieces 38 and 31 extend radially from the central axis line C. The gaps 51, 53, 55, and 57 cross at least parts of the 1Ath to 1Dth intermediate linear portion groups 161G to 164G, respectively, of each of the coil elements 10j and 10jj when seen in the axial direction. In the illustrated example, the gaps 51, 53, 55, and 57 cross the 1Ath to 1Dth intermediate linear portion groups 161G to 164G, respectively, of each of the coil elements 10j and 10jj when seen in the axial direction. In other words, when seen in the axial direction, the gaps 51, 53, 55, and 57 extend from positions that are further inward in the radial direction than are the 1Ath to 1Dth intermediate linear portion groups 161G to 164G of each of the coil elements 10j and 10jj to positions that are further outward in the radial direction than are the 1Ath to 1Dth intermediate linear portion groups 161G to 164G, respectively. This restrains a line of magnetic force formed around each of the first intermediate linear portions 161 to 164 of each of the coil elements 10j and 10jj from reaching the second shield member 40 through the gap 51, 53, 55, or 57 that crosses that first intermediate linear portion 161, 162, 163, or 164.

The first gap 51 and each of the 1Ath intermediate linear portions 161 of each of the coil elements 10j and 10jj may form an angle of, for example, 80 degrees to 100 degrees when seen in the axial direction. Furthermore, as can be seen from Fig. 32, the first gap 51 may be orthogonal to the 1Ath intermediate linear portions 161 of each of the coil elements 10j and 10jj when seen in the axial direction.

The third gap 53 and each of the 1Bth intermediate linear portions 162 of each of the coil elements 10j and 10jj may form an angle of, for example, 80 degrees to 100 degrees when seen in the axial direction. Furthermore, as can be seen from Fig. 32, the third gap 53 may be orthogonal to the 1Bth intermediate linear portions 162 of each of the coil elements 10j and 10jj when seen in the axial direction.

The fifth gap 55 and each of the 1Cth intermediate linear portions 163 of each of the coil elements 10j and 10jj may form an angle of, for example, 80 degrees to 100 degrees when seen in the axial direction. Furthermore, as can be seen from Fig. 32, the fifth gap 55 may be orthogonal to the 1Cth intermediate linear portions 163 of each of the coil elements 10j and 10jj when seen in the axial direction.

The seventh gap 57 and each of the 1Dth intermediate linear portions 164 of each of the coil elements 10j and 10jj may form an angle of, for example, 80 degrees to 100 degrees when seen in the axial direction. Furthermore, as can be seen from Fig. 32, the seventh gap 57 may be orthogonal to the 1Dth intermediate linear portions 164 of each of the coil elements 10j and 10jj when seen in the axial direction.

In the example shown in Fig. 32, the gaps 58, 52, and 54 cross at least parts of the first to third linear portion groups 11G to 13G, respectively, of each of the coil elements 10j and 10jj when seen in the axial direction. In the illustrated example, the gaps 58, 52, and 54 cross the first to third linear portion groups 11G to 13G, respectively, of each of the coil elements 10j and 10jj. In other words, when seen in the axial direction, the gaps 58, 52, and 54 extend from positions that are further inward in the radial direction than are the first to third linear portion groups 11G to 13G of each of the coil elements 10j and 10jj to positions that are further outward in the radial direction than are the first to third linear portion groups 11G to 13G, respectively.

The eighth gap 58 and each of the first linear portions 11 of each of the coil elements 10j and 10jj form an angle of, for example, 80 degrees to 100 degrees when seen in the axial direction. More specifically, the eighth gap 58 is orthogonal to the first linear portions 11 of each of the coil elements 10j and 10jj. Further, the second gap 52 and each of the second linear portions 12 of each of the coil elements 10j and 10jj form an angle of, for example, 80 degrees to 100 degrees when seen in the axial direction. More specifically, the second gap 52 is orthogonal to the second linear portions 12 of each of the coil elements 10j and 10jj. Further, the fourth gap 54 and each of the third linear portions 13 of each of the coil elements 10j and 10jj form an angle of, for example, 80 degrees to 100 degrees when seen in the axial direction. More specifically, the fourth gap 54 is orthogonal to the third linear portions 13 of each of the coil elements 10j and 10jj.

In the example shown in Fig. 33, too, the gaps 50 that cross the first intermediate linear portion groups 161G to 164G of each of the coil elements 10j and 10jj and the first intermediate linear portions 161 to 164 form angles of 80 degrees to 100 degrees when seen in the axial direction. In the example shown in Fig. 33, the gaps 50 that cross the first intermediate linear portion groups 161G to 164G of each of the coil elements 10j and 10jj are orthogonal to the first intermediate linear portions 161 to 164, respectively, when seen in the axial direction. In this way, various layouts (or various forms of division) can be adopted as such a layout of the plurality of shield small pieces 30P (or a form of division of the first shield member 30) that the gaps 50 that cross the first intermediate linear portion groups 161G to 164G of each of the coil elements 10j and 10jj and the first intermediate linear portions 161 to 164 form angles of 80 degrees to 100 degrees.

The following describes modifications shown in Figs. 34 and 35. In each of the examples shown in Figs. 34 and 35, the first intermediate linear portion groups 161G, 162G, 163G, and 164G are connected to the linear portion groups 12G, 13G, 14G, and 11G via second intermediate linear portion groups 171G, 172G, 173G, and 174G, respectively.

In each of the examples shown in Figs. 34 and 35, the coil element 10i includes an electric conductor 10E having a spiral shape. The electric conductor 10E includes a plurality of turn portions 101 to 107 arranged in the radial direction. In the illustrated example, the electric conductor 10E includes first to seven turn portions 101 to 107. The first to eighth turn portions 101 to 107 are arranged in this order from inside toward outside in the radial direction. In other words, the first turn portion 101 is located furthest inward in the radial direction, and the seventh turn portion 107 is located furthest outward in the radial direction. Furthermore, in other words, the first turn portion 101 forms an innermost peripheral portion of the coil element 10i. Further, the seventh turn portion 107 forms an outermost peripheral portion of the coil element 10i.

Each of the turn portions 101 to 107 of the coil element 10i extends on an imaginary plane surface perpendicular to the axial direction. The first to seventh turn portions 101 to 107 are arranged in this order, whereby the coil element 10i forms a spiral shape around the central axis line C.

In each of the examples shown in Figs. 34 and 35, the coil element 10i has a dodecagonal shape as a whole. The coil element 10i (electric conductor 10E) is wound such that each of the turn portions 101 to 107 forms a substantially regular dodecagonal shape.

Each of the turn portions 101 to 107 of the coil element 10i includes a plurality of linear portions 11 to 14 placed around the central axis line C. Ones of the linear portions 11 to 14 that are adjacent to each other in a circumferential direction of a circle centered at the central axis line C are connected to each other. In the illustrated example, the first to seventh turn portions 101 to 107 include first and third linear portions 11 and 13 extending in a first direction D1 and second and fourth linear portions 12 and 14 extending in a second direction D2.

The first direction D1 and the second direction D2 are not parallel with each other. In each of the examples shown in Figs. 34 and 35, the first direction D1 and the second direction D2 are orthogonal to each other. In each of the turn portions 101 to 107, the first linear portion 11 and the third linear portion 13 are placed such that the central axis line C passes through a space between the first linear portion 11 and the third linear portion 13. Further, in each of the turn portions 101 to 107, the second linear portion 12 and the fourth linear portion 14 are placed such that the central axis line C passes through a space between the second linear portion 12 and the fourth linear portion 14.

In each of the examples shown in Figs. 34 and 35, the first to seventh turn portions 101 to 107 include first intermediate linear portions 161 to 164 and second intermediate linear portions 171 to 174 in addition to the first to fourth linear portions 11 to 14. The 1Ath intermediate linear portions 161 and the 1Cth intermediate linear portions 163 extend in a third direction D3. The third direction D3 is not parallel with one or the other of the first and second directions D1 and D2. The 1Bth intermediate linear portions 162 and the 1Dth intermediate linear portions 164 extend in a fourth direction D4. The fourth direction D4 is not parallel with any of the first to third directions D1 to D3. The 2Ath intermediate linear portions 171 and the 2Cth intermediate linear portions 173 extend in a fifth direction D5. The fifth direction D5 is not parallel with any of the first to fourth directions D1 to D4. The 2Bth intermediate linear portions 172 and the 2Dth intermediate linear portions 174 extend in a sixth direction D6. The sixth direction D6 is not parallel with any of the first to fifth directions D1 to D5.

In each of the turn portions 101 to 107, adjacent ends of the first and second linear portions 11 and 12 are connected to each other via a 1Ath intermediate linear portion 161. In each of the turn portions 101 to 107, adjacent ends of the 1Ath intermediate linear portion 161 and the second linear portion 12 are connected to each other via a 2Ath intermediate linear portion 171.

Further, in each of the turn portions 101 to 107, adjacent ends of the second and third linear portions 12 and 13 are connected to each other via a 1Bth intermediate linear portion 162. In each of the turn portions 101 to 107, adjacent ends of the 1Bth intermediate linear portion 162 and the third linear portion 13 are connected to each other via a 2Bth intermediate linear portion 172.

Further, in each of the turn portions 101 to 107, adjacent ends of the third and fourth linear portions 13 and 14 are connected to each other via a 1Cth intermediate linear portion 163. In each of the turn portions 101 to 107, adjacent ends of the 1Cth intermediate linear portion 163 and the fourth linear portion 14 are connected to each other via a 2Cth intermediate linear portion 173.

Furthermore, adjacent ends of the fourth and first linear portions 14 and 11 of turn portions 101 and 102, ..., or 106 and 107 that are adjacent to each other in the radial direction are connected to each other via a 1Dth intermediate linear portion 164. Further, adjacent ends of the 1Dth intermediate linear portion 164 and the first linear portion 11 of turn portions 101 and 102, ..., or 106 and 107 that are adjacent to each other in the radial direction are connected to each other via a 2Dth intermediate linear portion 174. For example, adjacent ends of the fourth linear portion 14 of the first turn portions 101 and the first linear portion 11 of the second turn portion 102 are connected to each other via a 1Dth intermediate linear portion 164 and a 2Dth intermediate linear portion 174. Further, adjacent ends of the fourth linear portion 14 of the second turn portions 102 and the first linear portion 11 of the third turn portion 103 are connected to each other via a 1Dth intermediate linear portion 164 and a 2Dth intermediate linear portion 174.

The 1Ath intermediate linear portions 161 of the plurality of turn portions 101 to 107 are arrayed in the radial direction to form the 1Ath intermediate linear portion group 161G. Further, the 1Bth intermediate linear portions 162 of the plurality of turn portions 101 to 107 are arrayed in the radial direction to form the 1Bth intermediate linear portion group 162G. Further, the 1Cth intermediate linear portions 163 of the plurality of turn portions 101 to 107 are arrayed in the radial direction to form the 1Cth intermediate linear portion group 163G. Further, the 1Dth intermediate linear portions 164 of the plurality of turn portions 101 to 107 are arrayed in the radial direction to form the 1Dth intermediate linear portion group 164G. Ones of the first intermediate linear portions 161 that are adjacent to each other in the radial direction, ones of the first intermediate linear portions 162 that are adjacent to each other in the radial direction, ones of the first intermediate linear portions 163 that are adjacent to each other in the radial direction, and ones of the first intermediate linear portions 164 that are adjacent to each other in the radial direction are separated from each other in the radial direction. The 1Ath to 1Dth intermediate linear portion groups 161G to 164G are parallel straight line groups composed of pluralities of the 1Ath to 1Dth intermediate linear portions 161 to 164, respectively.

The 2Ath intermediate linear portions 171 of the plurality of turn portions 101 to 107 are arrayed in the radial direction to form the 2Ath intermediate linear portion group 171G. Further, the 2Bth intermediate linear portions 172 of the plurality of turn portions 101 to 107 are arrayed in the radial direction to form the 2Bth intermediate linear portion group 172G. Further, the 2Cth intermediate linear portions 173 of the plurality of turn portions 101 to 107 are arrayed in the radial direction to form the 2Cth intermediate linear portion group 173G. Further, the 2Dth intermediate linear portions 174 of the plurality of turn portions 101 to 107 are arrayed in the radial direction to form the 2Dth intermediate linear portion group 174G. Ones of the second intermediate linear portions 171 that are adjacent to each other in the radial direction, ones of the second intermediate linear portions 172 that are adjacent to each other in the radial direction, ones of the second intermediate linear portions 173 that are adjacent to each other in the radial direction, and ones of the second intermediate linear portions 174 that are adjacent to each other in the radial direction are separated from each other in the radial direction. The 2Ath to 2Dth intermediate linear portion groups 171G to 174G are parallel straight line groups composed of pluralities of the 2Ath to 2Dth intermediate linear portions 171 to 174, respectively.

As mentioned above, the coil element 10i of each of Figs. 34 and 35 has a dodecagonal shape as a whole. The coil element 10i (electric conductor 10E) is wound such that each of the turn portions 101 to 107 forms a substantially regular dodecagonal shape. In other words, the coil element 10i includes twelve linear portion groups 11 to 14, 161 to 164, and 171 to 174 extending along the twelve sides of a dodecagon. In the illustrated example, each of the first linear portions 11 and the corresponding one of the 1Ath intermediate linear portions 161 form an angle of 140 degrees to 160 degrees when seen in the axial direction. Further, each of the 1Ath intermediate linear portions 161 and the corresponding one of the 2Ath intermediate linear portions 171 form an angle of 140 degrees to 160 degrees when seen in the axial direction. Further, each of the 2Ath intermediate linear portions 171 and the corresponding one of the second linear portions 12 form an angle of 140 degrees to 160 degrees when seen in the axial direction. Further, each of the second linear portions 12 and the corresponding one of the 1Bth intermediate linear portions 162 form an angle of 140 degrees to 160 degrees when seen in the axial direction. Further, each of the 1Bth intermediate linear portions 162 and the corresponding one of the 2Bth intermediate linear portions 172 form an angle of 140 degrees to 160 degrees when seen in the axial direction. Further, each of the 2Bth intermediate linear portions 172 and the corresponding one of the third linear portions 13 form an angle of 140 degrees to 160 degrees when seen in the axial direction. Further, each of the third linear portions 13 and the corresponding one of the 1Cth intermediate linear portions 163 form an angle of 140 degrees to 160 degrees when seen in the axial direction. Further, each of the 1Cth intermediate linear portions 163 and the corresponding one of the 2Cth intermediate linear portions 173 form an angle of 140 degrees to 160 degrees when seen in the axial direction. Further, each of the 2Cth intermediate linear portions 173 and the corresponding one of the fourth linear portions 14 form an angle of 140 degrees to 160 degrees when seen in the axial direction. Further, each of the fourth linear portions 14 and the corresponding one of the 1Dth intermediate linear portions 164 form an angle of 140 degrees to 160 degrees when seen in the axial direction. Further, each of the 1Dth intermediate linear portions 164 and the corresponding one of the 2Dth intermediate linear portions 174 form an angle of 140 degrees to 160 degrees when seen in the axial direction. Further, each of the 2Dth intermediate linear portions 174 and the corresponding one of the first linear portions 11 form an angle of 140 degrees to 160 degrees when seen in the axial direction.

In particular, in each of the examples shown in Figs. 34 and 35, each of the first linear portions 11 and the corresponding one of the 1Ath intermediate linear portions 161 form an angle of 150 degrees when seen in the axial direction. Further, each of the 1Ath intermediate linear portions 161 and the corresponding one of the 2Ath intermediate linear portions 171 form an angle of 150 degrees when seen in the axial direction. Further, each of the 2Ath intermediate linear portions 171 and the corresponding one of the second linear portions 12 form an angle of 150 degrees when seen in the axial direction. Further, each of the second linear portions 12 and the corresponding one of the 1Bth intermediate linear portions 162 form an angle of 150 degrees when seen in the axial direction. Further, each of the 1Bth intermediate linear portions 162 and the corresponding one of the 2Bth intermediate linear portions 172 form an angle of 150 degrees when seen in the axial direction. Further, each of the 2Bth intermediate linear portions 172 and the corresponding one of the third linear portions 13 form an angle of 150 degrees when seen in the axial direction. Further, each of the third linear portions 13 and the corresponding one of the 1Cth intermediate linear portions 163 form an angle of 150 degrees when seen in the axial direction. Further, each of the 1Cth intermediate linear portions 163 and the corresponding one of the 2Cth intermediate linear portions 173 form an angle of 150 degrees when seen in the axial direction. Further, each of the 2Cth intermediate linear portions 173 and the corresponding one of the fourth linear portions 14 form an angle of 150 degrees when seen in the axial direction. Further, each of the fourth linear portions 14 and the corresponding one of the 1Dth intermediate linear portions 164 form an angle of 150 degrees when seen in the axial direction. Further, each of the 1Dth intermediate linear portions 164 and the corresponding one of the 2Dth intermediate linear portions 174 form an angle of 150 degrees when seen in the axial direction. Further, each of the 2Dth intermediate linear portions 174 and the corresponding one of the first linear portions 11 form an angle of 150 degrees when seen in the axial direction.

Furthermore, in each of the examples shown in Figs. 34 and 35, the coil element 10i has a regular dodecagonal shape as a whole. The coil element 10i (electric conductor 10E) is wound such that each of the turn portions 101 to 107 forms a substantially regular dodecagonal shape. In other words, the coil element 10i may include twelve linear portion groups 11 to 14, 161 to 164, and 171 to 174 extending along the twelve sides of a regular dodecagon. This can bring about improvement in performance of the coil 10.

Note here that in a case where a coil 10 includes coil elements 10j and 10jj as shown in Fig. 30 or other drawings and where each of the coil elements 10j and 10jj has a dodecagonal shape as a whole, each of the coil elements 10j and 10jj needs only include eleven linear portion groups 11 to 13, 161 to 164, and 171 to 174 extending along eleven of the twelve sides of a dodecagon. Similarly, in a case where a coil 10 includes coil elements 10j and 10jj as shown in Fig. 30 or other drawings and where each of the coil elements 10j and 10jj has a regular dodecagonal shape as a whole, each of the coil elements 10j and 10jj needs only include eleven linear portion groups 11 to 13, 161 to 164, and 171 to 174 extending along eleven of the twelve sides of a regular dodecagon.

In each of the examples shown in Figs. 34 and 35, too, ones of the linear portions 11 to 14, the first intermediate linear portions 161 to 164, and the second intermediate linear portions 171 to 184 that are adjacent to each other in the circumferential direction may be connected to each other by a curved portion.

In the example shown in Fig. 34, the first shield member 30 includes eighteen shield small pieces 30P. Each of the shield small pieces 30P has the shape of a quadrangle. The first shield member 30 has twenty-four gaps 50 formed therein. Twenty of the twenty-four gaps 50 cross at least parts of the linear portion groups 11G to 14G, the first intermediate linear portion groups 161G to 164G, and/or the second intermediate linear portion groups 171G to 174G when seen in the axial direction.

In the example shown in Fig. 35, the first shield member 30 includes twenty-four shield small pieces 30P. The first shield member 30 has twenty-eight gaps 50 formed therein. Sixteen of the twenty-eight gaps extend radially from the central axis line C. Four of the aforementioned sixteen gaps cross at least parts of the second intermediate linear portion groups 171G to 174G when seen in the axial direction. In the example shown in Fig. 35, the aforementioned four gaps 50 cross the second intermediate linear portion groups 171G to 174G when seen in the axial direction. In other words, when seen in the axial direction, the aforementioned four gaps 50 extend from positions that are further inward in the radial direction than are the second intermediate linear portion groups 171G to 174G to positions that are further outward in the radial direction than are the second intermediate linear portion groups 171G to 174G.

Placing the shield small pieces 30P such that one of the aforementioned four gaps 50 crosses the 2Ath intermediate linear portions 171 restrains a line of magnetic force formed around each 2Ath intermediate linear portion 171 from reaching the second shield member 40 through the gap 50. This makes it possible to restrain an eddy current from being generated in the second shield member 40 by lines of magnetic force formed around the 2Ath intermediate linear portions 171. This means that it is possible to suppress an increase in loss (heat generation) of the coil unit 5 due to the presence of the aforementioned gap 50 and means that it is possible to suppress a decrease in performance of the coil unit 5 due to the presence of the aforementioned gap 50.

The gap 50 that crosses the 2Ath intermediate linear portions 171 and each of the 2Ath intermediate linear portions 171 may form an angle of, for example, 80 degrees to 100 degrees when seen in the axial direction. This makes it possible to effectively suppress an increase in loss (heat generation) of the coil unit 5 due to the presence of the aforementioned gap 50 and effectively suppress a decrease in performance of the coil unit 5 due to the presence of the aforementioned gap 50. Furthermore, as can be seen from Fig. 35, the aforementioned gap 50 may be orthogonal to the 2Ath intermediate linear portions 171 when seen in the axial direction. This makes it possible to further effectively suppress an increase in loss (heat generation) of the coil unit 5 due to the presence of the aforementioned gap 50 and further effectively suppress a decrease in performance of the coil unit 5 due to the presence of the aforementioned gap 50.

Furthermore, placing the shield small pieces 30P such that one of the aforementioned four gaps 50 crosses the 2Bth intermediate linear portions 172 restrains a line of magnetic force formed around each 2Bth intermediate linear portion 172 from reaching the second shield member 40 through the gap 50. This makes it possible to restrain an eddy current from being generated in the second shield member 40 by lines of magnetic force formed around the 2Bth intermediate linear portions 172. This means that it is possible to suppress an increase in loss (heat generation) of the coil unit 5 due to the presence of the aforementioned gap 50 and means that it is possible to suppress a decrease in performance of the coil unit 5 due to the presence of the aforementioned gap 50.

The gap 50 that crosses the 2Bth intermediate linear portions 172 and each of the 2Ath intermediate linear portions 172 may form an angle of, for example, 80 degrees to 100 degrees when seen in the axial direction. This makes it possible to effectively suppress an increase in loss (heat generation) of the coil unit 5 due to the presence of the aforementioned gap 50 and effectively suppress a decrease in performance of the coil unit 5 due to the presence of the aforementioned gap 50. Furthermore, as can be seen from Fig. 35, the aforementioned gap 50 may be orthogonal to the 2Bth intermediate linear portions 172 when seen in the axial direction. This makes it possible to further effectively suppress an increase in loss (heat generation) of the coil unit 5 due to the presence of the aforementioned gap 50 and further effectively suppress a decrease in performance of the coil unit 5 due to the presence of the aforementioned gap 50.

Furthermore, placing the shield small pieces 30P such that one of the aforementioned four gaps 50 crosses the 2Cth intermediate linear portions 173 restrains a line of magnetic force formed around each 2Cth intermediate linear portion 173 from reaching the second shield member 40 through the gap 50. This makes it possible to restrain an eddy current from being generated in the second shield member 40 by lines of magnetic force formed around the 2Cth intermediate linear portions 173. This means that it is possible to suppress an increase in loss (heat generation) of the coil unit 5 due to the presence of the aforementioned gap 50 and means that it is possible to suppress a decrease in performance of the coil unit 5 due to the presence of the aforementioned gap 50.

The gap 50 that crosses the 2Cth intermediate linear portions 173 and each of the 2Cth intermediate linear portions 173 may form an angle of, for example, 80 degrees to 100 degrees when seen in the axial direction. This makes it possible to effectively suppress an increase in loss (heat generation) of the coil unit 5 due to the presence of the aforementioned gap 50 and effectively suppress a decrease in performance of the coil unit 5 due to the presence of the aforementioned gap 50. Furthermore, as can be seen from Fig. 35, the aforementioned gap 50 may be orthogonal to the 2Cth intermediate linear portions 173 when seen in the axial direction. This makes it possible to further effectively suppress an increase in loss (heat generation) of the coil unit 5 due to the presence of the aforementioned gap 50 and further effectively suppress a decrease in performance of the coil unit 5 due to the presence of the aforementioned gap 50.

Furthermore, placing the shield small pieces 30P such that one of the aforementioned four gaps 50 crosses the 2Dth intermediate linear portions 174 restrains a line of magnetic force formed around each 2Dth intermediate linear portion 174 from reaching the second shield member 40 through the gap 50. This makes it possible to restrain an eddy current from being generated in the second shield member 40 by lines of magnetic force formed around the 2Dth intermediate linear portions 174. This means that it is possible to suppress an increase in loss (heat generation) of the coil unit 5 due to the presence of the aforementioned gap 50 and means that it is possible to suppress a decrease in performance of the coil unit 5 due to the presence of the aforementioned gap 50.

The gap 50 that crosses the 2Dth intermediate linear portions 174 and each of the 2Dth intermediate linear portions 174 may form an angle of, for example, 80 degrees to 100 degrees when seen in the axial direction. This makes it possible to effectively suppress an increase in loss (heat generation) of the coil unit 5 due to the presence of the aforementioned gap 50 and effectively suppress a decrease in performance of the coil unit 5 due to the presence of the aforementioned gap 50. Furthermore, as can be seen from Fig. 35, the aforementioned gap 50 may be orthogonal to the 2Dth intermediate linear portions 174 when seen in the axial direction. This makes it possible to further effectively suppress an increase in loss (heat generation) of the coil unit 5 due to the presence of the aforementioned gap 50 and further effectively suppress a decrease in performance of the coil unit 5 due to the presence of the aforementioned gap 50.

In the example shown in Fig. 35, eight of the aforementioned sixteen gaps 50 cross at least part of any of the first to fourth linear portion groups 11G to 14G when seen in the axial direction. In the illustrated example, the aforementioned eight gaps 50 cross any of the first to fourth linear portion groups 11G to 14G. In other words, when seen in the axial direction, the aforementioned eight gaps 50 extend from positions that are further inward in the radial direction than is any of the first to fourth linear portion groups 11G to 14G to positions that are further outward in the radial direction than is any of the first to fourth linear portion groups 11G to 14G.

The gap 50 that crosses the first linear portions 11 and each of the first linear portions 11 may form an angle of 80 degrees to 100 degrees when seen in the axial direction. More specifically, the aforementioned gap 50 is orthogonal to the first linear portions 11. Further, the gap 50 that crosses the second linear portions 12 and each of the second linear portions 12 may form an angle of 80 degrees to 100 degrees when seen in the axial direction. More specifically, the aforementioned gap 50 is orthogonal to the second linear portions 12. Further, the gap 50 that crosses the third linear portions 13 and each of the third linear portions 13 may form an angle of 80 degrees to 100 degrees when seen in the axial direction. More specifically, the aforementioned gap 50 is orthogonal to the third linear portions 13. Further, the gap 50 that crosses the fourth linear portions 14 and each of the fourth linear portions 14 may form an angle of 80 degrees to 100 degrees when seen in the axial direction. More specifically, the aforementioned gap 50 is orthogonal to the fourth linear portions 14.

Furthermore, in the example shown in Fig. 35, four of the aforementioned sixteen gaps 50 cross at least part of any of the 1Ath to 1Dth linear portion groups 161G to 164G when seen in the axial direction. In the illustrated example, the aforementioned four gaps 50 cross any of the 1Ath to 1Dth linear portion groups 161G to 164G. In other words, when seen in the axial direction, the aforementioned eight gaps 50 extend from positions that are further inward in the radial direction than is any of the 1Ath to 1Dth linear portion groups 161G to 164G to positions that are further outward in the radial direction than is any of the 1Ath to 1Dth linear portion groups 161G to 164G.

The gap 50 that crosses the 1Ath intermediate linear portions 161 and each of the 1Ath intermediate linear portions 161 may form an angle of 80 degrees to 100 degrees when seen in the axial direction. More specifically, the aforementioned gap 50 is orthogonal to the 1Ath intermediate linear portions 161. Further, the gap 50 that crosses the 1Bth intermediate linear portions 162 and each of the 1Bth intermediate linear portions 162 may form an angle of 80 degrees to 100 degrees when seen in the axial direction. More specifically, the aforementioned gap 50 is orthogonal to the 1Bth intermediate linear portions 162. Further, the gap 50 that crosses the 1Cth intermediate linear portions 163 and each of the 1Cth intermediate linear portions 163 may form an angle of 80 degrees to 100 degrees when seen in the axial direction. More specifically, the aforementioned gap 50 is orthogonal to the 1Cth intermediate linear portions 163. Further, the gap 50 that crosses the 1Dth intermediate linear portions 164 and each of the 1Dth intermediate linear portions 164 may form an angle of 80 degrees to 100 degrees when seen in the axial direction. More specifically, the aforementioned gap 50 is orthogonal to the 1Dth intermediate linear portions 164.

The layout (or form of division) shown in Fig. 35 is not the only layout of the plurality of shield small pieces 30P (or form of division of the first shield member 30) in which the gaps 50 that cross the second intermediate linear portion groups 171G to 174G and the second intermediate linear portions 171 to 174 form angles of 80 degrees to 100 degrees. In a case where the coil element 10i or each of the coil elements 10j and 10jj has a dodecagonal shape as a whole, too, various layouts (or various forms of division) can be adopted as such a layout of the plurality of shield small pieces 30P (or a form of division of the first shield member 30) that the gaps 50 that cross the second intermediate linear portion groups 171G to 174G and the second intermediate linear portions 171 to 174 form angles of 80 degrees to 100 degrees.

The following describes modifications described in Figs. 36 and 37. Although, in the example shown in Fig. 6A, in a case where the first connection terminal 46 is connected to the inward end 10e1 of the coil element 10i, the first connection terminal 46 extends through a gap 50 when seen in the axial direction, this is not intended to impose any limitation. As shown in each of Figs. 34 and 35, when seen in the axial direction, the first connection terminal 46 may extend through a notch N formed in a shield small piece 30P. In this case, too, as shown in Fig. 7, the first connection terminal 46 may extend from inside toward outside the coil 10 at such a height position as to overlap the shield small piece 30P in a side view of the coil unit 5.

In a case where the first connection terminal 46 extends through the notch N formed in the shield small piece 30P, a linear portion 11 that the first connection terminal 46 crosses when seen in the axial direction and the first connection terminal 46 may form an angle of, for example, 80 degrees to 100 degrees. Furthermore, as shown in each of Figs. 36 and 37, the first connection terminal 46 may be orthogonal to the aforementioned linear portion 11. This restrains a line of magnetic force formed around the aforementioned linear portion 11 from reaching the second shield member 40 through the aforementioned notch N.

The following describes modifications described in Figs. 38 and 39. In the example shown in Fig. 38, when seen in the axial direction, the length of an overlap between a shield small piece 31 that is closest to the inward end 10e1 of the coil element 10i of shield small pieces 30P that an inward end region including the inward end 10e1 (in each of the examples shown in Figs. 24 and 38, the first linear portion 11 of the first turn portion 101) overlaps and the inward end region is greater than it is in the example shown in Fig. 24. This makes it possible to effectively make a loss (heat generation) of the first shield member 30 (particularly, a loss of the aforementioned shield small piece 31) of Fig. 38 smaller than a loss (heat generation) of the first shield member 30 (particularly, a loss of the aforementioned shield small piece 31) of Fig. 24. The term "loss of the first shield member 30" here encompasses a loss (so-called "iron loss") that is caused by a magnetic flux of the first shield member 30.

In the example shown in Fig. 39, when seen in the axial direction, the length of an overlap between a shield small piece that is closest to the inward end 10e1 of the coil element 10i of shield small pieces 3130P that an inward end region including the inward end 10e1 (in each of the examples shown in Figs. 29 and 39, the first linear portion 11 of the first turn portion 101) overlaps and the inward end region is greater than it is in the example shown in Fig. 29. This makes it possible to effectively make a loss (heat generation) of the first shield member 30 (particularly, a loss of the aforementioned shield small piece 31) of Fig. 39 smaller than a loss (heat generation) of the first shield member 30 (particularly, a loss of the aforementioned shield small piece 31) of Fig. 29.

The following describes modifications described in Figs. 40 and 41. Although, in the example shown in Figs. 2 to 5B, when seen in the axial direction, the first connection terminal 46, which is connected to the inward end 10e1 of the coil element 10i, crosses one of the first to fourth linear portion groups 11G to 14G and extends outward in the radial direction of the coil 10, this is not intended to impose any limitation. As shown in Fig. 40, when seen in the axial direction, the first connection terminal 46 may cross one of the 1Ath to 1Dth intermediate curved portion groups 151G to 154G and extend outward in the radial direction of the coil 10. This makes it easier to bring the first connection terminal 46 close to the second connection terminal 47. In other words, the distance between the first point IP1 and the second point IP2 can be easily made shorter than or equal to 100 mm or shorter than or equal to 50 mm. For this reason, the angle θ between the first imaginary line IL1 and the second imaginary line IL2 can be easily made less than or equal to 90 degrees, less than or equal to 60 degrees, less than or equal to 45 degrees, or less than or equal to 30 degrees.

In the example shown in Fig. 40, the first connection terminal 46 and the tangent line TL4 to the first intermediate curved portion group 154G that the first connection terminal 46 crosses may form an angle of, for example, 80 degrees to 100 degrees when seen in the axial direction. Furthermore, as can be seen from Fig. 40, the first connection terminal 46 may be orthogonal to the tangent line TL4 to the first intermediate curved portion group 154G when seen in the axial direction. This restrains a line of magnetic force formed around each of the turn portions 101 to 108 of the coil 10 from reaching the second shield member 40 through the gap 50 or the notch N through which the first connection terminal 46 passes.

Alternatively, as shown in Fig. 41, when seen in the axial direction, the first connection terminal 46 may cross one of the 1Ath to 1Dth intermediate linear portion groups 161G to 164G or 171G to 174G and extend outward in the radial direction of the coil 10. This makes it easier to bring the first connection terminal 46 close to the second connection terminal 47. In other words, the distance between the first point IP1 and the second point IP2 can be easily made shorter than or equal to 100 mm or shorter than or equal to 50 mm. For this reason, the angle θ between the first imaginary line IL1 and the second imaginary line IL2 can be easily made less than or equal to 90 degrees, less than or equal to 60 degrees, less than or equal to 45 degrees, or less than or equal to 30 degrees.

In the example shown in Fig. 41, the first connection terminal 46 and the first intermediate linear portion group 164G that the first connection terminal 46 crosses may form an angle of, for example, 80 degrees to 100 degrees when seen in the axial direction. Furthermore, as can be seen from Fig. 41, the first connection terminal 46 may be orthogonal to the tangent line TL4 to the first intermediate linear portion group 164G when seen in the axial direction. This restrains a line of magnetic force formed around each of the turn portions 101 to 108 of the coil 10 from reaching the second shield member 40 through the gap 50 or the notch N through which the first connection terminal 46 passes.

The following describes a modification shown in Fig. 42. In the example shown in Figs. 2 to 5B, the turn portions 101 to 108 are placed at equal pitches. Accordingly, the distance between the inward end 10e1 of the coil element 10i and the first linear portion 11 of the second turn portion 102 is equal to the distance between the first linear portion 11 of the second portion 102 and the first linear portion 11 of the third turn portion 103. On the other hand, in the example shown in Fig. 42, the distance between the inward end 10e1 of the coil element 10i and the first linear portion 11 of the second turn portion 102 is longer than the distance between the first linear portion 11 of the second portion 102 and the first linear portion 11 of the third turn portion 103. More specifically, the distance between an inward end region of the coil element 10i including the inward end 10e1 (in the example shown in Fig. 42, the first linear portion 11 of the first turn portion 101) and the first linear portion 11 of the second turn portion 102 is longer than the distance between the first linear portion 11 of the second turn portion 102 and the first linear portion 11 of the third turn portion 103. In an example in which the first connection terminal 46 is connected to the inward end 10e1 of the coil element 10i, the separation of the inward end 10e1 from the second turn portion 102 makes it possible to reduce a loss (heat generation) (i.e. a loss including a so-called iron loss) of the first shield member 30. In particular, a loss (heat generation) of a shield small piece 30P (in the example shown in Fig. 42, the shield small piece 31) that overlaps the inward end region of the coil element 10i (in the example shown in Fig. 42, the first linear portion 11 of the first turn portion 101) when seen in the axial direction can be effectively reduced.

### <<Second Embodiment>>

The following describes a second embodiment and a modification thereof with reference to Fig. 43. The coil unit 5 shown in Fig. 43 differs from the coil unit 5 shown in Fig. 26 in that the first shield member 30 is not divided into a plurality of shield small pieces 30P. Other components are substantially identical to those of the coil unit 5 shown in Fig. 26. Components of the second embodiment shown in Fig. 43 that are similar to those of the coil unit 5 shown in Fig. 26 are given identical reference signs, and a detailed description of such components is omitted.

In the example shown in Fig. 43, as in the case of the example shown in Fig. 26, the coil element 10i has an octagonal shape as a whole. More specifically, the coil element 10i includes eight linear portion groups (namely linear portion groups 11G to 14G and intermediate linear portion groups 161G to 164G) extending along the eight sides of an octagon. This can bring about further improvement in performance of the coil unit 5 than in a case where the coil element 10i is shaped as shown in Figs. 2 to 5B. That is, the performance of a coil unit 5 including a coil element 10i having an octagonal shape as a whole is higher than the performance of a coil unit 5 including a coil element 10i having a quadrangular shape as a whole and including first intermediate curved portion groups 151G to 154G.

In the example shown in Fig. 43, adjacent linear portion groups 11G and 161G, adjacent linear portion groups 161G and 12G, adjacent linear portion groups 12G and 162G, adjacent linear portion groups 162G and 13G, adjacent linear portion groups 13G and 163G, adjacent linear portion groups 163G and 14G, adjacent linear portion groups 14G and 164G, and adjacent linear portion groups 164G and 11G may form angles of 125 degrees to 145 degrees. In the example shown in Fig. 43, the adjacent linear portion groups 11G and 161G, the adjacent linear portion groups 161G and 12G, the adjacent linear portion groups 12G and 162G, the adjacent linear portion groups 162G and 13G, the adjacent linear portion groups 13G and 163G, the adjacent linear portion groups 163G and 14G, the adjacent linear portion groups 14G and 164G, and the adjacent linear portion groups 164G and 11G may form angles of 135 degrees. Further, in the example shown in Fig. 43, the coil element 10i may have a regular octagonal shape as a whole. According to the inventor's findings, the performance of the coil unit 5 can be effectively improved by the coil 10 having a regular octagonal shape.

In the example shown in Fig. 43, the first shield member 30 is not divided into a plurality of shield small pieces 30P. Accordingly, the first shied member 30 has no gaps 50 formed therein. As a matter of course, in a case where the coil element 10i has an octagonal shape as a whole, the first shield member 30 may be divided into a plurality of shield small pieces 30P as shown in each of Figs. 26 to 29. Even in a case where the first shield member 30 is divided into a plurality of shield small pieces 30P, the performance of a coil unit 5 including a coil element 10i having an octagonal shape as a whole is higher than the performance of a coil unit 5 including a coil element 10i shaped as shown in Figs. 2 to 5B, as long as conditions other than the shape of the coil element 10i are the same. For example, the performance of the coil unit 5 shown in Fig. 28 is higher than the performance of the coil unit 5 shown in Fig. 22. Further, the performance of the coil unit 5 shown in Fig. 29 is higher than the performance of the coil unit 5 shown in Fig. 24.

### <<Modifications>>

It should be noted that various changes can be made to the aforementioned second embodiment. The following describes modifications of the second embodiment with reference to Figs. 44 and 45.

In the example shown in Fig. 44, as in the case of each the examples shown in Figs. 30 to 33, each of the coil elements 10j and 10jj has an octagonal shape as a whole. More specifically, each of the coil elements 10j and 10jj includes seven linear portion groups (namely linear portion groups 11G to 13G and intermediate linear portion groups 161G to 164G) extending along seven of the eight sides of an octagon. This can bring about further improvement in performance of the coil unit 5 than in a case where the coil elements 10j and 10jj are shaped as shown in Figs. 17 to 21. That is, the performance of a coil unit 5 including coil elements 10j and 10jj each having an octagonal shape as a whole is higher than the performance of a coil unit 5 including coil elements 10j and 10jj each having a quadrangular shape as a whole and including first intermediate curved portions 151G to 154G.

In the example shown in Fig. 44, adjacent linear portion groups 11G and 161G, adjacent linear portion groups 161G and 12G, adjacent linear portion groups 12G and 162G, adjacent linear portion groups 162G and 13G, adjacent linear portion groups 13G and 163G, and adjacent linear portion groups 164G and 11G may form angles of 125 degrees to 145 degrees. In the example shown in Fig. 44, the adjacent linear portion groups 11G and 161G, the adjacent linear portion groups 161G and 12G, the adjacent linear portion groups 12G and 162G, the adjacent linear portion groups 162G and 13G, the adjacent linear portion groups 13G and 163G, and the adjacent linear portion groups 164G and 11G may form angles of 135 degrees. Further, in the example shown in Fig. 44, each of the coil elements 10j and 10jj may have a regular octagonal shape as a whole. More specifically, each of the coil elements 10j and 10jj may include seven linear portion groups (namely linear portion groups 11G to 13G and first intermediate linear portion groups 161G to 164G) extending along seven of the eight sides of a regular octagon. According to the inventor's findings, the performance of the coil unit 5 can be effectively improved by the coil 10 having a regular octagonal shape.

In the example shown in Fig. 44, the first shield member 30 is not divided into a plurality of shield small pieces 30P. Accordingly, the first shied member 30 has no gaps 50 formed therein. As a matter of course, in a case where each of the coil elements 10j and 10jj has an octagonal shape as a whole, the first shield member 30 may be divided into a plurality of shield small pieces 30P as shown in each of Figs. 30 to 33. Even in a case where the first shield member 30 is divided into a plurality of shield small pieces 30P, the performance of a coil unit 5 including coil elements 10j and 10jj each having an octagonal shape as a whole is higher than the performance of a coil unit 5 including coil elements 10j and 10jj shaped as shown in Figs. 17 to 19, as long as conditions other than the shape of each of the coil elements 10j and 10jj are the same. For example, the performance of the coil unit 5 shown in Fig. 31 is higher than the performance of the coil unit 5 shown in Fig. 21.

In the example shown in Fig. 45, as in the case of each of the examples shown in Figs. 34 and 35, the coil element 10i has a dodecagonal shape as a whole. More specifically, the coil element 10i includes eleven linear portion groups (namely linear portion groups 11G to 13G, first intermediate linear portion groups 161G to 164G, and second intermediate linear portion groups 171G to 174G) extending along eleven of the twelve sides of a dodecagon. In the example shown in Fig. 45, the coil element 10i includes linear portion groups (namely linear portion groups 11G to 14G, first intermediate linear portion groups 161G to 164G, and second intermediate linear portion groups 171G to 174G) extending along the twelve sides of a dodecagon. This can bring about further improvement in performance of the coil unit 5 than in a case where the coil element 10i is shaped as shown in Figs. 2 to 5B. That is, the performance of a coil unit 5 including a coil element 10i having a dodecagonal shape as a whole is higher than the performance of a coil unit 5 including a coil element 10i having a quadrangular shape as a whole and including first intermediate curved portions 151G to 154G.

In the example shown in Fig. 45, adjacent linear portion groups 11G and 161G, adjacent linear portion groups 161G and 171G, adjacent linear portion groups 171G and 12G, adjacent linear portion groups 12G and 162G, adjacent linear portion groups 162G and 172G, adjacent linear portion groups 172G and 13G, adjacent linear portion groups 13G and 163G, adjacent linear portion groups 163G and 173G, adjacent linear portion groups 164G and 174G, and adjacent linear portion groups 174G and 11G may form angles of 125 degrees to 145 degrees. In the example shown in Fig. 45, adjacent linear portion groups 173G and 14G and adjacent linear portion groups 14G and 164G may form angles of 125 degrees to 145 degrees. In the example shown in Fig. 45, the adjacent linear portion groups 11G and 161G, the adjacent linear portion groups 161G and 171G, the adjacent linear portion groups 171G and 12G, the adjacent linear portion groups 12G and 162G, the adjacent linear portion groups 162G and 172G, the adjacent linear portion groups 172G and 13G, the adjacent linear portion groups 13G and 163G, the adjacent linear portion groups 163G and 173G, the adjacent linear portion groups 164G and 174G, and the adjacent linear portion groups 174G and 11G may form angles of 135 degrees. In the example shown in Fig. 45, the adjacent linear portion groups 173G and 14G and the adjacent linear portion groups 14G and 164G may form angles of 135 degrees. Further, in the example shown in Fig. 45, the coil element 10i may have a regular dodecagonal shape as a whole. More specifically, the coil element 10i may include eleven linear portion groups (namely linear portion groups 11G to 13G, first intermediate linear portion groups 161G to 164G, and second intermediate linear portion groups 171G to 174G) extending along eleven of the twelve sides of a dodecagon. According to the inventor's findings, the performance of the coil unit 5 can be effectively improved by the coil 10 having a regular dodecagonal shape.

In the example shown in Fig. 45, the first shield member 30 is not divided into a plurality of shield small pieces 30P. Accordingly, the first shied member 30 has no gaps 50 formed therein. As a matter of course, in a case where the coil element 10i has a dodecagonal shape as a whole, the first shield member 30 may be divided into a plurality of shield small pieces 30P as shown in each of Figs. 34 and 35. Even in a case where the first shield member 30 is divided into a plurality of shield small pieces 30P, the performance of a coil unit 5 including a coil element 10i having a dodecagonal shape as a whole is higher than the performance of a coil unit 5 including a coil element 10i shaped as shown in Figs. 2 to 5B, as long as conditions other than the shape of the coil element 10i are the same.

Further, in the example shown in Fig. 45, the coil element 10i includes twelve linear portion groups (namely linear portion groups 11G to 14G, first intermediate linear portion groups 161G to 164G, and second intermediate linear portion groups 171G to 174G) extending along the twelve sides of a dodecagon. However, in a case where a coil 10 includes coil elements 10j and 10jj as shown in Fig. 30 or other drawings and where each of the coil elements 10j and 10jj has a dodecagonal shape as a whole, each of the coil elements 10j and 10jj needs only include eleven linear portion groups 11 to 13, 161 to 164, and 171 to 174 extending along eleven of the twelve sides of a dodecagon. Similarly, in a case where a coil 10 includes coil elements 10j and 10jj and where each of the coil elements 10j and 10jj has a regular dodecagonal shape as a whole, each of the coil elements 10j and 10jj needs only include eleven linear portion groups 11 to 13, 161 to 164, and 171 to 174 extending along eleven of the twelve sides of a regular dodecagon.

### <<Example 1>>

The following explains differences in loss of coil units 5 due to differences in position of gaps 50 formed in the first shield members 30.

### <Example 1-1>

As a coil unit 5 of Example 1-1, a coil unit 5 including a coil 10 formed into a spiral shape, a magnetic resin layer 20, a first shield member 30, and a second shield member 40 as shown in Figs. 2 to 5B was prepared.

The coil 10 was formed in a manner similar to the coil 10 shown in Figs. 2 to 5B. The coil 10 was formed of copper and had a line width of 6 mm and a thickness of 0.5 mm. Further, the distance between adjacent turn portions 101 and 102, ..., and 107 and 108 was 6 mm. The dimensions of the coil 10 along the first direction D1 and the second direction D2 were 295 mm and 295 mm, respectively.

The magnetic resin layer 20 was formed by curing two-component curable epoxy resin with magnetic powder mixed thereinto. The coil 10 was accommodated in the depressed portion 25 of the magnetic resin layer 20 as shown in Fig. 4, and the second principal surface 10b of the coil 10 was in close contact with the magnetic resin layer 20.

The first shield member 30 formed was divided into four shield small pieces 31 to 34. Each of the shield small pieces 31 to 34 was a ferrite plate. The dimensions of the first shield member 30 in the first direction D1 and the second direction D2 were 300 mm and 300 mm, respectively. Further, the distance between the magnetic resin layer 20 and the first shield member 30 was 1 mm.

Each of the gaps 50 between adjacent shield small pieces 31 and 32, between adjacent shield small pieces 32 and 33, between adjacent shield small pieces 33 and 34, and between adjacent shield small pieces 34 and 31 had a width of 5 mm. One (namely the first gap 51) of the four gaps 50 formed between the adjacent shield small pieces 31 and 32, between the adjacent shield small pieces 32 and 33, between the adjacent shield small pieces 33 and 34, and between the adjacent shield small pieces 34 and 31 crossed the first linear portions 11 of the second to eighth turn portions 102 to 108 when seen in the axial direction. This gap 50 was orthogonal to the first linear portions 11 of the second to eighth turn portions 102 to 108 when seen in the axial direction. The other three (namely the second to fourth gaps 52 to 54) crossed the second to fourth linear portions 12 to 14, respectively, of the first to eighth turn portions 101 to 108 when seen in the axial direction. These three gaps 50 were orthogonal to the second to fourth linear portions 12 to 14, respectively, of the first to eighth turn portions 101 to 108 when seen in the axial direction. The four gaps 50 (namely the first to fourth gaps 51 to 54) were formed such that extensions thereof passed through the central axis line C.

The second shield member 40 was formed of aluminum. The dimensions of the second shield member 40 in the first direction D1 and the second direction D2 were 320 mm and 320 mm, respectively. Further, the distance between the first shield member 30 and the second shield member 40 was 1 mm

### (Evaluation)

Next, the Q value and loss of the coil unit 5 of Example 1-1 thus fabricated were measured by passing a high-frequency current of 85 kHz through the coil 10 of the coil unit 5.

The Q value and loss of the coil unit 5 of Example 1-1 were 121.0 and 87.7 W, respectively.

### <Example 1-2>

A coil unit 5 of Example 1-2 was fabricated in the same manner as in the case of Example 1-1 except that the first shield member 30 formed was divided into six shield small pieces 31 to 36 as shown in Fig. 9.

Each of the shield small pieces 31 to 36 was a ferrite plate.

Each of the gaps 50 between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 31, and between adjacent shield small pieces 32 and 35 had a width of 5 mm.

Two of the seven gaps 50 formed between the adjacent shield small pieces 31 and 32, between the adjacent shield small pieces 32 and 33, between the adjacent shield small pieces 33 and 34, between the adjacent shield small pieces 34 and 35, between the adjacent shield small pieces 35 and 36, between the adjacent shield small pieces 36 and 31, and between the adjacent shield small pieces 32 and 35 crossed the first linear portions 11 of the second to eighth turn portions 102 to 108 or the third linear portions 13 of the first to eighth turn portions 101 to 108 when seen in the axial direction. These two gaps 50 were orthogonal to the first linear portions 11 of the second to eighth turn portions 102 to 108 or the third linear portions 13 of the first to eighth turn portions 101 to 108 when seen in the axial direction. Further, these two gaps 50 were formed such that extensions thereof passed through the central axis line C.

Further, one of the aforementioned seven gaps 50 extended along the second direction D2 through a region surrounded by the first turn portion 101. This gap 50 overlapped the central axis line C when seen in the axial direction.

Further, the remaining four gaps 50 crossed the second or fourth linear portions 12 or 14 of the first to eighth turn portions 101 to 108 when seen in the axial direction. These four gaps 50 were orthogonal to the second or fourth linear portions 12 or 14 of the first to eighth turn portions 101 to 108 when seen in the axial direction. Further, two of these four gaps 50 extended through a space between the first linear portion group 11G and the central axis line C when seen in the axial direction. The other two of these four gaps 50 extended through a space between the third linear portion group 13G and the central axis line C when seen in the axial direction.

### (Evaluation)

Next, the Q value and loss of the coil unit 5 of Example 1-2 thus fabricated were measured by passing a high-frequency current of 85 kHz through the coil 10 of the coil unit 5.

The Q value and loss of the coil unit 5 of Example 1-2 were 115.0 and 91.3 W, respectively.

### <Example 1-3>

A coil unit 5 of Example 1-3 was fabricated in the same manner as in the case of Example 1-1 except that the first shield member 30 formed was divided into six shield small pieces 31 to 36 as shown in Fig. 12.

Each of the shield small pieces 31 to 36 was a ferrite plate.

Each of the gaps 50 between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 31, and between adjacent shield small pieces 32 and 35 had a width of 5 mm.

Two of the seven gaps 50 formed between the adjacent shield small pieces 31 and 32, between the adjacent shield small pieces 32 and 33, between the adjacent shield small pieces 33 and 34, between the adjacent shield small pieces 34 and 35, between the adjacent shield small pieces 35 and 36, between the adjacent shield small pieces 36 and 31, and between the adjacent shield small pieces 32 and 35 crossed the first linear portions 11 of the second to eighth turn portions 102 to 108 or the third linear portions 13 of the first to eighth turn portions 101 to 108 when seen in the axial direction. These two gaps 50 were orthogonal to the first linear portions 11 of the second to eighth turn portions 102 to 108 or the third linear portions 13 of the first to eighth turn portions 101 to 108 when seen in the axial direction. Further, these two gaps 50 were formed such that extensions thereof passed through the central axis line C.

Further, one of the aforementioned seven gaps 50 extended along the second direction D2 through a region surrounded by the first turn portion 101. This gap 50 overlapped the central axis line C when seen in the axial direction.

Further, three of the remaining four gaps 50 extended along the second direction D2 and overlapped the first or third linear portion 11 or 13 of the first turn portion 101 when seen in the axial direction. Further, the other one of these four gaps 50 extended as an extension of the first linear portion 11 when seen in the axial direction.

### (Evaluation)

Next, the Q value and loss of the coil unit 5 of Example 1-3 thus fabricated were measured by passing a high-frequency current of 85 kHz through the coil 10 of the coil unit 5.

The Q value and loss of the coil unit 5 of Example 1-3 were 102.0 and 99.5 W, respectively.

### <Example 1-4>

A coil unit 5 of Example 1-4 was fabricated in the same manner as in the case of Example 1-1 except that the first shield member 30 formed was divided into six shield small pieces 31 to 36 as shown in Fig. 13.

Each of the shield small pieces 31 to 36 was a ferrite plate.

Each of the gaps 50 between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 31, and between adjacent shield small pieces 32 and 35 had a width of 5 mm.

Three of the seven gaps 50 formed between the adjacent shield small pieces 31 and 32, between the adjacent shield small pieces 32 and 33, between the adjacent shield small pieces 33 and 34, between the adjacent shield small pieces 34 and 35, between the adjacent shield small pieces 35 and 36, between the adjacent shield small pieces 36 and 31, and between the adjacent shield small pieces 32 and 35 crossed one or more of the first linear portions 11 of the second to eighth turn portions 102 to 108 and/or one or more of the third linear portions 13 of the first to eighth turn portions 101 to 108 when seen in the axial direction. These three gaps 50 were orthogonal to one or more of the first linear portions 11 of the second to eighth turn portions 102 to 108 and/or one or more of the third linear portions 13 of the first to eighth turn portions 101 to 108 when seen in the axial direction. Further, one of these three gaps 50 overlapped the central axis line C when seen in the axial direction. Further, the other two of these three gaps 50 were formed such that extensions thereof passed through the central axis line C.

Further, two of the remaining four gaps 50 extended through the first linear portion group 11G along the first linear portions 11 when seen in the axial direction. More specifically, these gaps 50 extended through a space between the first linear portions 11 of the second and third turn portions 102 and 103. Further, the other two of these four gaps 50 extended through the third linear portion group 13G along the third linear portions 13 when seen in the axial direction. More specifically, these gaps 50 extended through a space between the third linear portions 13G of the second and third turn portions 102 and 103.

### (Evaluation)

Next, the Q value and loss of the coil unit 5 of Example 1-4 thus fabricated were measured by passing a high-frequency current of 85 kHz through the coil 10 of the coil unit 5.

The Q value and loss of the coil unit 5 of Example 1-4 were 94.5 and 104.0 W, respectively.

### <Example 1-5>

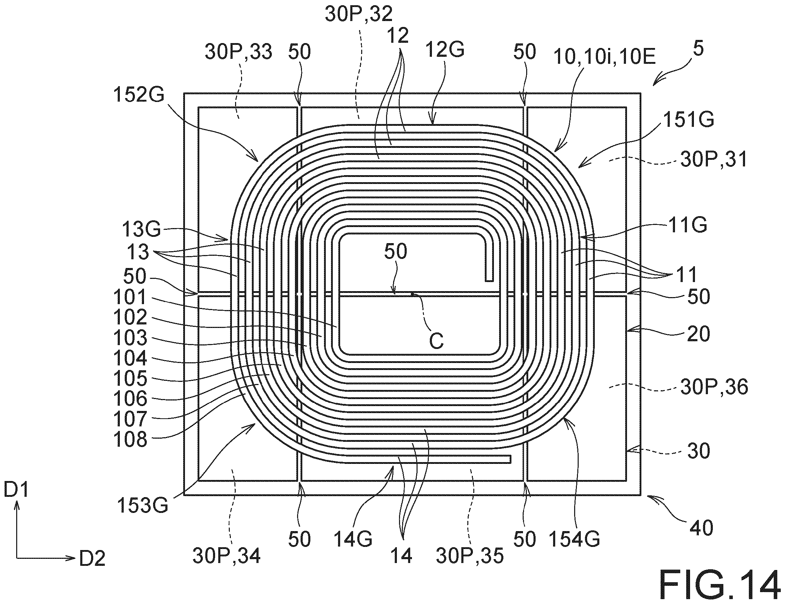

A coil unit 5 of Example 1-5 was fabricated in the same manner as in the case of Example 1-1 except that the first shield member 30 formed was divided into six shield small pieces 31 to 36 as shown in Fig. 14.

Each of the shield small pieces 31 to 36 was a ferrite plate.

Each of the gaps 50 between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 31, and between adjacent shield small pieces 32 and 35 had a width of 5 mm.

Three of the seven gaps 50 formed between the adjacent shield small pieces 31 and 32, between the adjacent shield small pieces 32 and 33, between the adjacent shield small pieces 33 and 34, between the adjacent shield small pieces 34 and 35, between the adjacent shield small pieces 35 and 36, between the adjacent shield small pieces 36 and 31, and between the adjacent shield small pieces 32 and 35 crossed one or more of the first linear portions 11 of the second to eighth turn portions 102 to 108 and/or one or more of the third linear portions 13 of the first to eighth turn portions 101 to 108 when seen in the axial direction. These three gaps 50 were orthogonal to one or more of the first linear portions 11 of the second to eighth turn portions 102 to 108 and/or one or more of the third linear portions 13 of the first to eighth turn portions 101 to 108 when seen in the axial direction. Further, one of these three gaps 50 overlapped the central axis line C when seen in the axial direction. Further, the other two of these three gaps 50 were formed such that extensions thereof passed through the central axis line C.

Further, two of the remaining four gaps 50 extended through the first linear portion group 11G along the first linear portions 11 when seen in the axial direction. More specifically, these gaps 50 extended through a space between the first linear portions 11 of the third and fourth turn portions 103 and 104. Further, the other two of these four gaps 50 extended through the third linear portion group 13G along the third linear portions 13 when seen in the axial direction. More specifically, these gaps 50 extended through a space between the third linear portions 13 of the third and fourth turn portions 103 and 104.

### (Evaluation)

Next, the Q value and loss of the coil unit 5 of Example 1-5 thus fabricated were measured by passing a high-frequency current of 85 kHz through the coil 10 of the coil unit 5.

The Q value and loss of the coil unit 5 of Example 1-5 were 89.7 and 103.0 W, respectively.

### <Example 1-6>

A coil unit 5 of Example 1-6 was fabricated in the same manner as in the case of Example 1-1 except that the first shield member 30 formed was divided into six shield small pieces 31 to 36 as shown in Fig. 15.

Each of the shield small pieces 31 to 36 was a ferrite plate.

Each of the gaps 50 between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 31, and between adjacent shield small pieces 32 and 35 had a width of 5 mm.

Three of the seven gaps 50 formed between the adjacent shield small pieces 31 and 32, between the adjacent shield small pieces 32 and 33, between the adjacent shield small pieces 33 and 34, between the adjacent shield small pieces 34 and 35, between the adjacent shield small pieces 35 and 36, between the adjacent shield small pieces 36 and 31, and between the adjacent shield small pieces 32 and 35 crossed one or more of the first linear portions 11 of the second to eighth turn portions 102 to 108 and/or one or more of the third linear portions 13 of the first to eighth turn portions 101 to 108 when seen in the axial direction. These three gaps 50 were orthogonal to one or more of the first linear portions 11 of the second to eighth turn portions 102 to 108 and/or one or more of the third linear portions 13 of the first to eighth turn portions 101 to 108 when seen in the axial direction. Further, one of these three gaps 50 overlapped the central axis line C when seen in the axial direction. Further, the other two of these three gaps 50 were formed such that extensions thereof passed through the central axis line C.

Further, two of the remaining four gaps 50 extended through the first linear portion group 11G along the first linear portions 11 when seen in the axial direction. More specifically, these gaps 50 extended through a space between the first linear portions 11 of the sixth and seventh turn portions 106 and 107. Further, the other two of these four gaps 50 extended through the third linear portion group 13G along the third linear portions 13 when seen in the axial direction. More specifically, these gaps 50 extended through a space between the third linear portions 13 of the sixth and seventh turn portions 106 and 107.

### (Evaluation)

Next, the Q value and loss of the coil unit 5 of Example 1-6 thus fabricated were measured by passing a high-frequency current of 85 kHz through the coil 10 of the coil unit 5.

The Q value and loss of the coil unit 5 of Example 1-6 were 95.4 and 100.0 W, respectively.

### <Example 1-7>

A coil unit 5 of Example 1-7 was fabricated in the same manner as in the case of Example 1-1 except that the first shield member 30 formed was divided into six shield small pieces 31 to 36 as shown in Fig. 16.

Each of the shield small pieces 31 to 36 was a ferrite plate.

Each of the gaps 50 between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 31, and between adjacent shield small pieces 32 and 35 had a width of 5 mm.

Three of the seven gaps 50 formed between the adjacent shield small pieces 31 and 32, between the adjacent shield small pieces 32 and 33, between the adjacent shield small pieces 33 and 34, between the adjacent shield small pieces 34 and 35, between the adjacent shield small pieces 35 and 36, between the adjacent shield small pieces 36 and 31, and between the adjacent shield small pieces 32 and 35 crossed one or more of the first linear portions 11 of the second to eighth turn portions 102 to 108 and/or one or more of the third linear portions 13 of the first to eighth turn portions 101 to 108 when seen in the axial direction. These three gaps 50 were orthogonal to one or more of the first linear portions 11 of the second to eighth turn portions 102 to 108 and/or one or more of the third linear portions 13 of the first to eighth turn portions 101 to 108 when seen in the axial direction. Further, one of these three gaps 50 overlapped the central axis line C when seen in the axial direction. Further, the other two of these three gaps 50 were formed such that extensions thereof passed through the central axis line C.

Further, two of the remaining four gaps 50 extended through the first linear portion group 11G along the first linear portions 11 when seen in the axial direction. More specifically, these gaps 50 overlapped the first linear portion 11 of the eighth turn portion 108. Further, the other two of these four gaps 50 extended through the third linear portion group 13G along the third linear portions 13 when seen in the axial direction. More specifically, these gaps 50 overlapped the third linear portion 13 of the eighth turn portion 108.

### (Evaluation)

Next, the Q value and loss of the coil unit 5 of Example 1-7 thus fabricated were measured by passing a high-frequency current of 85 kHz through the coil 10 of the coil unit 5.

The Q value and loss of the coil unit 5 of Example 1-7 were 120.5 and 88.0 W, respectively.

Fig. 46 shows the Q values and losses of the coil units 5 of Examples 1-1 to 1-7.

As can be seen from Fig. 46, there were no big differences in Q value and loss between the coil units 5 of Examples 1-1 and 1-2, although the number of gaps 50 of the first shield member 30 in the coil unit 5 of Example 1-2 is larger than the number of gaps 50 of the first shield member 30 in the coil unit 5 of Example 1-1. It can be seen from this result that in a case where a gap 50 of a first shield member 30 is provided so as to cross a linear portion group of the coil element 10i, the presence of this gap 50 neither causes a great loss in performance of the coil 10 nor causes a great increase in loss of the coil unit 5.

Further, it can be seen from the results of Examples 1-1 to 1-7 that the Q values of coil units (namely the coil units 5 of Examples 1-1 and 1-2) in each of which all of the gaps 50 of the first shield member 30 are formed so as to cross any of the linear portion groups 11G to 14G when seen in the axial direction tend to be higher than the Q values of coil units (namely the coil units 5 of Examples 1-3 to 1-7) in each of which one or more of the gaps 50 of the first shield member 30 are formed so as to extend through any of the linear portion groups 11G to 14G in parallel with the linear portions 11, 12, 13, or 14 of that linear portion group 11G, 12G, 13G, or 14G.

It can be seen from the results of Examples 1-3 to 1-7 that in a case where a gap 50 formed in a first shield member 30 extends any of the linear portion groups 11G to 14G along the linear portions 11, 12, 13, or 14 of that linear portion group 11G, 12G, 13G, or 14G, the Q value of the coil unit 5 becomes lower as the gap 50 becomes closer to the center in the radial direction of that linear portion group 11G, 12G, 13G, or 14G.

Further, it can be seen from the results of Examples 1-2 to 1-7 that the Q value of a coil unit (namely the coil unit 5 of Example 1-2) in which a gap 50 of the first shield member 30 is formed to extend through a space between the first turn portion 101, which forms the innermost peripheral portion of the coil 10, and the central axis line C tends to be higher than the Q values of coil units (namely the coil units 5 of Examples 1-3 to 1-7) in which a gap 50 of the first shield member 30 extends over an area that is further outward than is the first turn portion 101, which forms the innermost peripheral portion of the coil 10.

Further, it can be seen from the results of Examples 1-1 to 1-7 that t the Q value of a coil unit (namely the coil unit 5 of Example 1-1) in which a gap 50 of the first shield member 30 is formed such that an extension of the gap 50 overlaps the central axis line C tends to be higher than the Q values of coil units (namely the coil units 5 of Examples 1-2 to 1-7) in which a gap 50 of the first shield member 30 is formed such that an extension of the gap 50 deviates from the central axis line C.

### <<Example 2>>

The following explains difference in loss of the coil units 5 due to differences in distance between the second principal surfaces 10b of the coils 10 and the magnetic resin layers 20.

### <Example 2-1>

As a coil unit 5 of Example 2-1, a coil unit 5 including a coil 10 including coil elements 10j and 10jj each formed into a spiral shape, a magnetic resin layer 20, a first shield member 30, and a second shield member 40 as shown in Figs. 17 to 19 was prepared.

The coil 10 was formed in a manner similar to the coil 10 shown in Figs. 17 to 19. The coil elements 10j and 10jj were formed of copper and had a line width of 6 mm and a thickness of 0.5 mm. Further, in each of the coil elements 10j and 10jj, the distance between adjacent turn portions 101 and 102, ..., and 104 and 105 was 6 mm. The dimensions of the coil 10 along the first direction D1 and the second direction D2 were 295 mm and 295 mm, respectively.

The magnetic resin layer 20 was formed by curing two-component curable epoxy resin with magnetic powder mixed thereinto. The coil 10 was embedded in the magnetic resin layer 20 as shown in Fig. 18, and the second principal surface 10b of the coil 10 was in close contact with the magnetic resin layer 20.

The first shield member 30 formed was divided into nine shield small pieces 31 to 39. Each of the shield small pieces 31 to 39 was a ferrite plate. The dimensions of the first shield member 30 in the first direction D1 and the second direction D2 were 300 mm and 300 mm, respectively.

Further, the distance between the magnetic resin layer 20 and the first shield member 30 was 0 mm. That is, the magnetic resin layer 20 and the first shield member 30 were in close contact with each other.

Each of the gaps 50 between adjacent shield small pieces 31 and 32, between adjacent shield small pieces 32 and 33, between adjacent shield small pieces 33 and 34, between adjacent shield small pieces 34 and 35, between adjacent shield small pieces 35 and 36, between adjacent shield small pieces 36 and 37, between adjacent shield small pieces 37 and 38, between adjacent shield small pieces 38 and 31, between adjacent shield small pieces 32 and 39, between adjacent shield small pieces 34 and 39, between adjacent shield small pieces 36 and 39, and between adjacent shield small pieces 38 and 39 had a width of 5 mm. Two of the twelve gaps 50 formed between the adjacent shield small pieces 31 and 32, between the adjacent shield small pieces 32 and 33, between the adjacent shield small pieces 33 and 34, between the adjacent shield small pieces 34 and 35, between the adjacent shield small pieces 35 and 36, between the adjacent shield small pieces 36 and 37, between the adjacent shield small pieces 37 and 38, between the adjacent shield small pieces 38 and 31, between the adjacent shield small pieces 32 and 39, between the adjacent shield small pieces 34 and 39, between the adjacent shield small pieces 36 and 39, and between the adjacent shield small pieces 38 and 39 crossed the first linear portions 11 of the first to fifth turn portions 101 to 105 when seen in the axial direction. These two gaps were orthogonal to the first linear portions 11 of the first to fifth turn portions 101 to 105 when seen in the axial direction. Further, two of the aforementioned twelve gaps 50 crossed the second linear portions 12 of the first to fifth turn portions 101 to 105 when seen in the axial direction. These two gaps 50 were orthogonal to the second linear portions 12 of the first to fifth turn portions 101 to 105 when seen in the axial direction. Further, two of the aforementioned twelve gaps 50 crossed the third linear portions 13 of the first to fifth turn portions 101 to 105 when seen in the axial direction. These two gaps 50 were orthogonal to the third linear portions 13 of the first to fifth turn portions 101 to 105 when seen in the axial direction. Further, two of the aforementioned twelve gaps 50 crossed the turn connected portions 16 of the first to fourth turn portions 101 to 104 when seen in the axial direction. Further, four of the aforementioned twelve gaps 50 extended in the first direction D1 or the second direction D2 over an area that was further inward in the radial direction than was the first turn portion 101, which was located furthest inward, when seen in the axial direction.

The second shield member 40 was formed of aluminum. The dimensions of the second shield member 40 in the first direction D1 and the second direction D2 were 320 mm and 320 mm, respectively. Further, the distance between the first shield member 30 and the second shield member 40 was 1 mm.

### (Evaluation)

Next, the Q value and loss of the coil unit 5 of Example 2-1 thus fabricated were measured by passing a high-frequency current of 85 kHz through the coil 10 of the coil unit 5.

The Q value and loss of the coil unit 5 of Example 2-1 were 121.2 and 87.7 W, respectively.

### <Example 2-2>

A coil unit 5 of Example 2-2 was fabricated in the same manner as in the case of Example 2-1 except that the distance between the magnetic resin layer 20 and the first shield member 30 was 1 mm.

### (Evaluation)

Next, the Q value and loss of the coil unit 5 of Example 2-2 thus fabricated were measured by passing a high-frequency current of 85 kHz through the coil 10 of the coil unit 5.

The Q value and loss of the coil unit 5 of Example 2-2 were 122.0 and 85.0 W, respectively.

### <Comparative Example 2-1>

A coil unit 5 of Comparative Example 2-1 was fabricated in the same manner as in the case of Example 2-1 except that the magnetic resin layer 20 was placed at a spacing from the coil 10. The distance between the second principal surface 10b of the coil 10 and the magnetic resin layer 20 was 0.1 mm.

### (Evaluation)

Next, the Q value and loss of the coil unit 5 of Comparative Example 2-1 thus fabricated were measured by passing a high-frequency current of 85 kHz through the coil 10 of the coil unit 5.

The Q value and loss of the coil unit 5 of Comparative Example 2-1 were 90.5 and 116.3 W, respectively.

<Comparative Example 2-2>

A coil unit 5 of Comparative Example 2-2 was fabricated in the same manner as in the case of Comparative Example 2-1 except that the distance between the second principal surface 10b of the coil 10 and the magnetic resin layer 20 was 1 mm.

### (Evaluation)

Next, the Q value and loss of the coil unit 5 of Comparative Example 2-2 thus fabricated were measured by passing a high-frequency current of 85 kHz through the coil 10 of the coil unit 5.

The Q value and loss of the coil unit 5 of Comparative Example 2-2 were 96.6 and 106.4 W, respectively.

### <Comparative Example 2-3>

A coil unit 5 of Comparative Example 2-3 was fabricated in the same manner as in the case of Example 2-1 except that no magnetic resin layer 20 was provided.

### (Evaluation)

Next, the Q value and loss of the coil unit 5 of Comparative Example 2-3 thus fabricated were measured by passing a high-frequency current of 85 kHz through the coil 10 of the coil unit 5.

The Q value and loss of the coil unit 5 of Comparative Example 2-3 were 97.0 and 105.2 W, respectively.

### <Comparative Example 2-4>

A coil unit 5 of Comparative Example 2-4 was fabricated in the same manner as in the case of Comparative Example 2-3 except that the distance between the first shield member 30 and the second shield member 40 was 6 mm.

### (Evaluation)

Next, the Q value and loss of the coil unit 5 of Comparative Example 2-4 thus fabricated were measured by passing a high-frequency current of 85 kHz through the coil 10 of the coil unit 5.

The Q value and loss of the coil unit 5 of Comparative Example 2-4 were 104.0 and 100.9 W, respectively.

### <Comparative Example 2-5>

A coil unit 5 of Comparative Example 2-5 was fabricated in the same manner as in the case of Comparative Example 2-3 except that the distance between the first shield member 30 and the second shield member 40 was 10 mm.

### (Evaluation)

Next, the Q value and loss of the coil unit 5 of Comparative Example 2-5 thus fabricated were measured by passing a high-frequency current of 85 kHz through the coil 10 of the coil unit 5.

The Q value and loss of the coil unit 5 of Comparative Example 2-5 were 106.0 and 99.6 W, respectively.

### <Comparative Example 2-6>

A coil unit 5 of Comparative Example 2-6 was fabricated in the same manner as in the case of Comparative Example 2-3 except that the distance between the first shield member 30 and the second shield member 40 was 15 mm.

### (Evaluation)

Next, the Q value and loss of the coil unit 5 of Comparative Example 2-6 thus fabricated were measured by passing a high-frequency current of 85 kHz through the coil 10 of the coil unit 5.

The Q value and loss of the coil unit 5 of Comparative Example 2-6 were 108.0 and 98.3 W, respectively.

Fig. 47 shows the Q values and losses of the coil unit of Examples 2-1 and 2-2 and Comparative Examples 2-1 to 2-6.

As can be seen from Fig. 47, the loss of the coil unit 5 of Example 2-1 was much lower than the losses of the coil units 5 of Comparative Examples 2-1 and 2-2. It is found from this that the loss of a coil unit 5 can be significantly reduced by bringing the second principal surface 10b of the coil 10 and the magnetic resin layer 20 into close contact with each other. In other words, it is found that in a case where the second principal surface 10b of the coil 10 and the magnetic resin layer 20 are spaced from each other, there is a great increase in loss of the coil unit 5 even when the distance between the second principal surface 10b and the magnetic resin layer 20 is a short distance of 0.1 mm. Further, there was no big difference in loss of the coil units 5 between Example 2-1 and Example 2-2. It is found from this that bringing the second principal surface 10b of the coil 10 and the magnetic resin layer 20 into close contact with each other makes it possible to suppress an increase in loss of the coil unit 5 caused by bringing the first shield member 30 close to the coil 10. Comparing the losses of the coil units 5 of Comparative Examples 2-3 to 2-6 shows that the loss of a coil unit 5 is increased by bringing the second shield member 40 close to the first shield member 30.

### <<Examples 3 to 6>>

The following explains differences in performance of coil units 5 due to differences in shape of the coils 10.

### <Example 3-1>

As a coil unit 5 of Example 3-1, a coil unit 5 including a coil 10 formed into a spiral shape, a magnetic resin layer 20, a first shield member 30, and a second shield member 40 as shown in Figs. 2 to 5B was prepared.

The coil 10 was formed in a manner similar to the coil 10 shown in Figs. 2 to 5B. The coil 10 was formed of copper and had a line width of 6 mm and a thickness of 0.5 mm. Further, the distance between adjacent turn portions 101 and 102, ..., and 107 and 108 was 6 mm. The dimensions of the coil 10 along the first direction D1 and the second direction D2 were 295 mm and 295 mm, respectively.

The magnetic resin layer 20 was formed by curing two-component curable epoxy resin with magnetic powder mixed thereinto. The coil 10 was accommodated in the depressed portion 25 of the magnetic resin layer 20 as shown in Fig. 4, and the second principal surface 10b of the coil 10 was in close contact with the magnetic resin layer 20.

The first shield member 30 was not divided into a plurality of shield small pieces 30P. In other words, the first shield member 30 had no gaps 50 formed therein. The first shield member 30 as a ferrite plate. The dimensions of the first shield member 30 in the first direction D1 and the second direction D2 were 300 mm and 300 mm, respectively. Further, the distance between the magnetic resin layer 20 and the first shield member 30 was 1 mm.

The second shield member 40 was formed of aluminum. The dimensions of the second shield member 40 in the first direction D1 and the second direction D2 were 320 mm and 320 mm, respectively. Further, the distance between the first shield member 30 and the second shield member 40 was 1 mm.

### <Example 3-2>

A coil unit 5 of Example 3-2 was fabricated in the same manner as in the case of Example 3-1 except that the first shield member 30 was divided into nine shield small pieces 30P as in the case of the example shown in Fig. 36. The first shield member 30 was divided into three shield small pieces 30P in the first direction D1 and divided into three shield small pieces 30P in the second direction D2.

Each of the shield small pieces 30P was a ferrite plate. All of the nine shield small pieces 30P had quadrangular shapes. The dimensions of the nine shield small pieces 30P in the first direction D1 were equal to one another. Further, the dimensions of the nine shield small pieces 30P in the second direction D2 were equal to one another.

Each of the gaps 50 between adjacent ones of the shield small pieces 30P had a width of 5 mm.

Eight of the twelve gaps 50 formed between the adjacent shield small pieces 30P crossed any of the first to fourth linear portion groups 11G to 14G when seen in the axial direction. The gaps 50 that crossed the first linear portion group 11G were orthogonal to the first linear portions 11 when seen in the axial direction. The gaps 50 that crossed the second linear portion group 12G were orthogonal to the second linear portions 12 when seen in the axial direction. The gaps 50 that crossed the third linear portion group 13G were orthogonal to the third linear portions 13 when seen in the axial direction. The gaps 50 that crossed the fourth linear portion group 14G were orthogonal to the fourth linear portions 14 when seen in the axial direction.

The remaining four gaps 50 extended through a space between any of the first to fourth linear portion groups 11G to 14G and the central axis line C along the first direction D1 or the second direction D2 when seen in the axial direction.

### <Example 3-3>

A coil unit 5 of Example 3-3 was fabricated in the same manner as in the case of Example 3-1 except that the first shield member 30 was divided into twelve shield small pieces 30P. The first shield member 30 was divided into four shield small pieces 30P in the first direction D1 and divided into three shield small pieces 30P in the second direction D2.

Each of the shield small pieces 30P was a ferrite plate. All of the twelve shield small pieces 30P had quadrangular shapes. The dimensions of the twelve shield small pieces 30P in the first direction D1 were equal to one another. Further, the dimensions of the twelve shield small pieces 30P in the second direction D2 were equal to one another.

Each of the gaps 50 between adjacent ones of the shield small pieces 30P had a width of 5 mm.

Two of the seventeen gaps 50 formed between the adjacent shield small pieces 30P crossed the first linear portion group 11G or the third linear portion group 13 when seen in the axial direction. The gap 50 that crossed the first linear portion group 11G was orthogonal to the first linear portions 11 when seen in the axial direction. The gap 50 that crossed the third linear portion group 13G was orthogonal to the third linear portions 13 when seen in the axial direction.

Twelve of the aforementioned seventeen gaps 50 partially crossed any of the 1Ath to 1Dth intermediate curved portions 151G to 154G when seen in the axial direction. Each of the gaps 50 that crossed the 1Ath intermediate curved portion group 151G and the tangent line TL1 to the 1Ath intermediate curved portion group 151G formed an angle of 45 degrees when seen in the axial direction. Each of the gaps 50 that crossed the 1Bth intermediate curved portion group 152G and the tangent line TL2 to the 1Bth intermediate curved portion group 152G formed an angle of 45 degrees when seen in the axial direction. Each of the gaps 50 that crossed the 1Cth intermediate curved portion group 153G and the tangent line TL3 to the 1Cth intermediate curved portion group 153G formed an angle of 45 degrees when seen in the axial direction. Each of the gaps 50 that crossed the 1Dth intermediate curved portion group 154G and the tangent line TL4 to the 1Dth intermediate curved portion group 154G formed an angle of 45 degrees when seen in the axial direction.

Two of the aforementioned seventeen gaps 50 extended through the second linear portion group 12G or the fourth linear portion group 14G along the second direction D2 when seen in the axial direction. These gaps 50 overlapped the second or fourth linear portion 12 or 14 of the second turn portion 102.

The remaining one gap 50 extended through a space between the second linear portion group 12G and the fourth linear portion group 14G along the second direction D2 when seen in the axial direction. This gap 50 overlapped the central axis line C when seen in the axial direction.

### <Example 3-4>

A coil unit 5 of Example 3-4 was fabricated in the same manner as in the case of Example 3-1 except that the first shield member 30 was divided into four shield small pieces 30P as shown in Fig. 2. The first shield member 30 was divided into two shield small pieces 30P in the first direction D1 and divided into two shield small pieces 30P in the second direction D2.

Each of the shield small pieces 30P was a ferrite plate. All of the four shield small pieces 30P had quadrangular shapes. The dimensions of the four shield small pieces 30P in the first direction D1 were equal to one another. Further, the dimensions of the four shield small pieces 30P in the second direction D2 were equal to one another.

Each of the gaps 50 between adjacent ones of the shield small pieces 30P had a width of 5 mm.

The four gaps 50 formed between the adjacent shield small pieces 30P crossed any of the first to fourth linear portion groups 11G to 14G when seen in the axial direction. The gap 50 that crossed the first linear portion group 11G was orthogonal to the first linear portions 11 when seen in the axial direction. The gap 50 that crossed the second linear portion group 12G was orthogonal to the second linear portions 12 when seen in the axial direction. The gap 50 that crossed the third linear portion group 13G was orthogonal to the third linear portions 13 when seen in the axial direction. The gap 50 that crossed the fourth linear portion group 14G was orthogonal to the fourth linear portions 14 when seen in the axial direction. The four gaps 50 were formed such that extensions thereof passed through the central axis line C.

### <Example 3-5>

A coil unit 5 of Example 3-5 was fabricated in the same manner as in the case of Example 3-1 except that the first shield member 30 was divided into eight shield small pieces 30P as shown in Fig. 22. The eight gaps 50 formed in the first shield member 50 extended radially from the central axis line C when seen in the axial direction.

Each of the shield small pieces 30P was a ferrite plate. All of the eight shield small pieces 30P had right-angled triangular shapes. The dimensions of the eight shield small pieces 30P in the first direction D1 were equal to one another. Further, the dimensions of the eight shield small pieces 30P in the second direction D2 were equal to one another.

Each of the gaps 50 between adjacent ones of the shield small pieces 30P had a width of 5 mm.

Four of the eight gaps 50 formed between the adjacent shield small pieces 30P crossed any of the first to fourth linear portion groups 11G to 14G when seen in the axial direction. The gap 50 that crossed the first linear portion group 11G was orthogonal to the first linear portions 11 when seen in the axial direction. The gap 50 that crossed the second linear portion group 12G was orthogonal to the second linear portions 12 when seen in the axial direction. The gap 50 that crossed the third linear portion group 13G was orthogonal to the third linear portions 13 when seen in the axial direction. The gap 50 that crossed the fourth linear portion group 14G was orthogonal to the fourth linear portions 14 when seen in the axial direction. These four gaps 50 were formed such that extensions thereof passed through the central axis line C.

The remaining four gaps 50 crossed any of the 1Ath to 1Dth intermediate curved portion groups 151G to 154G when seen in the axial direction. The gap 50 that crossed the 1Ath intermediate curved portion group 151G was orthogonal to the tangent line TL1 to the 1Ath intermediate curved portion group 151G when seen in the axial direction. The gap 50 that crossed the 1Bth intermediate curved portion group 152G was orthogonal to the tangent line TL2 to the 1Bth intermediate curved portion group 152G when seen in the axial direction. The gap 50 that crossed the 1Cth intermediate curved portion group 153G was orthogonal to the tangent line TL3 to the 1Cth intermediate curved portion group 153G when seen in the axial direction. The gap 50 that crossed the 1Dth intermediate curved portion group 154G was orthogonal to the tangent line TL4 to the 1Dth intermediate curved portion group 154G when seen in the axial direction. These four gaps 50 were formed such that extensions thereof passed through the central axis line C.

### <Example 3-6>

A coil unit 5 of Example 3-6 was fabricated in the same manner as in the case of Example 3-1 except that the first shield member 30 was divided into twelve shield small pieces 30P as shown in Fig. 38.

Each of the shield small pieces 30P was a ferrite plate. Four of the twelve shield small pieces 30P had quadrangular shapes. The remaining eight shield small pieces 30P had right-angled triangular shapes.

Each of the gaps 50 between adjacent ones of the shield small pieces 30P had a width of 5 mm.

Eight of the thirteen gaps 50 formed between the adjacent shield small pieces 30P crossed any of the first to fourth linear portion groups 11G to 14G when seen in the axial direction. The gaps 50 that crossed the first linear portion group 11G were orthogonal to the first linear portions 11 when seen in the axial direction. The gaps 50 that crossed the second linear portion group 12G were orthogonal to the second linear portions 12 when seen in the axial direction. The gaps 50 that crossed the third linear portion group 13G were orthogonal to the third linear portions 13 when seen in the axial direction. The gaps 50 that crossed the fourth linear portion group 14G were orthogonal to the fourth linear portions 14 when seen in the axial direction. These four gaps 50 were formed such that extensions thereof passed through the central axis line C.

Four of the aforementioned thirteen gaps 50 crossed any of the 1Ath to 1Dth intermediate curved portion groups 151G to 154G when seen in the axial direction. The gap 50 that crossed the 1Ath intermediate curved portion group 151G was orthogonal to the tangent line TL1 to the 1Ath intermediate curved portion group 151G when seen in the axial direction. The gap 50 that crossed the 1Bth intermediate curved portion group 152G was orthogonal to the tangent line TL2 to the 1Bth intermediate curved portion group 152G when seen in the axial direction. The gap 50 that crossed the 1Cth intermediate curved portion group 153G was orthogonal to the tangent line TL3 to the 1Cth intermediate curved portion group 153G when seen in the axial direction. The gap 50 that crossed the 1Dth intermediate curved portion group 154G was orthogonal to the tangent line TL4 to the 1Dth intermediate curved portion group 154G when seen in the axial direction.

The remaining one gap 50 extended through a space between the second linear portion group 12G and the fourth linear portion group 14G along the second direction D2 when seen in the axial direction. This gap 50 overlapped the central axis line C when seen in the axial direction.

### <Example 3-7>

A coil unit 5 of Example 3-7 was fabricated in the same manner as in the case of Example 3-1 except that the first shield member 30 was divided into thirteen shield small pieces 30P as shown in Fig. 24.

Each of the shield small pieces 30P was a ferrite plate. Five of the thirteen shield small pieces 30P had quadrangular shapes. The remaining eight shield small pieces 30P had right-angled triangular shapes.

Each of the gaps 50 between adjacent ones of the shield small pieces 30P had a width of 5 mm.

Nine of the fourteen gaps 50 formed between the adjacent shield small pieces 30P crossed any of the first to fourth linear portion groups 11G to 14G when seen in the axial direction. The gaps 50 that crossed the first linear portion group 11G were orthogonal to the first linear portions 11 when seen in the axial direction. The gaps 50 that crossed the second linear portion group 12G were orthogonal to the second linear portions 12 when seen in the axial direction. The gaps 50 that crossed the third linear portion group 13G were orthogonal to the third linear portions 13 when seen in the axial direction. The gaps 50 that crossed the fourth linear portion group 14G were orthogonal to the fourth linear portions 14 when seen in the axial direction.

Four of the aforementioned fourteen gaps 50 crossed any of the 1Ath to 1Dth intermediate curved portion groups 151G to 154G when seen in the axial direction. The gap 50 that crossed the 1Ath intermediate curved portion group 151G was orthogonal to the tangent line TL1 to the 1Ath intermediate curved portion group 151G when seen in the axial direction. The gap 50 that crossed the 1Bth intermediate curved portion group 152G was orthogonal to the tangent line TL2 to the 1Bth intermediate curved portion group 152G when seen in the axial direction. The gap 50 that crossed the 1Cth intermediate curved portion group 153G was orthogonal to the tangent line TL3 to the 1Cth intermediate curved portion group 153G when seen in the axial direction. The gap 50 that crossed the 1Dth intermediate curved portion group 154G was orthogonal to the tangent line TL4 to the 1Dth intermediate curved portion group 154G when seen in the axial direction.

The remaining one gap 50 extended through a space between the second linear portion group 12G and the fourth linear portion group 14G along the second direction D2 when seen in the axial direction. This gap 50 overlapped the central axis line C when seen in the axial direction.

### (Evaluation of Example 3)

The Q value, loss, impedance, and inductance of each of the coil units 5 of Examples 3-1 to 3-7 thus fabricated were measured by passing a high-frequency current of 85 kHz through the coil 10 of the coil unit 5. Fig. 48 shows the results of the measurements. In Fig. 48, the legends "Q VALUE", "IMPEDANCE", and "INDUCTANCE" mean the Q value, impedance, and inductance of the coil unit 5. The legend "SLD2" means the second shield member 40. The legend "JOULE LOSS" means a loss that is caused by an electric current passed through the coil 10 or the second shield member 40. The legend "IRON LOSS" means a loss that is caused by a magnetic flux of the first shield member 30. The legend "TOTAL LOSS" means the total of "JOULE LOSS" and "IRON LOSS". The legend "NP" is the number of shield small pieces 30P that the first shield member 30 was divided (i.e. the number of shield small portions 30P included in the first shield member 30). For example, the legend "NP9" means that the first shield member 30 is divided into nine shield small pieces 30, and the legend "NP12" means that the first shield member 30 is divided into twelve shield small pieces 30. Note, however, that the legend "NP1" means that the first shield member 30 is not divided.

### <Example 4-1>

A coil unit 5 of Example 4-1 was fabricated in the same manner as in the case of Example 3-1 except that the coil element 10i was formed into a regular octagonal shape as a whole as in the case of the example shown in Fig. 43. The first shield member 30 was not divided into a plurality of shield small pieces 30P. In other words, the first shield member 30 had no gaps 50 formed therein.

The coil 10 was formed of copper and had a line width of 6 mm and a thickness of 0.5 mm. Further, the distance between adjacent turn portions 101 and 102, ..., and 107 and 108 was 6 mm. The dimensions of the coil 10 along the first direction D1 and the second direction D2 were 295 mm and 295 mm, respectively.

The first shield member 30 was a ferrite plate. The dimensions of the first shield member 30 in the first direction D1 and the second direction D2 were 300 mm and 300 mm, respectively.

### <Example 4-2>

A coil unit 5 of Example 4-2 was fabricated in the same manner as in the case of Example 4-1 except that the first shield member 30 was divided into nine shield small pieces 30P as in the case of Example 3-2. The first shield member 30 was divided into three shield small pieces 30P in the first direction D1 and divided into three shield small pieces 30P in the second direction D2

Each of the shield small pieces 30P was a ferrite plate. All of the nine shield small pieces 30P had quadrangular shapes. The dimensions of the nine shield small pieces 30P in the first direction D1 were equal to one another. Further, the dimensions of the nine shield small pieces 30P in the second direction D2 were equal to one another.

Each of the gaps 50 between adjacent ones of the shield small pieces 30P had a width of 5 mm.

The twelve gaps 50 formed between the adjacent shield small pieces 30P crossed at least part of any of the first to fourth linear portion groups 11G to 14G and the 1Ath to 1Dth intermediate linear portion groups 161G to 164G when seen in the axial direction.

The gaps 50 that crossed at least part of the first linear portion group 11G were orthogonal to the first linear portions 11 when seen in the axial direction. The gaps 50 that crossed at least part of the second linear portion group 12G were orthogonal to the second linear portions 12 when seen in the axial direction. The gaps 50 that crossed at least part of the third linear portion group 13G were orthogonal to the third linear portions 13 when seen in the axial direction. The gaps 50 that crossed at least part of the fourth linear portion group 14G were orthogonal to the fourth linear portions 14 when seen in the axial direction.

Each of the gaps 50 that crossed at least part of the 1Ath intermediate linear portion group 161G and the 1Ath intermediate linear portion group 161G formed an angle of 45 degrees when seen in the axial direction. Each of the gaps 50 that crossed at least part of the 1Bth intermediate linear portion group 162G and the 1Bth intermediate linear portion group 162G formed an angle of 45 degrees when seen in the axial direction. Each of the gaps 50 that crossed at least part of the 1Cth intermediate linear portion group 163G and the 1Cth intermediate linear portion group 163G formed an angle of 45 degrees when seen in the axial direction. Each of the gaps 50 that crossed at least part of the 1Dth intermediate linear portion group 164G and the 1Dth intermediate linear portion group 164G formed an angle of 45 degrees when seen in the axial direction.

### <Example 4-3>

A coil unit 5 of Example 4-3 was fabricated in the same manner as in the case of Example 4-1 except that the first shield member 30 was divided into twelve shield small pieces 30P as in the case of Example 3-3. The first shield member 30 was divided into four shield small pieces 30P in the first direction D1 and divided into three shield small pieces 30P in the second direction D2.

Each of the shield small pieces 30P was a ferrite plate. All of the twelve shield small pieces 30P had quadrangular shapes. The dimensions of the twelve shield small pieces 30P in the first direction D1 were equal to one another. Further, the dimensions of the twelve shield small pieces 30P in the second direction D2 were equal to one another.

Each of the gaps 50 between adjacent ones of the shield small pieces 30P had a width of 5 mm.

Sixteen of the seventeen gaps 50 formed between the adjacent shield small pieces 30P crossed at least part of any of the first to fourth linear portion groups 11G to 14G and the 1Ath to 1Dth intermediate linear portion groups 161G to 164G when seen in the axial direction.

The gaps 50 that crossed at least part of the first linear portion group 11G were orthogonal to the first linear portions 11 when seen in the axial direction. The gaps 50 that crossed at least part of the second linear portion group 12G were orthogonal to the second linear portions 12 when seen in the axial direction. The gaps 50 that crossed at least part of the third linear portion group 13G were orthogonal to the third linear portions 13 when seen in the axial direction. The gaps 50 that crossed at least part of the fourth linear portion group 14G were orthogonal to the fourth linear portions 14 when seen in the axial direction.

Each of the gaps 50 that crossed at least part of the 1Ath intermediate linear portion group 161G and the 1Ath intermediate linear portion group 161G formed an angle of 45 degrees when seen in the axial direction. Each of the gaps 50 that crossed at least part of the 1Bth intermediate linear portion group 162G and the 1Bth intermediate linear portion group 162G formed an angle of 45 degrees when seen in the axial direction. Each of the gaps 50 that crossed at least part of the 1Cth intermediate linear portion group 163G and the 1Cth intermediate linear portion group 163G formed an angle of 45 degrees when seen in the axial direction. Each of the gaps 50 that crossed at least part of the 1Dth intermediate linear portion group 164G and the 1Dth intermediate linear portion group 164G formed an angle of 45

### degrees when seen in the axial direction.

The remaining one gap 50 extended through a space between the second linear portion group 12G and the fourth linear portion group 14G along the second direction D2 when seen in the axial direction. This gap 50 overlapped the central axis line C when seen in the axial direction.

### <Example 4-4>

A coil unit 5 of Example 4-4 was fabricated in the same manner as in the case of Example 4-1 except that the first shield member 30 was divided into four shield small pieces 30P as in the case of Example 3-4. The first shield member 30 was divided into two shield small pieces 30P in the first direction D1 and divided into two shield small pieces 30P in the second direction D2.

Each of the shield small pieces 30P was a ferrite plate. All of the four shield small pieces 30P had quadrangular shapes. The dimensions of the four shield small pieces 30P in the first direction D1 were equal to one another. Further, the dimensions of the four shield small pieces 30P in the second direction D2 were equal to one another.

Each of the gaps 50 between adjacent ones of the shield small pieces 30P had a width of 5 mm.

The four gaps 50 formed between the adjacent shield small pieces 30P crossed any of the first to fourth linear portion groups 11G to 14G when seen in the axial direction. The gap 50 that crossed the first linear portion group 11G was orthogonal to the first linear portions 11 when seen in the axial direction. The gap 50 that crossed the second linear portion group 12G was orthogonal to the second linear portions 12 when seen in the axial direction. The gap 50 that crossed the third linear portion group 13G was orthogonal to the third linear portions 13 when seen in the axial direction. The gap 50 that crossed the fourth linear portion group 14G was orthogonal to the fourth linear portions 14 when seen in the axial direction. The four gaps 50 were formed such that extensions thereof passed through the central axis line C.

### <Example 4-5>

A coil unit 5 of Example 4-5 was fabricated in the same manner as in the case of Example 4-1 except that the first shield member 30 was divided into eight shield small pieces 30P as in the case of Example 3-5. The eight gaps 50 formed in the first shield member 50 extended radially from the central axis line C when seen in the axial direction.

Each of the shield small pieces 30P was a ferrite plate. All of the eight shield small pieces 30P had right-angled triangular shapes. The dimensions of the eight shield small pieces 30P in the first direction D1 were equal to one another. Further, the dimensions of the eight shield small pieces 30P in the second direction D2 were equal to one another.

Each of the gaps 50 between adjacent ones of the shield small pieces 30P had a width of 5 mm.

Four of the eight gaps 50 formed between the adjacent shield small pieces 30P crossed any of the first to fourth linear portion groups 11G to 14G when seen in the axial direction. The gap 50 that crossed the first linear portion group 11G was orthogonal to the first linear portions 11 when seen in the axial direction. The gap 50 that crossed the second linear portion group 12G was orthogonal to the second linear portions 12 when seen in the axial direction. The gap 50 that crossed the third linear portion group 13G was orthogonal to the third linear portions 13 when seen in the axial direction. The gap 50 that crossed the fourth linear portion group 14G was orthogonal to the fourth linear portions 14 when seen in the axial direction. These four gaps 50 were formed such that extensions thereof passed through the central axis line C.

The remaining four gaps 50 crossed any of the 1Ath to 1Dth intermediate linear portion groups 161G to 164G when seen in the axial direction. The gap 50 that crossed the 1Ath intermediate linear portion group 161G was orthogonal to the 1Ath intermediate linear portion group 161G when seen in the axial direction. The gap 50 that crossed the 1Bth intermediate linear portion group 162G was orthogonal to the 1Bth intermediate linear portion group 162G when seen in the axial direction. The gap 50 that crossed the 1Cth intermediate linear portion group 163G was orthogonal to the 1Cth intermediate linear portion group 163G when seen in the axial direction. The gap 50 that crossed the 1Dth intermediate linear portion group 164G was orthogonal to the 1Dth intermediate linear portion group 164G when seen in the axial direction. These four gaps 50 were formed such that extensions thereof passed through the central axis line C.

### <Example 4-6>

A coil unit 5 of Example 4-6 was fabricated in the same manner as in the case of Example 4-1 except that the first shield member 30 was divided into twelve shield small pieces 30P as in the case of Example 3-6.

Each of the shield small pieces 30P was a ferrite plate. Four of the twelve shield small pieces 30P had quadrangular shapes. The remaining eight shield small pieces 30P had right-angled triangular shapes.

Each of the gaps 50 between adjacent ones of the shield small pieces 30P had a width of 5 mm.

Eight of the thirteen gaps 50 formed between the adjacent shield small pieces 30P crossed any of the first to fourth linear portion groups 11G to 14G when seen in the axial direction. The gaps 50 that crossed the first linear portion group 11G were orthogonal to the first linear portions 11 when seen in the axial direction. The gaps 50 that crossed the second linear portion group 12G were orthogonal to the second linear portions 12 when seen in the axial direction. The gaps 50 that crossed the third linear portion group 13G were orthogonal to the third linear portions 13 when seen in the axial direction. The gaps 50 that crossed the fourth linear portion group 14G were orthogonal to the fourth linear portions 14 when seen in the axial direction. These four gaps 50 were formed such that extensions thereof passed through the central axis line C.

Four of the aforementioned thirteen gaps 50 crossed any of the 1Ath to 1Dth intermediate linear portion groups 161G to 164G when seen in the axial direction. The gap 50 that crossed the 1Ath intermediate linear portion group 161G was orthogonal to the 1Ath intermediate linear portion group 161G when seen in the axial direction. The gap 50 that crossed the 1Bth intermediate linear portion group 162G was orthogonal to the 1Bth intermediate linear portion group 162G when seen in the axial direction. The gap 50 that crossed the 1Cth intermediate linear portion group 163G was orthogonal to the 1Cth intermediate linear portion group 163G when seen in the axial direction. The gap 50 that crossed the 1Dth intermediate linear portion group 164G was orthogonal to the 1Dth intermediate linear portion group 164G when seen in the axial direction.

The remaining one gap 50 extended through a space between the second linear portion group 12G and the fourth linear portion group 14G along the second direction D2 when seen in the axial direction. This gap 50 overlapped the central axis line C when seen in the axial direction.

### <Example 4-7>

A coil unit 5 of Example 4-7 was fabricated in the same manner as in the case of Example 4-1 except that the first shield member 30 was divided into thirteen shield small pieces 30P as in the case of Example 3-7.

Each of the shield small pieces 30P was a ferrite plate. Five of the thirteen shield small pieces 30P had quadrangular shapes. The remaining eight shield small pieces 30P had right-angled triangular shapes.

Each of the gaps 50 between adjacent ones of the shield small pieces 30P had a width of 5 mm.

Nine of the fourteen gaps 50 formed between the adjacent shield small pieces 30P crossed any of the first to fourth linear portion groups 11G to 14G when seen in the axial direction. The gaps 50 that crossed the first linear portion group 11G were orthogonal to the first linear portions 11 when seen in the axial direction. The gaps 50 that crossed the second linear portion group 12G were orthogonal to the second linear portions 12 when seen in the axial direction. The gaps 50 that crossed the third linear portion group 13G were orthogonal to the third linear portions 13 when seen in the axial direction. The gaps 50 that crossed the fourth linear portion group 14G were orthogonal to the fourth linear portions 14 when seen in the axial direction.

Four of the aforementioned fourteen gaps 50 crossed any of the 1Ath to 1Dth intermediate curved portion groups 151G to 154G when seen in the axial direction. The gap 50 that crossed the 1Ath intermediate curved portion group 151G was orthogonal to the tangent line TL1 to the 1Ath intermediate curved portion group 151G when seen in the axial direction. The gap 50 that crossed the 1Bth intermediate curved portion group 152G was orthogonal to the tangent line TL2 to the 1Bth intermediate curved portion group 152G when seen in the axial direction. The gap 50 that crossed the 1Cth intermediate curved portion group 153G was orthogonal to the tangent line TL3 to the 1Cth intermediate curved portion group 153G when seen in the axial direction. The gap 50 that crossed the 1Dth intermediate curved portion group 154G was orthogonal to the tangent line TL4 to the 1Dth intermediate curved portion group 154G when seen in the axial direction.

The remaining one gap 50 extended through a space between the second linear portion group 12G and the fourth linear portion group 14G along the second direction D2 when seen in the axial direction. This gap 50 overlapped the central axis line C when seen in the axial direction.

### (Evaluation of Example 4>

The Q value, loss, impedance, and inductance of each of the coil units 5 of Examples 4-1 to 4-7 thus fabricated were measured by passing a high-frequency current of 85 kHz through the coil 10 of the coil unit 5. Fig. 49 shows the results of the measurements. In Fig. 49, the legends "Q VALUE", "IMPEDANCE", and "INDUCTANCE" mean the Q value, impedance, and inductance of the coil unit 5. The legend "SLD2" means the second shield member 40. The legend "JOULE LOSS" means a loss that is caused by an electric current passed through the coil 10 or the second shield member 40. The legend "IRON LOSS" means a loss that is caused by a magnetic flux of the first shield member 30. The legend "TOTAL LOSS" means the total of "JOULE LOSS" and "IRON LOSS". The legend "NP" is the number of shield small pieces 30P that the first shield member 30 was divided (i.e. the number of shield small portions 30P included in the first shield member 30). For example, the legend "NP9" means that the first shield member 30 is divided into nine shield small pieces 30, and the legend "NP12" means that the first shield member 30 is divided into twelve shield small pieces 30. Note, however, that the legend "NP1" means that the first shield member 30 is not divided.

### (Comparison between Example 3 and Example 4)

Fig. 50 shows the Q values of the coil units 5 of Examples 3-1 to 3-7 and Examples 4-1 to 4-7. In Fig. 50, the legends "E3-1 to E3-7" mean Examples 3-1 to 3-7, respectively. Further, in Fig. 50, the legends "E4-1 to E4-7" mean Examples 4-1 to 4-7, respectively. It can be seen from Fig. 50 that the Q value of a coil unit 5 including a coil 10 having an octagonal shape as a whole is higher than the Q value of a coil unit 5 including a coil 10 having a quadrangular shape as a whole and including first intermediate curved portions 151G to 154G, as long as the other conditions are the same.

### <Example 5-1>

Next, as a coil unit 5 of Example 5-1, a coil unit 5 including a coil 10 including coil elements 10j and 10jj each formed into a spiral shape, a magnetic resin layer 20, a first shield member 30, and a second shield member 40 as shown in Figs. 17 to 19 was prepared.

The coil 10 was formed in a manner similar to the coil 10 shown in Figs. 17 to 19. The coil elements 10j and 10jj were formed of copper and had a line width of 6 mm and a thickness of 0.5 mm. Further, in each of the coil elements 10j and 10jj, the distance between adjacent turn portions 101 and 102, ..., and 104 and 105 was 6 mm. The dimensions of the coil 10 along the first direction D1 and the second direction D2 were 295 mm and 295 mm, respectively.

The magnetic resin layer 20 was formed by curing two-component curable epoxy resin with magnetic powder mixed thereinto. The coil 10 was embedded in the magnetic resin layer 20 as shown in Fig. 18, and the second principal surface 10b of the coil 10 was in close contact with the magnetic resin layer 20.

The first shield member 30 was not divided into a plurality of shield small pieces 30P. In other words, the first shield member 30 had no gaps 50 formed therein. The first shield member 30 was a ferrite plate. The dimensions of the first shield member 30 in the first direction D1 and the second direction D2 were 300 mm and 300 mm, respectively.

Further, the distance between the magnetic resin layer 20 and the first shield member 30 was 0 mm. That is, the magnetic resin layer 20 and the first shield member 30 were in close contact with each other.

The second shield member 40 was formed of aluminum. The dimensions of the second shield member 40 in the first direction D1 and the second direction D2 were 320 mm and 320 mm, respectively. Further, the distance between the first shield member 30 and the second shield member 40 was 1 mm

### <Example 5-2>

A coil unit 5 of Example 5-2 was fabricated in the same manner as in the case of Example 5-1 except that the first shield member 30 was divided into nine shield small pieces 30P as in the case of the example shown in Fig. 20. The first shield member 30 was divided into three shield small pieces 30P in the first direction D1 and divided into three shield small pieces 30P in the second direction D2.

Each of the shield small pieces 30P was a ferrite plate. All of the nine shield small pieces 30P had quadrangular shapes. The dimensions of the nine shield small pieces 30P in the first direction D1 were equal to one another. Further, the dimensions of the nine shield small pieces 30P in the second direction D2 were equal to one another.

Each of the gaps 50 between adjacent ones of the shield small pieces 30P had a width of 5 mm.

Six of the twelve gaps 50 formed between the adjacent shield small pieces 30P crossed any of the first to third linear portion groups 11G to 13G when seen in the axial direction. The gaps 50 that crossed the first linear portion group 11G were orthogonal to the first linear portions 11 when seen in the axial direction. The gaps 50 that crossed the second linear portion group 12G were orthogonal to the second linear portions 12 when seen in the axial direction. The gaps 50 that crossed the third linear portion group 13G were orthogonal to the third linear portions 13 when seen in the axial direction.

Two of the aforementioned twelve gaps 50 crossed the plurality of turn connected portions 16 when seen in the axial direction.

The remaining four gaps 50 extended through a space between any of the first to fourth linear portion groups 11G to 14G and the central axis line C when seen in the axial direction.

### <Example 5-3>

A coil unit 5 of Example 5-3 was fabricated in the same manner as in the case of Example 5-1 except that the first shield member 30 was divided into twelve shield small pieces 30P. The first shield member 30 was divided into three shield small pieces 30P in the first direction D1 and divided into four shield small pieces 30P in the second direction D2.

Each of the shield small pieces 30P was a ferrite plate. All of the twelve shield small pieces 30P had quadrangular shapes. The dimensions of the twelve shield small pieces 30P in the first direction D1 were equal to one another. Further, the dimensions of the twelve shield small pieces 30P in the second direction D2 were equal to one another.

Each of the gaps 50 between adjacent ones of the shield small pieces 30P had a width of 5 mm.

One of the seventeen gaps 50 formed between the adjacent shield small pieces 30P crossed the second linear portion group 12G when seen in the axial direction. The gap 50 that crossed the second linear portion group 12G was orthogonal to the second linear portions 12 when seen in the axial direction.

Twelve of the aforementioned seventeen gaps 50 partially crossed any of the 1Ath to 1Dth intermediate curved portions 151G to 154G when seen in the axial direction. Each of the gaps 50 that crossed at least part of the 1Ath intermediate curved portion group 151G and the tangent line TL1 to the 1Ath intermediate curved portion group 151G formed an angle of 45 degrees when seen in the axial direction. Each of the gaps 50 that crossed at least part of the 1Bth intermediate curved portion group 152G and the tangent line TL2 to the 1Bth intermediate curved portion group 152G formed an angle of 45 degrees when seen in the axial direction. Each of the gaps 50 that crossed at least part of the 1Cth intermediate curved portion group 153G and the tangent line TL3 to the 1Cth intermediate curved portion group 153G formed an angle of 45 degrees when seen in the axial direction. Each of the gaps 50 that crossed at least part of the 1Dth intermediate curved portion group 154G and the tangent line TL4 to the 1Dth intermediate curved portion group 154G formed an angle of 45 degrees when seen in the axial direction.

One of the aforementioned seventeen gaps 50 crossed the plurality of turn connected portions 16 when seen in the axial direction.

Two of the aforementioned seventeen gaps 50 extended through the first linear portion group 11G or the third linear portion group 13G along the first direction D1 when seen in the axial direction. These gaps 50 overlapped the first or third linear portion 11 or 13 of the second turn portion 102.

The remaining one gap 50 extended through a space between the first linear portion group 11G and the third linear portion group 13G along the first direction D1 when seen in the axial direction. This gap 50 overlapped the central axis line C when seen in the axial direction.

### <Example 5-4>

A coil unit 5 of Example 5-4 was fabricated in the same manner as in the case of Example 5-1 except that the first shield member 30 formed was divided into eight shield small pieces 30P as shown in Fig. 23. The eight gaps 50 formed in the first shield member 50 extended radially from the central axis line C when seen in the axial direction.

Each of the shield small pieces 30P was a ferrite plate. All of the eight shield small pieces 30P had right-angled triangular shapes. The dimensions of the eight shield small pieces 30P in the first direction D1 were equal to one another. Further, the dimensions of the eight shield small pieces 30P in the second direction D2 were equal to one another.

Each of the gaps 50 between adjacent ones of the shield small pieces 30P had a width of 5 mm.

Three of the eight gaps 50 formed between the adjacent shield small pieces 30P crossed any of the first to third linear portion groups 11G to 13G when seen in the axial direction. The gap 50 that crossed the first linear portion group 11G was orthogonal to the first linear portions 11 when seen in the axial direction. The gap 50 that crossed the second linear portion group 12G was orthogonal to the second linear portions 12 when seen in the axial direction. The gap 50 that crossed the third linear portion group 13G was orthogonal to the third linear portions 13 when seen in the axial direction. These four gaps 50 were formed such that extensions thereof passed through the central axis line C.

One of the aforementioned eight gaps 50 crossed the plurality of turn connected portions 16 when seen in the axial direction. This gap 50 was formed such that an extension thereof passed through the central axis line C.

The remaining four gaps 50 crossed any of the 1Ath to 1Dth intermediate curved portion groups 151G to 154G when seen in the axial direction. The gap 50 that crossed the 1Ath intermediate curved portion group 151G was orthogonal to the tangent line TL1 to the 1Ath intermediate curved portion group 151G when seen in the axial direction. The gap 50 that crossed the 1Bth intermediate curved portion group 152G was orthogonal to the tangent line TL2 to the 1Bth intermediate curved portion group 152G when seen in the axial direction. The gap 50 that crossed the 1Cth intermediate curved portion group 153G was orthogonal to the tangent line TL3 to the 1Cth intermediate curved portion group 153G when seen in the axial direction. The gap 50 that crossed the 1Dth intermediate curved portion group 154G was orthogonal to the tangent line TL4 to the 1Dth intermediate curved portion group 154G when seen in the axial direction. These four gaps 50 were formed such that extensions thereof passed through the central axis line C.

### <Example 5-5>

A coil unit 5 of Example 5-5 was fabricated in the same manner as in the case of Example 5-1 except that the first shield member 30 formed was divided into twelve shield small pieces 30P as shown in Fig. 33.

Each of the shield small pieces 30P was a ferrite plate. Four of the twelve shield small pieces 30P had quadrangular shapes. The remaining eight shield small pieces 30P had right-angled triangular shapes.

Each of the gaps 50 between adjacent ones of the shield small pieces 30P had a width of 5 mm.

Six of the thirteen gaps 50 formed between the adjacent shield small pieces 30P crossed any of the first to third linear portion groups 11G to 13G when seen in the axial direction. The gaps 50 that crossed the first linear portion group 11G were orthogonal to the first linear portions 11 when seen in the axial direction. The gaps 50 that crossed the second linear portion group 12G were orthogonal to the second linear portions 12 when seen in the axial direction. The gaps 50 that crossed the third linear portion group 13G were orthogonal to the third linear portions 13 when seen in the axial direction.

Two of the aforementioned thirteen gaps 50 crossed the plurality of turn connected portions 16 when seen in the axial direction.

Four of the aforementioned thirteen gaps 50 crossed at least parts of the 1Ath to 1Dth intermediate curved portion groups 151G to 154G when seen in the axial direction. The gap 50 that crossed the 1Ath intermediate curved portion group 151G was orthogonal to the tangent line TL1 to the 1Ath intermediate curved portion group 151G when seen in the axial direction. The gap 50 that crossed the 1Bth intermediate curved portion group 152G was orthogonal to the tangent line TL2 to the 1Bth intermediate curved portion group 152G when seen in the axial direction. The gap 50 that crossed the 1Cth intermediate curved portion group 153G was orthogonal to the tangent line TL3 to the 1Cth intermediate curved portion group 153G when seen in the axial direction. The gap 50 that crossed the 1Dth intermediate curved portion group 154G was orthogonal to the tangent line TL4 to the 1Dth intermediate curved portion group 154G when seen in the axial direction.

The remaining one gap 50 extended through a space between the second linear portion group 12G and the plurality of turn connected portions 16 along the second direction D2 when seen in the axial direction. This gap 50 overlapped the central axis line C when seen in the axial direction.

### (Evaluation of Example 5)

The Q value, loss, impedance, and inductance of each of the coil units 5 of Examples 5-1 to 5-5 thus fabricated were measured by passing a high-frequency current of 85 kHz through the coil 10 of the coil unit 5. Fig. 51 shows the results of the measurements. In Fig. 51, the legends "Q VALUE", "IMPEDANCE", and "INDUCTANCE" mean the Q value, impedance, and inductance of the coil unit 5. The legend "SLD2" means a second shield member 40. The legend "JOULE LOSS" means a loss that is caused by an electric current passed through the coil 10 or the second shield member 40. The legend "IRON LOSS" means a loss that is caused by a magnetic flux of the first shield member 30. The legend "TOTAL LOSS" means the total of "JOULE LOSS" and "IRON LOSS". The legend "NP" is the number of shield small pieces 30P that the first shield member 30 was divided (i.e. the number of shield small portions 30P included in the first shield member 30). For example, the legend "NP9" means that the first shield member 30 is divided into nine shield small pieces 30, and the legend "NP12" means that the first shield member 30 is divided into twelve shield small pieces 30. Note, however, that the legend "NP1" means that the first shield member 30 is not divided.

### <Example 6-1>

A coil unit 5 of Example 6-1 was fabricated in the same manner as in the case of Example 5-1 except that each the coil elements 10j and 10jj was formed into a regular octagonal shape as a whole as in the case of the example shown in Fig. 45. The first shield member 30 was not divided into a plurality of shield small pieces 30P. In other words, the first shield member 30 had no gaps 50 formed therein.

The coil 10 was formed of copper and had a line width of 6 mm and a thickness of 0.5 mm. Further, the distance between adjacent turn portions 101 and 102, ..., and 104 and 105 was 6 mm. The dimensions of the coil 10 along the first direction D1 and the second direction D2 were 295 mm and 295 mm, respectively.

The first shield member 30 was a ferrite plate. The dimensions of the first shield member 30 in the first direction D1 and the second direction D2 were 300 mm and 300 mm, respectively.

### <Example 6-2>

A coil unit 5 of Example 6-2 was fabricated in the same manner as in the case of Example 6-1 except that the first shield member 30 was divided into nine shield small pieces 30P as in the case of Example 5-2. The first shield member 30 was divided into three shield small pieces 30P in the first direction D1 and divided into three shield small pieces 30P in the second direction D2

Each of the shield small pieces 30P was a ferrite plate. All of the nine shield small pieces 30P had quadrangular shapes. The dimensions of the nine shield small pieces 30P in the first direction D1 were equal to one another. Further, the dimensions of the nine shield small pieces 30P in the second direction D2 were equal to one another.

Each of the gaps 50 between adjacent ones of the shield small pieces 30P had a width of 5 mm.

The twelve gaps 50 formed between the adjacent shield small pieces 30P crossed at least part of any of the first to third linear portion groups 11G to 13G and the 1Ath to 1Dth intermediate linear portion groups 161G to 164G when seen in the axial direction.

The gaps 50 that crossed at least part of the first linear portion group 11G were orthogonal to the first linear portions 11 when seen in the axial direction. The gaps 50 that crossed at least part of the second linear portion group 12G were orthogonal to the second linear portions 12 when seen in the axial direction. The gaps 50 that crossed at least part of the third linear portion group 13G were orthogonal to the third linear portions 13 when seen in the axial direction.

Each of the gaps 50 that crossed at least part of the 1Ath intermediate linear portion group 161G and the 1Ath intermediate linear portion group 161G formed an angle of 45 degrees when seen in the axial direction. Each of the gaps 50 that crossed at least part of the 1Bth intermediate linear portion group 162G and the 1Bth intermediate linear portion group 162G formed an angle of 45 degrees when seen in the axial direction. Each of the gaps 50 that crossed at least part of the 1Cth intermediate linear portion group 163G and the 1Cth intermediate linear portion group 163G formed an angle of 45 degrees when seen in the axial direction. Each of the gaps 50 that crossed at least part of the 1Dth intermediate linear portion group 164G and the 1Dth intermediate linear portion group 164G formed an angle of 45 degrees when seen in the axial direction.

### <Example 6-3>

A coil unit 5 of Example 6-3 was fabricated in the same manner as in the case of Example 6-1 except that the first shield member 30 was divided into twelve shield small pieces 30P as in the case of Example 5-3. The first shield member 30 was divided into three shield small pieces 30P in the first direction D1 and divided into four shield small pieces 30P in the second direction D2.

Each of the shield small pieces 30P was a ferrite plate. All of the twelve shield small pieces 30P had quadrangular shapes. The dimensions of the twelve shield small pieces 30P in the first direction D1 were equal to one another. Further, the dimensions of the twelve shield small pieces 30P in the second direction D2 were equal to one another.

Each of the gaps 50 between adjacent ones of the shield small pieces 30P had a width of 5 mm.

One of the seventeen gaps 50 formed between the adjacent shield small pieces 30P crossed the second linear portion group 12G when seen in the axial direction. The gap 50 that crossed the second linear portion group 12G was orthogonal to the second linear portions 12 when seen in the axial direction.

Twelve of the aforementioned seventeen gaps 50 crossed at least part of any of the first to third linear portion groups 11G to 13G and the 1Ath to 1Dth intermediate linear portion groups 161G to 164G when seen in the axial direction.

The gaps 50 that crossed at least part of the first linear portion group 11G were orthogonal to the first linear portions 11 when seen in the axial direction. The gaps 50 that crossed at least part of the second linear portion group 12G were orthogonal to the second linear portions 12 when seen in the axial direction. The gaps 50 that crossed at least part of the third linear portion group 13G were orthogonal to the third linear portions 13 when seen in the axial direction.

Each of the gaps 50 that crossed at least part of the 1Ath intermediate linear portion group 161G and the 1Ath intermediate linear portion group 161G formed an angle of 45 degrees when seen in the axial direction. Each of the gaps 50 that crossed at least part of the 1Bth intermediate linear portion group 162G and the 1Bth intermediate linear portion group 162G formed an angle of 45 degrees when seen in the axial direction. Each of the gaps 50 that crossed at least part of the 1Cth intermediate linear portion group 163G and the 1Cth intermediate linear portion group 163G formed an angle of 45 degrees when seen in the axial direction. Each of the gaps 50 that crossed at least part of the 1Dth intermediate linear portion group 164G and the 1Dth intermediate linear portion group 164G formed an angle of 45

### degrees when seen in the axial direction.

Two of the aforementioned twelve gaps 50 extended through the first linear portion group 11G or the third linear portion group 13G along the first direction D1 when seen in the axial direction. These gaps 50 overlapped the first or third linear portion 11 or 13 of the second turn portion 102.

One of the aforementioned seventeen gaps 50 crossed the plurality of turn connected portions 16 when seen in the axial direction.

The remaining one gap 50 extended through a space between the first linear portion group 11G and the third linear portion group 13G along the first direction D1 when seen in the axial direction. This gap 50 overlapped the central axis line C when seen in the axial direction.

### <Example 6-4>

A coil unit 5 of Example 6-4 was fabricated in the same manner as in the case of Example 6-1 except that the first shield member 30 was divided into eight shield small pieces 30P as in the case of Example 5-4. The eight gaps 50 formed in the first shield member 50 extended radially from the central axis line C when seen in the axial direction.

Each of the shield small pieces 30P was a ferrite plate. All of the eight shield small pieces 30P had right-angled triangular shapes. The dimensions of the eight shield small pieces 30P in the first direction D1 were equal to one another. Further, the dimensions of the eight shield small pieces 30P in the second direction D2 were equal to one another.

Each of the gaps 50 between adjacent ones of the shield small pieces 30P had a width of 5 mm.

Three of the eight gaps 50 formed between the adjacent shield small pieces 30P crossed any of the first to third linear portion groups 11G to 13G when seen in the axial direction. The gap 50 that crossed the first linear portion group 11G was orthogonal to the first linear portions 11 when seen in the axial direction. The gap 50 that crossed the second linear portion group 12G was orthogonal to the second linear portions 12 when seen in the axial direction. The gap 50 that crossed the third linear portion group 13G was orthogonal to the third linear portions 13 when seen in the axial direction.

One of the aforementioned eight gaps 50 crossed the plurality of turn connected portions 16 when seen in the axial direction.

The remaining four gaps 50 crossed any of the 1Ath to 1Dth intermediate linear portion groups 161G to 164G when seen in the axial direction. The gap 50 that crossed the 1Ath intermediate linear portion group 161G was orthogonal to the 1Ath intermediate linear portion group 161G when seen in the axial direction. The gap 50 that crossed the 1Bth intermediate linear portion group 162G was orthogonal to the 1Bth intermediate linear portion group 162G when seen in the axial direction. The gap 50 that crossed the 1Cth intermediate linear portion group 163G was orthogonal to the 1Cth intermediate linear portion group 163G when seen in the axial direction. The gap 50 that crossed the 1Dth intermediate linear portion group 164G was orthogonal to the 1Dth intermediate linear portion group 164G when seen in the axial direction.

### <Example 6-5>

A coil unit 5 of Example 6-5 was fabricated in the same manner as in the case of Example 6-1 except that the first shield member 30 was divided into twelve shield small pieces 30P as in the case of Example 5-5.

Each of the shield small pieces 30P was a ferrite plate. Four of the twelve shield small pieces 30P had quadrangular shapes. The remaining eight shield small pieces 30P had right-angled triangular shapes.

Each of the gaps 50 between adjacent ones of the shield small pieces 30P had a width of 5 mm.

Six of the twelve gaps 50 formed between the adjacent shield small pieces 30P crossed any of the first to third linear portion groups 11G to 13G when seen in the axial direction. The gaps 50 that crossed the first linear portion group 11G were orthogonal to the first linear portions 11 when seen in the axial direction. The gaps 50 that crossed the second linear portion group 12G were orthogonal to the second linear portions 12 when seen in the axial direction. The gaps 50 that crossed the third linear portion group 13G were orthogonal to the third linear portions 13 when seen in the axial direction.

Two of the aforementioned thirteen gaps 50 crossed the plurality of turn connected portions 16 when seen in the axial direction.

Four of the aforementioned thirteen gaps 50 crossed any of the 1Ath to 1Dth intermediate linear portion groups 161G to 164G when seen in the axial direction. The gap 50 that crossed the 1Ath intermediate linear portion group 161G was orthogonal to the 1Ath intermediate linear portion group 161G when seen in the axial direction. The gap 50 that crossed the 1Bth intermediate linear portion group 162G was orthogonal to the 1Bth intermediate linear portion group 162G when seen in the axial direction. The gap 50 that crossed the 1Cth intermediate linear portion group 163G was orthogonal to the 1Cth intermediate linear portion group 163G when seen in the axial direction. The gap 50 that crossed the 1Dth intermediate linear portion group 164G was orthogonal to the 1Dth intermediate linear portion group 164G when seen in the axial direction.

The remaining one gap 50 extended through a space between the first linear portion group 11G and the third linear portion group 13G along the first direction D1 when seen in the axial direction. This gap 50 overlapped the central axis line C when seen in the axial direction.

### (Evaluation of Example 6)

The Q value, loss, impedance, and inductance of each of the coil units 5 of Examples 6-1 to 6-5 thus fabricated were measured by passing a high-frequency current of 85 kHz through the coil 10 of the coil unit 5. Fig. 52 shows the results of the measurements. In Fig. 52, the legends "Q VALUE", "IMPEDANCE", and "INDUCTANCE" mean the Q value, impedance, and inductance of the coil unit 5. The legend "SLD2" means the second shield member 40. The legend "JOULE LOSS" means a loss that is caused by an electric current passed through the coil 10 or the second shield member 40. The legend "IRON LOSS" means a loss that is caused by a magnetic flux of the first shield member 30. The legend "TOTAL LOSS" means the total of "JOULE LOSS" and "IRON LOSS". The legend "NP" is the number of shield small pieces 30P that the first shield member 30 was divided (i.e. the number of shield small portions 30P included in the first shield member 30). For example, the legend "NP9" means that the first shield member 30 is divided into nine shield small pieces 30, and the legend "NP12" means that the first shield member 30 is divided into twelve shield small pieces 30. Note, however, that the legend "NP1" means that the first shield member 30 is not divided.

### (Comparison between Example 5 and Example 6)

Fig. 53 shows the Q values of the coil units 5 of Examples 5-1 to 5-5 and Examples 6-1 to 6-5. In Fig. 53, the legends "E5-1 to E5-5" mean Examples 5-1 to 5-5, respectively. Further, in Fig. 53, the legends "E6-1 to E6-5" mean Examples 6-1 to 6-5, respectively. It can be seen from Fig. 53 that the Q value of a coil unit 5 including a coil 10 having an octagonal shape as a whole is higher than the Q value of a coil unit 5 including a coil 10 having a quadrangular shape as a whole and including first intermediate curved portions 151G to 154G, as long as the other conditions are the same.

### <<Example 7>>

The following explains differences in performance of a coil unit 5 between a case where the coil 10 has a plate shape and a case where the coil 10 is a Litz wire coil.

### <Example 7-1>

A coil unit 5 of Example 7-1 was fabricated in the same manner as in the case of Example 3-2. The distance between the first shield member 30 and the second shield member 40 was 1 mm as in the case of Example 3-2.

### <Example 7-2>

A coil unit 5 of Example 7-2 was fabricated in the same manner as in the case of Example 7-1 except that the distance between the first shield member 30 and the second shield member 40 was 10 mm.

### <Example 7-3>

A coil unit 5 of Example 7-3 was fabricated in the same manner as in the case of Example 3-5. The distance between the first shield member 30 and the second shield member 40 was 1 mm as in the case of Example 7-1.

### <Example 7-4>

A coil unit 5 of Example 7-4 was fabricated in the same manner as in the case of Example 7-3 except that the distance between the first shield member 30 and the second shield member 40 was 10 mm.

### <Comparative Example 7-1>

A coil unit 5 of Comparative Example 7-1 was fabricated in the same manner as in the case of Example 7-1 except that the coil 10 was formed by a Litz wire. The Litz wire used was one obtained by twisting together 1,600 enamel wires each having a diameter of 0.05 mm. The coil 10 was composed of a single coil element having eight turn portions 101 to 108. The distance between adjacent turn portions 101 and 102, ..., and 107 and 108 was 6 mm. The dimensions of the coil 10 along the first direction D1 and the second direction D2 were 295 mm and 295 mm, respectively.

The magnetic resin layer 20 was in direct contact with the Litz wire. However, the magnetic resin layer 20 and an electric conductor of the Litz wire were not in direct contact with each other, as the Litz wire was constituted by the enamel wires.

The distance between the first shield member 30 and the second shield member 40 was 1 mm as in the case of Example 7-1.

The shape and dimensions of the contours of the coil 10 of Comparative Example 7-1 were substantially the same as the contours of the coil 10 of Example 7-1 when seen in the axial direction.

### <Comparative Example 7-2>

A coil unit 5 of Comparative Example 7-2 was fabricated in the same manner as in the case of Comparative Example 7-1 except that the distance between the first shield member 30 and the second shield member 40 was 10 mm.

### <Comparative Example 7-3>

A coil unit 5 of Comparative Example 7-3 was fabricated in the same manner as in the case of Example 7-3 except that the coil 10 was formed by a Litz wire. The coil 10 was fabricated in the same manner as the coil 10 of Comparative Example 7-1.

The distance between the first shield member 30 and the second shield member 40 was 1 mm as in the case of Example 7-1.

### <Comparative Example 7-4>

A coil unit 5 of Comparative Example 7-4 was fabricated in the same manner as in the case of Comparative Example 7-3 except that the distance between the first shield member 30 and the second shield member 40 was 10 mm.

### (Evaluation)

The Q value of each of the coil units 5 of Examples 7-1 to 7-4 and Comparative Examples 7-1 to 7-4 thus fabricated were measured by passing a high-frequency current of 85 kHz through the coil 10 of the coil unit 5. Fig. 54 shows the results of the measurements. Fig. 55 shows changes in Q value due to differences in distance between the first shield member 30 and the second shield member 40. In Figs. 54 and 55, the legend "SLD1" means the first shield member 30, and the legend "SLD2" means the second shield member 40.

Further, each of Figs 54 and 55 illustrates forms of division of the first shield member 30. In each of Figs. 54 and 55, (a) indicates a form of division of the shield member 30 of each of Examples 7-1 and 7-2 and Comparative Examples 7-1 and 7-2. In each of Figs. 54 and 55, (b) indicates a form of division of the shield member 30 of each of Examples 7-3 and 7-4 and Comparative Examples 7-3 and 7-4. In (a) and (b) of each of Figs. 54 and 55, the first shield 30 and the shield small pieces 30P are indicated by solid lines, and the contour lines of the coil 10 are indicated by dashed lines. (a) and (b) of each of Figs. 54 and 55 are views of the first shield member 30 and the coil 10 as seen in the axial direction.

As shown in Fig. 54, the Q values of the coil units 5 of Examples 7-1 to 7-4 are 110, 150, 187, and 205, respectively. Further, the Q values of the coil units 5 of Comparative Examples 7-1 to 7-4 are 300, 396, 335, and 426, respectively.

Fig. 55 shows a result of comparison between Example 7-1 and Example 7-2, a result of comparison between Example 7-3 and Example 7-4, a result of comparison between Comparative Example 7-1 and Comparative Example 7-2, and a result of comparison between Comparative Example 7-3 and Comparative Example 7-4. As shown in Fig. 55, the Q value of Example 7-1 is 73% of the Q value of Example 7-2. The Q value of Example 7-3 is 91% of the Q value of Example 7-4. The Q value of Comparative Example 7-1 is 76% of the Q value of Comparative Example 7-2. The Q value of Comparative Example 7-3 is 79% of the Q value of Comparative Example 7-4.

The following can be seen from the result of comparison between Example 7-1 and Example 7-2 and the result of comparison between Comparative Example 7-1 and Comparative Example 7-2 of Fig. 55. That is, in a case where the form of division of the first shield member 30 is (a) and where the distance between the first shield member 30 and the second shield member 40 is changed from 10 mm to 1 mm, the decrease in Q value in a case where the coil 10 is formed by a Litz wire and the decrease in Q value in a case where the coil 10 is formed by a plate-shaped coil element 10i as in the case of the aforementioned embodiments are about the same.

The following can be seen from the result of comparison between Example 7-3 and Example 7-4 and the result of comparison between Comparative Example 7-3 and Comparative Example 7-4 of Fig. 55. That is, in a case where the form of division of the first shield member 30 is (b) and where the distance between the first shield member 30 and the second shield member 40 is changed from 10 mm to 1 mm, the decrease in Q value in a case where the coil 10 is formed by a plate-shaped coil element 10i as in the case of the aforementioned embodiments is remarkably less than the decrease in Q value in a case where the coil 10 is formed by a Litz wire.

### <<Example 8>>

The following explains differences in performance of a coil unit 5 between a case where the coil 10 was formed into a regular octagonal shape as a whole and a case where the coil 10 was formed into an octagonal shape other than a regular octagonal shape.

Fig. 56 is a diagram showing the coil unit 5 shown in Fig. 44, together with an inner contour line OL of the coil 10. The inner contour line OL is along the linear portions 11 to 13 and the first intermediate linear portions 161 to 164 of the linear portions that constitute the first turn portions 101 of the coil elements 10j and 10jj. Let it be assumed that a is the length of one of the eight sides of the inner contour line OL that is parallel to the linear portions 11, 12, or 13 and that b is the length of one of the eight sides of the inner contour line OL that is parallel to the first intermediate linear portions 161, 162, 163, or 164. The following explains, with reference to Figs. 57 to 63, differences in performance of the coil unit 5 in a case where the length a and the length b are changed without changes in the dimensions of the inner contour line OL in the first direction D1 and the second direction D2. In each of Figs. 57 to 60, the line SS indicates a regular quadrangle. The dimensions of the regular quadrangle SS in the first direction D1 and the second direction D2 are the same as the dimensions of the inner contour line OL in the first direction D1 and the second direction D2. The dimensions of the regular quadrangle SS in the first direction D1 and the second direction D2 shown in each of Figs. 57 to 60 are equal to each other. In other words, the dimensions of the inner contour line OL in the first direction D1 and the second direction D2 shown in each of Figs. 57 to 60 are equal to each other.

### <Example 8-1>

As coil units 5 of Example 8-1, two coil units fabricated in the same manner as the coil unit 5 of Example 4-1 were prepared. As shown in Fig. 57, the lengths a and b of the inner contour line OL of each of the coils 10 were equal to each other. In other words, each of the coils 10 was formed in a regular octagonal shape as a whole when seen in the axial direction. The length b was 57.7 mm.

Next, with one of the coil units 5 of Example 8-1 thus fabricated being a power transmission coil unit and the other being a power receiving coil unit, the power transmission coil unit 5 and the power receiving coil unit 5 were placed such that the coil 10 of the power transmission coil unit 5 and the coil 10 of the power receiving coil unit 5 faced each other. Next, the power transmission coil unit 5 and the power receiving coil unit 5 was electromagnetically coupled to each other by passing a high-frequency current of 85 kHz through the coil 10 of the power transmission coil unit 5. Then, the Q value of the power transmission coil unit 5 and the coefficient of coupling of the power transmission coil unit 5 were measured with the power transmission coil unit 5 and the power receiving coil unit 5 electromagnetically coupled to each other.

### <Example 8-2>

Two coil units 5 fabricated in the same manner as in the case of Example 8-1 except that the length b was longer than the length a as shown in Fig. 58 were prepared as coil units of Example 8-2. The length b was 70 mm.

Next, with one of the coil units 5 of Example 8-2 thus fabricated being a power transmission coil unit and the other being a power receiving coil unit, the power transmission coil unit 5 and the power receiving coil unit 5 were placed such that the coil 10 of the power transmission coil unit 5 and the coil 10 of the power receiving coil unit 5 faced each other. Next, the power transmission coil unit 5 and the power receiving coil unit 5 was electromagnetically coupled to each other by passing a high-frequency current of 85 kHz through the coil 10 of the power transmission coil unit 5. Then, the Q value of the power transmission coil unit 5 and the coefficient of coupling of the power transmission coil unit 5 were measured with the power transmission coil unit 5 and the power receiving coil unit 5 electromagnetically coupled to each other.

### <Example 8-3>

Two coil units 5 fabricated in the same manner as in the case of Example 8-1 except that the length b was shorter than the length a as shown in Fig. 59 were prepared as coil units of Example 8-3. The length b was 40 mm.

Next, with one of the coil units 5 of Example 8-3 thus fabricated being a power transmission coil unit and the other being a power receiving coil unit, the power transmission coil unit 5 and the power receiving coil unit 5 were placed such that the coil 10 of the power transmission coil unit 5 and the coil 10 of the power receiving coil unit 5 faced each other. Next, the power transmission coil unit 5 and the power receiving coil unit 5 was electromagnetically coupled to each other by passing a high-frequency current of 85 kHz through the coil 10 of the power transmission coil unit 5. Then, the Q value of the power transmission coil unit 5 and the coefficient of coupling of the power transmission coil unit 5 were measured with the power transmission coil unit 5 and the power receiving coil unit 5 electromagnetically coupled to each other.

### <Example 8-4>

Two coil units 5 fabricated in the same manner as in the case of Example 8-1 except that the length b was even shorter than it was in Example 8-3 as shown in Fig. 60 were prepared as coil units of Example 8-4. The length b was 20 mm.

Next, with one of the coil units 5 of Example 8-4 thus fabricated being a power transmission coil unit and the other being a power receiving coil unit, the power transmission coil unit 5 and the power receiving coil unit 5 were placed such that the coil 10 of the power transmission coil unit 5 and the coil 10 of the power receiving coil unit 5 faced each other. Next, the power transmission coil unit 5 and the power receiving coil unit 5 was electromagnetically coupled to each other by passing a high-frequency current of 85 kHz through the coil 10 of the power transmission coil unit 5. Then, the Q value of the power transmission coil unit 5 and the coefficient of coupling of the power transmission coil unit 5 were measured with the power transmission coil unit 5 and the power receiving coil unit 5 electromagnetically coupled to each other.

Fig. 61 shows the Q values of the coil units 5 of Examples 8-1 to 8-4. Fig. 62 shows the coefficients of coupling of the coil units 5 of Examples 8-1 to 8-4. Fig. 63 shows the products of the coefficients of coupling and the Q values of the coil units 5 of Examples 8-1 to 8-4. In Figs. 61 to 63, the legends "E8-1 to E8-4" mean Examples 8-1 to 8-4, respectively. It can be seen from Figs. 61 to 63 that in a case where the lengths a and b of the inner contour line OL of a coil 10 are equal to each other (i.e. a case where the coil 10 is formed in a regular octagonal shape when seen in the axial direction), the Q value, coefficient of coupling, and product of the coefficient of coupling and the Q value of the coil unit 5 are all high.

A coil unit 5 according to the first embodiment described above and the modifications thereof includes a coil 10, a magnetic resin layer 20, a first shield member 30, and a second shield member 40. The coil 10 includes a coil element 10i or coil elements 10j and 10jj formed into a spiral shape around an arbitrary central axis line C. The coil 10 has a first principal surface 10a and a second principal surface 10b that is a surface opposite to the first principal surface 10a. The magnetic resin layer 20 is in direct contact with the second principal surface 10b of the coil 10. A combination of the coil 10 and the magnetic resin layer 20, the first shield member 30, and the second shield member 40 are stacked in this order in a direction from the first principal surface 10a toward the second principal surface 10b. The first shield member 30 is divided into a plurality of shield small pieces 30P. Such a coil unit 5 makes it easier to fabricate the first shield member 30, as the first shield member 30 is divided into the plurality of shield small pieces 30P. This contributes to improvement in efficiency in the manufacture of the coil unit 5. Further, as mentioned above, the coil unit 5 includes the magnetic resin layer 20, which is in direct contact with the second principal surface 10b of the coil 10. This makes it possible to suppress an increase in loss (heat generation) of the coil unit 5 due to the presence of a gap 50 formed in the first shield member 30 and/or due to reduced distance between the first shield member 30 and the second shield member 40. This makes it possible to reduce the dimensions of the coil unit 5 while suppressing an increase in loss of the coil unit 5.

Further, in the coil unit 5 according to the first embodiment described above and the modifications thereof, the coil element 10i or each of the coil elements 10j and 10jj includes an electric conductor 10E having a spiral shape. The magnetic resin layer 20 is in direct contact with the electric conductor 10E.

Further, in the coil unit 5 according to the first embodiment described above and the modifications thereof, the first shield member 30 contains ferrite.

Further, in the coil unit 5 according to the first embodiment described above and the modifications thereof, a distance between the first shield member 30 and the second shield member 40 may be 2 mm or shorter. In the embodiment described above and the modifications thereof, an increase in loss of the coil unit 5 caused by bringing the second shield member 40 close to the first shield member 30 can be suppressed by the coil unit 5 including the magnetic resin layer 20 in direct contact with the second principal surface 10b of the coil 10. Accordingly, the dimension of the coil unit 5 along the axial direction can be reduced by placing the first shield member 30 and the second shield member 40 at a distance of 2 mm or shorter from each other.

Further, in the coil unit 5 according to the first embodiment described above and the modifications thereof, a thermally conductive member 45 is placed between the first shield member 30 and the second shield member 40. In this case, the spacer 45 can promote radiation of heat from the coil unit 5.

Further, in the coil unit 5 according to the first embodiment described above and the modifications thereof, the coil element 10i or each of the coil elements 10j and 10jj includes a first linear portion group 11G composed of a plurality of first linear portions 11 arrayed in a radial direction and extending in a first direction D1 and a second linear portion group 12G composed of a plurality of second linear portions 12 arrayed in the radial direction and extending in a second direction D2 that is not parallel with the first direction D1, each of the second linear portions 12 being connected to one of the first linear portions 11 that is adjacent to thereto. The first shield member 30 has formed therein a gap 50 that linearly extends through a space between adjacent ones of the shield small pieces 30P and that crosses at least part of the first linear portion group 11G when seen in an axial direction. Such a coil unit 5 makes it possible to effectively suppress an increase in loss (heat generation) of the coil unit 5 due to the presence of the gap 50 formed in the first shield member 30. This makes it possible to effectively reduce the dimensions of the coil unit 5 while suppressing an increase in loss of the coil unit 5.

Further, in the coil unit 5 according to the first embodiment described above and the modifications thereof, the gap 50 and the at least part of the first linear portion group 11G form an angle of 80 degrees to 100 degrees when seen in the axial direction. This makes it possible to effectively suppress an increase in loss (heat generation) of the coil unit 5 due to the presence of the aforementioned gap 50 and effectively suppress a decrease in performance of the coil unit 5 due to the presence of the aforementioned gap 50.

Further, in the coil unit 5 according to the first embodiment described above and the modifications thereof, the gap 50 and at least part of the first linear portion group 11G are orthogonal to each other when seen in the axial direction. This makes it possible to further effectively suppress an increase in loss (heat generation) of the coil unit 5 due to the presence of the aforementioned gap 50 and further effectively suppress a decrease in performance of the coil unit 5 due to the presence of the aforementioned gap 50.

Further, in the coil unit 5 according to the first embodiment described above and the modifications thereof, the gap 50 extends from a position that is further inward in the radial direction than is the first linear portion group 11G to a position that is further outward in the radial direction than is the first linear portion group 11G.

Further, in the coil unit 5 according to the first embodiment described above and the modifications thereof, the gap 50 extends through a space between the second linear portion group 12G and the central axis line C when seen in the axial direction. Such a coil unit 5 makes it possible to effectively suppress an increase in loss (heat generation) of the coil unit 5 due to the presence of the gap 50 formed in the first shield member 30. This makes it possible to effectively reduce the dimensions of the coil unit 5 while suppressing an increase in loss of the coil unit 5.

Further, in the coil unit 5 according to the first embodiment described above and the modifications thereof, the gap 50 or an extension thereof overlaps the central axis line C when seen in the axial direction. Such a coil unit 5 makes it possible to effectively suppress an increase in loss (heat generation) of the coil unit 5 due to the presence of the gap 50 formed in the first shield member 30. This makes it possible to effectively reduce the dimensions of the coil unit 5 while suppressing an increase in loss of the coil unit 5.

Further, in the coil unit 5 according to the first embodiment described above and the modifications thereof, the first shield member 30 has formed therein a different gap 50 that linearly extends through a space between adjacent ones of the shield small pieces 30P and that extends through the first linear portion group 11G along the first linear portions 11 when seen in the axial direction. The different gap 50 extends over an area that is closer to the central axis line C than is one of the first linear portions 11 whose ordinal number as counted from an innermost one of the first linear portions 11 assumes a minimum integer value that is greater than or equal to a value obtained by dividing a total number of the first linear portions 11 by 3. Such a coil unit 5 makes it possible to effectively suppress an increase in loss (heat generation) of the coil unit 5 due to the presence of the gap 50 formed in the first shield member 30. This makes it possible to effectively reduce the dimensions of the coil unit 5 while suppressing an increase in loss of the coil unit 5.

Further, in the coil unit 5 according to the first embodiment described above and the modifications thereof, the first shield member 30 has formed therein a different gap 50 that linearly extends through a space between adjacent ones of the shield small pieces 30P and that extends through the second linear portion group 12G along the second linear portions 12 when seen in the axial direction. The different gap 50 extends over an area that is closer to the central axis line C than is one of the second linear portions 12 whose ordinal number as counted from an innermost one of the second linear portions 12 assumes a minimum integer value that is greater than or equal to a value obtained by dividing a total number of the second linear portions 12 by 3. Such a coil unit 5 makes it possible to effectively suppress an increase in loss (heat generation) of the coil unit 5 due to the presence of the gap 50 formed in the first shield member 30. This makes it possible to effectively reduce the dimensions of the coil unit 5 while suppressing an increase in loss of the coil unit 5.

Further, in the coil unit 5 according to the first embodiment described above and the modifications thereof, the first shield member 30 has formed therein a different gap 50 that linearly extends through a space between adjacent ones of the shield small pieces 30P and that extends through the first linear portion group 11G along the first linear portions 11 when seen in the axial direction. The different gap 50 extends over an area that is further away from the central axis line C than is one of the first linear portions 11 whose ordinal number as counted from an outermost one of the first linear portions 11 assumes a minimum integer value that is greater than or equal to a value obtained by dividing a total number of the first linear portions 11 by 3. Such a coil unit 5 makes it possible to effectively suppress an increase in loss (heat generation) of the coil unit 5 due to the presence of the gap 50 formed in the first shield member 30. This makes it possible to effectively reduce the dimensions of the coil unit 5 while suppressing an increase in loss of the coil unit 5.

Further, in the coil unit 5 according to the first embodiment described above and the modifications thereof, the first shield member 30 has formed therein a different gap 50 that linearly extends through a space between adjacent ones of the shield small pieces 30P and that extends through the second linear portion group 12G along the second linear portions 12 when seen in the axial direction. The different gap 50 extends over an area that is further away from the central axis line C than is one of the second linear portions 12 whose ordinal number as counted from an outermost one of the second linear portions 12 assumes a minimum integer value that is greater than or equal to a value obtained by dividing a total number of the second linear portions 12 by 3. Such a coil unit 5 makes it possible to effectively suppress an increase in loss (heat generation) of the coil unit 5 due to the presence of the gap 50 formed in the first shield member 30. This makes it possible to effectively reduce the dimensions of the coil unit 5 while suppressing an increase in loss of the coil unit 5.

Further, in the coil unit 5 according to the first embodiment described above and the modifications thereof, the coil element 10i or each of the coil elements 10j and 10jj further includes a first linear portion group 11G, a second linear portion group 12G, and an intermediate curved portion group 151G. The first linear portion group 12G is composed of a plurality of first linear portions 11 arrayed in a radial direction and extending in a first direction D1. The second linear portion group 12G is composed of a plurality of second linear portions 12 arrayed in the radial direction and extending in a second direction D2 that is not parallel with the first direction D1. The intermediate curved portion group 151G placed between the first linear portion group 11G and the second linear portion group 12G and composed of a plurality of intermediate curved portions 151. Adjacent ends of the first and second linear portions 11 and 12 are connected to each other via the intermediate curved portions 151.

Further, in the coil unit 5 according to the first embodiment described above and the modifications thereof, the first shield member 30 has formed therein a gap 50 that linearly extends through a space between adjacent ones of the shield small pieces 30P. The gap 50 crosses at least part of the intermediate curved portion group 151G when seen in an axial direction. Such a coil unit 5 makes it possible to effectively suppress an increase in loss (heat generation) of the coil unit 5 due to the presence of the gap 50 formed in the first shield member 30. This makes it possible to effectively reduce the dimensions of the coil unit 5 while suppressing an increase in loss of the coil unit 5.

Further, in the coil unit 5 according to the first embodiment described above and the modifications thereof, the gap 50 and a tangent line TL1 to the at least part of the intermediate curved portion group 151G form an angle of 80 degrees to 100 degrees when seen in the axial direction. This makes it possible to effectively suppress an increase in loss (heat generation) of the coil unit 5 due to the presence of the aforementioned gap 50 and effectively suppress a decrease in performance of the coil unit 5 due to the presence of the aforementioned gap 50.

Further, in the coil unit 5 according to the first embodiment described above and the modifications thereof, the gap 50 and the tangent line TL1 are orthogonal to each other when seen in the axial direction. This makes it possible to further effectively suppress an increase in loss (heat generation) of the coil unit 5 due to the presence of the aforementioned gap 50 and further effectively suppress a decrease in performance of the coil unit 5 due to the presence of the aforementioned gap 50.

Further, in the coil unit 5 according to the first embodiment described above and the modifications thereof, the coil element 10i or each of the coil elements 10j and 10jj further includes a first linear portion group 11G, a second linear portion group 12G, and a first intermediate linear portion group 161G. The first linear portion group 11G is composed of a plurality of first linear portions 11 arrayed in a radial direction and extending in a first direction D1. The second linear portion group 12G is composed of a plurality of second linear portions 12 arrayed in the radial direction and extending in a second direction D2 that is not parallel with the first direction D1. The first intermediate linear portion group 161G is placed between the first linear portion group 11G and the second linear portion group 12G and composed of a plurality of first intermediate linear portions 161. Adjacent ends of the first and second linear portions 11 and 12 are connected to each other via the first intermediate linear portions 161.

Further, in the coil unit 5 according to the first embodiment described above and the modifications thereof, each of the first linear portions 11 and a corresponding one of the first intermediate linear portions 161 form an angle of 125 degrees to 145 degrees when seen in an axial direction. Further, each of the second linear portions 12 and a corresponding one of the first intermediate linear portions 161 form an angle of 125 degrees to 145 degrees when seen in the axial direction. This makes it possible to effectively suppress a decrease in performance of the coil unit 5 due to the presence of the aforementioned gap 50.

Further, in the coil unit 5 according to the first embodiment described above and the modifications thereof, each of the first linear portions 11 and a corresponding one of the first intermediate linear portions 161 form an angle of 135 degrees when seen in an axial direction. Further, each of the second linear portions 12 and a corresponding one of the first intermediate linear portions 161 form an angle of 135 degrees when seen in the axial direction. This makes it possible to further effectively suppress a decrease in performance of the coil unit 5 due to the presence of the aforementioned gap 50.

Further, in the coil unit 5 according to the first embodiment described above and the modifications thereof, the coil element 10i or each of the coil elements 10j and 10jj has an octagonal shape as a whole. This makes it possible to effectively suppress a decrease in performance of the coil unit 5 due to the presence of the aforementioned gap 50.

Further, in the coil unit 5 according to the first embodiment described above and the modifications thereof, the coil element 10i or each of the coil elements 10j and 10jj has a regular octagonal shape as a whole. This makes it possible to further effectively suppress a decrease in performance of the coil unit 5 due to the presence of the aforementioned gap 50.

Further, in the coil unit 5 according to the first embodiment described above and the modifications thereof, the first shield member 30 has formed therein a gap 50 that linearly extends through a space between adjacent ones of the shield small pieces 30P. The gap 50 crosses at least part of the first intermediate linear portion group 161G when seen in an axial direction. Such a coil unit 5 makes it possible to effectively suppress an increase in loss (heat generation) of the coil unit 5 due to the presence of the gap 50 formed in the first shield member 30. This makes it possible to effectively reduce the dimensions of the coil unit 5 while suppressing an increase in loss of the coil unit 5.

Further, in the coil unit 5 according to the first embodiment described above and the modifications thereof, the gap 50 and the at least part of the first intermediate linear portion group 161G form an angle of 80 degrees to 100 degrees when seen in the axial direction. This makes it possible to effectively suppress an increase in loss (heat generation) of the coil unit 5 due to the presence of the aforementioned gap 50 and effectively suppress a decrease in performance of the coil unit 5 due to the presence of the aforementioned gap 50.

Further, in the coil unit 5 according to the first embodiment described above and the modifications thereof, the gap 50 and the at least part of the first intermediate linear portion group 161G are orthogonal to each other when seen in the axial direction. This makes it possible to further effectively suppress an increase in loss (heat generation) of the coil unit 5 due to the presence of the aforementioned gap 50 and further effectively suppress a decrease in performance of the coil unit 5 due to the presence of the aforementioned gap 50.

Further, in the coil unit 5 according to the first embodiment described above and the modifications thereof, the coil element 10i or each of the coil elements 10j and 10jj further includes a first linear portion group 11G, a second linear portion group 12G, a first intermediate linear portion group 161G, and a second intermediate linear portion group 171G. The first linear portion group 11G is composed of a plurality of first linear portions 11 arrayed in a radial direction and extending in a first direction D1. The second linear portion group 12G is composed of a plurality of second linear portions 12 arrayed in the radial direction and extending in a second direction D2 that is not parallel with the first direction D1. The first intermediate linear portion group 161G is placed between the first linear portion group 11G and the second linear portion group 12G and composed of a plurality of first intermediate linear portions 161. The second intermediate linear portion group 171G is placed between the first intermediate linear portion group 161G and the second linear portion group 12G and composed of a plurality of second intermediate linear portions 171. Adjacent ends of the first and second linear portions 11 and 12 are connected to each other via the first intermediate linear portions 161. Adjacent ends of the first intermediate linear portions 161 and the second linear portions 12 are connected to each other via the second intermediate linear portions 171.

Further, in the coil unit 5 according to the first embodiment described above and the modifications thereof, each of the first linear portions 11 and a corresponding one of the first intermediate linear portions 161 form an angle of 140 degrees to 160 degrees when seen in an axial direction. Further, each of the first intermediate linear portions 161 and a corresponding one of the second intermediate linear portions 171 form an angle of 140 degrees to 160 degrees when seen in the axial direction. Further, each of the second intermediate linear portions 171 and a corresponding one of the second linear portions 12 form an angle of 140 degrees to 160 degrees when seen in the axial direction. This makes it possible to effectively suppress a decrease in performance of the coil unit 5 due to the presence of the aforementioned gap 50.

Further, in the coil unit 5 according to the first embodiment described above and the modifications thereof, each of the first linear portions 11 and a corresponding one of the first intermediate linear portions 161 form an angle of 150 degrees when seen in an axial direction. Further, each of the first intermediate linear portions 161 and a corresponding one of the second intermediate linear portions 171 form an angle of 150 degrees when seen in the axial direction. Further, each of the second intermediate linear portions 171 and a corresponding one of the second linear portions 12 form an angle of 150 degrees when seen in the axial direction. This makes it possible to further effectively suppress a decrease in performance of the coil unit 5 due to the presence of the aforementioned gap 50.

Further, in the coil unit 5 according to the first embodiment described above and the modifications thereof, the coil element 10i or each of the coil elements 10j and 10jj has a dodecagonal shape as a whole. This makes it possible to further effectively suppress a decrease in performance of the coil unit 5 due to the presence of the aforementioned gap 50.

Further, in the coil unit 5 according to the first embodiment described above and the modifications thereof, the coil element 10i or each of the coil elements 10j and 10jj has a regular dodecagonal shape as a whole. This makes it possible to further effectively suppress a decrease in performance of the coil unit 5 due to the presence of the aforementioned gap 50.

Further, in the coil unit 5 according to the first embodiment described above and the modifications thereof, the first shield member 30 has formed therein a gap 50 that linearly extends through a space between adjacent ones of the shield small pieces 30P. The gap 50 crosses at least part of the first intermediate linear portion group 161G or at least part of the second intermediate linear portion group 171G when seen in an axial direction. Such a coil unit 5 makes it possible to effectively suppress an increase in loss (heat generation) of the coil unit 5 due to the presence of the gap 50 formed in the first shield member 30. This makes it possible to effectively reduce the dimensions of the coil unit 5 while suppressing an increase in loss of the coil unit 5.

Further, in the coil unit 5 according to the first embodiment described above and the modifications thereof, the gap 50 and the at least part of the first intermediate linear portion group 161G or the at least part of the second intermediate linear portion group 171G form an angle of 80 degrees to 100 degrees when seen in the axial direction. This makes it possible to effectively suppress an increase in loss (heat generation) of the coil unit 5 due to the presence of the aforementioned gap 50 and effectively suppress a decrease in performance of the coil unit 5 due to the presence of the aforementioned gap 50.

Further, in the coil unit 5 according to the first embodiment described above and the modifications thereof, the gap 50 and the at least part of the first intermediate linear portion group 161G or the at least part of the second intermediate linear portion group 171G are orthogonal to each other when seen in the axial direction. This makes it possible to further effectively suppress an increase in loss (heat generation) of the coil unit 5 due to the presence of the aforementioned gap 50 and further effectively suppress a decrease in performance of the coil unit 5 due to the presence of the aforementioned gap 50.

Further, in the coil unit 5 according to the first embodiment described above and the modifications thereof, the first shield member 30 has formed therein a gap 50 that linearly extends through a space between adjacent ones of the shield small pieces 30P. The gap 50 crosses at least part of the coil element 10i or each of the coil elements 10j and 10jj when seen in an axial direction When seen in the axial direction, the gap 50 intersects at least one of turn portions 101 to 108, 101 to 105, or 101 to 107 forming the coil element 10i or each of the coil elements 10j and 10jj. At a point of intersection of the gap 50 and the turn portion 101 to 108, 101 to 105, or 101 to 107, the gap 50 and the turn portion 101 to 108, 101 to 105, or 101 to 107 or a tangent line TL1, TL2, TL3, or TL4 to the turn portion 101 to 108, 101 to 105, or 101 to 107 form an angle of 80 degrees to 100 degrees when seen in the axial direction. This makes it possible to effectively suppress an increase in loss (heat generation) of the coil unit 5 due to the presence of the aforementioned gap 50 and effectively suppress a decrease in performance of the coil unit 5 due to the presence of the aforementioned gap 50.

Further, in the coil unit 5 according to the first embodiment described above and the modifications thereof, at the point of intersection of the gap 50 and the turn portion 101 to 108, 101 to 105, or 101 to 107, the gap 50 is orthogonal to the turn portion 101 to 108, 101 to 105, or 101 to 107 or the tangent line TL1, TL2, TL3, or TL4 to the turn portion 101 to 108, 101 to 105, or 101 to 107 when seen in the axial direction. This makes it possible to further effectively suppress an increase in loss (heat generation) of the coil unit 5 due to the presence of the aforementioned gap 50 and further effectively suppress a decrease in performance of the coil unit 5 due to the presence of the aforementioned gap 50.

Further, the coil unit 5 according to the first embodiment described above and the modifications thereof further includes a first connection terminal 46 connected to the coil 10. The coil 10 has an inward end 10e1 that is close to the central axis line C and an outward end 10e2 that is far away from the central axis line C. The first connection terminal 46 is connected to the inward end 10e1 and extends from inside toward outside the coil 10. The first shield member 30 has formed therein a gap 50 that linearly extends through a space between adjacent ones of the shield small pieces 30P. The gap 50 extends from inside toward outside the coil 10. When seen in an axial direction, the first connection terminal 46 extends through the gap 50 or through a notch N formed in one of the shield small pieces 30P. This makes it possible to suppress a loss (heat generation) of the shield small piece 30P.

Further, in the coil unit 5 according to the first embodiment described above and the modifications thereof, the first connection terminal 46 extends from inside toward outside the coil 10 at such a height position as to overlap the shield small piece 30P in a side view of the coil unit 5.

Further, in the coil unit 5 according to the first embodiment described above and the modifications thereof, the coil element 10i or each of the coil elements 10j and 10jj has a plurality of turn portions 101 to 108, 101 to 105, or 101 to 107 arranged in a radial direction. At a point of intersection of the first connection terminal 46 and each of the turn portions 101 to 108, 101 to 105, or 101 to 107, the first connection terminal 46 and the turn portion 101 to 108, 101 to 105, or 101 to 107 or a tangent line TL1, TL2, TL3, or TL4 to the turn portion 101 to 108, 101 to 105, or 101 to 107 form an angle of 80 degrees to 100 degrees when seen in the axial direction. This makes it possible to effectively suppress an increase in loss (heat generation) of the coil unit 5 due to the presence of the gap 50 or the notch N through which the first connection terminal 46 extends and effectively suppress a decrease in performance of the coil unit 5 due to the presence of the gap 50 or the notch N through which the first connection terminal 46 extends.

Further, in the coil unit 5 according to the first embodiment described above and the modifications thereof, at a point of intersection of the first connection terminal 46 and each of the turn portions 101 to 108, 101 to 105, or 101 to 107, the first connection terminal 46 is orthogonal to the turn portion 101 to 108, 101 to 105, or 101 to 107 or a tangent line TL1, TL2, TL3, or TL4 to the turn portion 101 to 108, 101 to 105, or 101 to 107 when seen in the axial direction. This makes it possible to further effectively suppress an increase in loss (heat generation) of the coil unit 5 due to the presence in the first shield member 30 of the gap 50 or the notch N through which the first connection terminal 46 extends and further effectively suppress a decrease in performance of the coil unit 5 due to the presence of the gap 50 or the notch N.

Further, in the coil unit 5 according to the first embodiment described above and the modifications thereof, the coil element 10i or each of the coil elements 10j and 10jj further includes linear portion groups 11G to 14G, 11G to 13G, 11G to 14G and 161G to 164G, 11G to 13G and 161G to 164G, or 11G to 14G and 161G to 164G and 171G to 174G. The linear portion groups 11G to 14G, 11G to 13G, 11G to 14G and 161G to 164G, 11G to 13G and 161G to 164G, or 11G to 14G and 161G to 164G and 171G to 174G are composed of pluralities of linear portions 11 to 14, 11 to 13, 11 to 14 and 161 to 164, 11 to 13 and 161 to 164, or 11 to 14 and 161 to 164 and 171 to 174 arrayed in a radial direction and extending in an identical direction, respectively. The first connection terminal 46 intersects any of the linear portion groups 11G to 14G, 11G to 13G, 11G to 14G and 161G to 164G, 11G to 13G and 161G to 164G, or 11G to 14G and 161G to 164G and 171G to 174G when seen in the axial direction. This makes it possible to further effectively suppress an increase in loss (heat generation) of the coil unit 5 due to the presence in the first shield member 30 of the gap 50 or the notch N through which the first connection terminal 46 extends and further effectively suppress a decrease in performance of the coil unit 5 due to the presence of the gap 50 or the notch N.

Further, in the coil unit 5 according to the first embodiment described above and the modifications thereof, the first connection terminal 46 and any of the linear portion groups 11G to 14G, 11G to 13G, 11G to 14G and 161G to 164G, 11G to 13G and 161G to 164G, or 11G to 14G and 161G to 164G and 171G to 174G form an angle of 80 degrees to 100 degrees when seen in the axial direction. This makes it possible to effectively suppress an increase in loss (heat generation) of the coil unit 5 due to the presence in the first shield member 30 of the gap 50 or the notch N through which the first connection terminal 46 extends and effectively suppress a decrease in performance of the coil unit 5 due to the presence of the gap 50 or the notch N.

Further, in the coil unit 5 according to the first embodiment described above and the modifications thereof, the first connection terminal 46 is orthogonal to any of the linear portion groups 11G to 14G, 11G to 13G, 11G to 14G and 161G to 164G, 11G to 13G and 161G to 164G, or 11G to 14G and 161G to 164G and 171G to 174G when seen in the axial direction. This makes it possible to further effectively suppress an increase in loss (heat generation) of the coil unit 5 due to the presence in the first shield member 30 of the gap 50 or the notch N through which the first connection terminal 46 extends and further effectively suppress a decrease in performance of the coil unit 5 due to the presence of the gap 50 or the notch N.

Further, in the coil unit 5 according to the first embodiment described above and the modifications thereof, the coil element 10i or each of the coil elements 10j and 10jj further includes curved portion groups 151G to 154G. The curved portion groups 151G to 154G are composed of pluralities of curved portions 151 to 154 arrayed in a radial direction and extending parallel to each other, respectively. The first connection terminal 46 intersects any of the curved portion groups 151G to 154G when seen in the axial direction. This makes it possible to further effectively suppress an increase in loss (heat generation) of the coil unit 5 due to the presence in the first shield member 30 of the gap 50 or the notch N through which the first connection terminal 46 extends and further effectively suppress a decrease in performance of the coil unit 5 due to the presence of the gap 50 or the notch N.

Further, in the coil unit 5 according to the first embodiment described above and the modifications thereof, the first connection terminal 46 and a tangent line TL1, TL2, TL3, or TL4 to any of the curved portion groups 151G to 154G form an angle of 80 degrees to 100 degrees when seen in the axial direction. This makes it possible to effectively suppress an increase in loss (heat generation) of the coil unit 5 due to the presence in the first shield member 30 of the gap 50 or the notch N through which the first connection terminal 46 extends and effectively suppress a decrease in performance of the coil unit 5 due to the presence of the gap 50 or the notch N.

Further, in the coil unit 5 according to the first embodiment described above and the modifications thereof, the first connection terminal 46 is orthogonal to a tangent line TL1, TL2, TL3, or TL4 to any of the curved portion groups 151G to 154G when seen in the axial direction. This makes it possible to further effectively suppress an increase in loss (heat generation) of the coil unit 5 due to the presence in the first shield member 30 of the gap 50 or the notch N through which the first connection terminal 46 extends and further effectively suppress a decrease in performance of the coil unit 5 due to the presence of the gap 50 or the notch N.

Further, in the coil unit 5 according to the first embodiment described above and the modifications thereof, a point at which the first connection terminal 46 and an outer peripheral edge of the first shield member 30 overlap each other when seen in the axial direction is a first point IP1. Further, a point at which a second connection terminal 47 connected to the outward end 10e2 of the coil element 10i and the outer peripheral edge of the first shield member 30 overlap each other when seen in the axial direction is a second point IP2. An angle θ formed by a first imaginary line IL1 connecting the first point IP1 with the central axis line C and a second imaginary line IL2 connecting the second point IP2 with the central axis line C is 90 degrees or smaller. This makes it easier to route wires that are connected to the first connection terminal 46 and the second connection terminal 47.

Further, in the coil unit 5 according to the first embodiment described above and the modifications thereof, the angle θ formed by the first imaginary line IL1 and the second imaginary line IL2 is 45 degrees or smaller. This makes it even easier to route the wires that are connected to the first connection terminal 46 and the second connection terminal 47.

Further, in the coil unit 5 according to the first embodiment described above and the modifications thereof, a point at which the first connection terminal 46 and an outer peripheral edge of the first shield member 30 overlap each other when seen in the axial direction is a first point IP1. Further, a point at which a second connection terminal 47 connected to the outward end 10e2 of the coil element 10i and the outer peripheral edge of the first shield member 30 overlap each other when seen in the axial direction is a second point IP2. A distance between the first point IP1 and the second point IP2 is 100 mm or shorter. This makes it easier to route wires that are connected to the first connection terminal 46 and the second connection terminal 47.

Further, in the coil unit 5 according to the first embodiment described above and the modifications thereof, the distance between the first point IP1 and the second point IP2 is 50 mm or shorter. This makes it even easier to route the wires that are connected to the first connection terminal 46 and the second connection terminal 47.

Further, the coil unit 5 according to the first embodiment described above and the modifications thereof further includes a second connection terminal 47 connected to the coil 10. The second shield member 40 forms a quadrangular shape when seen in the axial direction. The first connection terminal 46 and the second connection terminal 47 extend out from an identical side of the second shield member 40. This makes it easier to route wires that are connected to the first connection terminal 46 and the second connection terminal 47.

Further, in the coil unit 5 according to the first embodiment described above and the modifications thereof, the coil element 10i circles around the central axis line C in a first circumferential direction CD from the outward end 10e2 toward the inward end 10e1. The outward end 10e2 is displaced in the first circumferential direction VD from the inward end 10e1. This makes it possible to, without causing an outward end region of the coil element 10i (in the example shown in Fig. 5B, the fourth linear portion 14 of the eighth turn portion) and the first connection terminal 46 to intersect each other when seen in the axial direction, extend the first connection terminal out of the coil 10 so that the first point IP1 and the second point IP2 come close to each other. A loss (heat generation) of the coil unit 5 can be reduced by the outward end region of the coil 10i and the first connection terminal 46 not intersecting each other.

Further, in the coil unit 5 according to the first embodiment described above and the modifications thereof, the coil element includes a first turn portion 101, a second turn portion 102, and a third turn portion 103. The first turn portion 101 includes the inward end 10e1. The second turn portion 102 is adjacent to the first turn portion 101 in a radial direction and is placed further outward in the radial direction than is the first turn portion 101. The third turn portion 103 is adjacent to the second turn portion 102 in the radial direction and is placed further outward in the radial direction than is the second turn portion 102. A distance between the inward end 10e1 and the second turn portion 102 is longer than a distance between the second turn portion 102 and the third turn portion 103. This makes it possible to suppress a loss (heat generation) of the coil unit 5.

Further, the coil unit 5 according to the first and embodiments described above and the modifications thereof includes a coil 10. The coil 10 includes a coil element 10i or coil elements 10j and 10jj formed into a spiral shape around an arbitrary central axis line C. The coil element 10i or each of the coil elements 10j and 10jj has an octagonal shape as a whole when seen in an axial direction. This makes it possible to improve the performance of the coil unit 5.

Further, in the coil unit 5 according to the first and second embodiments described above and the modifications thereof, the coil element 10i or each of the coil elements 10j and 10jj includes seven linear portion groups 11G to 13G and 161G to 164G extending along seven of eight sides of an octagon. Adjacent ones of the linear portion groups 11G to 13G and 161G to 164G form an angle of 125 degrees to 145 degrees. This makes it possible to effectively improve the performance of the coil unit 5.

Further, in the coil unit 5 according to the first and second embodiments described above and the modifications thereof, adjacent ones of the linear portion groups 11G to 13G and 161G to 164G form an angle of 135 degrees. This makes it possible to effectively improve the performance of the coil unit 5.

Further, in the coil unit 5 according to the first and second embodiments described above and the modifications thereof, the coil element 10i or each of the coil elements 10j and 10jj has a regular octagonal shape as a whole. Specifically, the coil element 10i or each of the coil elements 10j and 10jj includes seven linear portion groups 11G to 13G and 161G to 164G extending along seven of eight sides of a regular octagon. This makes it possible to effectively improve the performance of the coil unit 5.

Further, the coil unit 5 according to the first and second embodiments described above and the modifications thereof includes a coil 10. The coil 10 includes a coil element 10i or coil elements 10j and 10jj formed into a spiral shape around an arbitrary central axis line C. The coil element 10i or each of the coil elements 10j and 10jj has a dodecagonal shape as a whole when seen in an axial direction. This makes it possible to improve the performance of the coil unit 5.

Further, in the coil unit 5 according to the first and second embodiments described above and the modifications thereof, the coil element 10i or each of the coil elements 10j and 10jj includes eleven linear portion groups 11G to 13G, 161G to 164G, and 171G to 174G extending along eleven of twelve sides of a dodecagon. Adjacent ones of the linear portion groups 11G to 13G, 161G to 164G, and 171G to 174G form an angle of 140 degrees to 160 degrees. This makes it possible to effectively improve the performance of the coil unit 5.

Further, in the coil unit 5 according to the first and second embodiments described above and the modifications thereof, adjacent ones of the linear portion groups 11G to 13G, 161G to 164G, and 171G to 174G form an angle of 150 degrees. This makes it possible to effectively improve the performance of the coil unit 5.

Further, in the coil unit 5 according to the first and second embodiments described above and the modifications thereof, the coil element 10i or each of the coil elements 10j and 10jj has a regular dodecagonal shape as a whole. Specifically, the coil element 10i or each of the coil elements 10j and 10jj includes eleven linear portion groups 11G to 13G, 161G to 164G, and 171G to 174G extending along eleven of twelve sides of a regular dodecagon. This makes it possible to effectively improve the performance of the coil unit 5.

Further, the coil unit 5 according to the first and second embodiments described above and the modifications thereof includes a first shield member 30. The first shield member 30 is divided into a plurality of shield small pieces 30P. The first shied member 30 has formed therein a gap 50 that linearly extends through a space between adjacent ones of the shield small pieces 30P. The coil element 10i or each of the coil elements 10j and 10jj includes linear portion groups 11G to 14G, 11G to 13G, 11G to 14G and 161G to 164G, 11G to 13G and 161G to 164G, or 11G to 14G and 161G to 164G and 171G to 174G. The linear portion groups 11G to 14G, 11G to 13G, 11G to 14G and 161G to 164G, 11G to 13G and 161G to 164G, or 11G to 14G and 161G to 164G and 171G to 174G are composed of pluralities of linear portions 11 to 14, 11 to 13, 11 to 14 and 161 to 164, 11 to 13 and 161 to 164, or 11 to 14 and 161 to 164 and 171 to 174 arrayed in a radial direction and extending in an identical direction, respectively. The gap 50 crosses at least part of any of the linear portion groups 11G to 14G, 11G to 13G, 11G to 14G and 161G to 164G, 11G to 13G and 161G to 164G, or 11G to 14G and 161G to 164G and 171G to 174G when seen in the axial direction. Such a coil unit 5 makes it possible to effectively suppress an increase in loss (heat generation) of the coil unit 5 due to the presence of the gap 50 formed in the first shield member 30. This makes it possible to effectively reduce the dimensions of the coil unit 5 while suppressing an increase in loss of the coil unit 5.

Further, in the coil unit 5 according to the first and second embodiments described above and the modifications thereof, the gap 50 and the at least part of any of the linear portion groups 11G to 14G, 11G to 13G, 11G to 14G and 161G to 164G, 11G to 13G and 161G to 164G, or 11G to 14G and 161G to 164G and 171G to 174G form an angle of 80 degrees to 100 degrees when seen in the axial direction. This makes it possible to effectively suppress an increase in loss (heat generation) of the coil unit 5 due to the presence of the aforementioned gap 50 and effectively suppress a decrease in performance of the coil unit 5 due to the presence of the aforementioned gap 50.

Further, in the coil unit 5 according to the first and second embodiments described above and the modifications thereof, the gap 50 is orthogonal to the at least part of any of the linear portion groups 11G to 14G, 11G to 13G, 11G to 14G and 161G to 164G, 11G to 13G and 161G to 164G, or 11G to 14G and 161G to 164G and 171G to 174G when seen in the axial direction. This makes it possible to further effectively suppress an increase in loss (heat generation) of the coil unit 5 due to the presence of the aforementioned gap 50 and further effectively suppress a decrease in performance of the coil unit 5 due to the presence of the aforementioned gap 50.

A power transmission apparatus 1 and/or a power receiving apparatus 2 according to the first and second embodiments described above and the modifications thereof include(s) the aforementioned coil unit 5.

An electric power transfer system S according to the first and second embodiments described above and the modifications thereof includes a power transmission apparatus 1 and a power receiving apparatus 2. At least either the power transmission apparatus 1 or the power receiving apparatus 2 includes the aforementioned coil unit 5.

A movable body according to the first and second embodiments described above and the modifications thereof includes the aforementioned coil unit 5.

Several modifications to the aforementioned embodiments have been described above, and as a matter of course, it is possible to apply an appropriate combination of modifications.

### Reference Signs List

5 coil unit
10 coil
10i, 10j, 10jj coil element
11 first linear portion
11G first linear portion group
12 second linear portion
12G second linear portion group
13 third linear portion
13G third linear portion group
14 fourth linear portion
14G fourth linear portion group
16 turn connected portion
20 magnetic resin layer
30 first shield member
30P shield small piece
40 second shield member
45 spacer
46 first connection terminal
47 second connection terminal
50 gap
101 first turn portion
102 second turn portion
103 third turn portion
104 fourth turn portion
105 fifth turn portion
106 sixth turn portion
107 seventh turn portion
108 eighth turn portion
151 1Ath intermediate curved portion
151G 1Ath intermediate curved portion group
152 1Bth intermediate curved portion
152G 1Bth intermediate curved portion group
153 1Cth intermediate curved portion
153G 1Cth intermediate curved portion group
154 1Dth intermediate curved portion
154G 1Dth intermediate curved portion group
161 1Ath intermediate linear portion
161G 1Ath intermediate linear portion group
162 1Bth intermediate linear portion
162G 1Bth intermediate linear portion group
163 1Cth intermediate linear portion
163G 1Cth intermediate linear portion group
1614 1Dth intermediate linear portion
164G 1Dth intermediate linear portion group
171 2Ath intermediate linear portion
171G 2Ath intermediate linear portion group
172 2Bth intermediate linear portion
172G 2Bth intermediate linear portion group
173 2Cth intermediate linear portion
173G 2Cth intermediate linear portion group
174 2Dth intermediate linear portion
174G 2Dth intermediate linear portion group

## Claims

1. A coil unit comprising:
a coil including a coil element formed into a spiral shape around an arbitrary central axis line;
a magnetic resin layer;
a first shield member; and
a second shield member,
wherein
the coil has a first principal surface and a second principal surface that is a surface opposite to the first principal surface,
the magnetic resin layer is in direct contact with the second principal surface of the coil,
a combination of the coil and the magnetic resin layer, the first shield member, and the second shield member are stacked in this order in a direction from the first principal surface toward the second principal surface, and
the first shield member is divided into a plurality of shield small pieces.

2. The coil unit according to claim 1, wherein
the coil element includes an electric conductor having a spiral shape, and
the magnetic resin layer is in direct contact with the electric conductor.

3. The coil unit according to claim 1 or 2, wherein the first shield member contains ferrite.

4. The coil unit according to any one of claims 1 to 3, wherein a distance between the first shield member and the second shield member is 2 mm or shorter.

5. The coil unit according to any one of claims 1 to 4, wherein a thermally conductive member is placed between the first shield member and the second shield member.

6. The coil unit according to any one of claims 1 to 5, wherein
the coil element includes a first linear portion group composed of a plurality of first linear portions arrayed in a radial direction and extending in a first direction and a second linear portion group composed of a plurality of second linear portions arrayed in the radial direction and extending in a second direction that is not parallel with the first direction, each of the second linear portions being connected to one of the first linear portions that is adjacent to thereto, and
the first shield member has formed therein a gap that linearly extends through a space between adjacent ones of the shield small pieces and that crosses at least part of the first linear portion group when seen in an axial direction.

7. The coil unit according to claim 6, wherein the gap and the at least part of the first linear portion group form an angle of 80 degrees to 100 degrees when seen in the axial direction.

8. The coil unit according to claim 6 or 7, wherein the gap and at least part of the first linear portion group are orthogonal to each other when seen in the axial direction.

9. The coil unit according to any one of claims 6 to 8, wherein the gap extends from a position that is further inward in the radial direction than is the first linear portion group to a position that is further outward in the radial direction than is the first linear portion group.

10. The coil unit according to any one of claims 6 to 9, wherein the gap extends through a space between the second linear portion group and the central axis line when seen in the axial direction.

11. The coil unit according to any one of claims 6 to 9, wherein the gap or an extension thereof overlaps the central axis line when seen in the axial direction.

12. The coil unit according to any one of claims 6 to 11, wherein
the first shield member has formed therein a different gap that linearly extends through a space between adjacent ones of the shield small pieces and that extends through the first linear portion group along the first linear portions when seen in the axial direction, and
the different gap extends over an area that is closer to the central axis line than is one of the first linear portions whose ordinal number as counted from an innermost one of the first linear portions assumes a minimum integer value that is greater than or equal to a value obtained by dividing a total number of the first linear portions by 3.

13. The coil unit according to any one of claims 6 to 11, wherein
the first shield member has formed therein a different gap that linearly extends through a space between adjacent ones of the shield small pieces and that extends through the second linear portion group along the second linear portions when seen in the axial direction, and
the different gap extends over an area that is closer to the central axis line than is one of the second linear portions whose ordinal number as counted from an innermost one of the second linear portions assumes a minimum integer value that is greater than or equal to a value obtained by dividing a total number of the second linear portions by 3.

14. The coil unit according to any one of claims 6 to 11, wherein
the first shield member has formed therein a different gap that linearly extends through a space between adjacent ones of the shield small pieces and that extends through the first linear portion group along the first linear portions when seen in the axial direction, and
the different gap extends over an area that is further away from the central axis line than is one of the first linear portions whose ordinal number as counted from an outermost one of the first linear portions assumes a minimum integer value that is greater than or equal to a value obtained by dividing a total number of the first linear portions by 3.

15. The coil unit according to any one of claims 6 to 11, wherein
the first shield member has formed therein a different gap that linearly extends through a space between adjacent ones of the shield small pieces and that extends through the second linear portion group along the second linear portions when seen in the axial direction, and
the different gap extends over an area that is further away from the central axis line than is one of the second linear portions whose ordinal number as counted from an outermost one of the second linear portions assumes a minimum integer value that is greater than or equal to a value obtained by dividing a total number of the second linear portions by 3.

16. The coil unit according to claim 1, wherein
the coil element further includes
a first linear portion group composed of a plurality of first linear portions arrayed in a radial direction and extending in a first direction,
a second linear portion group composed of a plurality of second linear portions arrayed in the radial direction and extending in a second direction that is not parallel with the first direction, and
an intermediate curved portion group placed between the first linear portion group and the second linear portion group and composed of a plurality of intermediate curved portions, and
adjacent ends of the first and second linear portions are connected to each other via the intermediate curved portions.

17. The coil unit according to claim 16, wherein the first shield member has formed therein a gap that linearly extends through a space between adjacent ones of the shield small pieces and that crosses at least part of the intermediate curved portion group when seen in an axial direction.

18. The coil unit according to claim 17, wherein the gap and a tangent line to the at least part of the intermediate curved portion group form an angle of 80 degrees to 100 degrees when seen in the axial direction.

19. The coil unit according to claim 18, wherein the gap and the tangent line are orthogonal to each other when seen in the axial direction.

20. The coil unit according to claim 1, wherein
the coil element further includes
a first linear portion group composed of a plurality of first linear portions arrayed in a radial direction and extending in a first direction,
a second linear portion group composed of a plurality of second linear portions arrayed in the radial direction and extending in a second direction that is not parallel with the first direction, and
a first intermediate linear portion group placed between the first linear portion group and the second linear portion group and composed of a plurality of first intermediate linear portions, and
adjacent ends of the first and second linear portions are connected to each other via the first intermediate linear portions.

21. The coil unit according to claim 20, wherein
each of the first linear portions and a corresponding one of the first intermediate linear portions form an angle of 125 degrees to 145 degrees when seen in an axial direction, and
each of the second linear portions and a corresponding one of the first intermediate linear portions form an angle of 125 degrees to 145 degrees when seen in the axial direction.

22. The coil unit according to claim 20 or 21, wherein
each of the first linear portions and a corresponding one of the first intermediate linear portions form an angle of 135 degrees when seen in an axial direction, and
each of the second linear portions and a corresponding one of the first intermediate linear portions form an angle of 135 degrees when seen in the axial direction.

23. The coil unit according to any one of claims 20 to 22, wherein the coil element has an octagonal shape as a whole.

24. The coil unit according to any one of claims 20 to 23, wherein the coil element has a regular octagonal shape as a whole.

25. The coil unit according to any one of claims 20 to 24, wherein the first shield member has formed therein a gap that linearly extends through a space between adjacent ones of the shield small pieces and that crosses at least part of the first intermediate linear portion group when seen in an axial direction.

26. The coil unit according to claim 25, wherein the gap and the at least part of the first intermediate linear portion group form an angle of 80 degrees to 100 degrees when seen in the axial direction.

27. The coil unit according to claim 25 or 26, wherein the gap and the at least part of the first intermediate linear portion group are orthogonal to each other when seen in the axial direction.

28. The coil unit according to claim 1, wherein
the coil element further includes
a first linear portion group composed of a plurality of first linear portions arrayed in a radial direction and extending in a first direction,
a second linear portion group composed of a plurality of second linear portions arrayed in the radial direction and extending in a second direction that is not parallel with the first direction,
a first intermediate linear portion group placed between the first linear portion group and the second linear portion group and composed of a plurality of first intermediate linear portions, and
a second intermediate linear portion group placed between the first intermediate linear portion group and the second linear portion group and composed of a plurality of second intermediate linear portions,
adjacent ends of the first and second linear portions are connected to each other via the first intermediate linear portions, and
adjacent ends of the first intermediate linear portions and the second linear portions are connected to each other via the second intermediate linear portions.

29. The coil unit according to claim 28, wherein
each of the first linear portions and a corresponding one of the first intermediate linear portions form an angle of 140 degrees to 160 degrees when seen in an axial direction,
each of the first intermediate linear portions and a corresponding one of the second intermediate linear portions form an angle of 140 degrees to 160 degrees when seen in the axial direction, and
each of the second intermediate linear portions and a corresponding one of the second linear portions form an angle of 140 degrees to 160 degrees when seen in the axial direction.

30. The coil unit according to claim 28 or 29, wherein
each of the first linear portions and a corresponding one of the first intermediate linear portions form an angle of 150 degrees when seen in an axial direction,
each of the first intermediate linear portions and a corresponding one of the second intermediate linear portions form an angle of 150 degrees when seen in the axial direction, and
each of the second intermediate linear portions and a corresponding one of the second linear portions form an angle of 150 degrees when seen in the axial direction.

31. The coil unit according to any one of claims 28 to 30, wherein the coil element has a dodecagonal shape as a whole.

32. The coil unit according to any one of claims 28 to 31, wherein the coil element has a regular dodecagonal shape as a whole.

33. The coil unit according to any one of claims 28 to 32, wherein the first shield member has formed therein a gap that linearly extends through a space between adjacent ones of the shield small pieces and that crosses at least part of the first intermediate linear portion group or at least part of the second intermediate linear portion group when seen in an axial direction.

34. The coil unit according to claim 33, wherein the gap and the at least part of the first intermediate linear portion group or the at least part of the second intermediate linear portion group form an angle of 80 degrees to 100 degrees when seen in the axial direction.

35. The coil unit according to claim 33 or 34, wherein the gap and the at least part of the first intermediate linear portion group or the at least part of the second intermediate linear portion group are orthogonal to each other when seen in the axial direction.

36. The coil unit according to claim 1, wherein
the first shield member has formed therein a gap that linearly extends through a space between adjacent ones of the shield small pieces and that crosses at least part of the coil element when seen in an axial direction,
when seen in the axial direction, the gap intersects at least one of turn portions forming the coil element, and
at a point of intersection of the gap and the turn portion, the gap and the turn portion or a tangent line to the turn portion form an angle of 80 degrees to 100 degrees when seen in the axial direction.

37. The coil unit according to claim 36, wherein at the point of intersection of the gap and the turn portion, the gap is orthogonal to the turn portion or the tangent line to the turn portion when seen in the axial direction.

38. The coil unit according to claim 1, further comprising a first connection terminal connected to the coil,
wherein
the coil has an inward end that is close to the central axis line and an outward end that is far away from the central axis line,
the first connection terminal is connected to the inward end and extends from inside toward outside the coil,
the first shield member has formed therein a gap that linearly extends through a space between adjacent ones of the shield small pieces and that extends from inside toward outside the coil, and
when seen in an axial direction, the first connection terminal extends through the gap or through a notch formed in one of the shield small pieces.

39. The coil unit according to claim 38, wherein the first connection terminal extends from inside toward outside the coil at such a height position as to overlap the shield small piece in a side view of the coil unit.

40. The coil unit according to claim 38 or 39, wherein
the coil element has a plurality of turn portions arranged in a radial direction, and
at a point of intersection of the first connection terminal and each of the turn portions, the first connection terminal and the turn portion or a tangent line to the turn portion form an angle of 80 degrees to 100 degrees when seen in the axial direction.

41. The coil unit according to any one claims 38 to 40, wherein at a point of intersection of the first connection terminal and each of the turn portions, the first connection terminal is orthogonal to the turn portion or a tangent line to the turn portion when seen in the axial direction.

42. The coil unit according to any one of claims 38 to 41, wherein
the coil element further includes a linear portion group composed of a plurality of linear portions arrayed in a radial direction and extending in an identical direction, and
the first connection terminal intersects the linear portion group when seen in the axial direction.

43. The coil unit according to claim 42, wherein the first connection terminal and the linear portion group form an angle of 80 degrees to 100 degrees when seen in the axial direction.

44. The coil unit according to claim 42 or 43, wherein the first connection terminal is orthogonal to the linear portion group when seen in the axial direction.

45. The coil unit according to claim 38, wherein
the coil element further includes a curved portion group composed of a plurality of curved portions arrayed in a radial direction and extending parallel to each other, and
the first connection terminal intersects the curved portion group when seen in the axial direction.

46. The coil unit according to claim 45, wherein the first connection terminal and a tangent line to the curved portion group form an angle of 80 degrees to 100 degrees when seen in the axial direction.

47. The coil unit according to claim 45 or 46, wherein the first connection terminal is orthogonal to a tangent line to the curved portion group when seen in the axial direction.

48. The coil unit according to any one of claims 38 to 47, wherein
a point at which the first connection terminal and an outer peripheral edge of the first shield member overlap each other when seen in the axial direction is a first point,
a point at which a second connection terminal connected to the outward end and the outer peripheral edge of the first shield member overlap each other when seen in the axial direction is a second point, and
an angle formed by a first imaginary line connecting the first point with the central axis line and a second imaginary line connecting the second point with the central axis line is 90 degrees or smaller.

49. The coil unit according to claim 48, wherein the angle formed by the first imaginary line and the second imaginary line is 45 degrees or smaller.

50. The coil unit according to any one of claims 38 to 49, wherein
a point at which the first connection terminal and an outer peripheral edge of the first shield member overlap each other when seen in the axial direction is a first point,
a point at which a second connection terminal connected to the outward end and the outer peripheral edge of the first shield member overlap each other when seen in the axial direction is a second point, and
a distance between the first point and the second point is 100 mm or shorter.

51. The coil unit according to claim 50, wherein the distance between the first point and the second point is 50 mm or shorter.

52. The coil unit according to any one of claims 38 to 51, further comprising a second connection terminal connected to the coil,
wherein
the second shield member forms a quadrangular shape when seen in the axial direction, and
the first connection terminal and the second connection terminal extend out from an identical side of the second shield member.

53. The coil unit according to any one of claims 38 to 52, wherein
the coil element circles around the central axis line in a first circumferential direction from the outward end toward the inward end, and
the outward end is displaced in the first circumferential direction from the inward end.

54. The coil unit according to any one of claims 38 to 53, wherein
the coil element includes a first turn portion including the inward end, a second turn portion that is adjacent to the first turn portion in a radial direction and that is placed further outward in the radial direction than is the first turn portion, a third turn portion that is adjacent to the second turn portion in the radial direction and that is placed further outward in the radial direction than is the second turn portion, and
a distance between the inward end and the second turn portion is longer than a distance between the second turn portion and the third turn portion.

55. A coil unit comprising a coil including a coil element formed into a spiral shape around an arbitrary central axis line, wherein the coil element has an octagonal shape as a whole when seen in an axial direction.

56. The coil unit according to claim 55, wherein
the coil element includes seven linear portion groups extending along seven of eight sides of an octagon, and
adjacent ones of the linear portion groups form an angle of 125 degrees to 145 degrees.

57. The coil unit according to claim 56, wherein adjacent ones of the linear portion groups form an angle of 135 degrees.

58. The coil unit according to any one of claims 55 to 57, wherein the coil element has a regular octagonal shape as a whole.

59. A coil unit comprising a coil including a coil element formed into a spiral shape around an arbitrary central axis line, wherein the coil element has a dodecagonal shape as a whole when seen in an axial direction.

60. The coil unit according to claim 59, wherein
the coil element includes eleven linear portion groups extending along eleven of twelve sides of a dodecagon, and
adjacent ones of the linear portion groups form an angle of 140 degrees to 160 degrees.

61. The coil unit according to claim 60, wherein adjacent ones of the linear portion groups form an angle of 150 degrees.

62. The coil unit according to any one of claims 59 to 61, wherein the coil element has a regular dodecagonal shape as a whole.

63. The coil unit according to any one of claims 55 to 62, further comprising a first shield member,
wherein
the first shield member is divided into a plurality of shield small pieces,
the first shied member has formed therein a gap that linearly extends through a space between adjacent ones of the shield small pieces,
the coil element includes a linear portion group composed of a plurality of linear portions arrayed in a radial direction and extending in an identical direction, and
the gap crosses at least part of the linear portion group when seen in the axial direction.

64. The coil unit according to claim 63, wherein the gap and the at least part of the linear portion group form an angle of 80 degrees to 100 degrees when seen in the axial direction.

65. The coil unit according to claim 63 or 64, wherein the gap is orthogonal to the at least part of the linear portion group when seen in the axial direction.

66. A power transmission apparatus comprising the coil unit according to any of claims 1 to 65.

67. A power receiving apparatus comprising the coil unit according to any of claims 1 to 65.

68. An electric power transfer system comprising:
a power transmission apparatus; and
a power receiving apparatus,
wherein at least either the power transmission apparatus or the power receiving apparatus includes the coil unit according to any of claims 1 to 65.

69. A movable body comprising the coil unit according to any of claims 1 to 65.
